# EUROPEAN PATENT APPLICATION

(11) **EP 3 286 996 A1**
(43) Date of publication of application: **28.02.2018**
(21) Application number: 15881853.4
(22) Date of filing: 22.12.2015
(51) Int. Cl.: A01B 33/08

(54) **EXTENDED-TYPE SUBSOILING POWDER RIDGE MACHINE AND SUBSOILING POWDER RIDGE MACHINE**

(30) Priority: 09.02.2015 CN 201510064658; 09.02.2015 CN 201510064514; 06.03.2015 CN 201520131221 U; 28.05.2015 CN 201520354129 U; 29.05.2015 CN 201520360316 U; 30.05.2015 CN 201520360835 U; 31.05.2015 CN 201520361283 U; 31.05.2015 CN 201520361285 U; 31.05.2015 CN 201520361279 U; 31.05.2015 CN 201520361278 U; 15.06.2015 CN 201510328511; 15.06.2015 CN 201510328335; 15.06.2015 CN 201510328499; 15.06.2015 CN 201510328328; 15.06.2015 CN 201510328510; 13.10.2015 CN 201510655869; 13.10.2015 CN 201520786933 U; 30.10.2015 CN 201520852842 U; 30.10.2015 CN 201520853053 U
(71) Applicant: Guangxi Wufeng Machinery Co,. Ltd., Yulin, Guangxi 537500 (CN)
(72) Inventor: LI, Yangming, Yulin Guangxi 537500 (CN); LI, Shenwen, Yulin Guangxi 537500 (CN)
(74) Representative: Sebastian, Jens
(86) International application number: PCT/CN2015/098217
(87) International publication number: WO 2016/127705

(57) **Abstract**

The present invention discloses an extended type subsoiling smash-ridging machine, comprising a machine body, a smash-ridging device, a connection device, a ditching device, a flattening device and a straw returning device, wherein the smash-ridging device comprises a smash-ridging box comprising a bottom plate, side plates and a top plate, lower bearing seats are mounted in the bottom plate, rib plates are welded between the lower bearing seats, lubricating oil passages are formed between rib plates and the bottom plate, an upper bearing seats are mounted on the top plate and the length of each lower bearing seat is larger than that of each upper bearing seat. By adopting the structure of the present invention, the strength of the lower bearing seats can be improved so as to facilitate the mounting of more bearing where the stress is large and less bearings where the stress is small, thereby both improving the rigidity and transmission stability of a transmission shaft and reducing the cost; the welding of the rib plates is facilitated, it is ensured that lubricating oil smoothly flows within the smash-ridging box and the lubricating effect is improved.

## Description

### Technical Field

The present invention relates to a subsoiling smash-ridging machine.

### Background

The main role of a subsoiling smash-ridging machine is to subsoil and smash the land. In the past, the subsoiling and smashing are implemented by hoes or cow ploughing, however, no matter which conventional manner, it is not only strenuous but also low in efficiency, therefore, the traditional manner has been unable to adapt to large areas of lands which need to be subsoiled and smashed. To this end, the existing automated subsoiling machine, such as a rotary-grinding type multifunctional machine for deep tillage of a powder ridge disclosed in a patent document No. 201020514808.9 filed on September 03, 2010 and published on July 20, 2011, appears. A patent document No. ZL201420551437.X also discloses a spiral type deep subsoiling machine.

The existing smash-ridging subsoiling machine mainly comprises a machine body and a smash-ridging device, wherein the smash-ridging device consists essentially of a smash-ridging box, a drive mechanism, a transmission system and a spiral drill rod. When the subsoiling smash-ridging is performed, the drive mechanism is firstly started to allow it to drive the spiral drill rod to rotate via the transmission system, then the spiral drill rod is derived to extend into the soil, thus the continuous subsoiling smash-ridging can be achieved by the smash-ridging subsoiling machine during the walking thereof.

When the subsoiling smash-ridging is performed by the smash-ridging device, the spiral drill rod will be subjected to axial and radial forces, since it is connected to a transmission shaft of the transmission system, the lower ends of the transmission shafts can also be subjected to larger axial and radial forces. The transmission shaft is generally mounted on the smash-ridging box, which is also used for mounting the transmission system and forms a lubricating oil tank, via a bearing and thus bearing seats can be respectively arranged at upper and lower ends of the smash-ridging box and the existing bearing seats and the smash-ridging box are integrated structurally, therefore, it is more difficult to manufacture them and high in cost.

In addition, in order to increase bearing points of the transmission shaft and improve the rigidity of the transmission shaft, a plurality of bearings can be generally arranged. While a plurality of bearings would be arranged on the same bearing seat in some cases so that the height of the seating seat is large and it is difficult to ensure the strength of the seating seat.

A cutter of the existing deep subsoiling machine is mostly a spiral drill rod, the rotation of the spiral drill rod is subjected to the reversed resistance of the land during the subsoiling, therefore, although the power is output, phenomena that the spiral drill rod cannot rotate due to being locked or the speed of rotation is slowed down can usually occur and thus not only the subsoiling cannot continue or the worse subsoiling effect is achieved, but also the service life of the drive mechanism can be shortened or the drive mechanism is directly damaged.

### Summary

In order to improve the strength of a lower shaft seat, and facilitate to mount more bearings in larger force place and less bearings in small force place so as to improve the stuffiness and the transmission stability of the transmission shaft and reduce the cost; in order to facilitate the welding of rib plates and ensure that lubricating oil flows within the smash-ridging box smoothly so as to improve the lubricating effects, the present invention provides an extended type subsoiling smash-ridging machine.

To achieve the above-mentioned object, the extended type subsoiling smash-ridging machine comprises a machine body, a smash-ridging device, a connection device, a ditching device, a flattening device and a straw returning device;
the machine body comprises a walking mechanism, a chassis, a diesel engine component, a hydraulic oil tank, a cooler and a driving cab; the chassis is mounted on the walking mechanism, the diesel engine component, the hydraulic oil tank and the driving cab are mounted on the chassis and the cooler is mounted on the hydraulic oil tank;
the smash-ridging device comprises a smash-ridging box, a driving mechanism, bearings, transmission shafts, power input members and a spiral drill rod;
the smash-ridging box comprises a bottom plate, side plates and a top plate, the lower end surfaces of the side plates are welded on the bottom plate, and the top plate is welded on the upper end surfaces of the side plates;
at least two lower through-holes are formed in the bottom plate, lower bearing seats extending upwardly are welded on the inner walls of the lower through-holes, the lower bearing seats protrude from the upper surface of the bottom plate, the height of protruding part of the lower bearing seat is larger than the width of two bearings, bearings are mounted in the lower bearing seats, rib plates are welded between adjacent lower bearing seats, and lubricating oil passages are arranged between the rib plates and the bottom plate;
at least two upper through-holes corresponding to the lower through-holes in the vertical direction are formed in the top plate, an upper bearing seat extending downwardly is arranged on the inner walls of the upper through-holes, the length of the lower bearing seat is larger than that of the upper bearing seat, and a bearing is mounted in the upper bearing seat;
the driving mechanism is mounted on the top plate and drives the transmission shaft to rotate;
the transmission shafts are mounted between the bearings located within the lower bearing seat and the bearing located within the upper bearing seat, and the lower ends of the transmission shafts extend out of the smash-ridging box;
the power input members are mounted on the transmission shafts, and the lower surface of the power input members abut against the shaft shoulders of the transmission shafts;
the spiral drill rod is mounted at the lower ends of the transmission shafts;
the connection device is connected between the chassis and the smash-ridging device; the ditching device comprises swing arms, a supporting arm, a turn-over oil cylinder, adjusting seats, a ditching arm and a ditching plough; there are two swing arms, and the supporting arm is welded between the central sections of the two swing arms, one end of the swing arms is articulated on the lower end of the smash-ridging box, the other end thereof is articulated on the piston rod of the turn-over oil cylinder and the cylinder body of the turn-over oil cylinder is articulated on the upper end of the smash-ridging box; the adjusting seats are mounted on the supporting arm, the ditching arm is mounted on the adjusting seats and the ditching plough is mounted on the ditching arm;
the flattening device comprises a raking plate, connection arms connected to the raking plate and an adjusting device which is used to adjust the turn-over angle of the raking plate; the connection arms are arranged at both ends of the raking plate, the lower ends of the connection arms are fixedly connected with the raking plate, and the upper ends of the connection arms are articulated with the smash-ridging box and the adjusting device is arranged between the raking plate and the smash-ridging box.

According to above structure, it is convenient to connect the lower bearing seat by arranging the lower through-holes and to connect the upper bearing seat by arranging the upper through-holes; since the lower bearing seat extends upwardly and the upper bearing seat extends downwardly, both the lower bearing seat and the upper bearing seat are located within the smash-ridging box carrying bearing seats and thus, on one hand, the contour dimension of the smash-ridging box with bearing seats can be reduced, on the other hand, it can have protecting effect on the upper and lower bearing seats. In addition, during the use, the smash-ridging box with bearing seats can be filled with lubricating oil, while by adopting the arrangement of the upper and lower bearing seats, it is more easier for lubricating oil within the smash-ridging box with bearing seats to lubricate bearings within the upper and lower bearing seats; since the length of the lower bearing seat is larger than that of the upper bearing seat, when the bearings are mounted, in consideration of the special subsoiling and smash-ridging environment, at least two bearings are mounted within the lower bearing seat and one bearing is mounted within the upper bearing seat such that the strength, rigidity and the transmission stability of bearing seats can be improved, furthermore, by selecting an appropriate amount of bearings, the costs in manufacturing the smash-ridging box and costs caused by the number of bearings are reduced; since rib plates are arranged between the bearing seats, the strength of the bearing seats can be improved; when the rib plates are welded, lubricating oil passages are reserved specially between the rib plates and the bottom plate so that, on one hand, lubricating oil is allowed to smoothly flow at the bottom of the reinforced smash-ridging box so as to improve the lubricating effect and on the other hand, it is more convenient to weld the rib plates.

In the present invention, when the subsoiling and smash-ridging are performed using the smash-ridging device, straws and grass are firstly cut off using the straw returning device to facilitate the subsoiling and smash-ridging, simultaneously, the subsoiled and smash-ridged land can be flattened using the flattening device and ditched using the ditching device so that the subsoiling smash-ridging machine can complete multiple processes in one walking course, thereby improving efficiency; additionally, soil particles can be subjected to secondary smash-ridging during the flattening of the land so that better smash-ridging effect is achieved.

Further, the walking mechanism comprises two crawler components which are arranged opposite to each other and each of which comprises a wheel stand, a driving wheel, a driven wheel, a lower guide wheel, an upper guide wheel, a crawler and a walking drive device; the driving wheel is mounted at one end of the wheel stand, the driven wheel is mounted at the other end of the wheel stand, the lower guide wheel is mounted at the lower end of the wheel stand, the upper guide wheel is mounted at the upper end of the wheel stand, the crawler sleeves the driving wheel, the driven wheel, the lower guide wheel and the upper guide wheel, the walking drive device is mounted on the wheel stand and drives the driving wheel to rotate; the lower guide wheel has played guiding and bearing roles and the upper guide wheel has played guiding and tensioning roles so that the crawler runs in more reliable and stable manners; the chassis comprises a supporting platform, inclined strut plates and a supporting rib; the supporting platform is welded on the wheel stand; the inclined strut plates are welded on the wheel stand and the supporting platform so as to improve the bearing strength; the supporting rib is located in the front of the supporting platform, and extends from the inclined strut plate at one side via the bottom of the supporting platform to the inclined strut plate at the other side; a circular arc groove is formed at the corner of the supporting rid so as to reduce the phenomenon of stress concentration and improve the strength of the supporting rib. In the present invention, since the diesel engine component and the driving cab are mounted in the front of the supporting platform, the weight is very high and thus by arranging the supporting rid, the bending resistance and deformation resistance of the supporting platform can be improved, thereby improving the bearing capability of the supporting platform. Two rib plates parallel to each other are arranged at the rear bottom of the inclined strut plates and a triangular groove is formed between the rib plates and the inclined strut plates.

Further, a lower boss is formed by extending downwardly each lower bearing seat and protruding from the lower surface of the bottom plate and the lower boss is used for mounting a lower bearing end cover. After the lower boss is arranged, on one hand, the strength of the bottom plate is improved and on the other hand, a certain distance can be reserved between the lower bearing end cover and the lower surface of the bottom plate so as to facilitate the mounting and dismounting of the lower bearing end cover. An upper boss is formed by extending upwardly the upper bearing seat and protruding from the upper surface of the top plate and the upper boss is used for mounting an upper bearing end cover. After the upper boss is arranged, on one hand, the strength of the top plate is improved and on the other hand, a certain distance can be reserved between the upper bearing end cover and the upper surface of the top plate so as to facilitate the mounting and dismounting of the upper bearing end cover.

Further, one of the side plates comprising a plate body is arranged in the front of the smash-ridging box, manholes are formed in the plate body, a flange is arranged around the manhole on the plate body, mounting holes are formed in the plate body and the flange, and a step is formed between the inside of the flange and the plate body; and an extended mounting flange is arranged on the plate body. Since parts such as a transmission system are all mounted within the smash-ridging box, the manholes are formed so as to mount, dismount and maintain the parts such as the transmission system; the flange is generally connected to the plate body by welding, when the mounting hole is formed in the position of the flange, the strength of manhole covers fixed by bolts is improved and thus the side plates are not easy to damage. In addition, due to the arrangement of the flange, after the manhole covers are mounted, a distance equal to or greater than the thickness of the flange exists between the manhole covers and the plate body so as to facilitate the mounting and dismounting of the manhole covers; by arranging the step, the welding seam between the plate body and the inside of the flange can be increased, thereby improving the strength of the connection between the flange and the plate body, in addition, the step can also have position-limiting and positioning effects on a seal ring so that the sealing property between the manhole covers and the side plates is improved. The plate body is provided with an extended mounting flange, thus other parts can be connected to the extended mounting flange at any time and it is convenient to dismount other parts at any time without destroying the smash-ridging box.

Further, a first bearing part is arranged on the lower surface of the bottom plate, a first connection lug is welded on the side plates, a first bearing plate extending inwardly is arranged on the first connection lug, and the first bearing plate supports the first bearing part. Since the bottom plate is welded on the side plates and the phenomenon of stress concentration is easily formed at the welding seam, thus cracks are easily formed at the connection between the bottom plate and side plates which can even course them to be completely separated. After the first bearing part is arranged, it can have bearing effect on the bottom plate using the action of the first bearing plate on the first bearing part and thus better connection strength of the bottom plate and the side plates is achieved. A second bearing part is arranged on the lower surface of the bottom plate, a flattening device connection lug is welded on the side plates, a second bearing plate extending inwardly is arranged on the flattening device connection lug, and the second bearing plate supports the second bearing part. Since the bottom plate is welded on the side plates, a phenomenon of stress concentration is easily formed at the welding seam, cracks are easily formed at the connection between the bottom plate and side plates which can even make them to completely separate. After the second bearing part is arranged, it can have bearing effect on the bottom plate using the action of the second bearing plate on the second bearing part and thus better connection strength of the bottom plate and the side plates is achieved. The second bearing part and the first bearing part are arranged opposite to each other. A first welding part is arranged on the top plate, a second connection lug is welded on the side plates, a second welding plate extending inwardly is arranged on the second connection lug, and the second welding plate is welded with the first welding part on the top plate; in this way, the top plate is uneasy to be separated from the side plates, the second connection lug has large welding area and two welding surfaces are arranged vertically so that the second connection lug is high in connection strength. A third connection lug is welded on the top plate, a third welding plate extending downwardly is arranged on the third connection lug, a second welding part is welded on the side plates, and the third welding plate is welded with the second welding part; in this way, the top plate is uneasy to be separated from the side plates, the third connection lug has large welding area and two welding surfaces are arranged vertically so that the third connection lug is high in connection strength. An articulated seat is arranged on the plate body and comprises a connection seat and connection lugs, which extend towards the direction away from the connection seat from the both sides of the connection seat, an accommodation groove is formed between two connection lugs, and articulated holes are formed in the two connection lugs, respectively. The articulated seat with the structure is processed conveniently, high in strength and can connect other parts without destroying the smash-ridging box.

Further, the bearings are conical bearings, the conical bearings located within the lower bearing seat are mounted in a forward direction and the bearing within the upper bearing seat is mounted in an opposite direction; a shaft sleeve is arranged on the transmission shaft between power input members and the upper conical bearing; a forward lock nut is connected to the transmission shaft by screw thread above the upper conical bearing, the forward lock nut is in contact with the inner ring of the upper conical bearing; a reverse lock nut is arranged above the forward lock nut on the transmission shaft; the diameter of the transmission shaft on which the forward lock nut is arranged is larger than that of the transmission shaft on which the reverse lock nut is arranged, the upper surface of the forward lock nut is higher than that of the transmission shaft on which the forward lock nut is arranged and the reverse lock nut is in contact with the forward lock nut.

By adopting above structure, clearance between the adjusted bearings cannot be changed at random, high adjustment accuracy of the clearance between the adjusted bearings is achieved, and the transmission property of the transmission shaft is stable.

Further, one end of the transmission shaft is configured as a conical shaft, at one end of the conical shaft a screw rod is arranged; a conical hole matching with the conical shaft and a through-hole through which the screw rod passes are formed in the flange, on which a counterbore is formed at an opposite side to the conical hole, and the conical hole, the through-hole and the counterbore are communicated with each other; the conical shaft is arranged in the conical hole, the screw rod passes through the through-hole and extends into the counterbore in which a lock nut connected with the screw rod is arranged; a gland is fixed on the screw rod via at least two lock bolts and is provided with a boss which presses against the lock nut.

By adopting above structure, the gland is fixed on the screw rod via more than two lock bolts so that the gland itself cannot rotate relative to the screw rod; since the boss of the gland presses against the end surface of the lock nut, the lock nut has no rotatable space so that it cannot loose, the reliability of fit between the conical shaft and the conical hole is improved, the transmission of the power is reliably achieved and the gland is also conveniently fixed. In addition, when the conical shaft and the conical hole show wear phenomena, the gland can be dismounted, the lock nut are further screwed up and then the gland is locked by using the lock nut again. Due to the presence of the boss, there is clearance between the gland and the end surface of the screw rod, thus the gland has a space moving towards the direction of the screw rod, in this way, even if the lock nut is further locked, the boss of the gland can also press against the lock nut so as to prevent the lock nut from loosening and the fit clearance between the conical shaft and the conical hole can be adjusted as desired as well as on site without replacing parts.

Further, the connection device comprises a connection frame, a connection supporting plate, a guide sliding rod, a connecting nut, a sliding sleeve frame and a lifting oil cylinder; the connection frame comprises a plurality of horizontal beams, longitudinal beams, vertical beams, a first inclined strut and a second inclined strut; the longitudinal beams consist of lower longitudinal beams and upper longitudinal beams, the lower longitudinal beams are welded at both ends of the horizontal beams; the vertical beams are welded at the lower longitudinal beams close to the rear part, the upper longitudinal beams are welded at the upper end of the vertical beams; the first inclined strut is welded between the front end of the horizontal beam and the upper end of the vertical beam; the second inclined strut is welded between the vertical beams; the horizontal beams, the longitudinal beams, the vertical beams, the first inclined strut and the second inclined strut all use square tubes and are internally communicated with each other, so that oil chambers are formed within the horizontal beams, the longitudinal beams, the vertical beams, the first inclined strut and the second inclined strut; and thus the volume of the oil tank can be expanded using the existing structure. The connection supporting plate is welded on the lower longitudinal beams and the upper longitudinal beams, respectively; the guide sliding rod passes through the connection supporting plate; a connecting nut is arranged below the lower connection supporting plate on the guide sliding rod and a connecting nut is arranged above the upper connection supporting plate on the guide sliding rod; the sliding sleeve frame comprises a sliding sleeve, a smash-ridging device connection seat and a lifting oil cylinder seat; the sliding sleeve slidably sleeves the guide sliding rod; the smash-ridging device connection seat is welded on the sliding sleeve and a mounting hole is formed in the smash-ridging device connection seat; the lifting oil cylinder seat is welded on the smash-ridging device connection seat; an oil cylinder articulated seat , on which the piston rod of the lifting oil cylinder is articulated, is fixed on the lower connection supporting plate, and the lower end of the lifting oil cylinder body is fixed on the lifting oil cylinder seat; for the subsoiling smash-ridging machine of the present invention, since it is required that the stroke of the lifting oil cylinder is relatively long, the lifting oil cylinder has larger length, the distance between the fixation point of the lifting oil cylinder body and the articulated seat is reduced when the lower end of the lifting oil cylinder body is fixed on the lifting oil cylinder seat and it is uneasy for the lifting oil cylinder to bent and deform when it works so that it has good load-carrying capacity. In addition, by adopting the structure compared to the structure that the upper end of the lifting oil cylinder body is fixed to the lifting oil cylinder seat, the height of the connection frame is much lower, thereby decreasing the vertical height of the connection frame as well as the height of the entire subsoiling smash-ridging machine; the smash-ridging device is fixed on the smash-ridging device connection seat through a bolt which passes through the mounting hole.

Further, the connection device comprises two connecting rod mechanisms and a connecting rod connected to two connecting rod mechanisms; each connecting rod mechanism comprises a connecting rod seat, a first connecting rod, a second connecting rod, a third connecting rod, a fourth connecting rod and a driving oil cylinder; the connecting rod seat is fixed on the chassis; the lower end of the first connecting rod is articulated on the rear end of the connecting rod seat; one end of the second connecting rod is articulated at the middle lower position of the first connecting rod and the other end of the second connecting rod is articulated on the smash-ridging box; one end of the third connecting rod is articulated at the upper end of the first connecting rod and the other end of the third connecting rod is articulated on smash-ridging box and the third connecting rod and the second connecting rod are parallel to each other; one end of the fourth connecting rod is articulated at the middle upper position of the first connecting rod and the other end of the fourth connecting rod is articulated on the third connecting rod; and one end of the driving oil cylinder is articulated on the connecting rod seat and the other end of the driving oil cylinder is articulated in the middle of the first connecting rod. By adopting the connection device with this structure, the turn-over and vertical movement of the smash-ridging device can be achieved which facilitates the subsoiling and smash-ridging.

Further, the adjusting seats comprise lower clamping seats and upper clamping seats, which are clamped on the supporting arm and connected through bolts, when the bolts are loosened, the adjusting seats can be allowed to move transversely on the supporting arm; when the bolts are locked, the adjusting seats can be allowed to be fixed on the supporting arm; therefore, the positions of the adjusting seats are adjusted conveniently so as to achieve the purpose of adjusting the position of the ditching plough. Each adjusting seat comprises two lower clamping seats and two upper clamping seats, and each lower clamping seat and each upper clamping seat are respectively provided with location holes through which an adjusting rod passes; the ditching arm is clamped between the two upper clamping seats, meanwhile is clamped between the two lower clamping seats, and is provided with a plurality of adjusting holes, through which the adjusting rod passes; if it is required to adjust the position of the ditching arm relative to the adjusting seats, the adjusting rod is firstly loosened, the ditching arm is adjusted to a desired position and then the adjusting rod is made to pass through the location hole and the corresponding adjusting holes, therefore, it is very convenient and rapid to adjust. The raking plate is in the form of a long strip, and is formed by successively connecting three flat plate units; each flat plate unit comprises a connection section and a serrated section arranged at the lower end of the connection section; by adopting the structure, the subsoiled and smash-ridged land not only can be flattened and but also the secondary smash-ridging effect can be achieved. The connection sections between adjacent flat plate units are connected through a hinge so that the flat plate units can be turned over and folded; an interlocking device which limits the flat plate units to be turned over, is arranged between the connection sections of the adjacent flat plate units; the interlocking device comprises a first circular ring arranged at the side edge of the flat plate unit, a second circular ring arranged at the side edge of the adjacent flat plate unit and an inserted pin which can pass through the first circular ring and the second circular ring and inserted holes of the first and second circular rings are longitudinal; after adjacent flat plate units are unfolded, the first and second circular rings are aligned vertically and the inserted pin successively inserts the first and second circular rings from top to bottom to lock the adjacent flat plate units. The adjusting device comprises an articulated seat, a screw rod, a first spring, a second spring and a nut, the lower end of the screw rod is articulated with the raking plate, the upper end of the screw rod passes through the articulated seat and then is connected with the nut, the first spring sleeves the screw rod and is located between the raking plate and the articulated seat, and the second spring sleeves the screw rod and is located between the articulated seat and the nut, the elastic force of the first spring acts on the raking plate so that the raking plate is more powerful when it flattens the land; in addition, the turn-over angle of the raking plate can be changed by adjusting the position of the nut.

In order to improve the strength of the lower shaft seat, and facilitate to mount more bearings in larger force place and less bearings in small force place so as to improve the stuffiness and the transmission stability of the transmission shaft and reduce the cost, and in order to facilitate the welding of rib plates and ensure that lubricating oil flows within the smash-ridging box smoothly so as to improve the lubricating effects, the present invention provides a subsoiling smash-ridging machine.

To achieve the above-mentioned object, the subsoiling smash-ridging machine comprises a machine body, a smash-ridging device, a connection device, a ditching device, a flattening device and a straw returning device;
the machine body comprises a walking mechanism, a chassis, a diesel engine component, a hydraulic oil tank, a cooler and a driving cab; the chassis is mounted on the walking mechanism, the diesel engine component, the hydraulic oil tank and the driving cab are mounted on the chassis and the cooler is mounted on the hydraulic oil tank;
the smash-ridging device comprises a smash-ridging box, a driving mechanism, bearings, transmission shafts, power input members and a spiral drill rod;
the smash-ridging box comprises a bottom plate, side plates and a top plate, the lower end surfaces of the side plates are welded on the bottom plate, and the top plate is welded on the upper end surfaces of the side plates;
at least two lower through-holes are formed in the bottom plate, lower bearing seats extending upwardly are welded on the inner walls of the lower through-holes, the lower bearing seats protrude from the upper surface of the bottom plate, the height of protruding part of the lower bearing seat is larger than the width of two bearings, bearings are mounted in the lower bearing seats, rib plates are welded between adjacent lower bearing seats, and there are lubricating oil passages between the rib plates and the bottom plate;
at least two upper through-holes corresponding to the lower through-holes in the vertical direction are formed in the top plate, an upper bearing seat extending downwardly is arranged on the inner walls of the upper through-holes, the length of the lower bearing seat is larger than that of the upper bearing seat, and a bearing is mounted in the upper bearing seat;
the driving mechanism is mounted on the top plate and drives the transmission shaft to rotate;
the transmission shafts are mounted between the bearings located within the lower bearing seat and the bearing located within the upper bearing seat, and the lower ends of the transmission shafts extend out of the smash-ridging box;
the power input members are mounted on the transmission shafts, and the lower surfaces of the power input members abut against the shaft shoulders of the transmission shafts;
the spiral drill rod is mounted at the lower ends of the transmission shafts; and
the connection device is connected between the chassis and the smash-ridging device.

According to above structure, it is convenient to connect the lower bearing seat by arranging the lower through-holes and to connect the upper bearing seat by arranging the upper through-holes; since the lower bearing seat extends upwardly and the upper bearing seat extends downwardly, both the lower bearing seat and the upper bearing seat are located within the smash-ridging box and thus, on one hand, the contour dimension of the smash-ridging box with bearing seats can be reduced, on the other hand, it can have protecting effect on the upper and lower bearing seats. In addition, during the use, the smash-ridging box with bearing seats can be filled with lubricating oil, while by adopting the arrangement of the upper and lower bearing seats, it is more easier for lubricating oil within the smash-ridging box with bearing seats to lubricate bearings within the upper and lower bearing seats; since the length of the lower bearing seat is larger than that of the upper bearing seat, when the bearings are mounted, in consideration of the special subsoiling and smash-ridging environment, at least two bearings are mounted within the lower bearing seat and one bearing is mounted within the upper bearing seat such that the strength, rigidity and the transmission stability of bearing seats can be improved, furthermore, by selecting an appropriate amount of bearings, the costs in manufacturing the smash-ridging box and costs caused by the number of bearings are reduced; since rib plates are arranged between the bearing seats, the strength of the bearing seats can be improved; when the rib plates are welded, lubricating oil passages are reserved specially between the rib plates and the bottom plate so that, on one hand, lubricating oil is allowed to smoothly flow at the bottom of the reinforced smash-ridging box so as to improve the lubricating effect and on the other hand, it is more convenient to weld the rib plates.

Further, the walking mechanism comprises two crawler components which are arranged opposite to each other and each of which comprises a wheel stand, a driving wheel, a driven wheel, a lower guide wheel, an upper guide wheel, a crawler and a walking drive device; the driving wheel is mounted at one end of the wheel stand, the driven wheel is mounted at the other end of the wheel stand, the lower guide wheel is mounted at the lower part of the wheel stand, the upper guide wheel is mounted at the upper part of the wheel stand, the crawler sleeves the driving wheel, the driven wheel, the lower guide wheel and the upper guide wheel and the walking drive device is mounted on the wheel stand and can drive the driving wheel to rotate; the lower guide wheel has played guiding and bearing roles and the upper guide wheel has played guiding and tensioning roles so that the crawler runs in more reliable and stable manners; the chassis comprises a supporting platform, inclined strut plates and a supporting rib; the supporting platform is welded on the wheel stand; the inclined strut plates are welded on the wheel stand and the supporting platform so as to improve the bearing strength; the supporting rib is located in the front of the supporting platform, and extends from the inclined strut plate at one side via the bottom of the supporting platform to the inclined strut plate at the other side; a circular arc groove is formed at the corner of the supporting rid so as to reduce the phenomenon of stress concentration and improve the strength of the supporting rib. In the present invention, since the diesel engine component and the driving cab are mounted in the front of the supporting platform, the weight is very high and thus by arranging the supporting rid, the bending resistance and deformation resistance of the supporting platform can be improved, thereby improving the bearing capability of the supporting platform. Two rib plates arranged in parallel to each other are arranged at the rear bottom of the inclined strut plates and a triangular groove is formed between the rib plates and the inclined strut plates.

Further, a lower boss is formed by extending downwardly each lower bearing seat and protruding from the lower surface of the bottom plate and the lower boss is used for mounting a lower bearing end cover. After the lower boss is arranged, on one hand, the strength of the bottom plate is improved and on the other hand, a certain distance can be reserved between the lower bearing end cover and the lower surface of the bottom plate so as to facilitate the mounting and dismounting of the lower bearing end cover. An upper boss is formed by extending upwardly the upper bearing seat and protruding from the upper surface of the top plate and the upper boss is used for mounting an upper bearing end cover. After the upper boss is arranged, on one hand, the strength of the top plate is improved and on the other hand, a certain distance can be reserved between the upper bearing end cover and the upper surface of the top plate so as to facilitate the mounting and dismounting of the upper bearing end cover.

Further, one of the side plates comprising a plate body is arranged in the front of the smash-ridging box, manholes are formed in the plate body, a flange is arranged around the manhole on the plate body, mounting holes are formed in the plate body and the flange, and a step is formed between the inside of the flange and the plate body; and an extended mounting flange is arranged on the plate body. Since parts such as a transmission system are all mounted within the smash-ridging box, the manholes are formed so as to mount, dismount and maintain the parts such as the transmission system; the flange is generally connected to the plate body by welding, after the mounting hole is formed in the position of the flange, the strength of manhole covers fixed by bolts is improved and thus the side plates are not easy to damage. In addition, due to the arrangement of the flange, after the manhole covers are mounted, a distance equal to or greater than the thickness of the flange exists between the manhole covers and the plate body so as to facilitate the mounting and dismounting of the manhole covers; by arranging the step, the welding seam between the plate body and the inside of the flange can be increased, thereby improving the strength of the connection between the flange and the plate body, in addition, the step can also have position-limiting and positioning effects on a seal ring so that the sealing property between the manhole covers and the side plates is improved. By arranging the extended mounting flange on the plate body, other parts can be connected to the extended mounting flange at any time and it is convenient to dismount other parts at any time without destroying the smash-ridging box.

Further, a first bearing part is arranged on the lower surface of the bottom plate, a first connection lug is welded on the side plates, a first bearing plate extending inwardly is arranged on the first connection lug, and the first bearing plate supports the first bearing part. Since the bottom plate is welded on the side plates, a phenomenon of stress concentration is easily formed at the welding seam, cracks are easily formed at the connection between the bottom plate and side plates which can even course them to completely separate. After the first bearing part is arranged, it can have bearing effect on the bottom plate using the action of the first bearing plate on the first bearing part and thus better connection strength of the bottom plate and the side plates is achieved. A second bearing part is arranged on the lower surface of the bottom plate, a flattening device connection lug is welded on the side plates, a second bearing plate extending inwardly is arranged on the flattening device connection lug, and the second bearing plate supports the second bearing part. Since the bottom plate is welded on the side plates, a phenomenon of stress concentration is easily formed at the welding seam, cracks are easily formed at the connection between the bottom plate and side plates which can even make them to completely separate. After the second bearing part is arranged, it can have bearing effect on the bottom plate using the action of the second bearing plate on the second bearing part and thus better connection strength of the bottom plate and the side plates is achieved. The second bearing part and the first bearing part are arranged opposite to each other. A first welding part is arranged on the top plate, a second connection lug is welded on the side plates, a second welding plate extending inwardly is arranged on the second connection lug, and the second welding plate is welded with the first welding part on the top plate; in this way, the top plate is uneasy to be separated from the side plates, the second connection lug has large welding area and two welding surfaces are arranged vertically so that the second connection lug is high in connection strength; a third connection lug is welded on the top plate, a third welding plate extending downwardly is arranged on the third connection lug, a second welding part is welded on the side plates, and the third welding plate is welded with the second welding part; in this way, the top plate is uneasy to be separated from the side plates, the third connection lug has large welding area and two welding surfaces are arranged vertically so that the third connection lug is high in connection strength; an articulated seat is arranged on the plate body and comprises a connection seat and connection lugs, which extend towards the direction away from the connection seat from the both sides of the connection seat, an accommodation groove is formed between two connection lugs, and articulated holes are formed in the two connection lugs, respectively. The articulated seat with the structure is processed conveniently, high in strength and can connect other parts without destroying the smash-ridging box.

Further, the bearings are conical bearings, the conical bearings located within the lower bearing seat are mounted in a forward direction and the bearing within the upper bearing seat is mounted in an opposite direction; a shaft sleeve is arranged on the transmission shaft between power input members and the upper conical bearing; a forward lock nut is connected to the transmission shaft by screw thread above the upper conical bearing, the forward lock nut is in contact with the inner ring of the upper conical bearing; a reverse lock nut is arranged above the forward lock nut on the transmission shaft; the diameter of the transmission shaft on which the forward lock nut is arranged is larger than that of the transmission shaft on which the reverse lock nut is arranged, the upper surface of the forward lock nut is higher than that of the transmission shaft on which the forward lock nut is arranged and the reverse lock nut is in contact with the forward lock nut.

By adopting above structure, clearance between the adjusted bearings cannot be changed at random, high adjustment accuracy of the clearance between the adjusted bearings is achieved, and the transmission property of the transmission shaft is stable.

Further, one end of the transmission shaft is a conical shaft, at one end of which a screw rod is arranged; a conical hole matching with the conical shaft and a through-hole through which the screw rod passes, are formed in the flange, on which a counterbore is formed at an opposite side to the conical hole, and the conical hole, the through-hole and the counterbore are communicated with each other; the conical shaft is arranged in the conical hole, the screw rod passes through the through-hole and extends into the counterbore in which a lock nut connected with the screw rod, is arranged; the gland is fixed on the screw rod via at least two lock bolts and is provided with a boss which presses against the lock nut.

By adopting above structure, the gland is fixed on the screw rod via more than two lock bolts so that the gland itself cannot rotate relative to the screw rod; since the boss of the gland presses against the end surface of the lock nut, the lock nut has no rotatable space so that it cannot loose, the reliability of fit between the conical shaft and the conical hole is improved, the transmission of the power is reliably achieved and the gland is conveniently fixed; in addition, when the conical shaft and the conical hole show wear phenomena, the gland can be dismounted, the lock nut are further screwed up and then the gland is locked by using the lock nut again. Due to the presence of the boss, there is clearance between the gland and the end surface of the screw rod, thus the gland has a space moving towards the direction of the screw rod, in this way, even if the lock nut is further locked, the boss of the gland can also press against the lock nut so as to prevent the lock nut from loosening and the fit clearance between the conical shaft and the conical hole can be adjusted as desired as well as on site without replacing parts.

Further, the connection device comprises a connection frame, a connection supporting plate, a guide sliding rod, a connecting nut, a sliding sleeve frame and a lifting oil cylinder; the connection frame comprises a plurality of horizontal beams, longitudinal beams, vertical beams, a first inclined strut and a second inclined strut; the longitudinal beams consist of lower longitudinal beams and upper longitudinal beams, the lower longitudinal beams are welded at both ends of the horizontal beams; the vertical beams are welded at the lower longitudinal beams close to the rear part, the upper longitudinal beams are welded at the upper end of the vertical beams; the first inclined strut is welded between the front end of the horizontal beam and the upper end of the vertical beam; the second inclined strut is welded between the vertical beams. The connection supporting plate is welded on the lower longitudinal beams and the upper longitudinal beams, respectively; the guide sliding rod passes through the connection supporting plate; a connecting nut is arranged below the lower connection supporting plate on the guide sliding rod and a connecting nut is arranged above the upper connection supporting plate on the guide sliding rod; the sliding sleeve frame comprises a sliding sleeve, a smash-ridging device connection seat and a lifting oil cylinder seat; the sliding sleeve slidably sleeves the guide sliding rod; the smash-ridging device connection seat is welded on the sliding sleeve and a mounting hole is formed in the smash-ridging device connection seat; the lifting oil cylinder seat is welded on the smash-ridging device connection seat; an oil cylinder articulated seat is fixed on the lower connection supporting plate, the piston rod of the lifting oil cylinder is articulated on the cylinder articulated seat, and the lower end of the lifting oil cylinder body is fixed on the lifting oil cylinder seat. For the subsoiling smash-ridging machine of the present invention, since it is required that the stroke of the lifting oil cylinder is relatively long, the lifting oil cylinder has larger length, the distance between the fixation point of the lifting oil cylinder body and the articulated seat is reduced when the lower end of the lifting oil cylinder body is fixed on the lifting oil cylinder seat and it is uneasy for the lifting oil cylinder to bent and deform when it works so that it has good load-carrying capacity; in addition, by adopting the structure compared to the structure that the upper end of the lifting oil cylinder body is fixed to the lifting oil cylinder seat, the connection frame has much lower height, thereby decreasing the vertical height of the connection frame as well as the height of the entire subsoiling smash-ridging machine; the smash-ridging device is fixed on the smash-ridging device connection seat through a bolt which passes through the mounting hole.

Further, the horizontal beams, the longitudinal beams, the vertical beams, the first inclined strut and the second inclined strut all use square tubes and are internally communicated with each other, so that oil chambers are formed within the horizontal beams, the longitudinal beams, the vertical beams, the first inclined strut and the second inclined strut; and thus the volume of the oil tank can be expanded using the existing structure.

Further, the connection device comprises two connecting rod mechanisms and a connecting rod for connecting the two connecting rod mechanisms; each connecting rod mechanism comprises a connecting rod seat, a first connecting rod, a second connecting rod, a third connecting rod, a fourth connecting rod and a driving oil cylinder; the connecting rod seat is fixed on the chassis; the lower end of the first connecting rod is articulated on the rear end of the connecting rod seat; one end of the second connecting rod is articulated at the middle lower position of the first connecting rod and the other end of the second connecting rod is articulated on the smash-ridging box; one end of the third connecting rod is articulated at the upper end of the first connecting rod and the other end of the third connecting rod is articulated on smash-ridging box and the third connecting rod and the second connecting rod are parallel to each other; one end of the fourth connecting rod is articulated at the middle upper position of the first connecting rod and the other end of the fourth connecting rod is articulated on the third connecting rod; and one end of the driving oil cylinder is articulated on the connecting rod seat and the other end of the driving oil cylinder is articulated in the middle of the first connecting rod. By adopting the connection device with this structure, the turn-over and vertical movement of the smash-ridging device can be achieved which facilitates the subsoiling and smash-ridging.

In order to overcome deficiency that the driving cab, the diesel engine, etc., of the existing subsoiling smash-ridging machine are all mounted on a platform, while the platform either has enough strength but with very high weight or has light weight but with insufficient strength, the present invention provides a subsoiling smash-ridging machine body.

The subsoiling smash-ridging machine body of the present invention comprises a walking mechanism, a chassis, a diesel engine component, a hydraulic oil tank, a cooler and a driving cab; the walking mechanism comprises crawler components arranged opposite to each other, each crawler component comprises a wheel stand, a driving wheel, a driven wheel, a lower guide wheel, an upper guide wheel, a crawler and a walking drive device; the driving wheel, the driven wheel, the lower guide wheel and the upper guide wheel are mounted on the wheel stand, the crawler sleeves the driving wheel, the driven wheel, the lower guide wheel and the upper guide wheel, the walking drive device is mounted on the wheel stand and drives the driving wheel to rotate; the chassis comprises a supporting platform, inclined strut plates and a supporting rib; the supporting platform is welded on wheel stand; the inclined strut plates are welded on the wheel stand and the supporting platform; the supporting rib is located in the front of the supporting platform and extends from the inclined strut plate at one side via the bottom of the supporting platform towards the inclined strut plate at the other side and rib plates in parallel to each other are arranged at the rear bottom of the inclined strut plates; a shock absorber is mounted on the supporting platform and a diesel engine fixing seat is mounted on the shock absorber; the diesel engine component comprises a diesel engine frame, a diesel engine, a wind tunnel box, a hydraulic pump and a diesel engine hood; the diesel engine frame is mounted on the diesel engine fixing seat and the shock absorption is performed on the diesel engine component via the shock absorber; the diesel engine is fixed on the diesel engine frame; the wind tunnel box is mounted at the front end of the diesel engine frame and is located in front of the diesel engine; the hydraulic pump is connected to an output shaft of the diesel engine; and the diesel engine and the wind tunnel box are covered with the diesel engine hood; and the driving cab is mounted in the front of the supporting platform.

According to the above structure, since the driving cab is mounted in the front of the supporting platform and other parts can be mounted on the supporting platform, the weight of which is very high, thus by arranging the supporting rib which is in the shape of the arc, bending resistance and deformation resistance of the supporting platform can be improved, thereby improving the supporting capability of the supporting platform while reducing the weight of the supporting platform. In the present invention, when the wind tunnel box works, it blows the wind from the outside towards the rear end via the front end of the diesel engine, fore-and-aft wind flow is formed on the diesel engine so as to dissipate heat from the diesel engine and improve the service life of the diesel engine. Since the hydraulic pump is connected to an output shaft of the diesel engine, the output shaft of the diesel engine drives the hydraulic pump to work when the diesel engine works; and since the diesel engine and the wind tunnel box are covered by the diesel engine hood, it can provide waterproof, dustproof and anti-collision effects for the diesel engine.

Further, the wheel stand comprises a wheel stand body and a wheel stand connection lug; the wheel stand connection lug is connected to the front end of the wheel stand body; a driven wheel accommodation groove is formed in the rear end of the wheel stand body, a first mounting hole through the driven wheel accommodation groove is formed in the wheel stand body so as to facilitate the mounting of the driven wheel; a lower guide wheel accommodation groove extends upwardly at the bottom surface of the wheel stand body, a second mounting hole through the lower guide wheel accommodation groove is formed in the wheel stand body so as to facilitate the mounting of the lower guide wheel; an upper guide wheel accommodation groove extends downwardly at the top surface of the wheel stand body, a third mounting hole through the upper guide wheel accommodation groove is formed in the wheel stand body so as to facilitate the mounting of the upper guide wheel; the driving wheel is mounted on the wheel stand connection lug through a bearing, and the walking drive device is fixed on the wheel stand connection lug; one portion of the driven wheel is located within the driven wheel accommodation groove, and the driven wheel is mounted by a mounting shaft passing through the first mounting hole; a part of the lower guide wheel is located within the lower guide wheel accommodation groove, a lower part of the lower guide wheel protrudes from the wheel stand body, the lower guide wheel is mounted by a mounting shaft passing through the second mounting hole and second nuts are mounted at both ends of the mounting shaft passing through the second mounting hole and thus the mounting of the lower guide wheel is reliable; a part of the upper guide wheel is located within the upper guide wheel accommodation groove, an upper part of the upper guide wheel protrudes from the wheel stand body, the upper guide wheel is mounted by a mounting shaft passing through the third mounting hole and third nuts are mounted at both ends of the mounting shaft passing through the third mounting hole and thus the mounting of the upper guide wheel is reliable.

Further, a chamfer is formed at the rear end of the wheel stand body and the front end of the wheel stand connection lug is circular arc. In this way, after the crawler has been mounted, the crawler can be prevented from interfering with the wheel stand during the running of the crawler.

Further, a second boss is arranged on the exterior side of the wheel stand body at the position corresponding to the second mounting hole; and a third boss is arranged on the exterior side of the wheel stand body at the position corresponding to the third mounting hole. When the second nuts are locked, the second nuts are allowed to come in contact with the second boss and due to the arrangement of the second boss, the direct contact of the second nuts and the wheel stand body can be avoided so that, on one hand, the second nuts are conveniently locked to improve the locking force, on the other hand, the strength and the service life of the wheel stand body can be improved. When the third nuts are locked, the third nuts are allowed to come in contact with the third boss and due to the arrangement of the third boss, the direct contact of the third nuts and the wheel stand body can be avoided so that, on one hand, the third nuts are conveniently locked to improve the locking force, on the other hand, the strength and the service life of the wheel stand body can be improved.

Further, the walking drive device is a hydraulic motor. The driving wheel is driven by the hydraulic motor so that the stepless speed regulation and the large driving force can be achieved.

Further, a circular arc groove is formed at the corner of the supporting rid so that the phenomenon of stress concentration is reduced and the strength of the supporting rid is improved.

In order to improve the strength of the lower shaft seat, and facilitate to mount more bearings in larger force place and less bearings in small force place so as to improve the stuffiness and the transmission stability of the transmission shaft and reduce the cost; and in order to facilitate the welding of rib plates and ensure that lubricating oil flows within the smash-ridging box smoothly so as to improve the lubricating effects, the present invention provides a smash-ridging device of a subsoiling smash-ridging machine.

To achieve the above-mentioned object, the smash-ridging device of the subsoiling smash-ridging machine comprises a bottom plate, side plates and a top plate, the lower end surfaces of the side plates are welded on the bottom plate, and the top plate is welded on the upper end surfaces of the side plates;
at least two lower through-holes are formed in the bottom plate, lower bearing seats extending upwardly are welded on the inner walls of the lower through-holes, the lower bearing seats protrude from the upper surface of the bottom plate, the height of protruding part of the lower bearing seat is larger than the width of two bearings, bearings are mounted in the lower bearing seats, rib plates are welded between adjacent lower bearing seats, and there are lubricating oil passages between the rib plates and the bottom plate;
at least two upper through-holes corresponding to the lower through-holes in the vertical direction are formed in the top plate, an upper bearing seat extending downwardly is arranged on the inner walls of the upper through-holes, the length of the lower bearing seat is larger than that of the upper bearing seat, a bearing is mounted in the upper bearing seat,
a driving mechanism is mounted on the top plate and drives the transmission shaft to rotate;
a transmission shaft is mounted between the bearings located within the lower bearing seat and a bearing located within the upper bearing seat and the lower ends of the transmission shafts extend out of the smash-ridging box;
power input members are mounted on the transmission shafts and the lower surface of each power input member abuts against the shaft shoulders of the transmission shafts; and
a spiral drill rod is mounted at the lower ends of the transmission shafts.

According to the structure, it is convenient to connect the lower bearing seat by arranging the lower through-holes and to connect the upper bearing seat by arranging the upper through-holes; since the lower bearing seat extends upwardly and the upper bearing seat extends downwardly, both the lower bearing seat and the upper bearing seat are located within the smash-ridging box and thus, on one hand, the contour dimension of the smash-ridging box with bearing seats can be reduced, on the other hand, it can have protecting effect on the upper and lower bearing seats. In addition, during the use, the smash-ridging box with bearing seats can be filled with lubricating oil, while by adopting the arrangement of the upper and lower bearing seats, it is more easier for lubricating oil within the smash-ridging box with bearing seats to lubricate bearings within the upper and lower bearing seats; since the length of the lower bearing seat is larger than that of the upper bearing seat, when the bearings are mounted, in consideration of the special subsoiling and smash-ridging environment, more than two bearings are mounted within the lower bearing seat and one bearing is mounted within the upper bearing seat such that the strength, rigidity and the transmission stability of bearing seats can be improved, furthermore, by selecting an appropriate amount of bearings, the costs in manufacturing the smash-ridging box and costs caused by the number of bearings are reduced; since rib plates are arranged between the bearing seats, the strength of the bearing seats can be improved; when the rib plates are welded, lubricating oil passages are reserved specially between the rib plates and the bottom plate so that, on one hand, lubricating oil is allowed to smoothly flow at the bottom of the reinforced smash-ridging box so as to improve the lubricating effect and on the other hand, it is more convenient to weld the rib plates.

Further, a lower boss is formed by extending downwardly each lower bearing seat and protruding from the lower surface of the bottom plate and the lower boss is used for mounting a lower bearing end cover. After the lower boss is arranged, on one hand, the strength of the bottom plate is improved and on the other hand, a certain distance can be reserved between the lower bearing end cover and the lower surface of the bottom plate so as to facilitate the mounting and dismounting of the lower bearing end cover. An upper boss is formed by extending upwardly the upper bearing seat and protruding from the upper surface of the top plate and the upper boss is used for mounting an upper bearing end cover. After the upper boss is arranged, on one hand, the strength of the top plate is improved and on the other hand, a certain distance can be reserved between the upper bearing end cover and the upper surface of the top plate so as to facilitate the mounting and dismounting of the upper bearing end cover.

Further, one of the side plates comprising a plate body is arranged in the front of the smash-ridging box, manholes are formed in the plate body, a flange is arranged around the manhole on the plate body, mounting holes are formed in the plate body and the flange, and a step is formed between the inside of the flange and the plate body; and an extended mounting flange is arranged on the plate body. Since parts such as a transmission system are all mounted within the smash-ridging box, the manholes are formed so as to mount, dismount and maintain the parts such as the transmission system; the flange is generally connected to the plate body by welding, after the mounting hole is formed in the position of the flange, the strength of manhole covers fixed by bolts is improved and thus the side plates are not easy to damage. In addition, due to the arrangement of the flange, after the manhole covers are mounted, a distance equal to or greater than the thickness of the flange exists between the manhole covers and the plate body so as to facilitate the mounting and dismounting of the manhole covers; by arranging the step, the welding seam between the plate body and the inside of the flange can be increased, thereby improving the strength of the connection between the flange and the plate body, in addition, the step can also have position-limiting and positioning effects on a seal ring so that the sealing property between the manhole covers and the side plates is improved. By arranging the extended mounting flange on the plate body, other parts can be connected to the extended mounting flange at any time and it is convenient to dismount other parts at any time without destroying the smash-ridging box.

Further, a first bearing part is arranged on the lower surface of the bottom plate, a first connection lug is welded on the side plates, a first bearing plate extending inwardly is arranged on the first connection lug, and the first bearing plate supports the first bearing part. Since the bottom plate is welded on the side plates, a phenomenon of stress concentration is easily formed at the welding seam, thus cracks are easily formed at the connection between the bottom plate and side plates which can even cause them to completely separate. After the first bearing part is arranged, it can have bearing effect on the bottom plate using the action of the first bearing plate on the first bearing part and thus better connection strength of the bottom plate and the side plates is achieved. A second bearing part is arranged on the lower surface of the bottom plate, a flattening device connection lug is welded on the side plates, a second bearing plate extending inwardly is arranged on the flattening device connection lug, and the second bearing plate supports the second bearing part. Since the bottom plate is welded on the side plates, a phenomenon of stress concentration is easily formed at the welding seam, thus cracks are easily formed at the connection between the bottom plate and side plates which can even make them to completely separate. After the second bearing part is arranged, it can have bearing effect on the bottom plate using the action of the second bearing plate on the second bearing part and thus better connection strength of the bottom plate and the side plates is achieved. The second bearing part and the first bearing part are arranged opposite to each other.

Further, a first welding part is arranged on the top plate, a second connection lug is welded on the side plates, a second welding plate extending inwardly is arranged on the second connection lug, and the second welding plate is welded with the first welding part on the top plate; in this way, the top plate is uneasy to be separated from the side plates, the second connection lug has large welding area and two welding surfaces are arranged vertically so that the second connection lug is high in connection strength; a third connection lug is welded on the top plate, a third welding plate extending downwardly is arranged on the third connection lug, a second welding part is welded on the side plates, and the third welding plate is welded with the second welding part; in this way, the top plate is uneasy to be separated from the side plates, the third connection lug has large welding area and two welding surfaces are arranged vertically so that the third connection lug is high in connection strength;

Further, an articulated seat is arranged on the plate body and comprises a connection seat and connection lugs, which extend towards the direction away from the connection seat from the both sides of the connection seat, an accommodation groove is formed between two connection lugs, and articulated holes are formed in the two connection lugs, respectively. The articulated seat with the structure is processed conveniently, high in strength and can connect other parts without destroying the smash-ridging box.

Further, the bearings are conical bearings, the conical bearings located within the lower bearing seat are mounted in a forward direction and the bearing within the upper bearing seat is mounted in an opposite direction; a shaft sleeve is sleeved on the transmission shaft between power input members and the upper conical bearing; a forward lock nut is connected to the transmission shaft by screw thread above the upper conical bearing, the forward lock nut is in contact with the inner ring of the upper conical bearing; a reverse lock nut is arranged above the forward lock nut on the transmission shaft; the diameter of the transmission shaft on which the forward lock nut is arranged is larger than that of the transmission shaft on which the reverse lock nut is arranged, the upper surface of the forward lock nut is higher than that of the transmission shaft on which the forward lock nut is arranged and the reverse lock nut is in contact with the forward lock nut.

By adopting above structure, clearance between the adjusted bearings cannot be changed at random, high adjustment accuracy of the clearance between the adjusted bearings is achieved, and the transmission property of the transmission shaft is stable.

Further, one end of the transmission shaft is a conical shaft, at one end of which a screw rod is arranged; a conical hole matching with the conical shaft and a through-hole through which the screw rod passes are formed in the flange, on which a counterbore is formed at an opposite side to the conical hole, and the conical hole, the through-hole and the counterbore are communicated with each other; the conical shaft is arranged in the conical hole, the screw rod passes through the through-hole and extends into the counterbore in which a lock nut connected with the screw rod is arranged; a gland is fixed on the screw rod via at least two lock bolts and the gland is provided with a boss which presses against the lock nut.

By adopting above structure, the gland is fixed on the screw rod via more than two lock bolts so that the gland itself cannot rotate relative to the screw rod; since the boss of the gland presses against the end surface of the lock nut, the lock nut has no rotatable space so that it cannot loose, the reliability of fit between the conical shaft and the conical hole is improved, the transmission of the power is reliably achieved and the gland is conveniently fixed; in addition, when the conical shaft and the conical hole show wear phenomena, the gland can be dismounted, the lock nut are further screwed up and then the gland is locked by using the lock nut again. Due to the presence of the boss, there is clearance between the gland and the end surface of the screw rod, thus the gland has a space moving towards the direction of the screw rod, in this way, even if the lock nut is further locked, the boss of the gland can also press against the lock nut so as to prevent the lock nut from loosening and the fit clearance between the conical shaft and the conical hole can be adjusted as desired as well as on site without replacing parts.

In order to conveniently mount the upper and lower guide wheels and prevent the lower guide wheel from separating from the wheel stand, the present invention provides a walking mechanism for preventing a lower guide wheel from falling off.

To achieve the above-mentioned object, the walking mechanism for preventing a lower guide wheel from falling off comprises walking mechanisms each of which comprises a wheel stand, a driving wheel, a driven wheel, a lower guide wheel, an upper guide wheel and a crawler; at least two lower guide wheel accommodation cavities are arranged at the bottom of the wheel stand, the driving wheel is mounted at one end of the wheel stand, the driven wheel is mounted at the other end of the wheel stand, second mounting holes are formed in the bottom of the wheel stand corresponding to the lower guide wheel accommodation cavities and the second mounting hole is configured as a lower open groove; supporting lugs are arranged on the top of the wheel stand, and an upper open groove is formed in the supporting lug; an anti-falling piece is fixed at the lower open groove on the wheel stand and is provided with an annular hole; a mounting shaft passes through the lower open groove and the annular hole, the lower guide wheel is mounted on the mounting shaft, a part of the lower guide wheel is located within the lower guide wheel accommodation cavity; a mounting shaft is mounted in the upper open groove, the upper guide wheel is mounted on the mounting shaft, and the crawler sleeves the driving wheel, the driven wheel, the lower guide wheel and the upper guide wheel.

According to the above-mentioned structure, when the lower guide wheel at the bottom of the wheel stand is mounted, the lower guide wheel is firstly mounted onto the mounting shaft and the lower guide wheel and the mounting shaft are then integrally mounted onto the wheel stand so as to allow a part of the lower guide wheel to be accommodated in the lower guide wheel accommodation cavity and the mounting shaft to be snapped into the lower open groove from the opening of the lower open groove, the anti-falling piece is then fixed to the wheel stand to allow the mounting shaft to pass through the annular hole without firstly aligning the lower guide wheel with the lower open groove to insert the mounting shaft so that the lower guide wheel is very conveniently mounted. In addition, whether the crawler is separated from the lower guide wheel or not, since the annular hole are formed in the anti-falling piece, the separation of the mounting shaft from the wheel stand can be limited via the anti-falling piece, and moreover, the anti-falling piece is mounted later so that the lower guide wheel is conveniently mounted. When the upper guide wheel at the top of the wheel stand is mounted, the upper guide wheel is firstly mounted onto the mounting shaft and the upper guide wheel and mounting shaft are then integrally mounted onto the wheel stand so as to allow the mounting shaft to be snapped into the upper open groove from the opening of the upper open groove without firstly aligning the upper guide wheel with the upper open groove to insert the mounting shaft so that the upper guide wheel is very conveniently mounted.

Further, the lower open groove comprises a lower circle-arc segment and lower straight-line segments extending from both ends of the lower circle-arc segment towards the same side; and the upper open groove comprises an upper circle-arc segment and upper straight-line segments extending from both ends of the upper circle-arc segment towards the same side. The lower straight-line segments have the guiding effect on the mounting of the mounting shaft corresponding to the lower guide wheel. In addition, after the mounting shaft corresponding to the lower guide wheel has been mounted, the possibility that the mounting shaft corresponding to the lower guide wheel slides off the wheel stand can be reduced and by adopting the lower circle-arc segment, the mounting shaft corresponding to the lower guide wheel can coincide with and come in contact with the lower open groove and the wear between the mounting shaft corresponding to the lower guide wheel and the wheel stand can be reduced. The upper straight-line segments have the guiding effect on the mounting of the mounting shaft corresponding to the upper guide wheel. In addition, after the mounting shaft corresponding to the upper guide wheel has been mounted, the possibility that the mounting shaft corresponding to the upper guide wheel slides off the supporting lug can be reduced and by adopting the upper circle-arc segment, the mounting shaft corresponding to the upper guide wheel can coincide with and come in contact with the upper open groove and the wear between the mounting shaft corresponding to the upper guide wheel and the supporting lugs can be reduced.

Further, the wheel stand comprises a longitudinal beam, an upper cover, an end plate and a connection lug; a through-groove is formed at one end of the longitudinal beam from top to bottom; the upper cover is welded on the longitudinal beam and located above the through-groove; the end plate is welded at the other end of the longitudinal beam; and the connection lug are welded in the end plate. By arranging the upper cover on the longitudinal beam, both the bending resistance and strength of the stand body can be improved.

Further, sliding grooves are formed at two side walls of the through-groove on the wheel stand, respectively; a tensioning device is arranged within the through-groove and comprises a sliding block and a linear driving mechanism, the sliding block is slidably arranged on the sliding grooves and the linear driving mechanism drives the sliding block to make linear movement; and the driven wheel is mounted on the sliding block via a wheel shaft. The sliding grooves have guiding effects on the sliding block, the position of which can be adjusted via the tensioning device so as to adjust the position of the driven wheel mounted onto the sliding block, and thus the crawler can be tensioned eventually.

Further, the linear driving mechanism comprises a bearing seat, a lead screw and a nut, wherein the bearing seat is fixed within the through-groove, the lead screw is arranged on the bearing seat via a bearing, the nut is fixed on the sliding block and the lead screw is meshed with the nut. The linear driving mechanism is simple in structure, low in cost and small in occupation space.

Further, the lead screw is provided with a driving part of which the cross section is polygon and a window communicated with the through-groove is arranged at the position corresponding to the driving part on the longitudinal beam. By arranging the driving part, it is convenient to rotate the lead screw and by arranging the window, it is convenient to extend a tool into the through-groove to rotate the lead screw.

Further, a cover plate is fixed at the position corresponding to the window on the longitudinal beam and has dustproof, waterproof and protecting effects.

Further, the sliding block which is U-shaped comprises a connection plate and supporting plates extending from both ends of the connection plate towards the same direction; and mounting holes each of which the diameter is larger than that of the mounting shaft corresponding to the driven wheel are formed in the supporting plates. By adopting the U-shaped sliding block and using two supporting plates, two-point supporting wheel shaft is achieved so that the mounting shaft corresponding to the driven wheel is well under stress. In addition, by arranging the mounting holes each of which the diameter is larger than that of the mounting shaft corresponding to the driven wheel, when the mounting shaft corresponding to the driven wheel is mounted, the mounting shaft corresponding to the driven wheel has fine-adjusted space relative to the sliding block.

Further, the anti-falling piece is fixed on the wheel stand via the bolt so that it is convenient to mount and dismount the anti-falling piece.

In order to facilitate the mounting of the upper and lower guide wheels, the present invention provides a crawler frame of a subsoiling machine.

To achieve the above-mentioned object, the crawler frame of the subsoiling machine comprises a wheel stand, at least two lower guide wheel accommodation cavities are formed at the bottom of the wheel stand, second mounting holes are formed in the bottom of the wheel stand corresponding to the lower guide wheel accommodation cavities and the second mounting holes is a lower open groove; supporting lugs are arranged on the top of the wheel stand and is provided with an upper open groove.

According to the above-mentioned structure, when the lower guide wheel at the bottom of the wheel stand is mounted, the lower guide wheel is firstly mounted onto the mounting shaft corresponding to the lower guide wheel and the lower guide wheel and the mounting shaft corresponding to the lower guide wheel are then integrally mounted onto the wheel stand so as to allow a part of the lower guide wheel to be accommodated in the lower guide wheel accommodation cavity and the mounting shaft corresponding to the lower guide wheel to be snapped into the lower open groove from the opening of the lower open groove without firstly aligning the lower guide wheel with the lower open groove to insert the mounting shaft corresponding to the lower guide wheel so that the lower guide wheel is very conveniently mounted. When the upper guide wheel at the top of the wheel stand is mounted, the upper guide wheel is firstly mounted onto the mounting shaft corresponding to the upper guide wheel and the upper guide wheel and mounting shaft corresponding to the upper guide wheel are then integrally mounted onto the wheel stand so as to allow the mounting shaft corresponding to the upper guide wheel to be snapped into the upper open groove from the opening of the upper open groove without firstly aligning the upper guide wheel with the upper open groove to insert the mounting shaft corresponding to the upper guide wheel so that the upper guide wheel is very conveniently mounted.

Further, the lower open groove comprises a lower circle-arc segment and lower straight-line segments extending from both ends of the lower circle-arc segment towards the same side; and the upper open groove comprises an upper circle-arc segment and upper straight-line segments extending from both ends of the upper circle-arc segment towards the same side. The lower straight-line segments have the guiding effect on the mounting of the mounting shaft corresponding to the lower guide wheel. In addition, after the mounting shaft corresponding to the lower guide wheel has been mounted, the possibility that the mounting shaft corresponding to the lower guide wheel slides off the wheel stand can be reduced and by adopting the lower circle-arc segment, the mounting shaft corresponding to the lower guide wheel can coincide with and come in contact with the lower open groove and the wear between the mounting shaft corresponding to the lower guide wheel and the wheel stand can be reduced. The upper straight-line segments have the guiding effect on the mounting of the mounting shaft corresponding to the upper guide wheel. In addition, after the mounting shaft corresponding to the upper guide wheel has been mounted, the possibility that the mounting shaft corresponding to the upper guide wheel slides off the supporting lug can be reduced and by adopting the upper circle-arc segment, the mounting shaft corresponding to the upper guide wheel can coincide with and come in contact with the upper open groove and the wear between the mounting shaft corresponding to the upper guide wheel and the supporting lugs can be reduced.

Further, the wheel stand comprises a longitudinal beam, an upper cover, an end plate and a connection lug; a through-groove is formed at one end of the longitudinal beam from top to bottom; the upper cover is welded on the longitudinal beam and located above the through-groove; the end plate is welded at the other end of the longitudinal beam; and the connection lug are welded in the end plate. By arranging the upper cover on the longitudinal beam, both the bending resistance and strength of the stand body can be improved.

Further, sliding grooves are formed at two side walls of the through-groove on the wheel stand, respectively; a tensioning device is arranged within the through-groove and comprises a sliding block and a linear driving mechanism, the sliding block is slidely arranged on the sliding grooves and the linear driving mechanism drives the sliding block to make linear movement. The sliding grooves have guiding effects on the sliding block of which the position can be adjusted via the tensioning device so as to adjust the position of the driven wheel mounted onto the sliding block and the crawler is then tensioned eventually.

Further, the linear driving mechanism comprises a bearing seat, a lead screw and a nut, wherein the bearing seat is fixed within the through-groove, the lead screw is arranged on the bearing seat via a bearing, the nut is fixed on the sliding block and the lead screw is meshed with the nut. The linear driving mechanism is simple in structure, low in cost and small in occupation space.

Further, the lead screw is provided with a driving part of which the cross section is polygon and a window communicated with the through-groove is arranged at the position corresponding to the driving part on the longitudinal beam. By arranging the driving part, it is convenient to rotate the lead screw and by arranging the window, it is convenient to extend a tool into the through-groove to rotate the lead screw.

Further, a cover plate is fixed at the position corresponding to the window on the longitudinal beam and has dustproof, waterproof and protecting effects.

Further, the sliding block which is U-shaped comprises a connection plate and supporting plates extending from both ends of the connection plate towards the same direction; mounting holes of which each diameter is larger than that of the mounting shaft corresponding to the driven wheel are formed in the supporting plates. By adopting the U-shaped sliding block and two supporting plates, the two-point supporting of the mounting shaft corresponding to the driven wheel is achieved such that the mounting shaft corresponding to the driven wheel is better under stress. In addition, by forming the mounting holes of which each diameter is larger than that of the mounting shaft corresponding to the driven wheel, the mounting shaft corresponding to the driven wheel has fine-tuning space with respect to the sliding block when the mounting shaft corresponding to the driven wheel is mounted.

The technical problem to be solved by the present invention is to provide a spiral type deep-ploughing subsoiling machine capable of meeting the demand of driving on complex terrain.

In order to solve the above-mentioned technical problem, the spiral type deep-ploughing subsoiling machine comprises a vehicle frame, crawler devices, a driving cab, a hydraulic oil tank, a diesel engine component, a connection device, a smash-ridging device and a cooler, at least two sets of the crawler devices are arranged at both sides of the lower part of the vehicle frame, the driving cab, the diesel engine component, the hydraulic oil tank, the cooler and the connection device are arranged on the platform surface of the vehicle frame, and the smash-ridging device is arranged on the connection device. When the spiral type deep-ploughing subsoiling machine operates via the smash-ridging device, since more than two sets of the crawler devices are arranged at both sides of the lower part of the vehicle frame, the spiral type deep-ploughing subsoiling machine has stronger driving capability by driving respective crawler device, thereby meeting the demand of driving on complex terrain.

As further improvement on the present invention, each crawler device comprises a crawler wheel and a crawler, wherein the crawler wheel is arranged on the vehicle frame and the crawler is mounted on the crawler wheel.

As further improvement on the present invention, a diesel engine hood for covering the diesel engine component is arranged on the platform surface of the vehicle frame. In conclusion, above spiral type deep-ploughing subsoiling machine has the advantage of meeting the demand of driving on complex terrain.

The technical problem to be solved by the present invention is to provide a spiral type deep-ploughing subsoiling machine which has the advantages of simple structure, compact and reasonable layout, good heat dissipation effect, less effect of heat and noise on driver and low energy loss.

In order to solve the technical problems that the smash-ridging box is low in strength and inconvenient to install, the present invention provides a smash-ridging box with a connection plate.

To achieve above purpose, the smash-ridging box with a connection plate comprises side plates, wherein each side plate comprises a plate body on which an extended mounting flange is arranged, and the extended mounting flange and the plate body are in the surface contact.

According to the above-mentioned structure, since the extended mounting flange is arranged, other parts can be connected to and conveniently dismounted from the extended mounting flange at any time without destroying the smash-ridging box so that the strength of the smash-ridging box does not be affected and the installation procedure is simple; in addition, since the extended mounting flange and the plate body are in the surface contact, the strength of the connection between the extended mounting flange and the plate body is high.

Further, the extended mounting flange is connected with the plate body by welding. By adopting the structure, the strength of the connection between the extended mounting flange and the plate body is high.

Further, the extended mounting flange is connected with the plate body by a bolt. By adopting the structure, it is convenient to install and disassemble the extended mounting flange.

Further, an articulated seat is arranged on the plate body. It is convenient to allow the articulated seat to be articulated with other parts without destroying the plate body.

Further, the articulated seat comprises a connection seat and connection lugs, which extend towards the direction away from the connection seat from the both sides of the connection seat, an accommodation groove is formed between two connection lugs, and articulated holes are formed in the two connection lugs, respectively. The articulated seat with such structure is convenient to process and high in strength.

Further, the flattening device connection lug extending downwards slantingly is arranged at the lower part of the plate body. The flattening device connection lug is conveniently connected to the flattening device and cannot destroy the side plates.

Further, a second bearing plate is formed backwards in the middle of the flattening device connection lug. The second bearing plate abuts against the bottom of the smash-ridging box, therefore, it is uneasy to occur cracking phenomenon in the flattening device connection lug and the plate body.

In order to conveniently install parts such as a transmission system within the smash-ridging box and connect other parts onto the smash-ridging box, the present invention provides a smash-ridging box with manhole covers.

To achieve above purpose, the smash-ridging box with manhole covers comprises side plates, wherein the side plate comprises a plate body which is provided with a manhole and an extended mounting flange.

According to the above-mentioned structure, due to the arrangement of the manhole, the parts such as the transmission system can be placed and mounted within the smash-ridging box through the manhole such that the parts can be conveniently mounted and dismounted and commissioned, adjusted and repaired. Due to the arrangement of the extended mounting flange, other parts can be connected to and conveniently dismounted from the extended mounting flange at any time without destroying the smash-ridging box.

Further, a flange is located around the manhole on the plate body and mounting holes are formed in the plate body and the flange. A manhole cover is typically mounted at the position corresponding to the manhole by a bolt and after the flange is arranged, the mounting holes are formed in the corresponding plate body and the flange such that the thickness of the part through which the bolt passes is increased, thereby improving the strength of the plate body; in addition, due to the arrangement of the flange, after the manhole covers are mounted, a distance equal to or greater than the thickness of the flange exists between the manhole covers and the plate body so as to facilitate the mounting and dismounting of the manhole covers.

Further, a step is formed between the inner side of the flange and the plate body. The flange is generally connected to the plate body in a manner of welding, after the step is formed, the welding seam between the plate body and the inside of the flange can be increased, thereby improving the strength of the connection between the flange and the plate body, on the other hand, when a seal ring needs to be arranged between the side plates and the manhole cover, the step can have abutting and positioning effects, thereby improving the sealing property.

Further, a seal groove is formed in the flange. The seal groove can accommodate the seal ring and limit the position of the seal ring, thereby improving the sealing property. After the manhole covers are mounted, sealing oil can be injected into the seal groove instead of arranging the seal ring so as to achieve the sealing effect.

Further, an articulated seat is arranged on the plate body. It is convenient to allow the articulated seat to be articulated with other parts without destroying the plate body.

Further, the articulated seat comprises a connection seat and connection lugs, which extend towards the direction away from the connection seat from the both sides of the connection seat, an accommodation groove is formed between two connection lugs, and articulated holes are formed in the two connection lugs, respectively. The articulated seat with such structure is convenient to process and high in strength.

Further, the flattening device connection lug extending downwards slantingly is arranged at the lower part of the plate body. The flattening device connection lug is conveniently connected to the flattening device and cannot destroy the side plates.

In order to achieve convenient manufacturing and reduce the manufacturing cost, the present invention provides a smash-ridging box.

To achieve above purpose, a smash-ridging box, comprising a bottom plate, side plates and a top plate, the lower end surface of the side plates are welded on the bottom plate, and the top plate is welded on the upper end surfaces of the side plates; at least two lower through-holes are provided on the bottom plate, lower bearing seats extending upwardly are welded on the inner walls of the lower through-holes, the lower bearing seats protrude from the upper surface of the bottom plate, and the height of protruding part of the lower bearing seat is larger than the width of two bearings.

According to above structure, it is convenient to connect the lower bearing seat by arranging the lower through-holes, the lower bearing seat and the bottom plate are split-type structure in the present invention and only welded together when be connected, therefore, it is much easier to manufacture a separate bottom plate and the lower bearing seat, thereby reducing the manufacturing cost; since the lower bearing seat extends upwardly, it is located within the smash-ridging box and thus, on one hand, the contour dimension of the smash-ridging box can be reduced, on the other hand, it can have protecting effect on the lower bearing seats. In addition, during the use, the smash-ridging box can be filled with lubricating oil, while by adopting the arrangement of the lower bearing seat, it is more easier for lubricating oil within the smash-ridging box to lubricate bearings within the lower bearing seats; since the heights of the protruding part of the lower bearing seats are larger than widths of more than two bearings, more than two bearings can be mounted within the lower bearing seat, thereby improving the supporting stability.

Further, a lower boss is formed by extending downwardly each lower bearing seat and protruding out of the lower surface of the bottom plate. The lower boss is used for mounting a lower bearing end cover. After the lower boss is arranged, on one hand, the strength of the bottom plate is improved and on the other hand, a certain distance can be reserved between the lower bearing end cover and the lower surface of the bottom plate so as to facilitate the mounting and dismounting of the lower bearing end cover.

Further, rib plates are welded between adjacent lower bearing seats. Because of larger height of the lower bearing seat, after rib plates are arranged, the strength of the lower bearing seat can be greatly increased.

Further, a bearing part is arranged at the lower surface of the bottom plate, connection lugs are welded on the side plates and supporting plates extending inwardly are arranged on the connection lugs and support the bearing part. Since the bottom plate is welded on the side plates, the phenomenon of stress concentration is easily formed at the welding seam, thus cracks are easily formed at the connection between the bottom plate and side plates which can even make them to completely separate. After the bearing part is arranged, it can have bearing effect on the bottom plate and thus better connection strength of the bottom plate and the side plates is achieved.

In order to improve the strength of the lower bearing seat, conveniently weld the rib plates and ensure that the lubricating oil flows smoothly within a reinforced smash-ridging box, the present invention provides a reinforced smash-ridging box.

To achieve above purpose, the reinforced smash-ridging box comprises a box body composed of a bottom plate, side plates and a top plate; at least two lower through-holes are formed in the bottom plate, lower bearing seats extending upwardly are welded on the inner walls of the lower through-holes, the lower bearing seats protrude from the upper surface of the bottom plate, rib plates are welded between adjacent lower bearing seats, and there are lubricating oil passages between the rib plates and the bottom plate.

According to above structure, it is convenient to arrange the lower bearing seats by arranging the lower through-holes; since the lower bearing seat extends upwardly, the lower bearing seats are located within the reinforced smash-ridging box and thus, on one hand, the contour dimension of the reinforced smash-ridging box can be reduced, on the other hand, it can have protecting effect on the lower bearing seats. In addition, during the use, the reinforced smash-ridging box can be filled with lubricating oil, while by adopting the arrangement of the lower bearing seats, it is more easier for lubricating oil within the reinforced smash-ridging box to lubricate bearings within the lower bearing seats; since rib plates are arranged between the lower bearing seats, the strength of the bearing seats can be improved, when the rib plates are welded, lubricating oil passages are reserved specially between the rib plates and the bottom plate so that, on one hand, lubricating oil is allowed to smoothly flow at the bottom of the reinforced smash-ridging box so as to improve the lubricating effect and on the other hand, it is more convenient to weld the rib plates.

Further, the heights of the protruding part of the lower bearing seats are larger than the widths of two bearings. Since the heights of the protruding part of the lower bearing seats are larger than widths of more than two bearings, more than two bearings can be mounted within the lower bearing seat, thereby improving the supporting stability.

Further, a lower boss is formed by extending downwardly each lower bearing seat and protruding out of the lower surface of the bottom plate. The lower boss is used for mounting the lower bearing end cover; after the lower boss is arranged, on one hand, the strength of the bottom plate is improved and on the other hand, a certain distance can be reserved between the lower bearing end cover and the lower surface of the bottom plate so as to facilitate the mounting and dismounting of the lower bearing end cover.

Further, the lower end surfaces of the side plates are welded on the bottom plate, and the top plate is welded on the upper end surfaces of the side plates; a bearing part is arranged at the lower surface of the bottom plate, connection lugs are welded on the side plates and supporting plates extending inwardly are arranged on the connection lugs and support the bearing part. Since the bottom plate is welded on the side plates and the phenomenon of stress concentration is easily formed at the welding seam, cracks are easily formed at the connection between the bottom plate and side plates which can make them even completely separated. After the first bearing part is arranged, it can have bearing effect on the bottom plate and thus better connection strength of the bottom plate and the side plates is achieved.

To overcome disadvantages of unreasonable arrangement of bearings, inability to undertake larger axial load and worse rigidity of the whole structure in the transmission device of the existing agricultural cultivating machinery, the technical problem solved by the present invention is to provide a transmission device of a tillage device using a reverse conical bearing with the advantages of simple structure, reasonable arrangement of bearings, ability to undertake larger axial load and good rigidity of the whole structure.

To solve above technical problem, the present invention provides the transmission device of a tillage device using the reverse conical bearing, which comprises a flange, lower bearing end covers, lower bearing seats, bearings, transmission shafts, power input members, an upper bearing seat, bearings, a lock nut and an upper bearing cover, wherein the flange and each power input member are mounted on the transmission shafts, the bearings are mounted at both ends of each power input member, the bearings are mounted on the lower bearing seat of the smash-ridging box or chassis and are mounted on the upper bearing seat of the smash-ridging box or chassis, the bearings within the lower bearing seats is positioned by a shaft shoulder, the clearance of the bearing within the upper bearing seat has been adjusted by the lock nut and then the bearing is locked and positioned, and the smash-ridging box or chassis is sealed by the lower bearing end cover and the upper bearing end cover.

Preferably, the size of the bearings located within the lower bearing seat is larger than that of bearing located within the upper bearing seat.

Preferably, an elastic pad is arranged between the bearing located within the upper bearing seat and the lock nut.

Preferably, a cushioning sleeve is arranged at the upper part of the flange.

The operating principle is as follows: by adopting the reverse conical bearing in the present invention, the whole structure in the reverse manner has better rigidity than that in the forward manner. The bearings located within the lower bearing seat and the bearings located within the upper bearing seats are mounted at both ends of the power input members so that the bending moment of the transmission shafts is decreased. The bearings within the lower bearing seats and the lower bearing seats are positioned by a shaft shoulder, the lower bearing seats are located at the lower part of the smash-ridging box or chassis, when the transmission shafts operate, the transmission shafts will bear the counter-acting force from the ground, the counter-acting force from the ground will be transmitted from the shaft shoulder to the bearings within the lower bearing seats and then to the lower bearing seats and the smash-ridging box or chassis by the bearings within the lower bearing seats. Since the lower bearing seats are located at the lower part of the smash-ridging box or chassis, the self-weight of the smash-ridging box or chassis can cushion the counter-acting force from the ground so that the transmission shafts are more stable during the operation. The bearings within the upper shaft seats are locked and positioned after the bearing clearance of which being adjusted by the lock nut, the bearing within the upper bearing seat is located at the upper part of the smash-ridging box or chassis so that it is convenient for the lock nut to adjust the bearing clearance.

The size of the bearings located within the lower bearing seat is larger than that of bearing located within the upper bearing seat. Since the bearings within the lower bearing seats will bear the counter-acting force from the ground during the operation, the bearings within the lower bearing seats bears larger force than the bearing within the upper bearing seat and thus the size of the bearings within the lower bearing seats is enlarged to facilitate to bear the counter-acting force from the ground and better work efficiency can be achieved.

An elastic pad is arranged between the bearing located within the upper bearing seat and the lock nut. The elastic pad can enable the bearing located within the upper bearing seat and the lock nut joined fully and a certain pre-tightening force can be produced so as to facilitate to cushion the axial load.

A cushioning sleeve is arranged at the upper part of the flange. When the transmission shaft works, it can cushion the axial load transmitted from the parts connected to the flange.

### Beneficial effects:

The present invention solves the disadvantages of unreasonable arrangement of bearings, inability to undertake larger axial load and worse rigidity of the whole structure in the transmission device of the existing agricultural cultivating machinery and the effects of simple structure, reasonable arrangement of bearings, ability to undertake larger axial load and good rigidity of the whole structure are achieved by the present invention.

In order to prevent the lock nut from loosening and improve the reliability of the matching between the conical cylinder and the connection member, the present invention provides a fixed structure for realizing the connection between a shaft end and a connection member through a gland.

To achieve above purpose, the fixed structure for realizing the connection between a shaft end and a connection member through a gland comprises a transmission shaft and a connection member; one end of the transmission shaft is a conical shaft one end of which is provided with a spiral rod; a conical hole matching with the conical shaft and a through-hole through which the spiral rod passes are formed in the connection member, the conical hole and the through-hole are communicated with each other; the conical shaft is arranged in the conical hole, the spiral rod passes through the through-hole, and a lock nut which is connected with the spiral rod is arranged on the opposite side to the conical hole; a gland is fixed on the spiral rod through at least two lock bolts, and the gland is pressed fit on the end face of the lock nut.

According to above structure, the gland is fixed on the spiral rod through more than two lock bolts and thus the gland itself cannot rotate with respect to the spiral rod, since the gland is pressed fit on the end face of the lock nut, the lock nut has no rotatable space, no phenomenon that the lock nut loosens can occur, thereby improving the reliability of the matching between the conical shaft and the conical hole, the power transmission is reliably realized and it is convenient to fix the gland; in addition, when the phenomena that the conical shaft and conical hole are worn occurs, the gland can be dismounted to further tighten the lock nut which is again pressed fit using the gland to prevent the lock nut from loosening and thus the fit clearance between the conical shaft and the conical hole can be adjusted as desired without replacing parts and the adjustment can also be performed at present.

Further, a counterbore is formed at an opposite side to the conical hole on the connection member, and the through-hole and the counterbore are communicated with each other, the screw rod extends into the counterbore and the lock nut and the gland are located within the counterbore.

Further, a counterbore is formed in the gland and the head of the lock bolt is located within the counterbore. The wear on the head of the lock bolt can be reduced by concealing the head of the lock bolt within the counterbore.

Further, a clearance is reserved between the gland and the end face of the spiral rod and thus a certain motion space can be given to the gland, even if the lock nut is further tightened, the gland can be pressed fit on the lock nut as long as the lock nut is further tightened.

Further, the gland and the side wall of the counterbore are in transition fit and thus the lock nut can be protected by using the gland.

Further, the connection member is a coupler or a flange.

In order allow that the spiral rod easily pierces the soil, it is forced more uniformly when piercing the soil, the loose performance and smashing degree of the soil in the vertical direction are different during the subsoiling of the spiral rod which facilitates the growth of plants and the topsoil is subjected to secondary smashing of the flattening using the cutter, the present invention provides a subsoiling device.

To achieve above purpose, the subsoiling device comprises a smash-ridging box, in which at least one transmission shaft is arranged, one end of each transmission shaft extends out of the smash-ridging box, the extend-out end of the transmission shaft is connected with a spiral drill rod; the spiral drill rod comprises a rod body, a spiral piece wound rotatably on the rod body and blades which are mounted on the spiral piece; the number of blades in different pitches on the same spiral piece is different; the blade comprises a fixing section and a blade body, which is formed by bending upwards or inclined upwards from the outer end of the fixing section, and the fixing section is fixed on the spiral piece through a bolt assembly; the blade is provided with a soil-cutting edge and the blade back, wherein the soil-cutting edge is opposite to the spiral direction of the spiral piece and the blade back and the soil-cutting edge are arranged opposite to each other; a first soil-piercing blade is fixed at the lower end of the spiral piece; the first soil-piercing blade comprises a first connection section and a first cutting edge, the first connection section is connected to the lower end of the spiral piece, the lower surface of the first cutting edge has an inclined plane so that the first cutting edge is in wedge-shape, the upper surface of the first cutting edge has an accommodation groove, in which a first alloy sheet is embedded, the first soil-piercing blade extends slantingly downwards, and the lower end of the first soil-piercing blade is below the bottom surface of the rod body; at least one second soil-piercing blades are connected to the lower end of the rod body, the second soil-piercing blade comprises a second connection section and a second cutting edge, the second connection section is connected to the rod body, the lower surface of the second cutting edge has an inclined plane so that the second cutting edge is in wedge-shape, the upper surface of the second cutting edge has an accommodation groove, in which an second alloy sheet is embedded, the second soil-piercing blade extends slantingly downwards, the lower end of the second soil-piercing blade is below the bottom surface of the rod body, the direction that the second cutting edge extends from the second connection section is consistent with the opposite rotation direction of the spiral pieces; at least two plug-in seats extending radially are fixed at the upper part of the rod body, the plug-in seats are staggered in the axial direction of the rod body and have a plug-in trough in which a smash-flattening blade is plugged, the smash-flattening blade comprises a plug-in section, a first bending part and a second bending part, the first bending part extends from the outer end of the plug-in section to the direction consistent with the rotation direction of the spiral pieces, the second bending part extends downwards from the first bending part, and a smashing edge is arranged at the outer side of the smash-flattening blade.

According to above structure, since the number of blades in different pitches on the same spiral piece is different, the soil within the pitch in which more blades are present is more fully smashed during the subsoiling of the spiral rod, the soil is more loosened, in contrast, the smashing effect and the loose degree of the soil are relatively worse, thus it facilitates the growth of plants. Due to the arrangement of the first and second soil-piercing blades, the second soil-piercing blades can be multiple and moreover, lower ends of the first and second soil-piercing blades are all lower than the bottom of the rod body, meanwhile, the first and second soil-piercing blades both extend slantingly downwards, angles of inclination of the first and second soil-piercing blades are equivalent to the helical angle of the spiral pieces, in this way, when the spiral drill rod pierces soil, the first and second soil-piercing blades simultaneously cut the soil so that the rod body is forced uniformly circumferentially and easily pierces soil, therefore, the rod body is uneasy to deform and break; at the same time, the first and second soil-piercing blades are forced uniformly and are uneasy to deform and collapse, good reliability of the connection between the first soil-piercing blade and the spiral piece is achieved and the good reliability of the connection between the second soil-piercing blades and the rod body is also achieved; by adopting above structure, since only a small part of the second soil-piercing blades is connected to the rod body, when the second soil-piercing blades are forced uniformly, the phenomenon of stress concentration uneasily occurs at the connection parts of the second soil-piercing blades and the rod body and thus high connection strength is achieved. Due to the arrangement of first and second alloy sheets with high strength, the first and second soil-piercing blades are uneasily worn when the spiral rod pierces soil, especially when the spiral drill rod has completed the soil-piercing operation and transversely smashes the soil, the first and second soil-piercing blades can also have bottom soil cutting effect, in general, the bottom soil has large hardness and it is possible for the first and second soil-piercing blades to come into contact with stones when the spiral drill rod transversely cut the soil, therefore, the strength can be further improved and the service life is prolonged by embedding the alloy sheets. Since the blades are provided with soil-cutting edges, when the rod body rotates, the soil-cutting edges cut the soil so that, on one hand, it is easier to make the blades to pierce soil and on the other hand, the transverse cutting resistance of the spiral drill rod can be decreased. Due to the arrangement of smash-flattening blades with the inventive structure which are arranged vertically in a staggered manner and the clearance reserved between adjacent smash-flattening blades, when being flattened, the subsoiled soil is flattened hierarchically by various smash-flattening blades and the smashed soil will flow among various smash-flattening blades when the rod body rotates so that the flattening resistance is greatly reduced, good flattening effect is achieved, the raising phenomenon of the smashed soil can be effectively prevented, furthermore, since the smash-flattening blade comprises the second bending part which has raking effect on the soil, the flattening effect is further improved. Due to the arrangement of smashing edges substantially extending transversely along with the second bending part, the secondary smashing can be performed on the smashed soil and the resistance in smashing the soil can be decreased.

Further, the number of blades in different pitches on the same spiral piece is decreased sequentially from bottom to top. By adopting the structure, the lower soli is more loose, the smashing is carried out fully, the upper soil has worse loose performance and the smashing effect is relatively worse, thus the root system more easily grows downwardly during the growth of plants and better growth performance of plants is achieved.

Further, the decrement in the number of blades in adjacent pitches is one.

Further, the number of the blades on the different spiral pieces is different.

Further, an arc is formed by protruding outwards from the middle of the soil-cutting edge. During the soil cutting process of the blades, the force acted on the blade body by the soil is resolved into a first component force perpendicular to the soil-cutting edge and a second component force tangent to the soil-cutting edge, thereby reducing the acting force of the soil on the blade body, on one hand, the bending deformation of the blades can be decreased, the wear and damage to the soil-cutting edge is reduced and the service life of the blades is prolonged; on the other hand, the exerted shearing force of a bolt assembly is reduced and the strength of the connection between the blades and the spiral piece is increased.

Further, the upper surface of the soil-cutting edge is an inclined plane so that the soil-cutting edge is in wedge-shape and a first rid strip extending along the soil-cutting edge is arranged at the lower surface of the soil-cutting edge. Since the soil-cutting edge is in wedge-shape, the blade body easily pierces the soil and the strength of the blades is decreased certainly, for this purpose, the strength of the blades can be increased by arranging the first rid strip, although a certain resistance exist between the first rid strip and the smashed soil, the first rid strip can smash the smashed soil again when the smashed soil passes through the first rid strip, thereby improving the smashing effect.

Further, the bolt assembly comprise a bolt and a nut, the bolt successively passes through the spiral pieces and the fixing section from top to bottom and the lower end of the bolt is in threaded connection with the cap for pressing tightly the blade; the cap comprises a nut and a round head which is integrated with the nut and of which the outer surface is provided with a carburized layer. When the spiral drill rod subsoils, the cap will interact with the soil which results in the wear of the cap easily, if blades are locked by using general nut, on one hand, the nut can be worn, on the other hand, the nut on the bolt can be destroyed resulting in incapability in dismounting of the nut, therefore, in the present invention, by arranging the round head through which the end part of the bolt is internally concealed within the cap so as to prevent the threads of the bolt from destroying, on the other hand, the round head can effectively protect the nut of the invention and avoid the premature wear of the nut and the carburized layer with higher hardness is arranged so as to prevent the cap from prematurely wearing.

Further, rib plates are welded between the second soil-piercing blade and the rod body so as to improve the strength of the connection between the first soil-piercing blade and the rod body.

Further, a second rid strip extending along the smashing edge is arranged at the position corresponding to the smashing edge on the smash-flattening blade. By arranging the second rid strip, not only the strength of the smash-flattening blade can be improved, further smashing effect can also be achieved.

Further, the first soil-piercing blade has the same angle of inclination as that of the second soil-piercing blade so that the spiral drill rod is forced more uniformly when it pierces the soil.

In order to allow a subsoiling cutter to easily pierce the soil and it to be stress more uniformly when piercing the soil, the present invention provides the subsoiling cutter.

To achieve above purpose, the subsoiling cutter comprises a rod body, wherein a spiral piece is wound rotatably and fixed on the middle-lower part of the rod body, blades are mounted on the spiral piece, a first soil-piercing blade is fixed on the lower end of the spiral piece; the lower end of the rod body is connected with at least one second soil-piercing blades.

By adopting above structure, due to the arrangement of the first and second soil-piercing blades, the second soil-piercing blades can be multiple and thus, when the subsoiling cutter pierces the soil, the first and second soil-piercing blades simultaneously cut the soil so that the rod body is forced uniformly circumferentially and easily pierces soil, therefore, the rod body is uneasy to deform and break; at the same time, the first and second soil-piercing blades are forced uniformly and are uneasy to deform and collapse, good reliability of the connection between the first soil-piercing blade and the spiral piece is achieved and the good reliability of the connection between the second soil-piercing blades and the rod body is also achieved; by adopting above structure, since only a small part of the second soil-piercing blades are connected to the rod body, when the second soil-piercing blades are forced uniformly, the phenomenon of stress concentration uneasily occurs at the connection parts of the second soil-piercing blades and the rod body and thus high connection strength is achieved and the cutter easily pierces the soil.

Further, the first soil-piercing blade and the second soil-piercing blades are evenly distributed on the circumference. When the subsoiling cutter pierces soil, the cutter is forced more uniformly and the bottom of the cutter is also forced uniformly when the subsoiling cutter cuts the soil transversely.

Further, the soil-piercing blade comprises a first connection section and a first edge, the first connection section is connected to the lower end of the spiral piece, the lower surface of the first edge has an inclined plane so that the first edge is in wedge-shape, the first soil-piercing blade extends downwardly and slantly and the lower end of the first soil-piercing blade is lower than the bottom surface of the rod body; each second soil-piercing blade comprises a second connection section and a second edge, wherein the second connection section is connected to the rod body, the lower surface of the second edge has an inclined plane so that the second edge is in wedge-shape, the second soil-piercing blade extends downwardly and slantly, the lower end of the second soil-piercing blade is lower than the bottom surface of the rod body and the second edge extends from the second connection section in a direction consistent with the direction opposite to the direction of rotation of the spiral piece. Lower ends of the first and second soil-piercing blades are all lower than the bottom of the rod body, meanwhile, the first and second soil-piercing blades both extend downwardly and slantly, angles of inclination of the first and second soil-piercing blades are equivalent to the helical angle of the spiral pieces so that the cutter more easily pierces the soil and the purpose of smooth soil discharge is achieved more easily.

Further, an accommodation groove in which a first alloy sheet is embedded is formed in the upper surface of the first edge; and an accommodation groove in which a second alloy sheet is embedded is formed in the upper surface of the second edge. Due to the arrangement of first and second alloy sheets with high strength, the first and second soil-piercing blades are uneasily worn when the subsoiling cutter pierces soil, especially when the spiral drill rod has completed the soil-piercing operation and transversely smashes the soil, the first and second soil-piercing blades can also have bottom soil cutting effect, in general, the bottom soil has large hardness and it is possible for the first and second soil-piercing blades to come into contact with stones when the spiral drill rod transversely cut the soil, therefore, the strength can be further improved and the service life is prolonged by embedding the alloy sheets.

Further, at least two plug-in seats extending radially are fixed at the upper part of the rod body, the plug-in seats are staggered in the axial direction of the rod body and have a plug-in trough in which a smash-flattening blade is plugged, the smash-flattening blade comprises a plug-in section, a first bending part and a second bending part, the first bending part extends from the outer end of the plug-in section to the direction same with the rotation direction of the spiral pieces, the second bending part extends downwards from the first bending part, and a smashing edge is arranged at the outer side of the smash-flattening blade. Due to the arrangement of smash-flattening blades with the inventive structure which are arranged vertically in a staggered manner and the clearance reserved between adjacent smash-flattening blades, when being flattened, the subsoiled soil is flattened hierarchically by various smash-flattening blades and the smashed soil will flow among various smash-flattening blades when the rod body rotates so that the flattening resistance is greatly reduced, good flattening effect is achieved, the raising phenomenon of the smashed soil can be effectively prevented, furthermore, since the smash-flattening blade comprises the second bending part which has raking effect on the soil, the flattening effect is further improved. Due to the arrangement of smashing edges substantially extending transversely along with the second bending part, the secondary smashing can be performed on the smashed soil and the resistance in smashing the soil can be decreased.

Further, the blade is provided with a soil-cutting edge and an arc is formed by protruding outwards from the middle of the soil-cutting edge. During the soil cutting process of the blades, the force acted on the blade body by the soil is resolved into a first component force perpendicular to the soil-cutting edge and a second component force tangent to the soil-cutting edge, thereby reducing the acting force of the soil on the blade body, on one hand, the bending deformation of the blades can be decreased, the wear and damage to the soil-cutting edge is reduced and the service life of the blades is prolonged; on the other hand, the exerted shearing force of a bolt assembly is reduced and the strength of the connection between the blades and the spiral piece is increased.

Further, the upper surface of the soil-cutting edge is an inclined plane so that the soil-cutting edge is in wedge-shape and a first rid strip extending along the soil-cutting edge is arranged at the lower surface of the soil-cutting edge. Since the soil-cutting edge is in wedge-shape, the blade body easily pierces the soil and the strength of the blades is decreased, for this purpose, the strength of the soil-cutting edge can be increased by arranging the first rid strip, although a certain resistance exist between the first rid strip and the smashed soil, the first rid strip can smash the smashed soil again when the smashed soil passes through the first rid strip, thereby improving the smashing effect.

Further, the blade is fixed on the spiral piece via a bolt assembly; the bolt assembly comprise a bolt and a nut, the bolt successively passes through the spiral pieces and the fixing section from top to bottom and the lower end of the bolt is in threaded connection with the cap for pressing tightly the blade; the cap comprises a nut and a round head which is integrated with the nut and of which the outer surface is provided with a carburized layer. When the subsoiling cutter subsoils, the cap will interact with the soil which results in the wear of the cap, if blades are locked by using general nut, on one hand, the nut can be worn, on the other hand, the nut on the bolt can be destroyed resulting in incapability in dismounting of the nut, therefore, in the present invention, by arranging the round head through which the end part of the bolt is internally concealed within the cap so as to prevent the threads of the bolt from destroying, on the other hand, the round head can effectively protect the nut of the invention and avoid the premature wear of the nut and the carburized layer with higher hardness is arranged so as to prevent the cap from prematurely wearing.

Further, rib plates are welded between the second soil-piercing blade and the rod body so as to improve the strength of the connection between the first soil-piercing blade and the rod body.

Further, a second rid strip extending along the smashing edge is arranged at the position corresponding to the smashing edge on the smash-flattening blade. By arranging the second rid strip, the strength of the smash-flattening blade can not only be improved and further smashing effect can be achieved.

The present invention aims to provide a spiral drill bit of a subsoiling tillage machine for avoiding soil accumulation in view of the deficiencies of the prior art

The present invention is achieved by the following technical solution.

The spiral drill bit of a subsoiling tillage machine for avoiding soil accumulation, comprising a rod body and a spiral piece which is wound on the lower part of the rod body, it further comprises a cross-cutting blade, which is arranged on the upper section of the rod body and located above the spiral piece.

Wherein, the cross-cutting blade comprises a connection sleeve and a cross-cutting blade body which are integrally-formed, wherein the connection sleeve sleeves the upper part of the rod body and the cross-cutting blade body is connected longitudinally to the side wall of the connection sleeve.

Wherein, the number of the cross-cutting blade body is at least two and the at least two cross-cutting blade body is evenly arranged at the side wall of the connection sleeve.

Wherein, a nose, which is triangular, is arranged at the outer end of each cross-cutting blade body.

Wherein, the spiral drill bit further comprises blades which are arranged at the circumferential edge of the spiral pieces.

Wherein, the number of the blades are at least two and the at least two blades are arranged along the direction of rotation of the spiral piece at intervals.

Wherein, each blade comprises a blade body and a fixing section formed by bending and extending horizontally the bottom of the blade body, the fixing section is fixedly connected to the lower surface of the spiral piece and the blade body faces towards the top end of the rod body.

Wherein, the blade body is connected with the fixing section to constitute an included angle of 90 degrees-120 degrees.

Wherein, a drill tip is arranged at the bottom end of the rod body and is in an inverted triangle.

The present invention has the beneficial effects: the invention is simple in structure, since the cross-cutting blade is arranged on the upper section of the rod body and can be connected at the upper section of the rod body by welding or a fastener, the rod body moves forwards with the subsoiling tillage machine while rotating during the tillage operation. By adopting the cross-cutting blade, the accumulated soil produced in front of the rod body after the deep-ploughing subsoiling can be effectively leveled, the phenomenon of soil accumulation is eliminated so that the production efficiency of the tillage operation is greatly improved.

The present invention aims to provide a spiral drill bit of a subsoiling tillage machine which is convenient for piercing soil in view of the deficiencies of the prior art

The present invention is achieved by the following technical solution.

A spiral drill bit of a subsoiling tillage machine which is convenient for piercing soil comprises a rod body and a spiral piece which is wound on the lower part of the rod body, it further comprises a first soil-piercing blade, which is arranged on the tail part of the spiral piece and located at the lower surface of the spiral piece.

Wherein, the first soil-piercing blade comprises a first soil-piercing blade body and a first soil-piercing blade fixing section formed by bending and extending horizontally the bottom of the first soil-piercing blade body, the first soil-piercing blade fixing section is fixedly connected to the lower surface of the spiral piece and the first soil-piercing blade body faces towards the bottom end of the rod body.

Wherein, the first soil-piercing blade body is connected with the first soil-piercing blade fixing section to constitute an included angle of 120 degrees-150 degrees.

Wherein, the spiral drill bit further comprises blades which are arranged at the circumferential edge of the spiral pieces.

The present invention has the beneficial effects: the invention is simple in structure, the rod body moves forwards with the subsoiling tillage machine while rotating during the tillage operation, since the first soil-piercing blade is arranged at the lower surface of the tail part of the spiral piece, it is convenient for the rod body to pierce the soil while rotating and at the same time, the spiral piece can be effectively prevented from wearing, the service life of the spiral pieces is prolonged and the strong practicality is achieved.

### Brief Description of the Drawings

Figure 1 is a schematic view of an extended type subsoiling smash-ridging machine according to embodiment 1.
Figure 2 is an exploded view of the extended type subsoiling smash-ridging machine according to embodiment 1.
Figure 3 is a schematic view of a walking mechanism and a chassis.
Figure 4 is a schematic view of another perspective of the walking mechanism and the chassis.
Figure 5 is an exploded view of the walking mechanism and chassis.
Figure 6 is a side schematic view of the walking mechanism and chassis.
Figure 7 is a schematic view of a wheel stand and a chassis.
Figure 8 is a schematic view of another perspective of the wheel stand and chassis.
Figure 9 is a schematic view of a smash-ridging device.
Figure 10 is a schematic view of another perspective of the smash-ridging device.
Figure 11 is a sectional view of the smash-ridging device.
Figure 12 is a schematic view of the smash-ridging device.
Figure 13 is a sectional view of the smash-ridging device.
Figure 14 is a schematic view of a bottom plate and a lower bearing seat.
Figure 15 is a schematic view of a top plate and an upper bearing seat.
Figure 16 is a schematic view of one of side plates.
Figure 17 is a schematic view of another perspective of one of side plates.
Figure 18 is a schematic view of a smash-ridging device mounted with conical bearings with the driving mechanism and the spiral drill rod removal.
Figure 19 is a schematic view of the connection between a transmission shaft and a flange.
Figure 20 is a schematic view of the connection device according to embodiment 1.
Figure 21 is an exploded view of the connection device according to embodiment 1.
Figure 22 is a schematic view of a smash-ridging device, a ditching device and a flattening device.
Figure 23 is a partial schematic view of a ditching device.

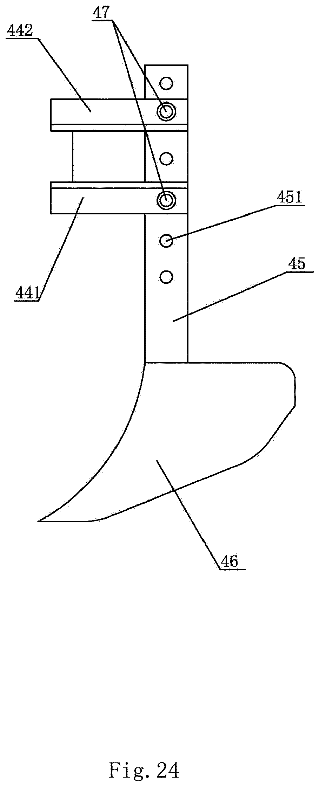

Figure 24 is a side schematic view of the partial structure of the ditching device.
Figure 25 is a schematic view of a ditching plough and a ditching arm.
Figure 26 is a front schematic view of the ditching plough and ditching arm.
Figure 27 is a schematic view of the ditching plough.
Figure 28 is a schematic view of the smash-ridging box and a flattening device.
Figure 29 is a schematic view of the flattening device
Figure 30 is a schematic view of a straw returning device.
Figure 31 is a schematic view of another perspective of the straw returning device.
Figure 32 is a schematic view of an extended type subsoiling smash-ridging machine according to embodiment 2.
Figure 33 is a schematic view of a connection device and a smash-ridging device according to embodiment 2.
Figure 34 is a schematic view of the connection device according to embodiment 2.
Figure 35 is a schematic view of a walking mechanism for preventing a lower guide wheel from falling off.
Figure 36 is a three-dimensional view of a walking mechanism for preventing a lower guide wheel from falling off.
Figure 37 is a front schematic view of a walking mechanism for preventing a lower guide wheel from falling off.
Figure 38 is a schematic view of A-A.
Figure 39 is a schematic view of Figure 38 in which a sliding block is mounted.
Figure 40 is a schematic view of a tensioning device.
Figure 41 is a schematic view according to embodiment 7.
Figure 42 is a schematic view of smash-ridging devices according to embodiments 8 and 9.
Figure 43 is a sectional view of smash-ridging devices according to embodiments 8 and 9.
Figure 44 is a schematic view showing a connection plate connected with other parts according to embodiments 8 and 9.
Figure 45 is a schematic view of side plates according to embodiment 8.
Figure 46 is a schematic view of another perspective of the side plates according to embodiment 8.
Figure 47 is a schematic view of side plates according to embodiment 9.
Figure 48 is a schematic view of another perspective of the side plates according to embodiment 9.
Figure 49 is a three-dimensional view of a smash-ridging device according to embodiments 10 and 11.
Figure 50 are three-dimensional views of another perspective of the smash-ridging device according to embodiments 10 and 11.
Figure 51 is a sectional view of a smash-ridging device according to embodiment 10.
Figure 52 are three-dimensional views of a bottom plate and a bearing seat according to embodiment 10.
Figure 53 are front schematic views of the bottom plate and bearing seat according to embodiment 10.
Figure 54 is a sectional view of a reinforced smash-ridging device.
Figure 55 are front schematic views of the bottom plate and a lower bearing seat.
Figure 56 are structural schematic views according to embodiments 12-15.
Figure 57 are structural schematic views according to embodiments 12-15.
Figure 58 are three-dimensional structural schematic views according to embodiments 12-15.
Figure 59 is a schematic view of a subsoiling device.
Figure 60 is a sectional view of the subsoiling device.
Figure 61 is a three-dimensional view of a spiral drill rod or a subsoiling cutter.
Figure 62 is a three-dimensional view of another perspective of the spiral drill rod or subsoiling cutter.
Figure 63 is an exploded view of the spiral drill rod or subsoiling cutter.
Figure 64 is a three-dimensional view of a bolt assembly.
Figure 65 is an exploded view of the bolt assembly.

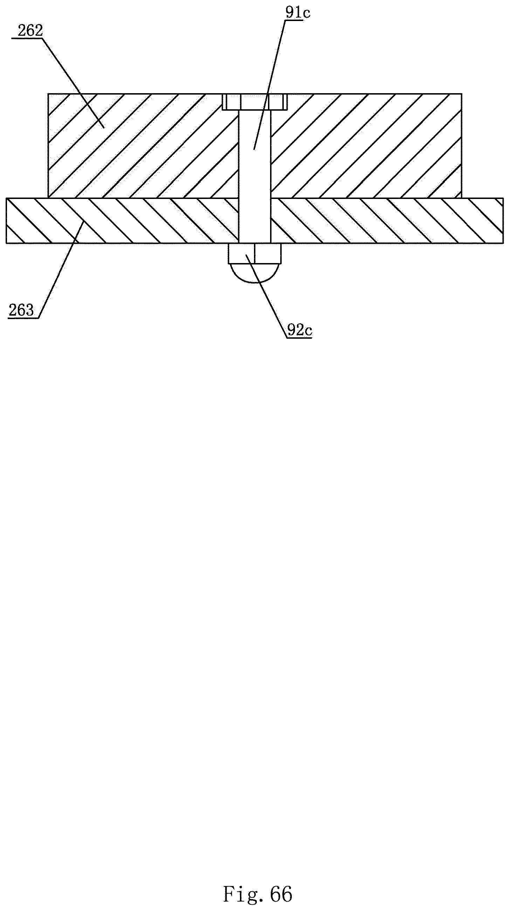

Figure 66 is a schematic view showing the locking of a spiral piece and blades using the bolt assembly.
Figure 67 is a three-dimensional structural schematic view of a spiral drill bit of a subsoiling tillage machine for avoiding soil accumulation.
Figure 68 is a structural exploded schematic view of the spiral drill bit of the subsoiling tillage machine for avoiding soil accumulation.
Figure 69 is a three-dimensional structural schematic view of a spiral drill bit of a subsoiling tillage machine which is convenient for piercing soil.
Figure 70 is a structural exploded schematic view of the spiral drill bit of the subsoiling tillage machine which is convenient for piercing soil.

### Detailed Description

Hereinafter, the present invention will be further described in detail in conjunction with the accompanying drawings and embodiments.

### Embodiment 1

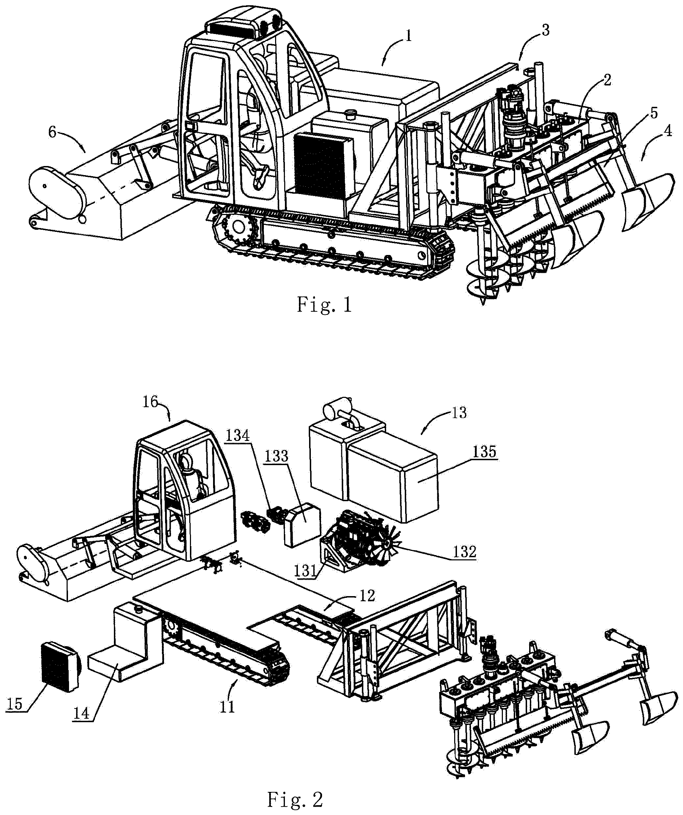

As shown in Figures 1 and 2, an extended type subsoiling smash-ridging machine comprises a machine body 1, a smash-ridging device 2, a connection device 3, a ditching device 4, a flattening device 5 and a straw returning device 6.

As shown in Figure 2, the machine body 1 comprises a walking mechanism 11, a chassis 12, a diesel engine component 13, a hydraulic oil tank 14, a cooler 15 and a driving cab 16.

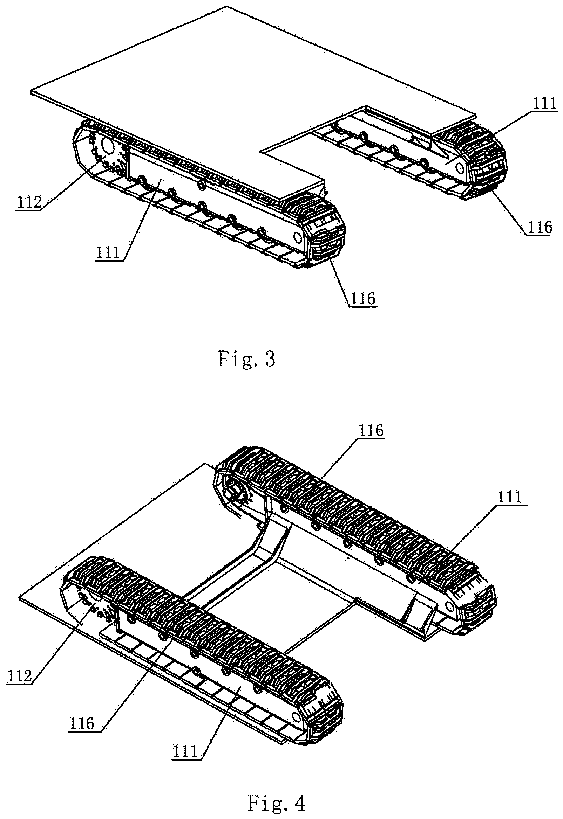

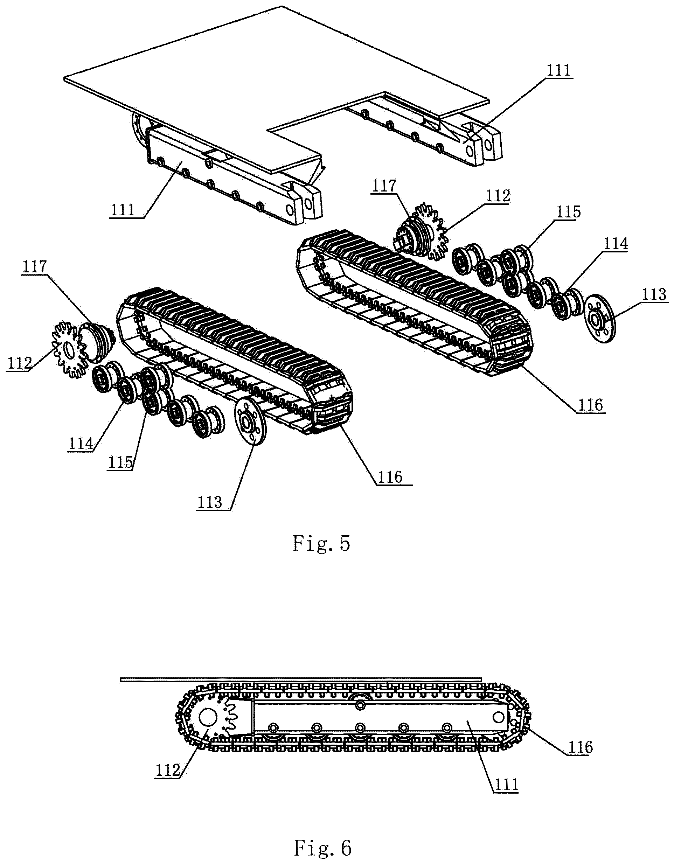

As shown in Figure 3 to Figure 8, the walking mechanism 11 comprises two crawler components arranged opposite to each other, each crawler component comprises a wheel stand 111, a driving wheel 112, a driven wheel 113, a lower guide wheel 114, an upper guide wheel 115, a crawler 116 and a walking drive device.

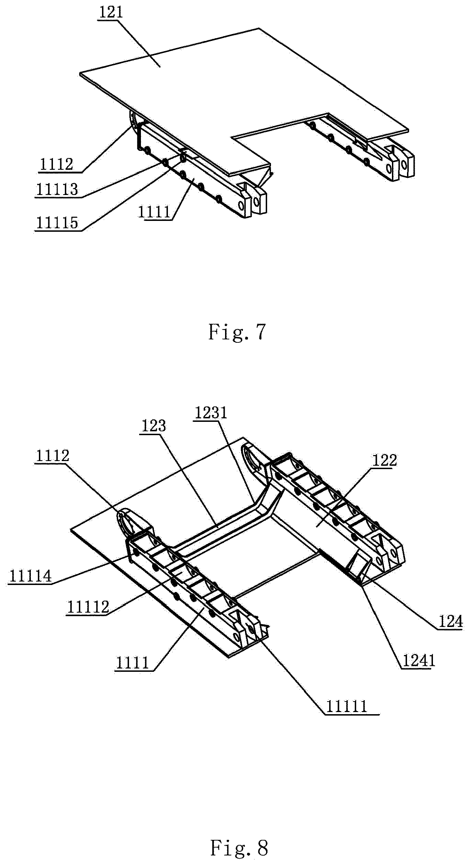

As shown in Figure 7 and Figure 8, the wheel stand 111 comprises a wheel stand body 1111 and a wheel stand connection lug 1112. The wheel stand connection lug 1112 is connected to the front end of the wheel stand body 1111. A driven wheel accommodation groove 11111 is formed in the rear end of the wheel stand body 1111 in which a first mounting hole through which the driven wheel accommodation groove 11111 passes is formed; a lower guide wheel accommodation groove 11112 extends upwardly at the bottom surface of the wheel stand body 1111, a second mounting hole through the lower guide wheel accommodation groove 11112 is formed in the wheel stand body 1111, a second boss 11114 is arranged on the exterior side of the wheel stand body 1111 at the position corresponding to the second mounting hole; an upper guide wheel accommodation groove 11113 extends downwardly at the top surface of the wheel stand body 1111, a third mounting hole through the upper guide wheel accommodation groove 11113 is formed in the wheel stand body wheel 1111, and a third boss 11115 is arranged on the exterior side of the wheel stand body 1111 at the position corresponding to the third mounting hole.

The driving wheel 112 is mounted on the wheel stand connection lug 1112 through a bearing, and the walking drive device is fixed on the wheel stand connection lug 1112; in the embodiment, the walking drive is a hydraulic motor 117 and the driving wheel 112 is driven through the hydraulic motor 117 so that the stepless speed regulation and the large driving force can be achieved.

A part of the driven wheel 113 is located within the driven wheel accommodation groove 11111, and the driven wheel 113 is mounted by a mounting shaft passing through the first mounting hole.

A part of the lower guide wheel 114 is located within the lower guide wheel accommodation groove 11112, a lower part of the lower guide wheel 114 protrudes from the wheel stand body 1111, and the lower guide wheel 114 is mounted by a mounting shaft passing through the second mounting hole and second nuts are mounted at both ends of the mounting shaft passing through the second mounting hole and thus the second nuts come in contact with a second boss 11114; due to the arrangement of the second boss 11114, the direct contact between the second nuts and the wheel stand body 1111 can be avoided, on one hand, it is convenient to lock the second nuts so as to improve the locking force, on the other hand, the strength and service life of the wheel stand body 1111 can be improved.

A part of the upper guide wheel 115 is located within the upper guide wheel accommodation groove 11113, an upper part of the upper guide wheel 115 protrudes from the wheel stand body 1111, and the upper guide wheel 115 is mounted by a mounting shaft passing through a third mounting hole and third nuts are mounted at both ends of the mounting shaft passing through the third mounting hole and thus the third nuts come in contact with the third boss 11115; due to the arrangement of a third boss 11115, the direct contact between the third nuts and the wheel stand body 1111 can be avoided, on one hand, it is convenient to lock tightly the third nuts so as to improve the locking force, on the other hand, the strength and service life of the wheel stand body 1111 can be improved.

The crawler 116 sleeves the driving wheel 112, the driven wheel 113, the lower guide wheel 114 and the upper guide wheel 115, the crawler 116 is driven to move by driving the driving wheel 112, the lower guide wheel 114 has the guiding and supporting effect and the upper guide wheel 115 has the guiding and tensioning effects.

As shown in Figure 7 and Figure 8, a chamfer is formed at the rear end of the wheel stand body 1111 and the front end of the wheel stand connection lug 1112 is circular arc. In this way, after the crawler 116 has been mounted, the crawler 116 can be prevented from interfering with the wheel stand 111 during the movement process.

In present embodiment, by adopting the crawler walking mechanism, the subsoiling smash-ridging machine can smoothly walk on the soft soil so that the walking reliability of the subsoiling smash-ridging machine is improved, the efficiency can also be improved and the energy consumption can also be reduced.

The assembly method of the walking mechanism 11 is as follows:
(1) mounting the driving wheel 112 on the wheel stand connection lug 1112 via bearings and fixing the walking drive device on the wheel stand connection lug 1112 to make the output shaft of the walking mechanism to be connected to the driving wheel 112.
(2) mounting the driven wheel 113 on the wheel stand body 1111 via a mounting shaft.
(3) mounting the lower guide wheel 114 on the wheel stand body 1111 via the mounting shaft passing through the second mounting hole and locking the second nuts at both ends of the mounting shaft passing through the second mounting hole to make the second nuts come in contact with the second boss; mounting the upper guide wheel 115 on the wheel stand body 1111 via the mounting shaft passing through the third mounting hole and locking the third nuts at both ends of the mounting shaft passing through the third mounting hole to make the third nuts come in contact with the third boss 1115.
(4) enabling the crawler 116 to sleeve the driving wheel 112, the driven wheel 113, the lower guide wheel 114 and the upper guide wheel 115.

As shown in Figure 7 and Figure 8, the chassis 12 comprises a supporting platform 121, inclined strut plates 122 and a supporting rib 123.

The supporting platform 121 is welded on the wheel stand 111; the inclined strut plates 122 are welded on the wheel stand 111 and the supporting platform 121 so as to improve the supporting strength; the supporting rib 123 is located in the front of the supporting platform 121, and extends from the inclined strut plate at one side via the bottom of the supporting platform 121 to the inclined strut plate 122 at the other side; a circular arc groove 1231 is formed at the corner of the supporting rid 123 so as to reduce the phenomenon of stress concentration and improve the strength of the supporting rib 123. In the present invention, since the diesel engine component 13 and the driving cab 16 are mounted in the front of the supporting platform 121, the weight is very high and thus by arranging the supporting rid 123, the bending resistance and deformation resistance of the supporting platform 121 can be improved, thereby improving the bearing capability of the supporting platform 121. Two rib plates 124 arranged in parallel to each other are arranged at the rear bottom of the inclined strut plates 122 and a triangular groove1241 is formed between the rib plates 124 and the inclined strut plates 122.

The assembly method of above chassis 12 is as follows:
(1) welding the supporting rib 123 to the bottom surface of the supporting platform 121.
(2) welding the inclined strut plates 122 on the supporting rib 123 and positioning the inclined strut plates 122 using the shapes of both ends of the supporting ribs so as to improve the precision of installation.
(3) welding the rib plates 124 on the inclined strut plates 122.
(4) welding the supporting platform 121 and the inclined strut plates 122 onto the wheel stand 111.

By adopting above assembly method of chassis 12, the mounting precision can be improved and the assembly efficiency can also be improved.

A shock absorber is mounted on the supporting platform 121 and a diesel engine fixing seat is mounted on the shock absorber.

As shown in Figure 2, the diesel engine component 13 comprises a diesel engine frame 131, a diesel engine 132, a wind tunnel box 133, a hydraulic pump 134 and a diesel engine hood135.

The diesel engine frame 131 is mounted on a diesel engine fixing seat and the shock absorption is performed on the diesel engine component 13 via a shock absorber; the diesel engine 132 is fixed on the diesel engine frame 131; the wind tunnel box 133 is mounted in the front end of the diesel engine frame 131 and is located in front of the diesel engine 132, when the wind tunnel box works, it blows air from the outside via the front end of the diesel engine 132 towards the rear end thereof so that fore-and-aft air stream is formed on the diesel engine, the heat dissipation is performed on the diesel engine 132, thereby improving the service life of the diesel engine 132; the hydraulic pump 134 is connected to the output shaft of the diesel engine 132 and when the diesel engine 132 works, the output shaft of the diesel engine drives the hydraulic pump 134 to work; and the diesel engine 132 and the wind tunnel box 133 are covered with the diesel engine hood 135 so as to achieve the waterproof, dustproof and anti-collision effects on the diesel engine.

The assembly method of the diesel engine component 13 is as follows:
(1) fixing the diesel engine 132 onto the diesel engine frame 131.
(2) mouting the wind tunnel box 133 onto the diesel engine frame 131.
(3) connecting the hydraulic pump 134 to the output shaft of the diesel engine.
(4) fixing above assembled components onto the diesel engine fixing seat integrally and performing balance adjustment.
(5) covering the diesel engine 132 and wind tunnel box 133 with a diesel engine hood 135.

By adopting above assemble method, the diesel engine component except the diesel engine hood can be assembled in the factory and then transported to the site for being mounted and therefore, it is convenient to mount and the high mounting efficiency is achieved.

In the present invention, the diesel engine component 13 and the driving cab 16 are mounted in the front of the supporting platform.

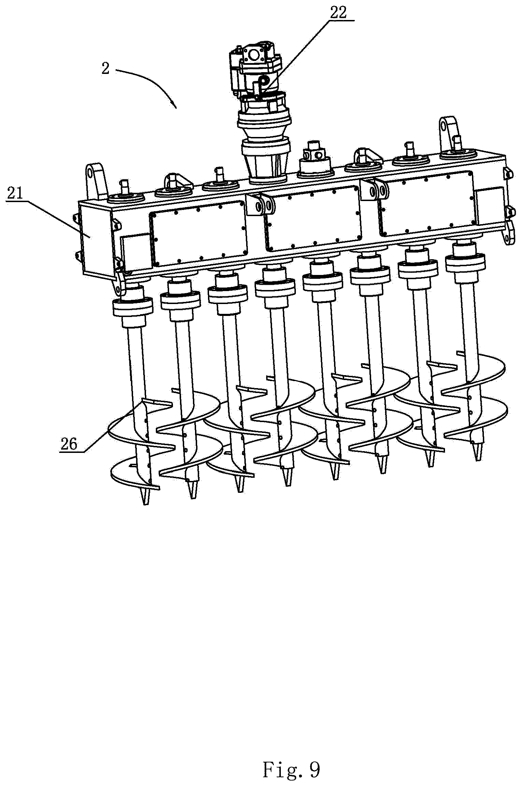

As shown in Figure 9 to Figure 11, the smash-ridging device 2 comprises a smash-ridging box 21, a driving mechanism 22, transmission shafts 23, power input members 24, bearings 25 and a spiral drill rod 26.

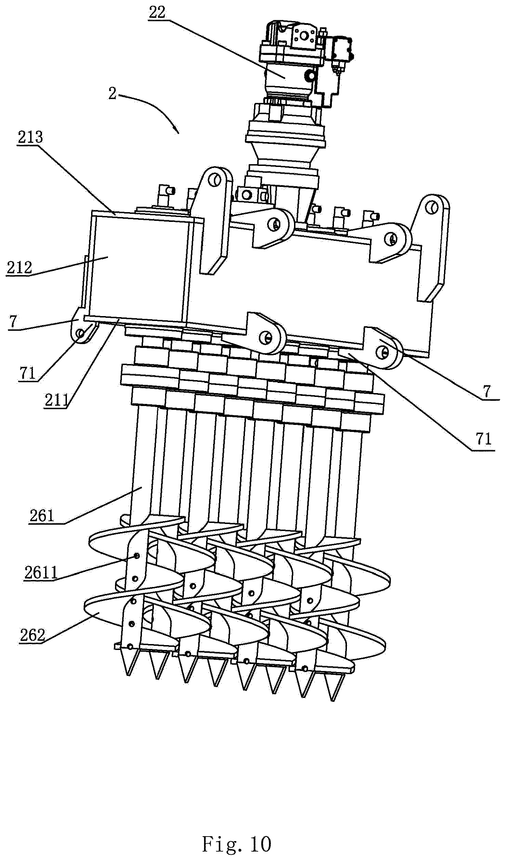

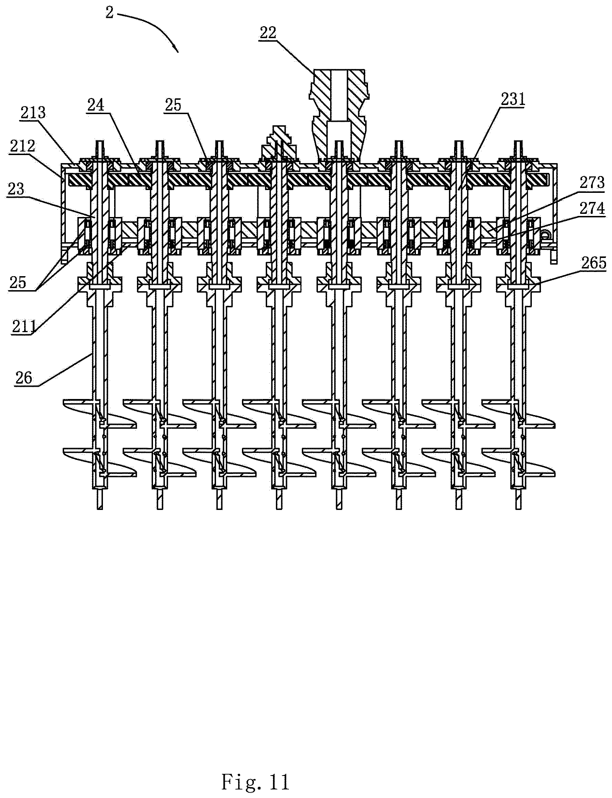

As shown in Figure 10 and Figure 11, the smash-ridging box 21 comprises a bottom plate 211, side plates 212 and a top plate 213, the lower end surfaces of the side plates 212 are welded on the bottom plate 211, and the top plate 213 is welded on the upper end surfaces of the side plates 212.

As shown in Figure 11 to Figure 14, at least two lower through-holes 2111 are formed in the bottom plate 211, lower bearing seats 271 extending upwardly are welded on the inner walls of the lower through-holes 2111, the lower bearing seats 271 protrude from the upper surface of the bottom plate 211, the height of protruding part of the lower bearing seat is larger than the width of two bearings, bearings are mounted in the lower bearing seats 271, rib plates 273 are welded between adjacent lower bearing seats so as to improve the strength of the lower bearing seats, and there are lubricating oil passages 274 between the rib plates 273 and the bottom plate 211, in this way, on one hand, the lubricating oil flows at the bottom of the smash-ridging box with bearing seats smoothly so as to improve the lubricating effects, on the other hand, as the welding among the rib plates and the bottom plate is not required, it is convenient to weld the rib plates under the premise of the limitation on space.

Each lower bearing seat 271 extends downwardly to protrude from the lower surface of the bottom plate to form a lower boss 272 which is used for mounting a lower bearing end cover 281. After the lower boss 272 is arranged, on one hand, the strength of the bottom plate 211 is improved and on the other hand, a certain distance can be reserved between the lower bearing end cover 281 and the lower surface of the bottom plate 211 so as to facilitate the mounting and dismounting of the lower bearing end cover 281.

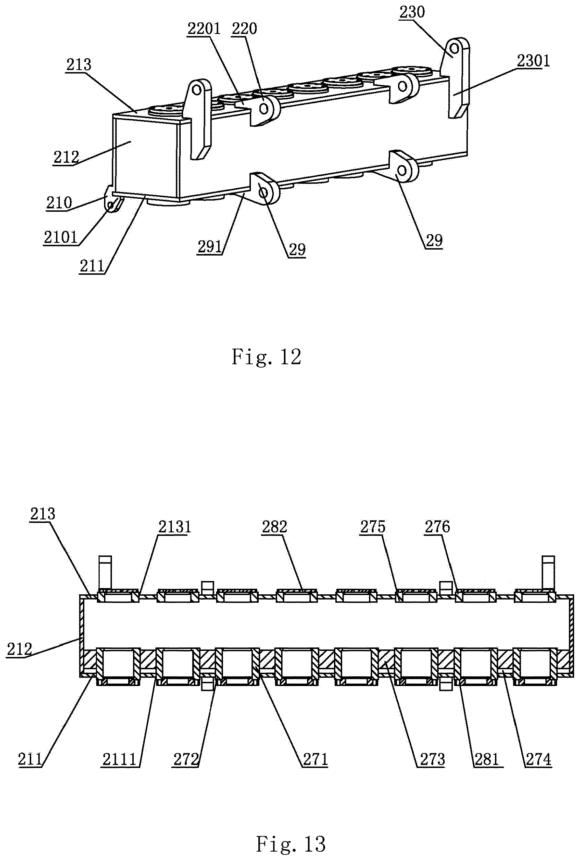

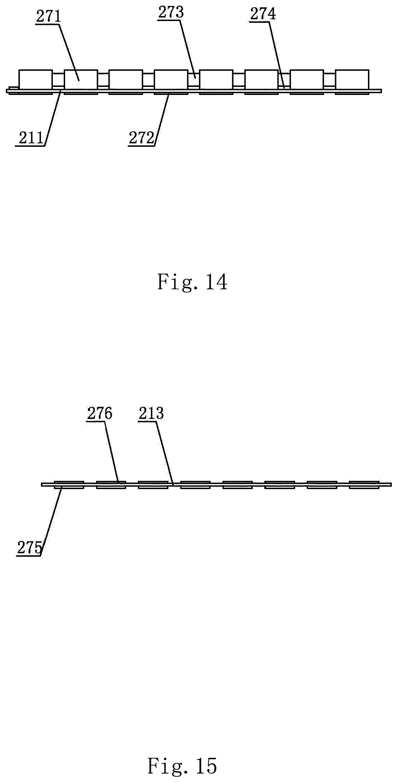

As shown in Figures 13 and 15, at least two upper through-holes 2131 corresponding to the lower through-holes in the vertical direction are formed in the top plate 213, an upper bearing seat 275 extending downwardly is arranged on the inner walls of the upper through-holes 2131, the length of the lower bearing seats 271 is larger than that of the upper bearing seat 275, and a bearing is mounted in the upper bearing seat 275; The upper bearing seat 275 extending upwardly to protrude from the upper surface of the top plate so that an upper boss 276 is formed and the upper boss 276 is used for mounting an upper bearing end cover 282. After the upper boss 276 is arranged, on one hand, the strength of the top plate 213 is improved and on the other hand, a certain distance can be reserved between the upper bearing end cover 282 and the upper surface of the top plate 213 so as to facilitate the mounting and dismounting of the upper bearing end cover 282.

According to the structure of the present invention, it is convenient to connect the lower bearing seats 271 by arranging the lower through-holes 2111 and to connect the upper bearing seat 275 by arranging the upper through-holes 2131; since the lower bearing seats 271 extends upwardly and the upper bearing seat 275 extends downwardly, both the lower bearing seat and the upper bearing seat are located within the smash-ridging box and thus, on one hand, the contour dimension of the smash-ridging box with bearing seats can be reduced, on the other hand, it can have protecting effect on the upper and lower bearing seats. In addition, during the use, the smash-ridging box with bearing seats can be filled with lubricating oil, while by adopting the arrangement of the upper and lower bearing seats, it is more easier for lubricating oil within the smash-ridging box with bearing seats to lubricate bearings within the upper and lower bearing seats; since the length of the lower bearing seats 271 is larger than that of the upper bearing seat 275, when the bearings are mounted, in consideration of the special subsoiling and smash-ridging environment, more than two bearings 25 are mounted within the lower bearing seats 271 and one bearing 25 is mounted within the upper bearing seat 275 such that the strength, rigidity and the transmission stability of bearing seats can be improved, furthermore, by selecting an appropriate amount of bearings, the costs in manufacturing the smash-ridging box and costs caused by the number of bearings are reduced.

Wherein, one of the side plates comprising a plate body 2121 is arranged in the front of the smash-ridging box, manholes 21211 are formed in the plate body 2121, a flange 21212 is arranged around the manhole on the plate body 2121, mounting holes 212112 are formed in the plate body 2121 and the flange 21212, and a step is formed between the inside of the flange 21212 and the plate body 2121. Since parts such as a transmission system are all mounted within the smash-ridging box 21, the manholes 212111 are formed so as to mount, dismount and maintain the parts such as the transmission system; the flange 212112 is generally connected to the plate body 2121 by welding, after the mounting hole 21212 is formed in the position of the flange 212112, the strength of manhole covers fixed by bolts is improved and thus the side plates are not easy to damage. In addition, due to the arrangement of the flange 212112, after the manhole covers are mounted, a distance equal to or greater than the thickness of the flange exists between the manhole covers and the plate body so as to facilitate the mounting and dismounting of the manhole covers; by arranging the step, the welding seams between the plate body 2121 and interior side of the flange can be increased, thereby improving the strength of the connection between the flange 212112 and the plate body 2121, in addition, the step can also have position-limiting and positioning effects on a seal ring so that the sealing property between the manhole covers and the side plates is improved.

Further, a seal groove can be formed in the flange 212112. The seal groove can accommodate the seal ring and limit the position of the seal ring, thereby improving the sealing property. After the manhole covers are mounted, sealing oil can be injected into the seal groove instead of arranging the seal ring so as to achieve the sealing effect.

As shown in Figure 12, a first bearing part is arranged on the lower surface of the bottom plate 211, a first connection lug 29 is welded on the side plates 212, a first bearing plate 291 extending inwardly is arranged on the first connection lug, and the first bearing plate 291 supports the first bearing part. Since the bottom plate 211 is welded on the side plates 212, the phenomenon of stress concentration is easily formed at the welding seam, thus cracks are easily formed at the connection between the bottom plate 211 and side plates 212 which can even make them completely separated. After the first bearing part is arranged, it can have bearing effect on the bottom plate using the action of the first bearing plate on the first bearing part and thus better connection strength of the bottom plate and the side plates is achieved.

As shown in Figure 12, a second bearing part is arranged on the lower surface of the bottom plate 211, a flattening device connection lug 210 is welded on the side plates 212, a second bearing plate 2101 extending inwardly is arranged on the flattening device connection lug 210, and the second bearing plate 2101 supports the second bearing part. Since the bottom plate 211 is welded on the side plates 212, a phenomenon of stress concentration is easily formed at the welding seam, thus cracks are easily formed at the connection between the bottom plate 211 and side plates 212 which can even make them completely separated. After the second bearing part is arranged, it can have bearing effect on the bottom plate using the action of the second bearing plate on the second bearing part and thus better connection strength of the bottom plate and the side plates is achieved. The second bearing part and the first bearing part are arranged opposite to each other.

As shown in Figure 12, a first welding part is arranged on the top plate 213, a second connection lug 220 is welded on the side plates 212, a second welding plate 2201 extending inwardly is arranged on the second connection lug 220, and the second welding plate 2201 is welded with the first welding part on the top plate; in this way, the top plate 213 is uneasy to be separated from the side plates 212, the second connection lug 220 has large welding area and two welding surfaces are arranged vertically so that the second connection lug 220 is high in connection strength; a third connection lug 230 is welded on the top plate 213, a third welding plate 2301 extending downwardly is arranged on the third connection lug 230, a second welding part is welded on the side plates 212, and the third welding plate 2301 is welded with the second welding part; in this way, the top plate 213 is uneasy to be separated from the side plates 212, the third connection lug 230 has large welding area and two welding surfaces are arranged vertically so that the third connection lug 230 is high in connection strength.

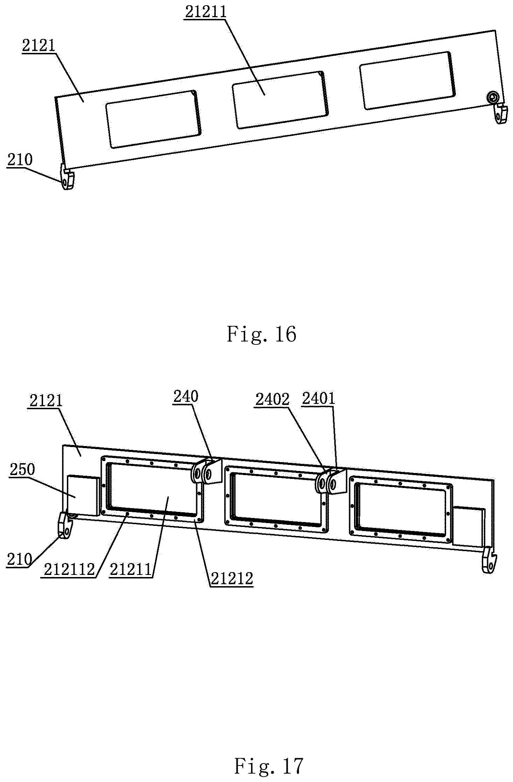

As shown in Figure 17, an articulated seat 240 is arranged on the plate body 2121 and the articulated seat 240comprises a connection seat 2401 and connection lugs 2402, which extend towards the direction away from the connection seat from the both sides of the connection seat, an accommodation groove is formed between two connection lugs, and articulated holes are formed in the two connection lugs, respectively. The articulated seat 240 with the structure is processed conveniently, high in strength and can connect other parts without destroying the smash-ridging box 21.

An extended mounting flange 250 is arranged on the plate body 2121, in this way, other parts can be connected to the extended mounting flange 250 at any time and can be dismounted at any time without destroying the smash-ridging box 21.

The driving mechanism 22 is a hydraulic motor, an electrical machine and so on, the driving mechanism 22 is mounted on the top plate, the driving mechanism 22 drives one of the transmission shafts to rotate, or the driving mechanism is correspondingly arranged on each transmission shaft, or the driving mechanisms are correspondingly arranged on some of the transmission shafts.

Bearings 25 are mounted in the lower bearing seats 271, a bearing 25 is mounted in the upper bearing seat 275, the bearings are conical bearings, the bearings located within the lower bearing seat are mounted in an opposite direction to the bearing located within the upper bearing seat.

Transmission shafts 23 are mounted between the bearings located within the lower bearing seat and the bearing located within the upper bearing seat, and the lower ends of the transmission shafts 23 extend out of the smash-ridging box 21; a feeding hole 231 axially passes through the transmission shafts 23.

The power input member 24 is a gear which is mounted on each of the transmission shafts, and the lower surface of the gear abuts against the shaft shoulders of the transmission shafts; when one of the transmission shafts is connected with the driving mechanism, the adjacent gears are engaged with each other. A shaft sleeve 2771 is arranged between the inner ring of the conical bearing located within the upper bearing seat 275 and the gear.

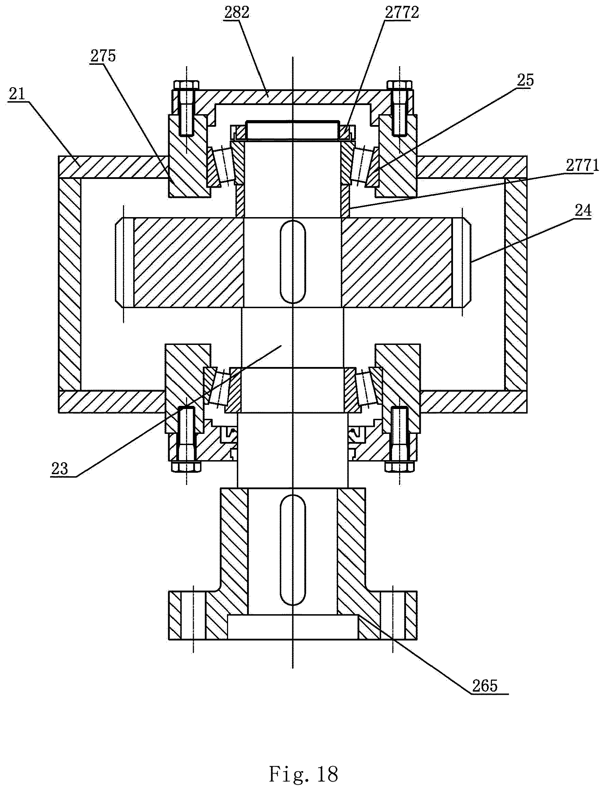

As shown in Figure 18, a forward lock nut 2772 is connected to the transmission shaft 23 by screw thread above the upper conical bearing, the forward lock nut 2772 is in contact with the inner ring of the conical bearing in the upper; a reverse lock nut (no shown) is arranged above the forward lock nut 2772 on the transmission shaft 23; the diameter of the transmission shaft on which the forward lock nut 2772 is arranged is larger than that of the transmission shaft on which the reverse lock nut is arranged, the upper surface of the forward lock nut 2772 is higher than that of the transmission shaft on which the forward lock nut 2772 is arranged and the reverse lock nut is in contact with the forward lock nut 2772.

By adopting above structure, the method for adjusting clearances of conical bearings is as follows: firstly rotating the forward lock nut 2772 to allow the forward lock nut 2772 interact with the inner ring of the upper conical bearing to promote the axial movement of the inner ring of the upper conical bearing so as to achieve the purpose of the adjustment on the clearances of conical bearings; when the forward lock nut 2772 is rotated in place, the reverse lock nut is reversely locked to allow the reverse lock nut come in contact with the forward lock nut 2772 to prevent the forward lock nut 2772 from loosening; in this way, adjusted clearances cannot change at random so that the adjustment accuracy of the clearances of conical bearings is high and the transmission performance of the transmission shaft is stable.

The spiral drill rod 26 comprises a rod body 261, a spiral piece 262 and a blade. The rod body 261 is connected to the transmission shaft 23 through a flange 265, the rod body 261 has an axially extending hole which is communicated with feeding holes 231 on the transmission shaft, and a discharging hole 2611, which is communicated with the hole and extends radially, is arranged on the rod body 261, in this way, pesticides, water, fertilizers and so on can be infused into the feeding holes 231 on the transmission shaft and enters the deep soil through the hole and the discharging hole 2611 so as to achieve the purpose of deep applications of the pesticides, water and fertilizers which can be simultaneously performed while subsoiling, thereby improving the efficiency; the spiral piece 262 is welded on the rod body 261, the blade is fixed on the spiral piece 262.

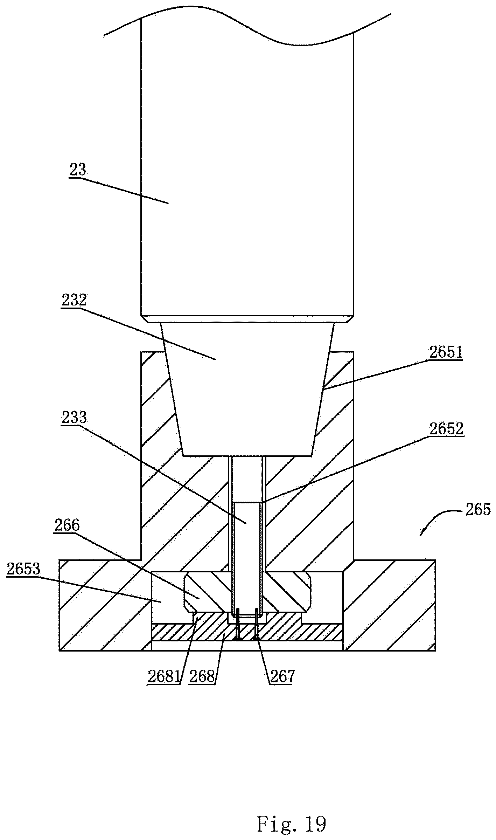

As shown in Figure 19, one end of the transmission shaft 23 is a conical shaft 232, at one end of which a screw rod 233 is arranged. A conical hole 2651 matching with the conical shaft and a through-hole 2652 through which the screw rod passes, are formed in the flange 265, on which a counterbore 2653 is formed at an opposite side to the conical hole, and the conical hole 2651, the through-hole 2652 and the counterbore 2653 are communicated with each other; the conical shaft 232 is arranged in the conical hole 2651, the screw rod 233 passes through the through-hole 2652 and extends into the counterbore 2653 in which a lock nut 266 connected with the screw rod, is arranged.

A gland 268 is fixed on the screw rod 233 through more than two lock bolts 267. A boss 2681 is arranged on the upper surface of the gland 268 and is pressed fit on the end surface of a lock nut 266, a gap is reserved between the gland 268 and the end surface of the screw rod, and the gland and the counterbore are transition fit so as to prevent large particulate matters entering the counterbore and have the protecting effect on the lock nut 266; and a counterbore is formed in the gland 268, the head of the lock bolt is located in the counterbore so as to have the protecting effect on the head of the lock bolts.

According to above structure, the gland 268 is fixed on the screw rod 233 through more than two lock bolts 267, in this way, the gland 268 itself cannot rotate relative to the screw rod 233; since the boss 2681 of the gland is pressed fit on the end surface of the lock nut 266, the lock nut 266 has no rotatable space, no phenomenon that the lock nut 266 loosens can occur, thereby improving the reliability of the matching between the conical shaft and the conical hole, the power transmission is reliably realized and it is very convenient to fix the gland 268; in addition, when the phenomena that the conical shaft 233 and conical hole 2651 are worn occurs, the gland 268 can be dismounted to further tighten the lock nut 266 and then the gland 268 is locked again using the lock bolts 267; since the clearance is reserved between the gland 268 and the end surface of the spiral rod, the gland has movement space in the direction towards the spiral rod and thus even if the lock nut 266 is further locked, the boss 2681 of the gland can also be pressed fit on the lock nut 266 to prevent the lock nut from loosening and thus the fit clearance between the conical shaft and the conical hole can be adjusted as desired without replacing parts and the adjustment can also be performed at present.

The assembly method of the smash-ridging device is as follows:
(1) welding lower bearing seats 271 onto a bottom plate 211, and welding upper bearing seats 275 onto a top plate 213.
(2) welding the bottom plate 211, side plates 212 and the top plate 213 together to form a smash-ridging box 21; welding a first connection lug 29, a flattening device connection lug 210, a second connection lug 220, a third connection lug 230 and an articulated seat 240 onto the smash-ridging box.
(3) mounting bearings in the lower bearing seats 271, mounting a bearing in the upper bearing seat 275, wherein the bearings are conical bearings, the conical bearings in the lower bearing seats 271 are mounted forwardly, and the bearing in the upper bearing seat 275 is mounted reversely.
(4) extending the transmission shaft 23 from the lower end of the smash-ridging box through the bearing in the lower bearing seat into the smash-ridging box, mounting a power output member 24 onto the transmission shaft 23 when the upper end of the transmission shaft 23 is at the central section of the smash-ridging box, then wrapping a shaft sleeve 2771 on the transmission shaft 23, after that, continuing to push the transmission shaft upwards to mount the upper end of the transmission shaft into the bearing in the upper bearing seat 275.
(5) locking a forward lock nut 2772 at the upper end of the transmission shaft 23 and making the forward lock nut 2772 to be in contact with the bearing inner ring within the upper bearing seat 275 to facilitate the axial movement of the bearing inner ring within the upper bearing seat 275 so as to achieve the purpose of adjusting the clearance of the conical bearing and after the clearance of the conical bearing has been adjusted, the reverse lock nut is locked in reversed direction.
(6) mounting a lower bearing end cover 281 and an upper bearing end cover 282.
(7) mounting a driving mechanism 22.
(8) mounting a flange 265 of which the mounting process is as follows: making a conical hole 2651, through-holes 2652 and a counterbore 2653 pass through the screw rod 233, fitting the conical shaft 232 with the conical hole 2651, locking the lock nut 266 at the lower end of the screw rod 233, pressing the gland 268 into the counterbore 2653 to make the bosses 2681 come in contact with the end surface of the lock nut 266 and locking the lock bolt 267.
(9) mounting a spiral drill rod 26 onto the flange 265.

The assembly method of the smash-ridging device is simple and high in precision.

As show in Figure 1, Figure 2 and Figures 20 and 21, the connection device 3 comprises a connection frame 31, a connection supporting plate 32, a guide sliding rod 33, a connecting nut 34, a sliding sleeve frame 35 and a lifting oil cylinder 36.

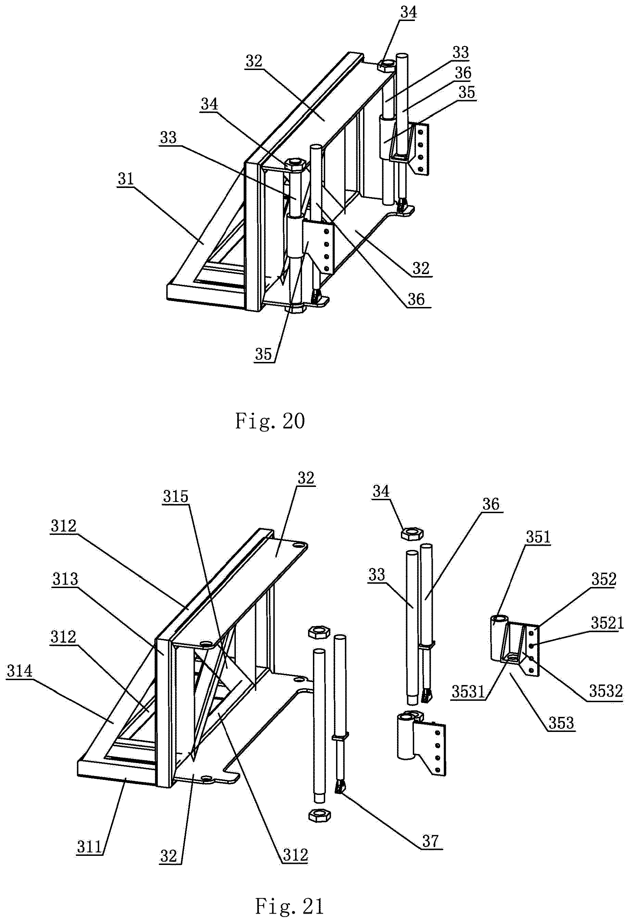

As show in Figure 21, the connection frame 31 comprises horizontal beams 311, longitudinal beams 312, vertical beams 313, a first inclined strut 314 and a second inclined strut 315. There are several horizontal beams and the longitudinal beams 312 consist of lower longitudinal beams and upper longitudinal beams, wherein the lower longitudinal beams are welded at both ends of the horizontal beam 311 or are welded on the central section of the horizontal beam 311; the vertical beams 313 are welded on the lower longitudinal beams close to the rear section; the upper longitudinal beams are welded on the upper end of the vertical beam; a first inclined strut 314 is welded between the front end of the horizontal beam and the upper end of the vertical beam; the second inclined strut 315 is welded between the vertical beams; the connection frame 31 with this structure is simple in structure and good in force-bearing performance and can bear the heavier smash-ridging device.

The horizontal beams 311, the longitudinal beams 312, the vertical beams 313, the first inclined strut 314 and the second inclined strut 315 all use square tubes and are internally communicated with each other, so that oil chambers are formed within the horizontal beams 311, the longitudinal beams 312, the vertical beams 313, the first inclined strut 314 and the second inclined strut 315 and are used for being filled with diesel and thus the volume of the oil tank is increased by the existing structure.

As shown in Figure 21, the lower longitudinal beams and the upper longitudinal beams are welded with the connection supporting plate respectively.

The guide sliding rod 33 passes through the connection supporting plate 32, and the guide sliding rod comprises a guide sliding rod body and a chrome coating, which is coated on the outer surface of the guide sliding rod body. By coating the chrome coating, the wear resistance, corrosion resistance and so on can be improved.

A connecting nut 34 is arranged below the lower connection supporting plate on the guide sliding rod 33; a connecting nut 34 is arranged above the upper connection supporting plate on the guide sliding rod 33 and thus the guide sliding rod 33 can be very conveniently mounted and dismounted using the upper and lower connecting nuts 34.

As shown in Figure 21, the sliding sleeve frame 35 comprises a sliding sleeve 351, a smash-ridging device connection seat 352 and a lifting oil cylinder seat 353. The sliding sleeve 351 sleeves the guide sliding rod 33 slidely, dustproof rings are arranged between the sliding sleeve 351 and the guide sliding rod 33 and located on the upper and lower ends of the sliding sleeve 351, respectively, the dustproof rings have dustproof and waterproof effects, can prevent the lubricating oil between the sliding sleeve 351 and the guide sliding rod 33 from losing in a short time, thereby improving the lubricating performance. The smash-ridging device connection seat 352 is welded on the sliding sleeve 351, and a mounting hole 3521 is formed in the smash-ridging device connection seat 352. The lifting oil cylinder seat 353 is welded on the smash-ridging device connection seat 352 and comprises a lifting oil cylinder seat body 3531 and a rib plate 3532 which is welded between the lifting oil cylinder seat body and the smash-ridging device connection seat 352.

An oil cylinder articulated seat 37 is fixed on the lower connection supporting plate, on which the piston rod of the lifting oil cylinder 36 is articulated, and the lower end of the lifting oil cylinder body is fixed on the lifting oil cylinder seat 353. For the subsoiling smash-ridging machine of the present invention, since it is required that the stroke of the lifting oil cylinder is relatively long, the lifting oil cylinder 36 has larger length, the distance between the fixation point of the lifting oil cylinder body and the articulated seat 37 is reduced when the lower end of the lifting oil cylinder body is fixed on the lifting oil cylinder seat 353 and it is uneasy for the lifting oil cylinder 36 to bent and deform when it works so that it has good load-carrying capacity; in addition, by adopting the fixing structure compared to the structure that the upper end of the lifting oil cylinder body is fixed to the lifting oil cylinder seat, the connection frame has lower height, thereby decreasing the vertical height of the connection frame as well as the height of the entire subsoiling smash-ridging machine.

The smash-ridging device is fixed on the smash-ridging device connection seat 353 through a bolt which passes through the mounting hole 3521, in this way, it is convenient and rapid to mount the smash-ridging device and the smash-ridging device can be dismounted integrally.

The assembly method of the connection device 3 is as follows:
(1) welding horizontal beams 311, longitudinal beams 312, vertical beams 313, a first inclined strut 314 and a second inclined strut 315 together to form a connection frame 31.
(2) welding a connection supporting plate 32 on a lower longitudinal beam and an upper longitudinal beam, respectively.
(3) making one end of a guide sliding rod 33 downwards pass through the upper connection supporting plate, then enabling a sliding sleeve 351 of a sliding sleeve frame 35 sleeve the guide sliding rod 33, after that, sequentially moving the guide sliding rod 33 downwards to pass through the lower connection supporting plate, and then locking the connecting nut 34 at the upper end of the guide sliding rod 33 and the connecting nut 34 at the lower end of the guide sliding rod 33 respectively to fix the guide sliding rod 33.
(4) fixing an articulated seat 37 on the lower connection supporting plated, fixing a cylinder body of a lifting oil cylinder 36 on a lifting oil cylinder seat 353, and articulating the piston rod of the lifting oil cylinder 36 onto the articulated seat 37.

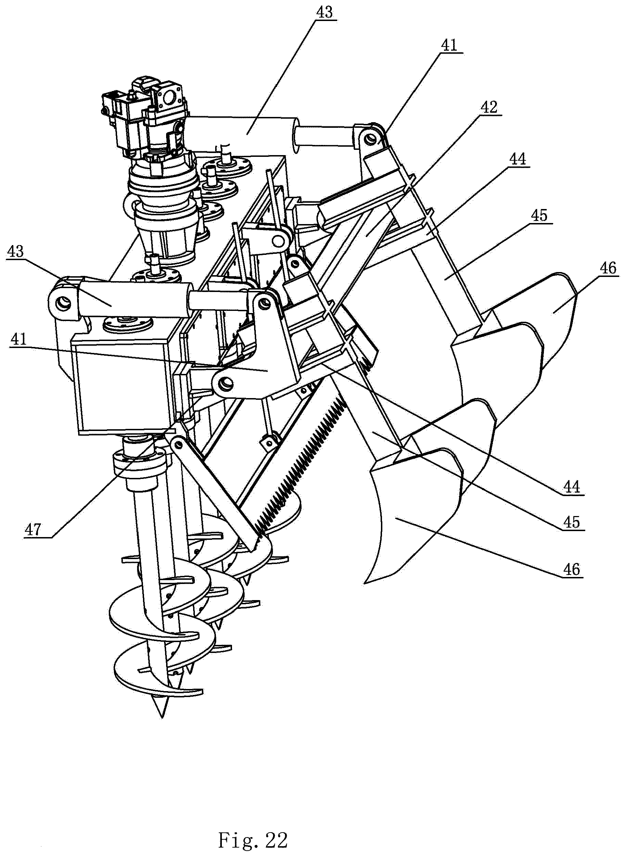

As shown in Figure 1, Figure 2 and Figure 22, the ditching device 4 comprises swing arms 41, a supporting arm 42, a turn-over oil cylinder 43, adjusting seats 44, a ditching arm 45 and a ditching plough 46.

An articulated seat 47 is fixed on the extended mounting flange 250, one end of each swing arm 41 is articulated on the articulated seat 47, and the other end of the swing arm 41 is articulated on the piston rod of the turn-over oil cylinder 43. The swing arms are two swing arms parallel to each other, the supporting arm 42 is welded between the central sections of the two swing arms and has a regular polygon section. The cylinder body of the turn-over oil cylinder 43 is articulated on the third connection lug 230.

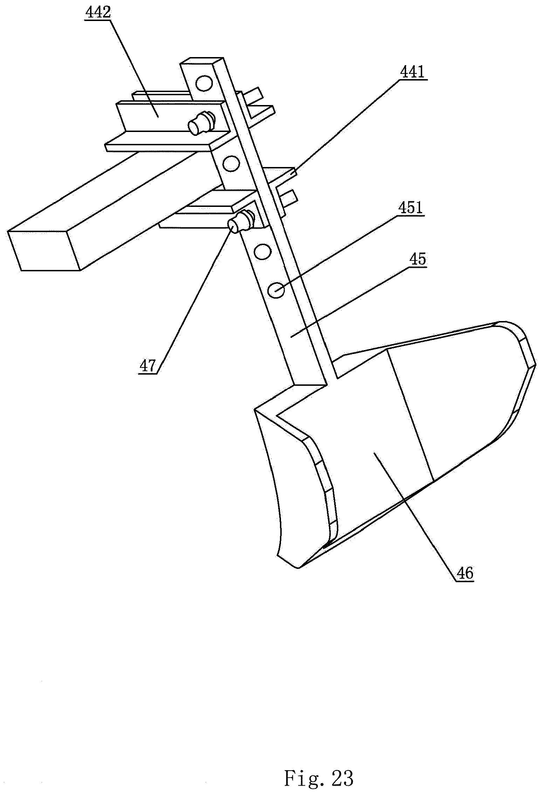

As shown in Figure 23, the adjusting seats 44 comprise lower clamping seats 441 and upper clamping seats 442, which are clamped on the supporting arm 42 and connected through bolts; when the bolts are loosened, the adjusting seats 44 can move on the supporting arm transversely and when the bolts are locked, the adjusting seats 44 can be fixed on the supporting arm 42 and thus the purpose that the transverse positions of the adjusting seats are adjusted can be achieved.

Each adjusting seat comprises two lower clamping seats 441 and two upper clamping seats 442, and each lower clamping seat 441 and each upper clamping seat 442 are respectively provided with location holes through which an adjusting rod 47 passes. The ditching arm 45 is clamped between the two upper clamping seats, meanwhile is clamped between the two lower clamping seats, and is provided with a plurality of adjusting holes 451, through which the adjusting rod 47 passes. If there is a need to adjust the position of the ditching arm relative to the adjusting seats 44, the adjusting rod 47 is firstly loosened, the ditching arm 45 is adjusted to the desired position and then the adjusting rod 47 passes through the location holes and the corresponding adjusting holes and thus the adjustment is performed very conveniently and rapidly.

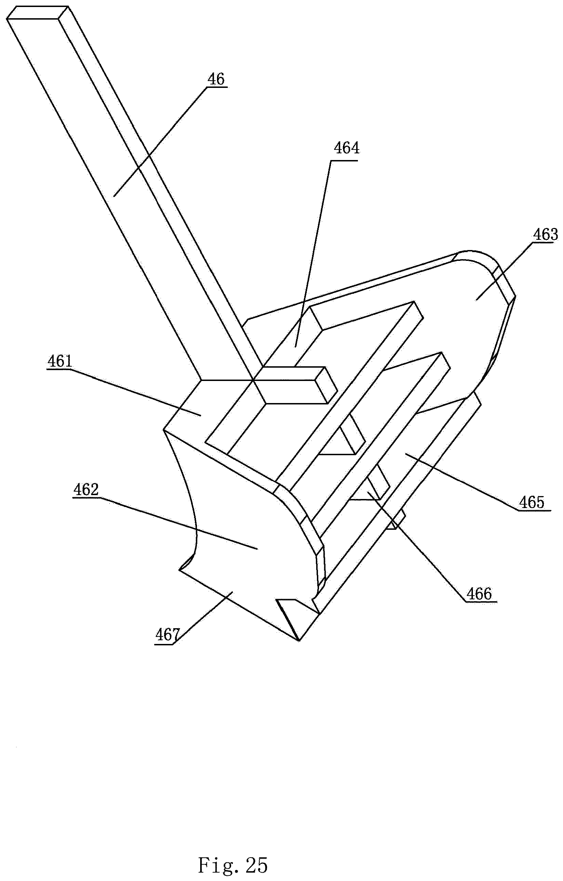

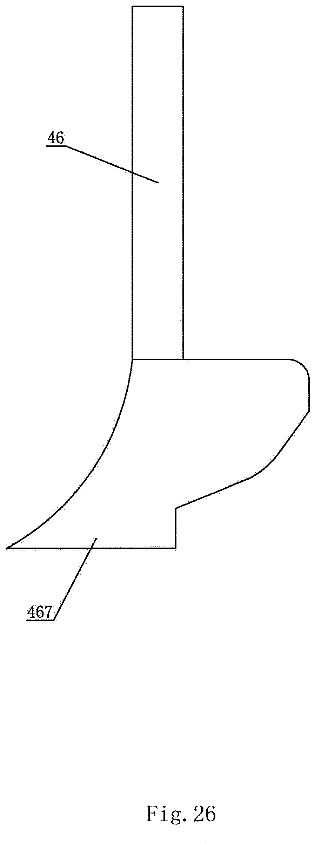

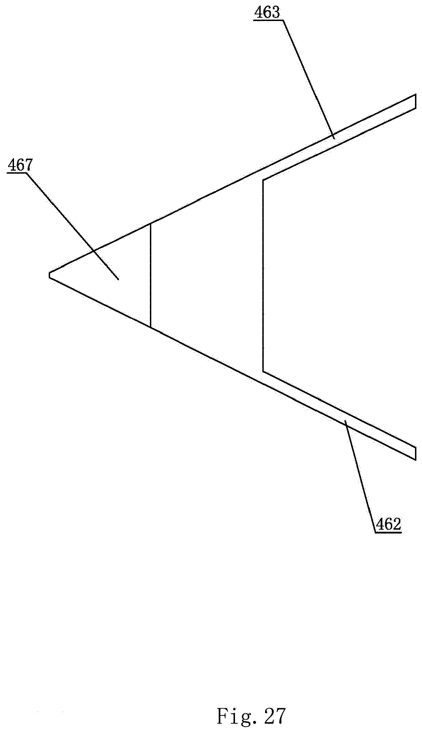

As shown in Figure 25 to 27, the ditching plough 46 is fixed at the lower end of the ditching arm 45. The ditching plough comprises a first ditching plough plate 461, two sides of which are provided with a second ditching plough plate 462 and a third ditching plough plate 463, U-shaped grooves 464 are formed among the first ditching plough plate 461, the second ditching plough plate 462 and the third ditching plough plate 463, transversal reinforced ribs 465 and vertical reinforced ribs 466 are arranged in the U-shaped grooves and are cross to each other, a plough tip 467 is formed by the crossing of the lower end of the first ditching plough plate 461 with the lower end of the second ditching plough plate 462 and the lower end of the third ditching plough plate 463, the plough tip 467 has a triangular cross section, and has a thickness larger than the thicknesses of the second ditching plough plate 462 and the third ditching plough plate 463. Since the plough tip can come in contact with harder obstacles such as stones, tree roots or bushes in the soil during tillage and the plough tip 467 has a thickness larger than the thicknesses of the second ditching plough plate 462 and the third ditching plough plate 463, the plough tip 467 has higher strength, it is uneasy to cause the damage to the plough tip 467 and thus the plough has firm structure, at the same time, since the U-shaped grooves 464 are formed among the first ditching plough plate 461, the second ditching plough plate 462 and the third ditching plough plate 463, the entire plough structure has lower weight and due to the arrangement of the transversal reinforced ribs 465 and vertical reinforced ribs 466 are arranged in the U-shaped grooves 464 so that the plough structure is very firm.

The assembly method of the ditching device 4 is as follows:
(1) welding the supporting arm 42 between two swing arms, articulating one end of the turn-over oil cylinder 43 onto the third connection lug 230, then articulating one end of the swing arms 52 onto the articulated seat 47 and the other end of the swing arms onto the piston rod of the turn-over oil cylinder 43.
(2) mounting the adjusting seats 44 onto the supporting arm 52 which comprises: clamping the two lower clamping seats 441 and the two upper clamping seats 442 on the supporting arm 52, connecting the lock bolt between the upper and lower clamping seats at the left side, connecting the lock bolt between the upper and lower clamping seats at the right side, at the moment the lock bolt does not lock tightly the upper and lower clamping seats, thus adjusting the position of the supporting arm 42 on the adjusting seats 44 as desired and then screwing the lock cut so as to prevent the adjusting seats 44 from moving relative to the supporting arm 42.
(3) welding the ditching plough 46 on the ditching arm 45, mounting the upper end of the ditching arm 45 between the upper and lower clamping seats at the left side and the upper and lower clamping seats at the right side of the adjusting seat, adjusting the position of the ditching arm as desired and then positioning and fixing the ditching arm using the adjusting rod to pass through the location hole and the corresponding adjusting hole.

Above assembly method of the ditching device is simple in process and convenient to operate and the position of the ditching plough can be adjusted as desired.

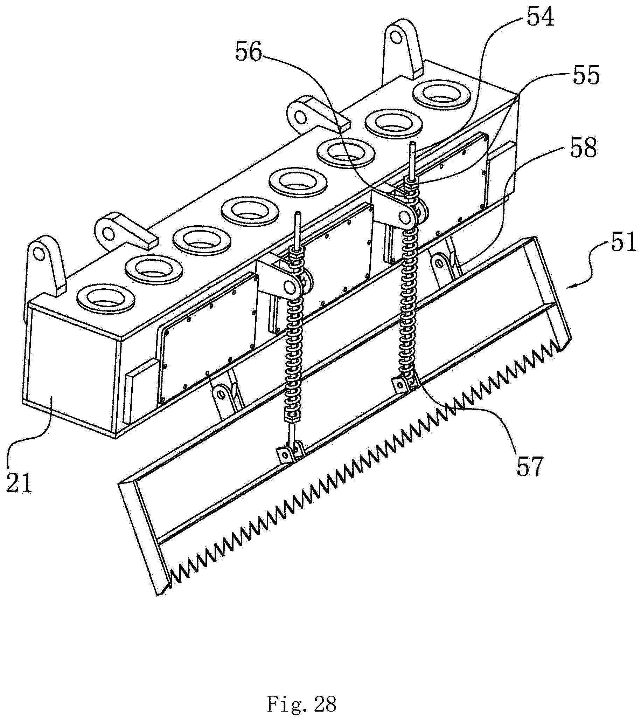

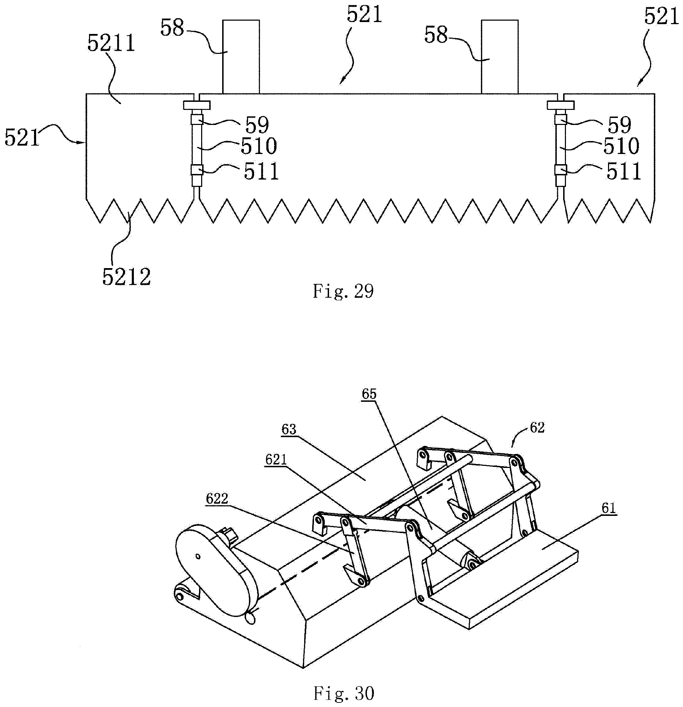

As shown in Figures 28 and 29, the flattening device 5 comprises a raking plate 52, connection arms 58 connected to the raking plate 52 and an adjusting device which is used to adjust the turn-over angle of the raking plate 52. The connection arms 58 are arranged at both ends of the raking plate 52, the lower ends of the connection arms 58 are fixedly connected with the raking plate 52, and the upper ends of the connection arms are articulated with the flattening device connection lug 210 for supporting and connecting the raking plate 52. The raking plate 52 is in the form of a long strip, and is formed by successively connecting three flat plate units 521; each flat plate unit 521 comprises a connection section 5211 and a serrated section 5212 arranged at the lower end of the connection section 5211, and the connection sections 5211 of adjacent flat plate units 521 are connected through a hinge so that the flat plate units 521 can be turned over and folded; when the flat plate units 521 are unfolded, in order to fix the positions of the flat plate units 521, an interlocking device which limits the flat plate units to be turned over, is arranged between the connection sections 5211 of the adjacent flat plate units 521. The interlocking device comprises a first circular ring 59 arranged at the side edge of the flat plate units 521, a second circular ring 511 arranged at the side edge of the adjacent flat plate units 521 and an inserted pin 510 which can pass through the first circular ring 59 and the second circular ring 511, inserted holes of the first circular ring 59 and second circular ring 511 are longitudinal, after two adjacent flat plate units 521 are unfolded, the first circular ring 59 and the second circular ring 511 are aligned up and down and the inserted pin 510 successively is inserted into the first circular ring 59 and second circular ring 511 from top to bottom to lock two adjacent flat plate units 521. The adjusting device comprises an articulated seat, a screw rod, a first spring, a second spring and a nut, wherein the lower end of the screw rod is articulated with the raking plate 52, the upper end of the screw rod passes through the articulated seat and then is connected with the nut, the first spring sleeves the screw rod and is located between the raking plate 52 and the articulated seat, and the second spring sleeves the screw rod and is located between the articulated seat and the nut, the elastic force of the first spring acts on the raking plate 52 so that the raking plate 52 is more powerful when the soil is flattened and in addition, the turn-over angle of the raking plate 52 can be changed by adjusting the positions of adjusting nuts.

The operating principle of the flattening device is as follows: the flattening device is used in conjunction with the smash-ridging device which performs smash-ridging on the soil so that the soil becomes soft and out of flatness; the raking plate 52 can be turned over by the adjusting device and come in contact with the ground, the subsoiling smash-ridging machine drives the flattening device to walk and the raking plate 52 of the flattening device can flatten the land; in addition, since smashed soil will splash when the spiral drill rod of the smash-ridging device performs smash-ridging on the soil, the raking plate 52 arranged at one side of the smash-ridging device can have the effect of preventing the soil from splashing in all directions. Since the raking plate 52 is in the form of a long strip, the width of the raking plate 52 can be adjusted through adjacent articulated flat plate units 521, thus the width of the raking plate 52 can be adjusted according to the size of the area of the land.

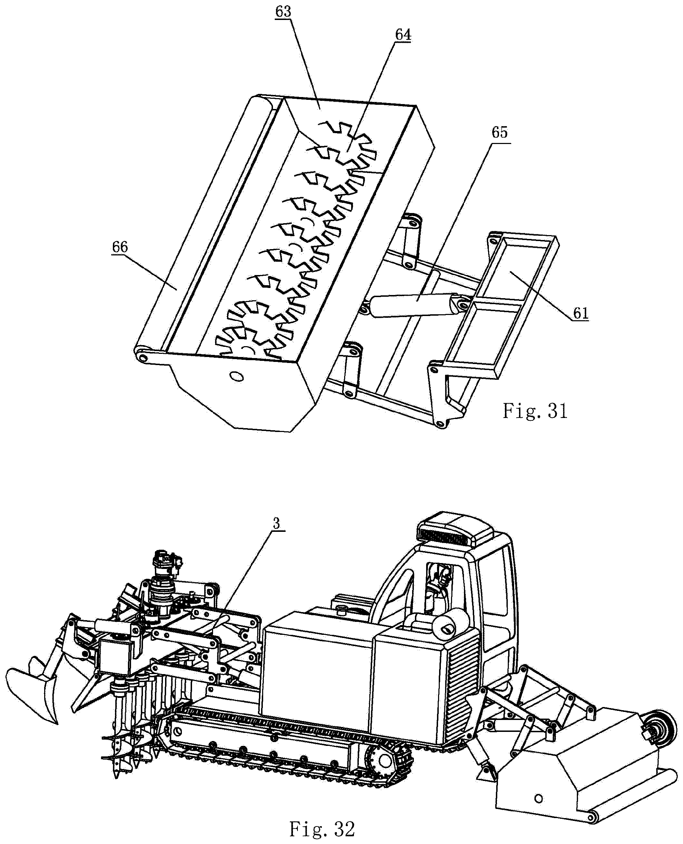

As shown in Figure 30 and 31, the straw returning device 6 comprises a straw returning articulated seat 61, a straw returning connecting rod mechanism 62, a straw returning hood 63, a weeding cutter 64, a straw returning oil cylinder 65 and a straw returning driving mechanism.

As shown in Figure 30 and 31, the straw returning connecting rod mechanism 62 comprises a first straw returning connecting rod 621 and a second straw returning connecting rod 622; one end of the first straw returning connecting rod 621 is articulated on the straw returning articulated seat 611, and the other end of the first straw returning connecting rod 621 is articulated on the straw returning hood 63; one end of the second straw returning connecting rod 622 is articulated on the central section of the first straw returning connecting rod, and the other end of the second straw returning connecting rod 622 is articulated on the straw returning hood 63; the weeding cutter 64 is arranged in the straw returning hood 63; one end of the straw returning oil cylinder 65 is articulated on the straw returning articulated seat 61, and the other end is articulated on the straw returning hood 63; the straw returning driving mechanism comprises an electrical motor, a driving gear wheel and a driven gear wheel, wherein the electrical motor is fixed on the straw returning hood 63, the driving gear wheel is mounted on the output shaft of the electrical motor, the driven gear wheel is mounted on the shaft of the weeding cutter 64, the driving gear wheel and the driven gear wheel are meshed with each other and a limiting roller 66 is arranged at the lower front of the straw returning hood.

### Embodiment 2

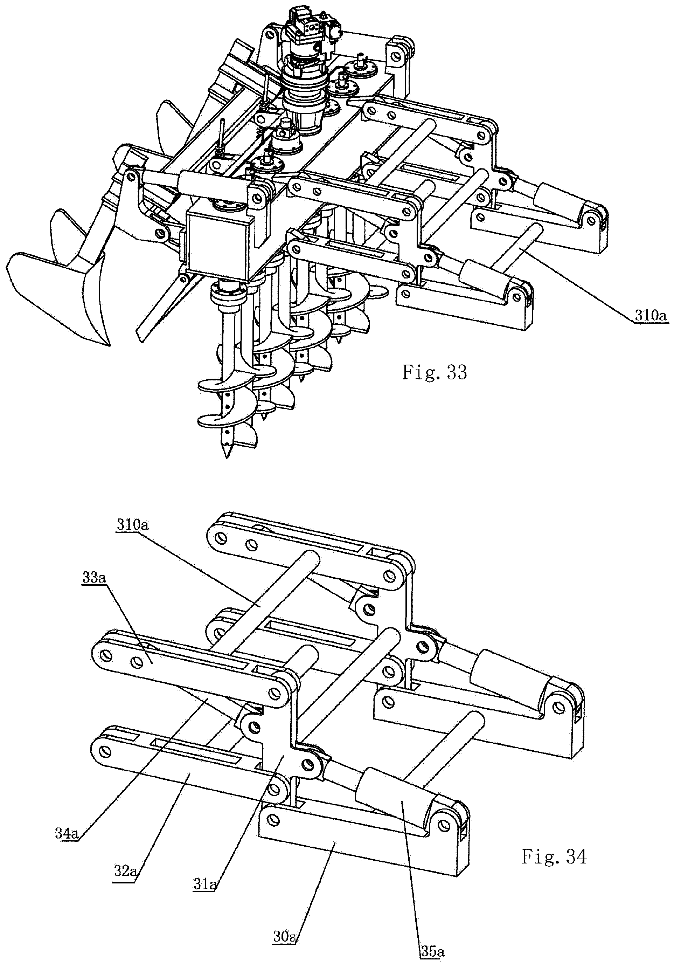

The present embodiment compared to embodiment 1 has the same other structures as those of embodiment 1 except the connection device. In the present embodiment, as shown in Figures 32 to 34, the connection device 3 comprises two connecting rod mechanisms and a connecting rod 310a which is attached at the two connecting rod mechanisms. Each connecting rod mechanism comprises a connecting rod seat 30a, a first connecting rod 31a, a second connecting rod 32a, a third connecting rod 33a, a fourth connecting rod 34a and a driving oil cylinder 35a. The connecting rod seat 30a is fixed on a supporting platform; the lower end of the first connecting rod 31a is articulated on the rear end of the connecting rod seat 30a; one end of the second connecting rod 32a is articulated at the middle lower position of the first connecting rod 31a and the other end of the second connecting rod 32a is articulated on the first connection lug 29; one end of the third connecting rod 33a is articulated at the upper end of the first connecting rod 31a and the other end of the third connecting rod 33a is articulated on the second connection lug 220 and the third connecting rod 33a and second connecting rod 32a are arranged in parallel to each other; one end of the fourth connecting rod 34a is articulated at the middle upper position of the first connecting rod 31a and the other end of the fourth connecting rod 34a is articulated on the third connecting rod 33a; and one end of the driving oil cylinder 35a is articulated on the connecting rod seat 30a and the other end of the driving oil cylinder 35a is articulated in the middle of the first connecting rod 31a.

By adopting the connection device with above structure, the turn-over and vertical movement of the smash-ridging device can be achieved so as to facilitate subsoiling and smash-ridging.

### Embodiment 3

As shown in Figures 1 and 2, the subsoiling smash-ridging machine comprises a machine body 1, a smash-ridging device 2 and a connection device 32.

As shown in Figure 2, the machine body 1 comprises a walking mechanism 11, a chassis 12, a diesel engine component 13, a hydraulic oil tank 14, a cooler 15 and a driving cab 16.

As shown in Figures 3 to 8, the walking mechanism 11 comprises two crawler components arranged opposite to each other, each crawler component comprises a wheel stand 111, a driving wheel 112, a driven wheel 113, a lower guide wheel 114, an upper guide wheel 115, a crawler 116 and a walking drive device.

As shown in Figures 7 and 8, the wheel stand 111 comprises a wheel stand body 1111 and a wheel stand connection lug 1112. The wheel stand connection lug 1112 is connected to the front end of the wheel stand body 1111. A driven wheel accommodation groove 11111 is formed in the rear end of the wheel stand body 1111, a first mounting hole through the driven wheel accommodation groove 11111 is formed in the wheel stand body 1111; a lower guide wheel accommodation groove 11112 extends upwardly at the bottom surface of the wheel stand body 1111, a second mounting hole through the lower guide wheel accommodation groove 11112 is formed in the wheel stand body 1111 and a second boss 11114 is arranged on the exterior side of the wheel stand body 1111 at the position corresponding to the second mounting hole; and an upper guide wheel accommodation groove 11113 extends downwardly at the top surface of the wheel stand body 1111, a third mounting hole through the upper guide wheel accommodation groove 11113 is formed in the wheel stand body 1111, and a third boss 11115 is arranged on the exterior side of the wheel stand body 1111 at the position corresponding to the third mounting hole.

The driving wheel 112 is mounted on the wheel stand connection lug 1112 through a bearing, and the walking drive device is fixed on the wheel stand connection lug 1112. In the present embodiment, the walking drive device is a hydraulic motor 117 and the driving wheel 112 is driven by the hydraulic motor 117 so that the stepless speed regulation and the large driving force can be achieved.

A part of the driven wheel 113 is located within the driven wheel accommodation groove 11111 and the driven wheel 113 is mounted by a mounting shaft passing through the first mounting hole.

A part of the lower guide wheel 114 is located within the lower guide wheel accommodation groove 11112, a lower part of the lower guide wheel 114 protrudes from the wheel stand body 1111, the lower guide wheel 114 is mounted by a mounting shaft passing through the second mounting hole and second nuts are mounted at both ends of the mounting shaft passing through the second mounting hole and come in contact with the second boss 11114; due to the arrangement of the second boss 11114, the direct contact of the second nuts and the wheel stand body 1111 is avoided, on one hand, it is convenient to lock the second nuts and the locking force is improved and on the other hand, the strength and service life of the wheel stand body 1111 can be improved.

A part of the upper guide wheel 115 is located within the upper guide wheel accommodation groove 11113, an upper part of the upper guide wheel 115 protrudes from the wheel stand body 1111, the upper guide wheel 115 is mounted by a mounting shaft passing through the third mounting hole and third nuts are mounted at both ends of the mounting shaft passing through the third mounting hole and come in contact with the third boss 11115; due to the arrangement of the third boss 11115, the direct contact of the third nuts and the wheel stand body 1111 can be avoided, on one hand, it is convenient to lock the third nuts and the locking force is improved and on the other hand, the strength and service life of the wheel stand body 1111 can be improved.

The crawler 116 sleeves the driving wheel 112, the driven wheel 113, the lower guide wheel 114 and the upper guide wheel 115, the crawler 116 can be driven to move by driving the driving wheel 112; the lower guide wheel 114 has played guiding and bearing roles and the upper guide wheel 115 has played guiding and tensioning roles.

As shown in Figure 7 and 8, a chamfer is formed at the rear end of the wheel stand body 1111 and the front end of the wheel stand connection lug 1112 is circular arc. In this way, after the crawler 116 has been mounted, the crawler 116 can be prevented from interfering with the wheel stand 111 during the operation of the crawler.

In the present embodiment, by adopting the crawler walking mechanism, the subsoiling smash-ridging machine can smoothly walk on the soft soil so that the walking reliability of the subsoiling smash-ridging machine is improved, the efficiency can also be improved and the energy consumption can also be reduced.

The assembly method of the walking mechanism 11 is as follows:
(1) mounting the driving wheel 112 on the wheel stand connection lug 1112 via a bearing and fixing the walking drive device on the wheel stand connection lug 1112 to make the output shaft of the walking mechanism to be connected to the driving wheel 112.
(2) mounting the driven wheel 113 on the wheel stand body 1111 via a mounting shaft.
(3) mounting the lower guide wheel 114 on the wheel stand body 1111 via the mounting shaft passing through the second mounting hole and locking the second nuts at both ends of the mounting shaft passing through the second mounting hole to make the second nuts come in contact with the second boss; mounting the upper guide wheel 115 on the wheel stand body 1111 via the mounting shaft passing through the third mounting hole and locking the third nuts at both ends of the mounting shaft passing through the third mounting hole to make the third nuts come in contact with the third boss 1115.
(4) enabling the crawler 116 to sleeve the driving wheel 112, the driven wheel 113, the lower guide wheel 114 and the upper guide wheel 115.

As shown in Figure 7 and Figure 8, the chassis 12 comprises a supporting platform 121, inclined strut plates 122 and a supporting rib 123.

The supporting platform 121 is welded on the wheel stand 111; the inclined strut plates 122 are welded on the wheel stand 111 and the supporting platform 121 so as to improve the supporting strength; the supporting rib 123 is located in the front of the supporting platform 121, and extends from the inclined strut plate at one side via the bottom of the supporting platform 121 to the inclined strut plate 122 at the other side; a circular arc groove 1231 is formed at the corner of the supporting rid 123 so as to reduce the phenomenon of stress concentration and improve the strength of the supporting rib 123. In the present invention, since the diesel engine component 13 and the driving cab 16 are mounted in the front of the supporting platform 121, the weight is very high and thus by arranging the supporting rid 123, the bending resistance and deformation resistance of the supporting platform 121 can be improved, thereby improving the bearing capability of the supporting platform 121. Two rib plates 124 arranged in parallel to each other are arranged at the rear bottom of the inclined strut plates and a triangular groove 1241 is formed between the rib plates 124 and the inclined strut plates 122.

The assembly method of above chassis 12 is as follows:
(1) welding the supporting rib 123 to the bottom surface of the supporting platform 121.
(2) welding the inclined strut plates 122 on the supporting rib 123 and positioning the inclined strut plates 122 using the shapes of both ends of the supporting ribs so as to improve the precision.
(3) welding the rib plates 124 on the inclined strut plates 122.
(4) welding the supporting platform 121 and the inclined strut plates 122 onto the wheel stand 111.

By adopting the assembly method of above frame 12, the mounting precision can be improved and the assembly efficiency can also be improved.

A shock absorber is mounted on the supporting platform 121 and a diesel engine fixing seat is mounted on the shock absorber.

As shown in Figure 2, the diesel engine component 13 comprises a diesel engine frame 131, a diesel engine 132, a wind tunnel box 133, a hydraulic pump 134 and a diesel engine hood135.

The diesel engine frame 131 is mounted on a diesel engine fixing seat and the shock absorption is performed on the diesel engine component 13 via the shock absorber; the diesel engine 132 is fixed on the diesel engine frame 131; the wind tunnel box 133 is mounted in the front end of the diesel engine frame 131 and is located in front of the diesel engine 132, when the wind tunnel box works, it blows air from the outside via the front end of the diesel engine 132 towards the rear end thereof so that fore-and-aft air stream is formed on the diesel engine to perform the heat dissipation on the diesel engine 132, thereby improving the service life of the diesel engine 132; the hydraulic pump 134 is connected to the output shaft of the diesel engine 132 and when the diesel engine 132 works, the output shaft of the diesel engine drives the hydraulic pump 134 to run; and the diesel engine 132 and the wind tunnel box 133 are covered with the diesel engine hood 135 so as to achieve the waterproof, dustproof and anti-collision effects on the diesel engine.

The assembly method of the diesel engine component 13 is as follows:
(1) fixing the diesel engine 132 onto the diesel engine frame 131.
(2) fixing the wind tunnel box 133 onto the diesel engine frame 131.
(3) connecting the hydraulic pump 134 to the output shaft of the diesel engine.
(4) fixing above assembled components onto the diesel engine fixing seat integrally and performing balance adjustment.
(5) covering the diesel engine 132 and wind tunnel box 133 with a diesel engine hood 135.

By adopting above assemble method, the diesel engine component except the diesel engine hood can be assembled in the factory and then transported to the site for being mounted and therefore, it is convenient to mount and the high mounting efficiency is achieved.

In the present invention, the diesel engine component 13 and the driving cab 16 are mounted in the front of the supporting platform.

As shown in Figure 9 to Figure 11, the smash-ridging device 2 comprises a smash-ridging box 21, a driving mechanism 22, transmission shafts 23, power input members 24, bearings 25 and a spiral drill rod 26.

As shown in Figure 10 and Figure 11, the smash-ridging box 21 comprises a bottom plate 211, side plates 212 and a top plate 213, the lower end surfaces of the side plates 212 are welded on the bottom plate 211, and the top plate 213 is welded on the upper end surfaces of the side plates 212.

As shown in Figure 11 to Figure 14, more than two lower through-holes 2111 are formed in the bottom plate 211, lower bearing seats 271 extending upwardly are welded on the inner walls of the lower through-holes 2111, the lower bearing seats 271 protrude from the upper surface of the bottom plate 211, the height of protruding part of the lower bearing seat is larger than the width of two bearings, bearings are mounted in the lower bearing seats 271, rib plates 273 are welded between adjacent lower bearing seats so as to improve the strength of the lower bearing seats, and lubricating oil passages 274 are between the rib plates 273 and the bottom plate 211, in this way, on one hand, the lubricating oil flows at the bottom of the smash-ridging box with bearing seats smoothly so as to improve the lubricating effects, on the other hand, as the welding among the rib plates and the bottom plate is not required, it is convenient to weld the rib plates under the premise of the limitation on space.

Each lower bearing seat 271 extends downwardly and protrudes from the lower surface of the bottom plate to form a lower boss 272 which is used for mounting a lower bearing end cover 281. After the lower boss 272 is arranged, on one hand, the strength of the bottom plate 211 is improved and on the other hand, a certain distance can be reserved between the lower bearing end cover 281 and the lower surface of the bottom plate 211 so as to facilitate the mounting and dismounting of the lower bearing end cover 281.

As shown in Figures 13 and 15, more than two upper through-holes 2131 corresponding to the lower through-holes in the vertical direction are formed in the top plate 213, an upper bearing seat 275 extending downwardly is arranged on the inner walls of the upper through-holes 2131, the length of the lower bearing seats 271 is larger than that of the upper bearing seat 275, and a bearing is mounted in the upper bearing seat 275; the upper bearing seat 275 extends upwardly and protrudes from the upper surface of the top plate to form an upper boss 276 which is used for mounting an upper bearing end cover 282. After the upper boss 276 is arranged, on one hand, the strength of the top plate 213 is improved and on the other hand, a certain distance can be reserved between the upper bearing end cover 282 and the upper surface of the top plate 213 so as to facilitate the mounting and dismounting of the upper bearing end cover 282.

According to the structure of the present invention, it is convenient to connect the lower bearing seats 271 by arranging the lower through-holes 2111 and to connect the upper bearing seat 275 by arranging the upper through-holes 2131; since the lower bearing seats 271 extends upwardly and the upper bearing seat 275 extends downwardly, both the lower bearing seats and the upper bearing seats are located within the smash-ridging box carrying bearing seats and thus, on one hand, the contour dimension of the smash-ridging box with bearing seats can be reduced, on the other hand, it can have protecting effect on the upper and lower bearing seats. In addition, during the use, the smash-ridging box with bearing seats can be filled with lubricating oil, while by adopting the arrangement of the upper and lower bearing seats, it is more easier for lubricating oil within the smash-ridging box with bearing seats to lubricate bearings within the upper and lower bearing seats; since the length of the lower bearing seats 271 is larger than that of the upper bearing seat 275, when the bearings are mounted, in consideration of the special subsoiling and smash-ridging environment, more than two bearings 25 are mounted within the lower bearing seats 271 and one bearing 25 is mounted within the upper bearing seat 275 such that the strength, rigidity and the transmission stability of bearing seats can be improved, furthermore, by selecting an appropriate amount of bearings, the costs in manufacturing the smash-ridging box and costs caused by the number of bearings are reduced.

Wherein, one of the side plates comprising a plate body 2121 is arranged in the front of the smash-ridging box, manholes 21211 are formed in the plate body 2121, a flange 21212 is arranged around the manhole on the plate body 2121, mounting holes 212112 are formed in the plate body 2121 and the flange 21212, and a step is formed between the inside of the flange 21212 and the plate body 2121. Since parts such as a transmission system are all mounted within the smash-ridging box 21, the manholes 212111 are formed so as to mount, dismount and maintain the parts such as the transmission system; the flange 212112 is generally connected to the plate body 2121 by welding, after the mounting hole 21212 is formed in the position of the flange 212112, the strength of manhole covers fixed by bolts is improved and thus the side plates are not easy to damage. In addition, due to the arrangement of the flange 212112, after the manhole covers are mounted, a distance equal to or greater than the thickness of the flange exists between the manhole covers and the plate body so as to facilitate the mounting and dismounting of the manhole covers; by arranging the step, the welding seams between the plate body 2121 and the inner side of the flange can be increased, thereby improving the strength of the connection between the flange 212112 and the plate body 2121, in addition, the step can also have position-limiting and positioning effects on a seal ring so that the sealing property between the manhole covers and the side plates is improved.

Further, a seal groove can be formed in the flange 212112. The seal groove can accommodate the seal ring and limit the position of the seal ring, thereby improving the sealing property. After the manhole covers are mounted, sealing oil can be injected into the seal groove instead of arranging the seal ring so as to achieve the sealing effect.

As shown in Figure 12, a first bearing part is arranged on the lower surface of the bottom plate 211, a first connection lug 29 is welded on the side plates 212, a first bearing plate 291 extending inwardly is arranged on the first connection lug, and the first bearing plate 291 supports the first bearing part. Since the bottom plate 211 is welded on the side plates 212, the phenomenon of stress concentration is easily formed at the welding seam, thus cracks are easily formed at the connection between the bottom plate 211 and side plates 212 which can even make them completely separated. After the first bearing part is arranged, it can have bearing effect on the bottom plate using the action of the first bearing plate on the first bearing part and thus better connection strength of the bottom plate and the side plates is achieved.

As shown in Figure 12, a second bearing part is arranged on the lower surface of the bottom plate 211, a flattening device connection lug 210 is welded on the side plates 212, a second bearing plate 2101 extending inwardly is arranged on the flattening device connection lug 210, and the second bearing plate 2101 supports the second bearing part. Since the bottom plate 211 is welded on the side plates 212, a phenomenon of stress concentration is easily formed at the welding seam, thus cracks are easily formed at the connection between the bottom plate 211 and side plates 212 which can even make them completely separated. After the second bearing part is arranged, it can have bearing effect on the bottom plate using the action of the second bearing plate on the second bearing part and thus better connection strength of the bottom plate and the side plates is achieved. The second bearing part and the first bearing part are arranged opposite to each other.

As shown in Figure 12, a first welding part is arranged on the top plate 213, a second connection lug 220 is welded on the side plates 212, a second welding plate 2201 extending inwardly is arranged on the second connection lug 220, and the second welding plate 2201 is welded with the first welding part on the top plate; in this way, the top plate 213 is uneasy to be separated from the side plates 212, the second connection lug 220 has large welding area and two welding surfaces are arranged vertically so that the second connection lug 220 is high in connection strength; a third connection lug 230 is welded on the top plate 213, a third welding plate 2301 extending downwardly is arranged on the third connection lug 230, a second welding part is welded on the side plates 212, and the third welding plate 2301 is welded with the second welding part; in this way, not only that the top plate 213 is uneasy to be separated from the side plates 212, but also that the third connection lug 230 has large welding area and two welding surfaces are arranged vertically so that the third connection lug 230 is high in connection strength.

As shown in Figure 17, an articulated seat 240 is arranged on the plate body 2121 and the articulated seat 240comprises a connection seat 2401 and connection lugs 2402 which extend towards the direction away from the connection seat from the both sides of the connection seat, an accommodation groove is formed between two connection lugs, and articulated holes are formed in the two connection lugs, respectively. The articulated seat 240 with the structure is processed conveniently, high in strength and can connect other parts without destroying the smash-ridging box 21.

An extended mounting flange 250 is arranged on the plate body 2121, in this way, other parts can be connected to the extended mounting flange 250 at any time and can be dismounted at any time without destroying the smash-ridging box 21.

The driving mechanism 22 is a hydraulic motor or an electrical machine and so on, the driving mechanism 22 is mounted on the top plate, the driving mechanism 22 drives one of the transmission shafts to rotate, or the driving mechanism can also be correspondingly arranged on each transmission shaft, or the driving mechanisms are correspondingly arranged on only some of the transmission shafts.

Bearings 25 are mounted in the lower bearing seats 271, a bearing 25 is mounted in the upper bearing seat 275, in the present embodiment, the bearings uses conical bearings, the bearings located within the lower bearing seat are mounted in an opposite direction to the bearing located within the upper bearing seat.

Transmission shafts 23 are mounted between the bearings located within the lower bearing seat and the bearing located within the upper bearing seat, and the lower ends of the transmission shafts 23 extend out of the smash-ridging box 21; a feeding hole 231 axially passes through the transmission shafts 23.

Each power input member 24 is a gear which is mounted on each of the transmission shafts, and the lower surface of the gear abuts against the shaft shoulders of the transmission shafts; when one of the transmission shafts is connected with the driving mechanism, the adjacent gears are engaged with each other. A shaft sleeve 2771 is arranged between the inner ring of the conical bearing located within the upper bearing seat 275 and the gear.

As shown in Figure 18, a forward lock nut 2772 is connected to the transmission shaft 23 by screw thread above the upper conical bearing, the forward lock nut 2772 is in contact with the inner ring of the upper conical bearing; a reverse lock nut (no shown) is arranged above the forward lock nut 2772 on the transmission shaft 23; the diameter of the transmission shaft on which the forward lock nut 2772 is arranged is larger than that of the transmission shaft on which the reverse lock nut is arranged, the upper surface of the forward lock nut 2772 is higher than that of the transmission shaft on which the forward lock nut 2772 is arranged and the reverse lock nut is in contact with the forward lock nut 2772.

By adopting above structure, the method for adjusting clearances of conical bearings is as follows: firstly rotating the forward lock nut 2772 to allow the forward lock nut 2772 interact with the inner ring of the upper conical bearing to promote the axial movement of the inner ring of the upper conical bearing so as to achieve the purpose of the adjustment on the clearances of conical bearings; when the forward lock nut 2772 is rotated in place, the reverse lock nut is reversely locked to allow the reverse lock nut come in contact with the forward lock nut 2772 to prevent the forward lock nut 2772 from loosening; in this way, adjusted clearances cannot change at random so that the adjustment accuracy of the clearances of conical bearings is high and the transmission performance of the transmission shaft is stable.

The spiral drill rod 26 comprises a rod body 261, a spiral piece 262 and a blade. The rod body 261 is connected to the transmission shaft 23 through a flange 265, the rod body 261 has an axially extending hole which is communicated with feeding holes 231 on the transmission shaft, and a discharging hole 2611, which is communicated with the hole and extends radially, is arranged on the rod body 261, in this way, pesticides, water, fertilizers and so on can be infused into the feeding holes 231 on the transmission shaft and enters the deep soil through the hole and the discharging hole 2611 so as to achieve the purpose of deep applications of the pesticides, water and fertilizers, and this process can be simultaneously performed while subsoiling, thereby improving the efficiency; the spiral piece 262 is welded on the rod body 261, and blades are fixed on the spiral piece 262.

As shown in Figure 19, one end of the transmission shaft 23 is a conical shaft 232, at one end of which a screw rod 233 is arranged. A conical hole 2651 matching with the conical shaft and a through-hole 2652 through which the screw rod passes are formed in the flange 265, on which a counterbore 2653 is formed at an opposite side to the conical hole, and the conical hole 2651, the through-hole 2652 and the counterbore 2653 are communicated with each other; the conical shaft 232 is arranged in the conical hole 2651, the screw rod 233 passes through the through-hole 2652 and extends into the counterbore 2653, in which a lock nut 266 connected with the screw rod is arranged.

A gland 268 is fixed on the screw rod 233 through more than two lock bolts 267. A boss 2681 is arranged on the upper surface of the gland 268 and is pressed fit on the end surface of a lock nut 266, a gap is reserved between the gland 268 and the end surface of the screw rod, and the gland and the counterbore are transition fit so as to prevent large particulate matters entering the counterbore and have the protecting effect on the lock nut 266; and a counterbore is formed in the gland 268, the head of the lock bolt is located in the counterbore so as to have the protecting effect on the head of the lock bolts.

According to above structure, the gland 268 is fixed on the screw rod 233 through more than two lock bolts 267, in this way, the gland 268 itself cannot rotate relative to the screw rod 233; since the boss 2681 of the gland is pressed fit on the end surface of the lock nut 266, the lock nut 266 has no rotatable space, no phenomenon that the lock nut 266 loosens can occur, thereby improving the reliability of the matching between the conical shaft and the conical hole, the power transmission is reliably realized and it is very convenient to fix the gland 268; in addition, when the phenomena that the conical shaft 233 and conical hole 2651 are worn occurs, the gland 268 can be dismounted to further tighten the lock nut 266 and then the gland 268 is locked again using the lock bolts 267; since the clearance is reserved between the gland 268 and the end surface of the spiral rod, the gland has movement space in the direction towards the spiral rod and thus even if the lock nut 266 is further locked, the boss 2681 of the gland can also be pressed fit on the lock nut 266 to prevent the lock nut from loosening and thus the fit clearance between the conical shaft and the conical hole can be adjusted as desired without replacing parts and the adjustment can also be performed at present.

The assembly method of the smash-ridging device is as follows:
(1) welding a lower bearing seats 271 onto a bottom plate 211, and welding an upper bearing seat 275 onto a top plate 213.
(2) welding the bottom plate 211, side plates 212 and the top plate 213 together to form a smash-ridging box 21; welding a first connection lug 29, a flattening device connection lug 210, a second connection lug 220, a third connection lug 230 and an articulated seat 240 onto the smash-ridging box.
(3) mounting bearings in the lower bearing seats 271, mounting a bearing in the upper bearing seat 275, wherein the bearings are conical bearings, the conical bearings in the lower bearing seats 271 are mounted forwardly, and the bearing in the upper bearing seat 275 is mounted reversely.
(4) extending the transmission shaft 23 from the lower end of the smash-ridging box through bearings in the lower bearing seat into the smash-ridging box, mounting a power output member 24 onto the transmission shaft 23 when the upper end of the transmission shaft 23 is at the central section of the smash-ridging box, then wrapping a shaft sleeve 2771 on the transmission shaft 23, after that, continuing to push the transmission shaft upwards to mount the upper end of the transmission shaft into the bearing in the upper bearing seat 275.
(5) locking a forward lock nut 2772 at the upper end of the transmission shaft 23 so that forward lock nut 2772 is in contact with the bearing inner ring within the upper bearing seat 275 to facilitate the axial movement of the bearing inner ring within the upper bearing seat 275 so as to achieve the purpose of adjusting the clearance of the conical bearing and after the clearance of the conical bearing has been adjusted, locking the reverse lock nut in reversed direction.
(6) mounting a lower bearing end cover 281 and an upper bearing end cover 282.
(7) mounting a driving mechanism 22.
(8) mounting a flange 265 of which the mounting process is as follows: making a conical hole 2651, through-holes 2652 and a counterbore 2653 pass through the screw rod 233, fitting the conical shaft 232 with the conical hole 2651, locking the lock nut 266 at the lower end of the screw rod 233, pressing the gland 268 into the counterbore 2653 to make the bosses 2681 come in contact with the end surface of the lock nut 266 and locking the lock bolt 267.
(9) mounting a spiral drill rod 26 onto the flange 265.

The assembly method of the smash-ridging device is simple and high in precision.

As show in Figure 1, Figure 2 and Figures 20 and 21, the connection device 3 comprises a connection frame 31, a connection supporting plate 32, a guide sliding rod 33, a connecting nut 34, a sliding sleeve frame 35 and a lifting oil cylinder 36.

As show in Figure 21, the connection frame 31 comprises a plurality of horizontal beams 311, longitudinal beams 312, vertical beams 313, a first inclined strut 314 and a second inclined strut 315. The longitudinal beams 312 consist of lower longitudinal beams and upper longitudinal beams, wherein the lower longitudinal beams are welded at both ends of the horizontal beam 311 or are welded on the central section of the horizontal beam 311; the vertical beams 313 are welded on the lower longitudinal beams close to the rear section; the upper longitudinal beams are welded on the upper end of the vertical beam; a first inclined strut 314 is welded between the front end of the horizontal beam and the upper end of the vertical beam; the second inclined strut 315 is welded between the vertical beams; the connection frame 31 with this structure is simple in structure and good in force-bearing performance and can bear the heavier smash-ridging device.

The horizontal beams 311, the longitudinal beams 312, the vertical beams 313, the first inclined strut 314 and the second inclined strut 315 all use square tubes and are internally communicated with each other, so that oil chambers are formed within the horizontal beams 311, the longitudinal beams 312, the vertical beams 313, the first inclined strut 314 and the second inclined strut 315 and are used for being filled with diesel and thus the volume of the oil tank is increased by the existing structure.

As shown in Figure 21, the connection supporting plate is welded on the lower longitudinal beams and the upper longitudinal beams, respectively.

The guide sliding rod 33 passes through the connection supporting plate 32, and the guide sliding rod comprises a guide sliding rod body and a chrome coating, which is coated on the outer surface of the guide sliding rod body. By coating the chrome coating, the wear resistance, corrosion resistance and so on can be improved.

A connecting nut 34 is arranged below the lower connection supporting plate on the guide sliding rod 33; a connecting nut 34 is arranged above the upper connection supporting plate on the guide sliding rod 33 and thus the guide sliding rod 33 can be very conveniently mounted and dismounted by means of the upper and lower connecting nuts 34.

As shown in Figure 21, the sliding sleeve frame 35 comprises a sliding sleeve 351, a smash-ridging device connection seat 352 and a lifting oil cylinder seat 353. The sliding sleeve 351 sleeves the guide sliding rod 33 slidely, dustproof rings are arranged between the sliding sleeve 351 and the guide sliding rod 33 and located on the upper and lower ends of the sliding sleeve 351, respectively, the dustproof rings have dustproof and waterproof effects, can prevent the lubricating oil between the sliding sleeve 351 and the guide sliding rod 33 from losing in a short time, thereby improving the lubricating performance. The smash-ridging device connection seat 352 is welded on the sliding sleeve 351, and a mounting hole 3521 is formed in the smash-ridging device connection seat 352. The lifting oil cylinder seat 353 is welded on the smash-ridging device connection seat 352 and comprises a lifting oil cylinder seat body 3531 and a rib plate 3532 which is welded between the lifting oil cylinder seat body and the smash-ridging device connection seat 352.

An oil cylinder articulated seat 37 is fixed on the lower connection supporting plate, the piston rod of the lifting oil cylinder 36 is articulated on the oil cylinder articulated seat, and the lower end of the lifting oil cylinder body is fixed on the lifting oil cylinder seat 353. For the subsoiling smash-ridging machine of the present invention, since it is required that the stroke of the lifting oil cylinder is relatively long, the lifting oil cylinder 36 has larger length, the distance between the fixation point of the lifting oil cylinder body and the articulated seat 37 is reduced when the lower end of the lifting oil cylinder body is fixed on the lifting oil cylinder seat 353 and it is uneasy for the lifting oil cylinder 36 to bent and deform when it works so that it has good load-carrying capacity; in addition, by adopting the fixing structure compared to the structure that the upper end of the lifting oil cylinder body is fixed to the lifting oil cylinder seat, the height of the connection frame is much lower, thereby decreasing the vertical height of the connection frame as well as the height of the entire subsoiling smash-ridging machine.

The smash-ridging device is fixed on the smash-ridging device connection seat 353 through a bolt which passes through the mounting hole 3521, in this way, it is convenient and rapid to mount the smash-ridging device and the smash-ridging device can be dismounted integrally.

The assembly method of the connection device 3 is as follows:
(1) welding horizontal beams 311, longitudinal beams 312, vertical beams 313, a first inclined strut 314 and a second inclined strut 315 together to form a connection frame 31.
(2) welding a connection supporting plate 32 on a lower longitudinal beam and an upper longitudinal beam, respectively.
(3) making one end of a guide sliding rod 33 downwards pass through the upper connection supporting plate, then enabling a sliding sleeve 351 of a sliding sleeve frame 35 sleeve the guide sliding rod 33, after that, sequentially moving the guide sliding rod 33 downwards to pass through the lower connection supporting plate, and then locking the connecting nut 34 at the upper end of the guide sliding rod 33 and the connecting nut 34 at the lower end of the guide sliding rod 33 to fix the guide sliding rod 33, respectively.
(4) fixing an articulated seat 37 on the lower connection supporting plate, fixing a cylinder body of a lifting oil cylinder 36 on a lifting oil cylinder seat 353, and articulating the piston rod of the lifting oil cylinder 36 onto the articulated seat 37.

### Embodiment 4

The present embodiment compared to embodiment 3 has the same other structures as those of embodiment 3 except the connection device. In the present embodiment, as shown in Figures 32 to 34, the connection device 3 comprises two connecting rod mechanisms and a connecting rod 310a connected to the two connecting rod mechanisms. Each connecting rod mechanism comprises a connecting rod seat 30a, a first connecting rod 31a, a second connecting rod 32a, a third connecting rod 33a, a fourth connecting rod 34a and a driving oil cylinder 35a. The connecting rod seat 30a is fixed on a supporting platform; the lower end of the first connecting rod 31a is articulated on the rear end of the connecting rod seat 30a; one end of the second connecting rod 32a is articulated at the middle lower position of the first connecting rod 31a and the other end of the second connecting rod 32a is articulated on the first connection lug 29; one end of the third connecting rod 33a is articulated at the upper end of the first connecting rod 31a and the other end of the third connecting rod 33a is articulated on the second connection lug 220 and the third connecting rod 33a and second connecting rod 32a are arranged in parallel to each other; one end of the fourth connecting rod 34a is articulated at the middle upper position of the first connecting rod 31a and the other end of the fourth connecting rod 34a is articulated on the third connecting rod 33a; and one end of the driving oil cylinder 35a is articulated on the connecting rod seat 30a and the other end of the driving oil cylinder 35a is articulated in the middle of the first connecting rod 31a.

By adopting the connection device with above structure, the turn-over and vertical movement of the smash-ridging device can be achieved so as to facilitate subsoiling and smash-ridging.

### Embodiment 5

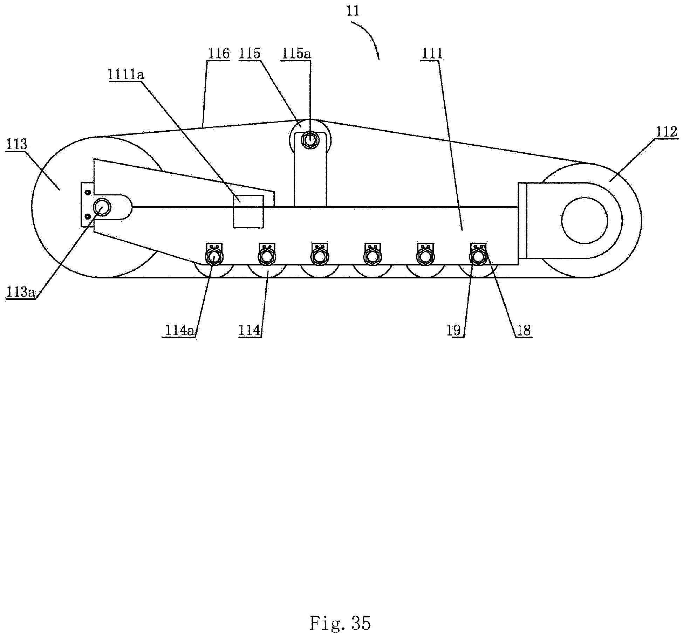

As shown in Figure 35, a walking mechanism for preventing a lower guide wheel from falling off comprises walking mechanisms 11, for a subsoiling machine, generally, the walking mechanisms are two, between which a chassis is fixed.

Each of walking mechanisms 11 comprises a wheel stand 111, a driving wheel 112, a driven wheel 113, a lower guide wheel 114, an upper guide wheel 115 and a crawler 116.

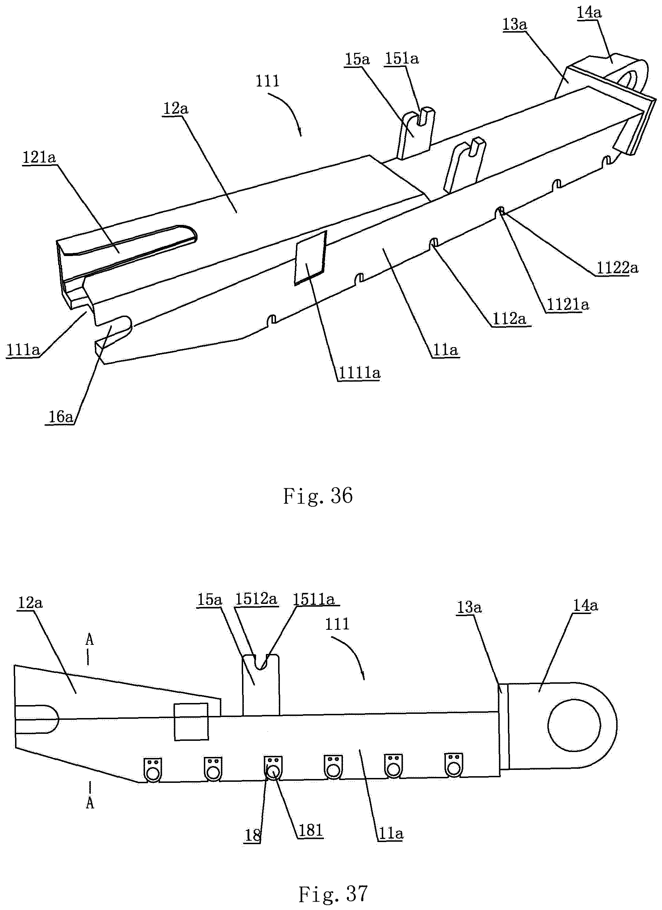

As shown in Figures 36 and 37, the wheel stand 111 comprises a longitudinal beam 11a, an upper cover 12a, an end plate 13a and a connection lug 14a.

A through-groove 111a is formed at one end of the longitudinal beam 11a from top to bottom; the upper cover 12a is welded on the longitudinal beam 11a and located above the through-groove 111a; the end plate 13a is welded at the other end of the longitudinal beam 11a; and connection lug 14a is welded in the end plate 13a.

More than two lower guide wheel accommodation cavities are formed at the bottom of the longitudinal beam 11a, a second mounting hole is formed at the position corresponding to the lower guide wheel accommodation cavities on the bottom of the longitudinal beam 11a and the second mounting hole is a lower open groove 112a; as shown in Figure 36, the lower open groove 112a comprises a lower circle-arc segment 1121a and lower straight-line segments 1122a extending from both ends of the lower circle-arc segment towards the same side; when a mounting shaft 114a corresponding to the lower guide wheel is mounted, the lower straight-line segments have the guiding effect. In addition, after the mounting shaft 114a corresponding to the lower guide wheel has been mounted, the possibility that the mounting shaft corresponding to the lower guide wheel slides off the longitudinal beam 11a can be reduced and by adopting the lower circle-arc segment 1121a, the mounting shaft 114a corresponding to the lower guide wheel can coincide with and come in contact with the lower open groove 112a and the wear between the mounting shaft 114a corresponding to the lower guide wheel and the longitudinal beam 11a can be reduced. As shown in Figure 37, an anti-falling piece 18 is fixed at the lower open groove on the longitudinal beam 11a via a bolt and is provided with an annular hole 181.

As shown in Figure 35, a part of the lower guide wheel 114 is located within the lower guide wheel accommodation cavity, the lower guide wheel 114 is mounted on the mounting shaft 114a corresponding to the lower guide wheel, the mounting shaft 114a corresponding to the lower guide wheel passes through the lower open groove 112a and the annular hole 181 and a lock nut 19 is mounted on the mounting shaft 114a corresponding to the lower guide wheel located outside the anti-falling piece 18. When the lower guide wheel 114 at the bottom of the wheel stand 111 is mounted, the lower guide wheel 114 is firstly mounted onto the mounting shaft 114a corresponding to the lower guide wheel and the lower guide wheel 114 and the mounting shaft 114a corresponding to the lower guide wheel are then integrally mounted onto the wheel stand 111 so as to allow a part of the lower guide wheel 114 to be accommodated in the lower guide wheel accommodation cavity and the mounting shaft 114a corresponding to the lower guide wheel to be snapped into the lower open groove 112a from the opening of the lower open groove 112a, the anti-falling piece 18 is then fixed to the longitudinal beam 11a to allow the mounting shaft 114a corresponding to the lower guide wheel to pass through the annular hole 181 without firstly aligning the lower guide wheel 114 with the lower open groove 112a to insert the mounting shaft 114a corresponding to the lower guide wheel so that the lower guide wheel 114 is very conveniently mounted compared to the prior art. In addition, whether the crawler 116 is separated from the lower guide wheel 114 or not, since the annular hole 181 are formed in the anti-falling piece 18, the separation of the mounting shaft 114a corresponding to the lower guide wheel from the wheel stand 111 can be limited via the anti-falling piece 18, and moreover, the anti-falling piece 18 is mounted later so that the lower guide wheel 114 is conveniently mounted.

Two supporting lugs 15a arranged in parallel are welded at the top of the longitudinal beam 11a, locating at the middle part of the longitudinal beam. Upper open grooves 151a are formed in the supporting lugs 15a. As shown in Figure 37, each upper open groove 151a comprises an upper circle-arc segment 1511a and upper straight-line segments 1512a extending from both ends of the upper circle-arc segment 1511a towards the same side. The upper straight-line segments 1512a have the guiding effect on the mounting of the mounting shaft 115a corresponding to the upper guide wheel. In addition, after the mounting shaft 115a corresponding to the upper guide wheel has been mounted, the possibility that the mounting shaft corresponding to the lower guide wheel slides off the supporting lugs 15 can be reduced and by adopting the upper circle-arc segment 1511a, the mounting shaft 115a corresponding to the upper guide wheel can coincide with and come in contact with the upper open groove 151a and the wear between the mounting shaft 115a corresponding to the upper guide wheel and the supporting lugs 15a can be reduced.

As shown in Figure 35, when the upper guide wheel 115 is mounted, the upper guide wheel 115 is firstly mounted onto the mounting shaft 115a corresponding to the upper guide wheel and the upper guide wheel 115 and mounting shaft 115a corresponding to the upper guide wheel are then integrally mounted onto the supporting lugs 15a so as to allow the mounting shaft 115a corresponding to the upper guide wheel to be snapped into the upper open groove 151a from the opening of the upper open groove 151a without firstly aligning the upper guide wheel 115 with the upper open groove 151a to insert the mounting shaft 115a corresponding to the upper guide wheel compared to the prior art so that the upper guide wheel 115 is very conveniently mounted.

As shown in Figure 36, a U-shaped groove 16a is formed at one side of the wheel stand 111 at the joint between the longitudinal beam 11a and the upper cover 12a, an avoiding groove 121a is formed in the upper cover 12a. After the driven wheel 113 is mounted, the avoiding groove 121a is used for avoiding the driven wheel 113. By arranging the upper cover 12a on the longitudinal beam 11a, the bending resistance as well as strength of the wheel stand 111 can both be improved.

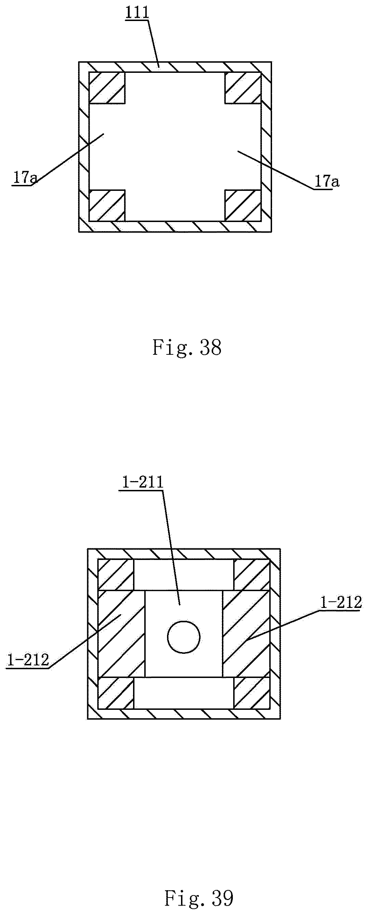

As shown in Figure 38, sliding grooves 17a are formed at two side walls of a through-groove 111a on the wheel stand, respectively; a tensioning device 1-2 is arranged within the through-groove 111a.

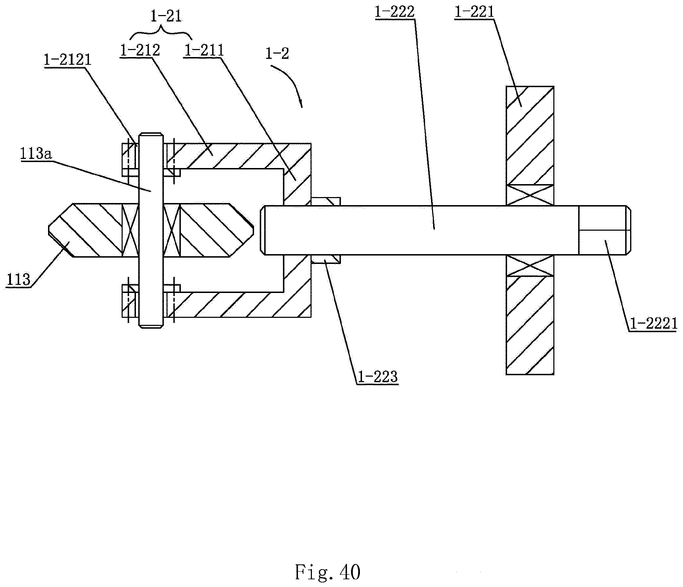

As shown in Figure 40, the tensioning device 1-2 comprises a sliding block 1-21 and a linear driving mechanism 1-22.

As shown in Figures 39-40, the sliding block which is U-shaped comprises a connection plate 1-211 and supporting plates 1-212 extending from both ends of the connection plate 1-211 towards the same direction, the supporting plates 1-212 is arranged within the sliding grooves 17a slidely; and mounting holes 1-2121 each of which the diameter is larger than that of the mounting shaft 113a corresponding to the driven wheel are formed in the supporting plates 1-212. The mounting shaft 113a corresponding to the driven wheel passes through the mounting holes 1-2121 and is fixed on the supporting plates 1-212. By adopting the U-shaped sliding block and using two supporting plates, two-point supporting of the mounting shaft 113a corresponding to the driven wheel is achieved so that the mounting shaft corresponding to the driven wheel is well under stress. In addition, by arranging the mounting holes each of which the diameter is larger than that of the mounting shaft 113a corresponding to the driven wheel, when the mounting shaft 113a corresponding to the driven wheel is mounted, the mounting shaft 113a corresponding to the driven wheel has fine-adjusted space.

As shown in Figure 40, the linear driving mechanism 1-22 comprises a bearing seat 1-221, a lead screw 1-222 and a nut 1-223, wherein the bearing seat 1-221 is fixed within the through-groove 111a, the lead screw 1-222 is arranged on the bearing seat 1-221 via a bearing, the nut 1-223 is fixed on the connection plate 1-211 of the sliding block and the lead screw 1-222 is meshed with the nut 1-223 and can pass through the connection plate 1-211, the lead screw 1-222 is provided with a driving part 1-2221 of which the cross section is polygon and a window 1111a communicated with the through-groove is arranged at the position corresponding to the driving part on the longitudinal beam 11a. By arranging the window 1111a, a tool extends within through-groove 111a to allow the tool act on the driving part 1-2221 to rotate the lead screw 1-222, the sliding block 1-21 makes linear movement along the sliding grooves 17a under the action of the nut 1-223 so as to achieve the purpose that the driven wheel 113 mounted on the sliding block 1-21 is adjusted and realize the adjustment of the tensioning force. A cover plate is fixed at the position corresponding to the window on the wheel stand 111, which has dustproof, waterproof and protecting effects. The linear driving mechanism is simple in structure, low in cost and small in occupation space.

As shown in Figure 35, a driving wheel 112 is mounted on the connection lug 14a. The crawler 116 sleeves the driving wheel 112, the lower guide wheel 114, the driven wheel 113 and the upper guide wheel 115.

### Embodiment 6

As shown in Figure 36, a crawler frame of a subsoiling machine comprises a wheel stand 111 and a tensioning device 1-2. As shown in Figures 36 and 37, the wheel stand 111 comprises a longitudinal beam 11a, an upper cover 12a, an end plate 13a and a connection lug 14a.

A through-groove 111a is formed at one end of the longitudinal beam 11a from top to bottom; the upper cover 12a is welded on the longitudinal beam 11a and located above the through-groove 111a; the end plate 13a is welded at the other end of the longitudinal beam 11a; and connection lug 14a is welded in the end plate 13a.

More than two lower guide wheel accommodation cavities are formed at the bottom of the longitudinal beam 11a, a second mounting hole is formed at the position corresponding to the lower guide wheel accommodation cavities on the bottom of the longitudinal beam 11a and the second mounting hole is a lower open groove 112a; as shown in Figure 36, the lower open groove 112a comprises a lower circle-arc segment 1121a and lower straight-line segments 1122a extending from both ends of the lower circle-arc segment towards the same side; when a mounting shaft 114a corresponding to the lower guide wheel is mounted, the lower straight-line segments have the guiding effect. In addition, after the mounting shaft 114a corresponding to the lower guide wheel has been mounted, the possibility that the mounting shaft corresponding to the lower guide wheel slides off the longitudinal beam 11a can be reduced and by adopting the lower circle-arc segment 1121a, the mounting shaft 114a corresponding to the lower guide wheel can coincide with and come in contact with the lower open groove 112a and the wear between the mounting shaft 114a corresponding to the lower guide wheel and the longitudinal beam 11a can be reduced.

As shown in Figure 35, a part of the lower guide wheel 114 is located within the lower guide wheel accommodation cavity, the lower guide wheel 114 is mounted on the mounting shaft 114a corresponding to the lower guide wheel, the mounting shaft 114a corresponding to the lower guide wheel passes through the lower open groove 112a and the annular hole 181. When the lower guide wheel 114 at the bottom of the wheel stand 111 is mounted, the lower guide wheel 114 is firstly mounted onto the mounting shaft 114a corresponding to the lower guide wheel and the lower guide wheel 114 and the mounting shaft 114a corresponding to the lower guide wheel are then integrally mounted onto the wheel stand 111 so as to allow a part of the lower guide wheel 114 to be accommodated in the lower guide wheel accommodation cavity and the mounting shaft 114a corresponding to the lower guide wheel to be snapped into the lower open groove 112a from the opening of the lower open groove 112a without firstly aligning the lower guide wheel 114 with the lower open groove 112a to insert the mounting shaft 114a corresponding to the lower guide wheel compared to the prior art so that the lower guide wheel 114 is very conveniently mounted.

Two supporting lugs 15a arranged in parallel are welded at top of the longitudinal beam 11a and located at the middle part of the longitudinal beam 11a. Upper open grooves 151a are formed in the supporting lugs 15a. As shown in Figure 37, each upper open groove 151a comprises an upper circle-arc segment 1511a and upper straight-line segments 1512a extending from both ends of the upper circle-arc segment 1511a towards the same side. The upper straight-line segments 1512a have the guiding effect on the mounting of the mounting shaft 115a corresponding to the upper guide wheel. In addition, after the mounting shaft 115a corresponding to the upper guide wheel has been mounted, the possibility that the mounting shaft corresponding to the lower guide wheel slides off the supporting lugs 15 can be reduced and by adopting the upper circle-arc segment 1511a, the mounting shaft 115a corresponding to the upper guide wheel can coincide with and come in contact with the upper open groove 151a and the wear between the mounting shaft 115a corresponding to the upper guide wheel and the supporting lugs 15a can be reduced.

As shown in Figure 35, when the upper guide wheel 115 is mounted, the upper guide wheel 115 is firstly mounted onto the mounting shaft 115a corresponding to the upper guide wheel and the upper guide wheel 115 and mounting shaft 115a corresponding to the upper guide wheel are then integrally mounted onto the supporting lugs 15a so as to allow the mounting shaft 115a corresponding to the upper guide wheel to be snapped into the upper open groove 151a from the opening of the upper open groove 151a without firstly aligning the upper guide wheel 115 with the upper open groove 151a to insert the mounting shaft 115a corresponding to the upper guide wheel compared to the prior art so that the upper guide wheel 115 is very conveniently mounted.

As shown in Figure 36, a U-shaped groove 16a is formed at one side of the wheel stand 111 at the joint between the longitudinal beam 11a and the upper cover 12a, an avoiding groove 121a is formed in the upper cover 12a. After the driven wheel 113 is mounted, the avoiding groove 121a is used for avoiding the driven wheel 113. By arranging the upper cover 12a on the longitudinal beam 11a, the bending resistance as well as strength of the wheel stand 111 can both be improved.

As shown in Figure 38, sliding grooves 17a are formed at two side walls of a through-groove 111a on the wheel stand, respectively; a tensioning device 1-2 is arranged within the through-groove 111a.

As shown in Figure 40, the tensioning device 1-2 comprises a sliding block 1-21 and a linear driving mechanism 1-22.

As shown in Figures 39-40, the sliding block which is U-shaped comprises a connection plate 1-211 and supporting plates 1-212 extending from both ends of the connection plate 1-211 towards the same direction, the supporting plates 1-212 is arranged within the sliding grooves 17a slidely; and mounting holes 1-2121 each of which the diameter is larger than that of the mounting shaft 113a corresponding to the driven wheel are formed in the supporting plates 1-212. The mounting shaft 113a corresponding to the driven wheel passes through the mounting holes 1-2121 and is fixed on the supporting plates 1-212. By adopting the U-shaped sliding block and using two supporting plates, two-point supporting of the mounting shaft 113a corresponding to the driven wheel is achieved so that the mounting shaft corresponding to the driven wheel is well under stress. In addition, by arranging the mounting holes each of which the diameter is larger than that of the mounting shaft 113a corresponding to the driven wheel, when the mounting shaft 113a corresponding to the driven wheel is mounted, the mounting shaft 113a corresponding to the driven wheel has fine-adjusted space.

As shown in Figure 40, the linear driving mechanism 1-22 comprises a bearing seat 1-221, a lead screw 1-222 and a nut 1-223, wherein the bearing seat 1-221 is fixed within the through-groove 111a, the lead screw 1-222 is arranged on the bearing seat 1-221 via a bearing, the nut 1-223 is fixed on the connection plate 1-211 of the sliding block and the lead screw 1-222 is meshed with the nut 1-223 and can pass through the connection plate 1-211, the lead screw 1-222 is provided with a driving part 1-2221 of which the cross section is polygon and a window 1111a communicated with the through-groove is arranged at the position corresponding to the driving part on the longitudinal beam 11a. By arranging the window 1111a, a tool extends within through-groove 111a to allow the tool act on the driving part 1-2221 to rotate the lead screw 1-222, the sliding block 1-21 makes linear movement along the sliding grooves 17a under the action of the nut 1-223 so as to achieve the purpose that the driven wheel 113 mounted on the sliding block 1-21 is adjusted and realize the adjustment of the tensioning force. A cover plate, which has dustproof, waterproof and protecting effects, is fixed at the position corresponding to the window on the wheel stand 111. The linear driving mechanism is simple in structure, low in cost and small in occupation space.

As shown in Figure 35, a driving wheel 112 is mounted on the connection lug 14a. The crawler 116 sleeves the driving wheel 112, the lower guide wheel 114, the driven wheel 113 and the upper guide wheel 115.

### Embodiment 7

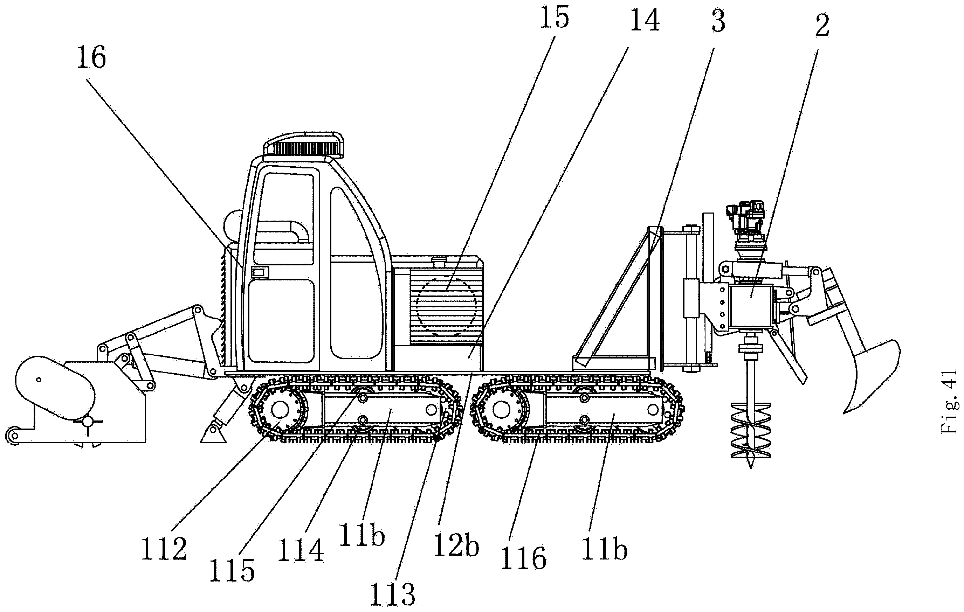

As shown in Figure 41, the present invention comprises a vehicle frame 12b, crawler devices, a driving cab 15, a hydraulic oil tank 14, a diesel engine component, a connection device 3, a smash-ridging device 3 and a cooler 15, wherein two sets of the crawler devices 11b are arranged at both sides of the lower part of the vehicle frame 12b each of which comprises a crawler wheel and a crawler 116, the crawler wheel is arranged on the vehicle frame 12b, the crawler 116 is mounted on the crawler wheel which comprises the driving wheel 112, the driven wheel 113, the lower guide wheel 114 and the upper guide wheel 115. The driving cab 16, the diesel engine component, the hydraulic oil tank 14, the cooler 15 and the connection device 3 are arranged on the platform surface of the vehicle frame 12b, and the smash-ridging device 2 is arranged on the connection device 3 and a diesel engine hood for covering the diesel engine component is arranged on the platform surface of the vehicle frame 12b. When a spiral type deep-ploughing subsoiling machine operates via the smash-ridging device, since two sets of the crawler devices are arranged at both sides of the lower part of the vehicle frame 12b of the spiral type deep-ploughing subsoiling machine, the spiral type deep-ploughing subsoiling machine has stronger driving capability by driving respective crawler device, thereby meeting the demand of driving on complex terrain.

### Embodiment 8

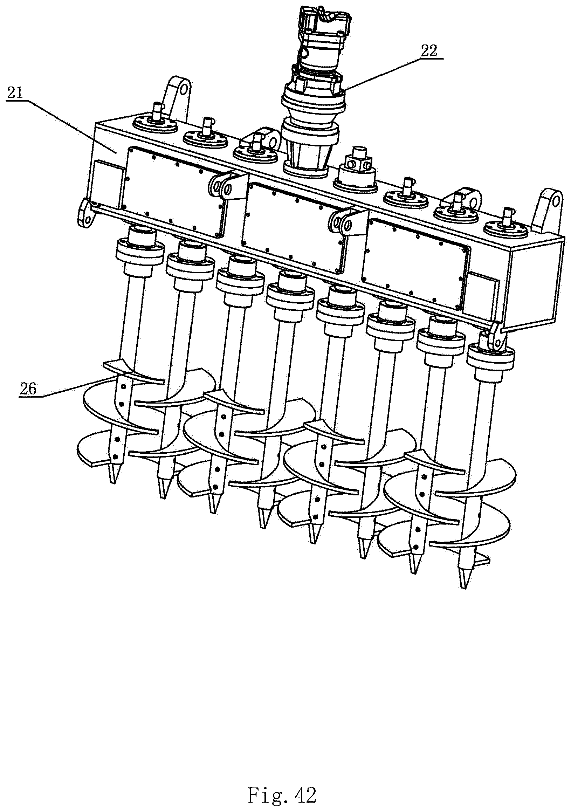

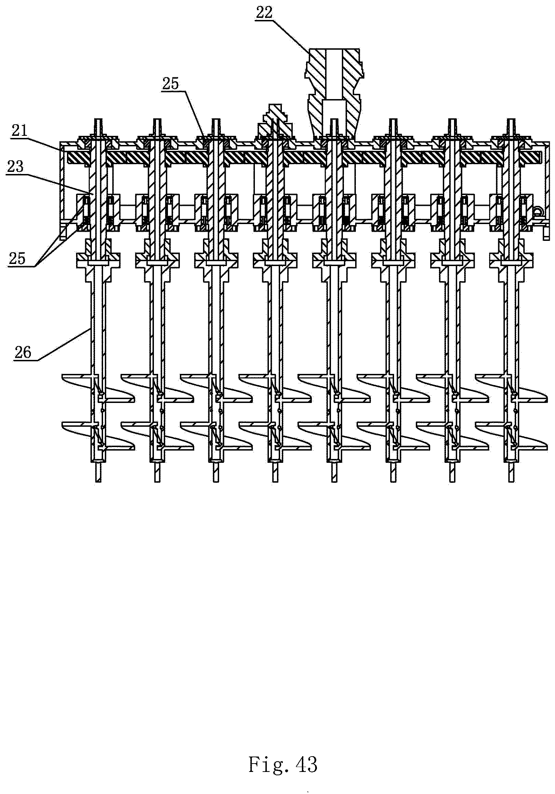

As shown in Figures 42 and 43, a smash-ridging device comprises a smash-ridging box 21, a driving mechanism 22, a transmission system, bearings 25 and a spiral drill rod 26.

The smash-ridging box 21 comprises a bottom plate, side plates and a top plate and a cavity is formed within the smash-ridging box.

The driving mechanism 22 is a hydraulic motor or an electric machine and so on. The driving mechanism 22 is mounted in the smash-ridging box and drives one of transmission shafts to rotate.

The transmission system comprises transmission shafts 23 and gears and is located within the smash-ridging box 21. The transmission shafts 23 are mounted within the smash-ridging box 21 via bearings 25 and pass through the smash-ridging box 21. Gears are mounted on each transmission shaft 23 and adjacent gears are meshed with each other. The spiral drill rod 26 is connected to the transmission shafts 23 via a flange.

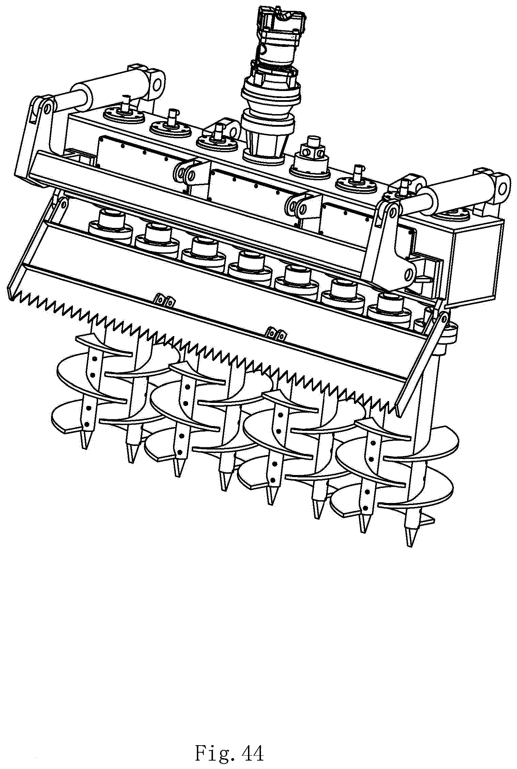

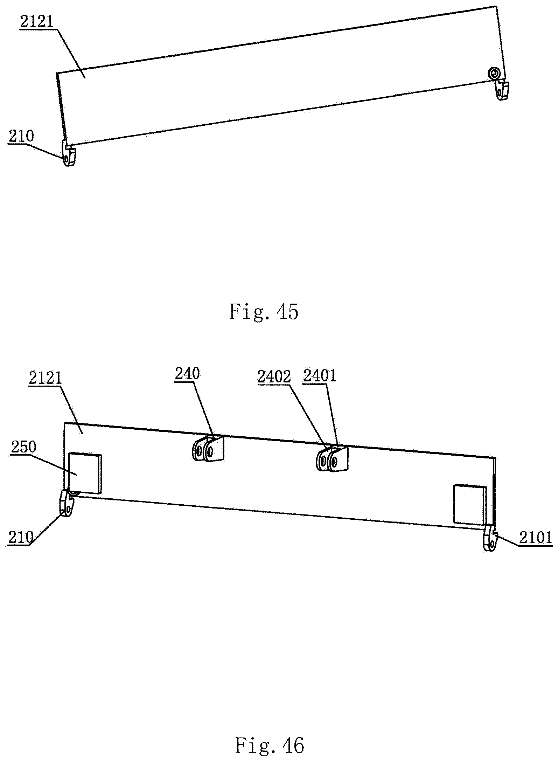

As shown in Figures 45 and 46, one of the side plates comprising a plate body 2121 is arranged in the front of the smash-ridging box, and an extended mounting flange 250 is arranged on the plate body 2121, the extended mounting flange 13 and the plate body are in surface contact while the extended mounting flange 250 can be welded onto the plate body 2121 and can also be connected via bolts, in this way, as shown in Figure 44, other parts can be connected onto and dismounted from the extended mounting flange at any time without destroying the smash-ridging box 21.

An articulated seat 240 is arranged on the plate body 2121 and comprises a connection seat 2401 and connection lugs 2402, which extend towards the direction away from the connection seat from the both sides of the connection seat, an accommodation groove is formed between two connection lugs, and articulated holes are formed in the two connection lugs, respectively. The articulated seat 240 with such structure is convenient to process and high in strength and furthermore, as shown in Figure 44, other parts can be connected without destroying the smash-ridging box 21.

A flattening device connection lug 210 extending downwards slantingly is arranged at the lower part of the plate body 2121 and is convenient to connect the flattening device. A second bearing plate 2101 is formed backwards in the middle of the flattening device connection lug 210. The second bearing plate 2101 can abut against the bottom of the smash-ridging box so that the phenomenon of breakage between the flattening device connection lug and the plate body is uneasy to occur.

### Embodiment 9

As shown in Figures 42 and 43, a smash-ridging device comprises a smash-ridging box 21, a driving mechanism 22, a transmission system, bearings 25 and a spiral drill rod 26.

The smash-ridging box 21 comprises a bottom plate, side plates and a top plate and a cavity is formed within the smash-ridging box.

The driving mechanism 22 is a hydraulic motor or an electric machine and so on. The driving mechanism 22 is mounted in the smash-ridging box and drives one of transmission shafts to rotate.

The transmission system comprises transmission shafts 23 and gears and is located within the smash-ridging box 21. The transmission shafts 23 are mounted within the smash-ridging box 21 via bearings 25 and pass through the smash-ridging box 21. Gears are mounted on each transmission shaft 23 and adjacent gears are meshed with each other. The spiral drill rod 26 is connected to the transmission shafts 23 via a flange.

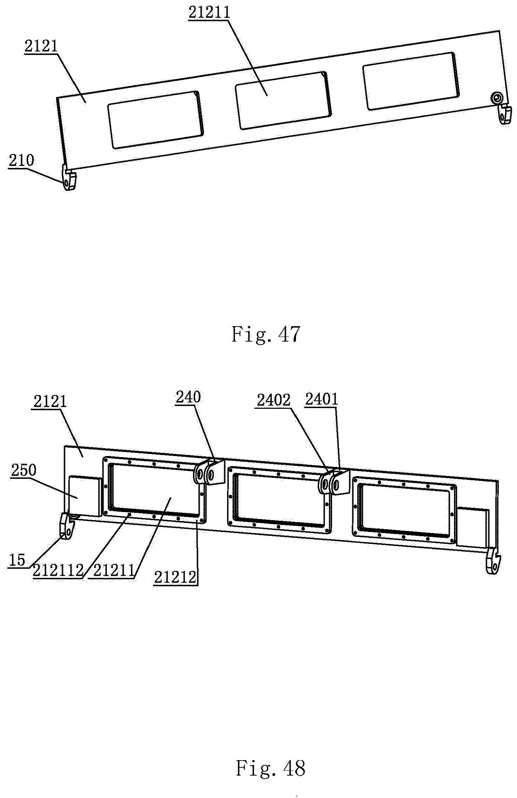

As shown in Figures 47 and 48, one of the side plates comprising a plate body 2121 is arranged in the front of the smash-ridging box, manholes 21211 are formed in the plate body 2121, a flange 21212 is arranged around the manhole on the plate body 2121, mounting holes 212112 are formed in the plate body 2121 and the flange 21212, and a step is formed between the inside of the flange 21212 and the plate body 2121. Since parts such as a transmission system are all mounted within the smash-ridging box, the manholes 21211 are formed so as to mount, dismount and maintain the parts such as the transmission system; the flange 21212 is generally connected to the plate body by welding, after the mounting hole 212112 is formed in the position of the flange 21212, the strength of manhole covers fixed by bolts is improved and thus the side plates are not easy to damage. In addition, due to the arrangement of the flange 21212, after the manhole covers are mounted, a distance equal to or greater than the thickness of the flange exists between the manhole covers and the plate body so as to facilitate the mounting and dismounting of the manhole covers; by arranging the step, the welding seam between the plate body 2121 and the inside of the flange can be increased, thereby improving the strength of the connection between the flange 21212 and the plate body 2121. In addition, the step can also have position-limiting and positioning effects on a seal ring so that the sealing property between the manhole covers and the side plates is improved.

Further, a seal groove is formed in the flange 21212. The seal groove can accommodate the seal ring and limit the position of the seal ring, thereby improving the sealing property. After the manhole covers are mounted, sealing oil can be injected into the seal groove instead of arranging the seal ring so as to achieve the sealing effect.

An extended mounting flange 250 is arranged on the plate body 2121, as shown in Figure 44, other parts can be connected onto and dismounted from the extended mounting flange 250 at any time without destroying the smash-ridging box 21.

An articulated seat 240 is arranged on the plate body 2121 and comprises a connection seat 2401 and connection lugs 2402, which extend towards the direction away from the connection seat from the both sides of the connection seat, an accommodation groove is formed between two connection lugs, and articulated holes are formed in the two connection lugs, respectively. The articulated seat 240 with such structure is convenient to process and high in strength and furthermore, as shown in Figure 44, other parts can be connected without destroying the smash-ridging box 21.

A flattening device connection lug 210 extending downwards slantingly is arranged at the lower part of the plate body 2121 and is convenient to connect the flattening device.

### Embodiment 10

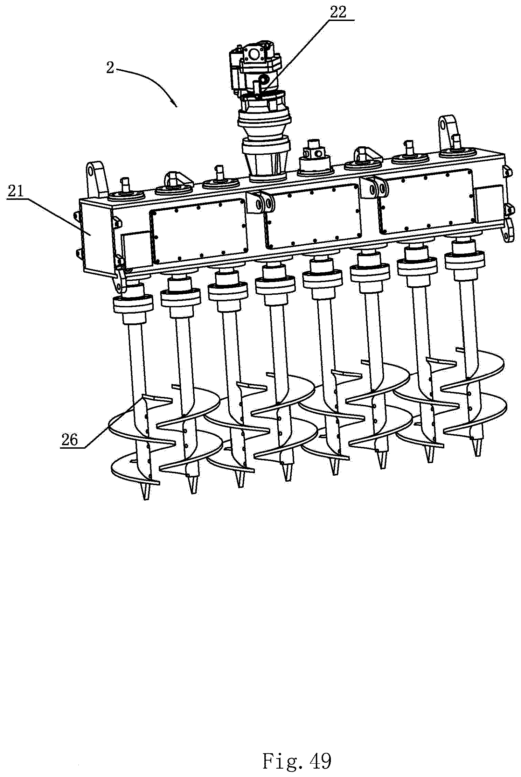

As shown in Figures 49 to 51, a smash-ridging device 2 comprises a smash-ridging box 21, a driving mechanism 22, transmission shafts, power input members 24, bearings 25 and a spiral drill rod 26.

The smash-ridging box 21 comprises a bottom plate 211, side plates 212 and a top plate 213 and the lower end surfaces of the side plates 212 are welded on the bottom plate 211, and the top plate 213 is welded on the upper end surfaces of the side plates 212.

The driving mechanism 22 is a hydraulic motor or an electric machine and so on. The driving mechanism 22 is mounted on the top plate 213 and drives one of transmission shafts to rotate.

The transmission shafts 23 are mounted within the smash-ridging box 21 via bearings 25 and pass through the smash-ridging box 21. Each power input member is a gear, and the gear is mounted on each transmission shaft 23 and adjacent gears are meshed with each other. The spiral drill rod 26 is connected to the transmission shafts 23 via a flange.

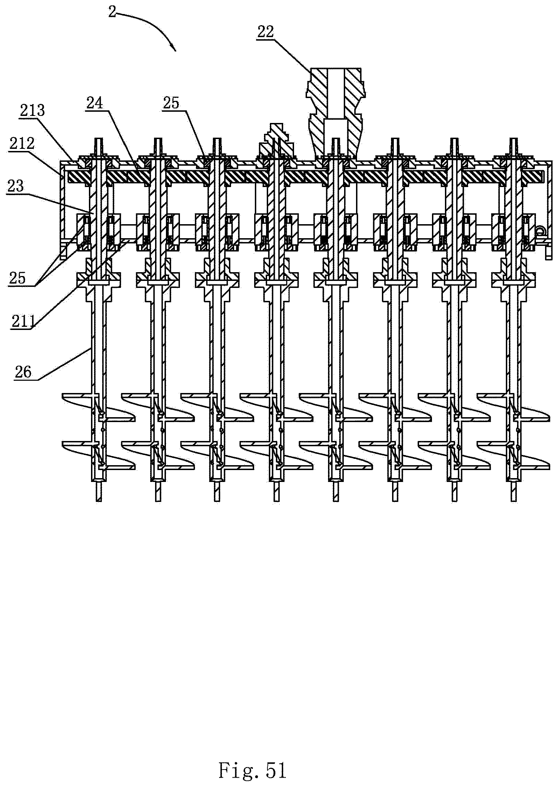

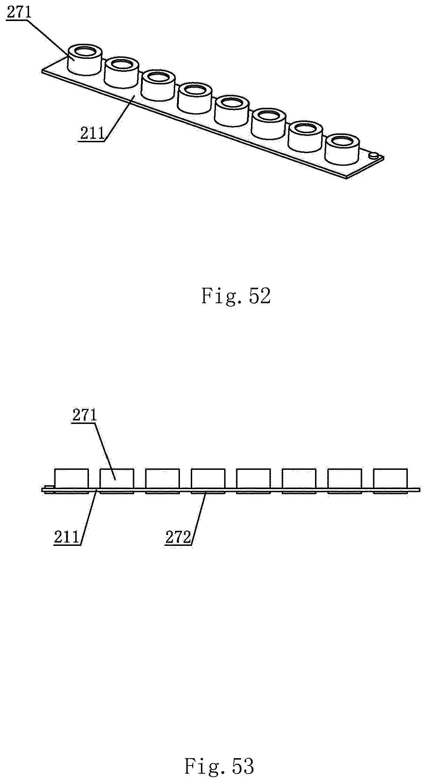

As shown in Figures 51 to 53, more than two lower through-holes are formed in the bottom plate 211, lower bearing seats 271 extending upwardly are welded on the inner walls of the lower through-holes, the lower bearing seats 271 protrude from the upper surface of the bottom plate, the height of protruding part of the lower bearing seat is larger than the width of two bearings, rib plates are welded between adjacent lower bearing seats so as to improve the strength of the bearing seat 271.

A lower boss 272 is formed by extending downwardly each lower bearing seat 271 and protruding from the lower surface of the bottom plate and is used for mounting lower bearing end covers. After the lower boss 272 is arranged, on one hand, the strength of the bottom plate is improved and on the other hand, a certain distance can be reserved between the lower bearing end cover and the bottom plate 211 so as to facilitate the mounting and dismounting of the lower bearing end cover.

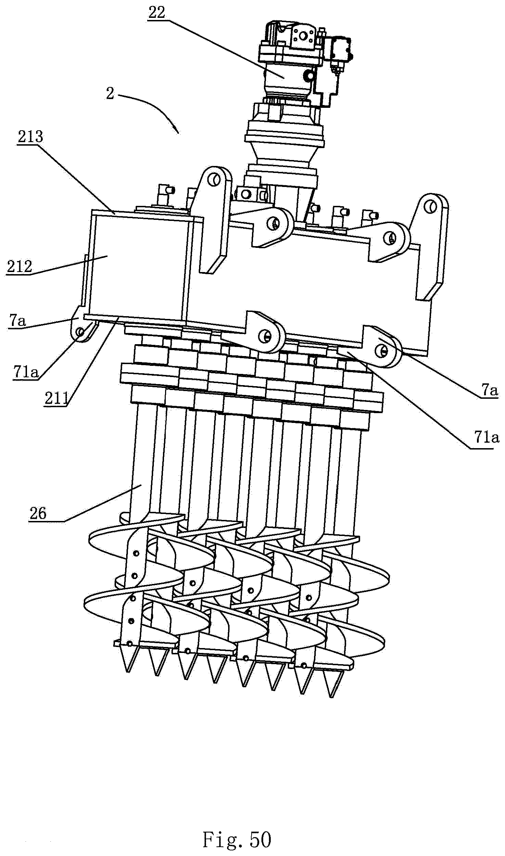

As shown in Figure 50, a bearing part is arranged at the lower surface of the bottom plate 211, connection lugs 7a are welded on the side plates 212 and supporting plates 71a, which support the bearing part, extending inwardly are arranged on the connection lugs 7a. Since the bottom plate 211 is welded on the side plates 212, a phenomenon of stress concentration is easily formed at the welding seam, thus cracks are easily formed at the connection between the bottom plate 211 and side plates 212 which can even make them completely separated. After the bearing part is arranged, it can have bearing effect on the bottom plate using the action of the bearing plates 71a on the bearing part and thus better connection strength of the bottom plate and the side plates is achieved.

According to the structure of the present invention, it is convenient to weld the bearing seat 271 by forming the lower through-holes. In the present embodiment, the lower bearing seats 271 and the bottom plate 211 are in split type and welded together when being connected, therefore, separate bottom plate 211 and the lower bearing seats 271 are easy to manufacture, thereby reducing the manufacture cost; since the lower bearing seats 271 extend upwards, it is located within the smash-ridging box and thus, on one hand, the contour dimension of the smash-ridging box 21 can be reduced, on the other hand, it can have protecting effect on the lower bearing seats. In addition, during the use, the smash-ridging box 21 can be filled with lubricating oil, while by adopting the arrangement of the lower bearing seats 271, it is more easier for lubricating oil within the smash-ridging box 21 to lubricate bearings within the lower bearing seats 271; since the height of the protruding part of the lower bearing seats 271 is larger than the widths of more than two bearings, more than two bearings can be mounted within the lower bearing seat, thereby improving the stability of the bearing seat.

### Embodiment 11

As shown in Figures 49, 50 and 54, a reinforced smash-ridging device comprises a reinforced smash-ridging box 21, a driving mechanism 22, transmission shafts 23, power input members 24, bearings 25 and a spiral drill rod 26.

The reinforced smash-ridging box 21 comprises a bottom plate 211, side plates 212 and a top plate 213 and the lower end surfaces of the side plates 212 are welded on the bottom plate 211, and the top plate 213 is welded on the upper end surfaces of the side plates 212.

The driving mechanism 22 is a hydraulic motor or an electric machine and so on. The driving mechanism 22 is mounted on the top plate 213 and drives one of transmission shafts to rotate.

The transmission shafts 23 are mounted within the reinforced smash-ridging box 21 via bearings 25 and pass through the reinforced smash-ridging box 21. Each power input member is a gear, the gear is mounted on each transmission shaft 23 and adjacent gears are meshed with each other. The spiral drill rod 26 is connected to the transmission shafts 23 via a flange.

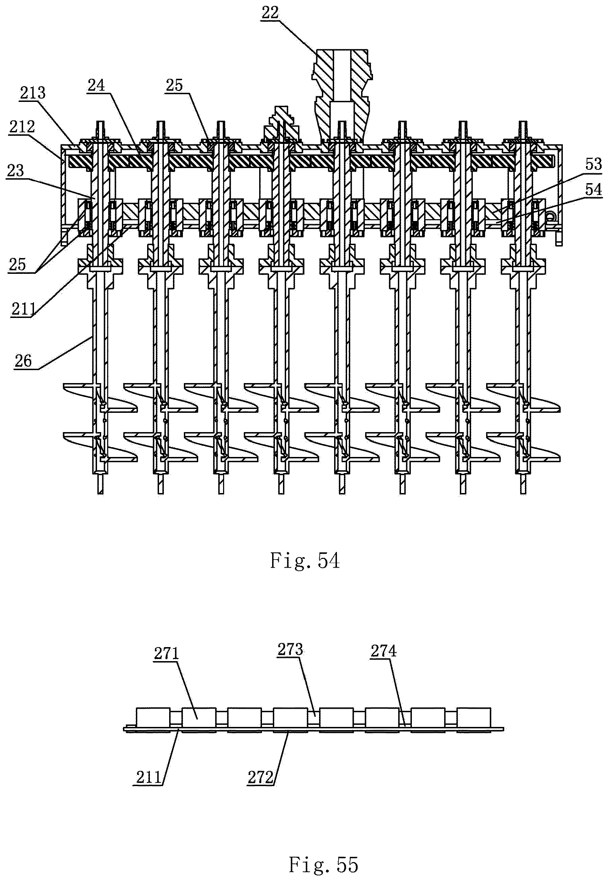

As shown in Figures 54 and 55, more than two lower through-holes are formed in the bottom plate 211, lower bearing seats 271 extending upwardly are welded on the inner walls of the lower through-holes, the lower bearing seats 271 protrude from the upper surface of the bottom plate, the height of protruding part of each lower bearing seat is larger than the width of two bearings, rib plates 273 are welded between adjacent lower bearing seats and lubricating oil passages 271 are formed between the rib plates 273 and the bottom plate 211.

A lower boss 272 is formed by extending downwardly each lower bearing seat 271 and protruding from the lower surface of the bottom plate and is used for mounting lower bearing end covers. After the lower boss 272 is arranged, on one hand, the strength of the bottom plate is improved and on the other hand, a certain distance can be reserved between the lower bearing end cover and the lower surface of the bottom plate 211 so as to facilitate the mounting and dismounting of the lower bearing end cover.

As shown in Figure 50, a bearing part is arranged at the lower surface of the bottom plate 211, connection lugs 7a are welded on the side plates 212 and supporting plates 71a extending inwardly are arranged on the connection lugs 7a and support the bearing part. Since the bottom plate 211 is welded on the side plates 212, a phenomenon of stress concentration is easily formed at the welding seam, thus cracks are easily formed at the connection between the bottom plate 211 and side plates 212 which can even make them completely separated. After the bearing part is arranged, it can have bearing effect on the bottom plate using the action of the bearing plates 71a on the bearing part and thus better connection strength of the bottom plate and the side plates is achieved.

According to the structure of the present invention, it is convenient to weld the bearing seat 271 by forming the lower through-holes. In the present embodiment, the lower bearing seats 271 and the bottom plate 211 are in split type and welded together when being connected, therefore, separate bottom plate 211 and the lower bearing seats 271 are easy to manufacture, thereby reducing the manufacture cost; since the lower bearing seats 271 extend upwards and is located within the reinforced smash-ridging box and thus, on one hand, the contour dimension of the reinforced smash-ridging box 21 can be reduced, on the other hand, it can have protecting effect on the lower bearing seats. In addition, during the use, the reinforced smash-ridging box 21 can be filled with lubricating oil, while by adopting the arrangement of the lower bearing seats 271, it is more easier for lubricating oil within the reinforced smash-ridging box 21 to lubricate bearings within the lower bearing seats 271; in the present embodiment, due to the arrangement of the rib plates 273, the lower bearing seats 271 have higher strength and meanwhile due to the arrangement of the lubricating oil passengers 274, the lubricating oil can flow at the bottom of the reinforced smash-ridging box smoothly so as to achieve better lubricating effect. In addition, only both ends of the rib plates are welded with the lower bearing seats 271 during the welding and thus the welding process is simple and the welding is very easy; since the height of the protruding part of the lower bearing seats 271 is larger than the width of more than two bearings, more than two bearings can be mounted within the lower bearing seat, thereby improving the stability of the bearing seat.

### Embodiment 12

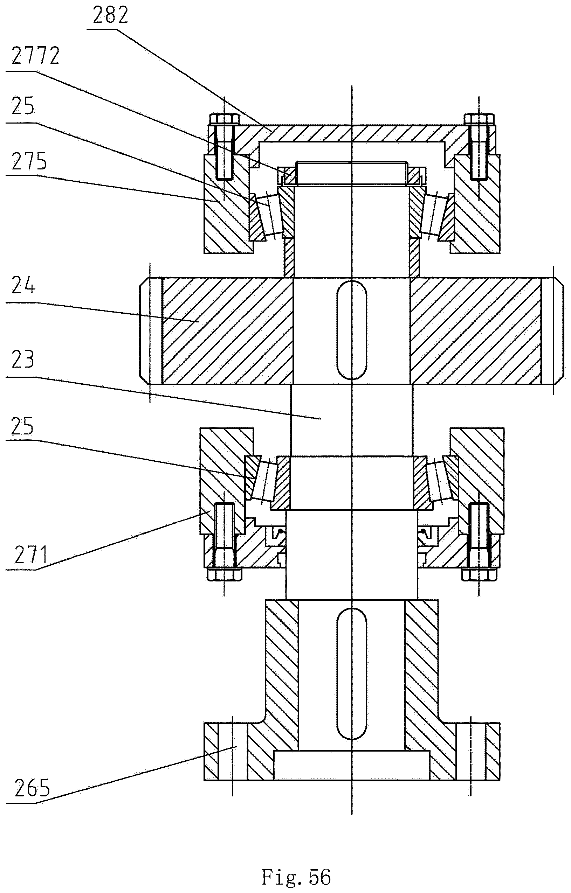

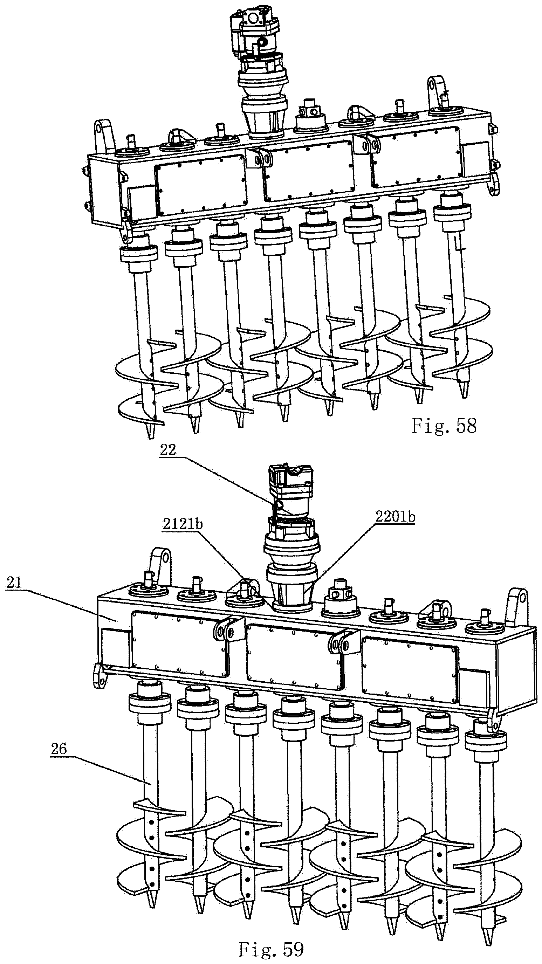

A transmission device of a tillage device using a reverse conical bearing, as shown in Figures 56 and 58, comprises a flange 265, lower bearing end covers, lower bearing seats 271, bearings 25, transmission shafts 23, power input members 24, an upper bearing seat 275, a lock nut 2772 and an upper bearing cover 282, wherein the flange 265 and the power input members 24 are mounted on the transmission shafts 23, the bearings 25 are mounted at both ends of the power input members 24, the bearings 25 are mounted on the lower bearing seats 271 of the smash-ridging box or the chassis and are mounted on the upper bearing seat 275 of the smash-ridging box or the chassis, the bearings 25 within the lower bearing seats are positioned by a shaft shoulder, the bearing within the upper bearing seat is locked and positioned after the clearance of the bearing has been adjusted by means of the lock nut 2772, and the smash-ridging box or the chassis is sealed by the lower bearing end cover 282 and the upper bearing end cover.

The operating principle is as follows: by adopting the reverse conical bearing in the present invention, the whole structure in the reverse manner has better rigidity than that in the forward manner. The bearings 25 are mounted at both ends of each power input member 24 so that the bending moment of each transmission shaft 23 is decreased. The bearings 25 within the lower bearing seats and the lower bearing seats 271 are positioned by a shaft shoulder, the lower bearing seats 271 are located at the lower part of the smash-ridging box or chassis, when the transmission shafts 23 operate, it will bear the counter-acting force from the ground, the counter-acting force from the ground will be transmitted from the shaft shoulder to the bearings 25 within the lower bearing seats and then to the lower bearing seats 271 and the smash-ridging box or chassis by the bearings within the lower bearing seats. Since the lower bearing seats 271 are located at the lower part of the smash-ridging box or chassis, the self-weight of the smash-ridging box or chassis can cushion the counter-acting force from the ground so that the transmission shafts 23 are more stable during the operation. The bearing 25 within the upper shaft seat is locked and positioned after the bearing clearance has been adjusted by means of the lock nut 2772, the bearing within the upper bearing seat is located at the upper part of the smash-ridging box or chassis so that it is convenient for the lock nut 2772 to adjust the bearing clearance.

### Embodiment 13

A transmission device of a tillage device using a reverse conical bearing, as shown in Figures 56 and 58, comprises a flange 265, lower bearing end covers, lower bearing seats 271, bearings 25, transmission shafts 23, power input members 24, an upper bearing seat 275, a lock nut 2772 and an upper bearing cover 282, wherein the flange 265 and the power input members 24 are mounted on the transmission shafts 23, the bearings 25 located within the lower bearing seats and the bearing 25 located within an upper bearing seat are mounted at both ends of the power input members 24, the bearings 25 located within the lower bearing seats are mounted on the lower bearing seats 271 of the smash-ridging box or the chassis and the bearing 25 located within an upper bearing seat are mounted on the upper bearing seat 275 of the smash-ridging box or the chassis, the bearings 25 within the lower bearing seats are positioned by a shaft shoulder, the bearing 25 within the upper bearing seat is locked and positioned after the clearance of the bearing has been adjusted by means of the lock nut 2772, and the smash-ridging box or the chassis is sealed by the lower bearing end cover 282 and the upper bearing end cover.

The size of the bearings 25 located within the lower bearing seats is larger than that of bearing 25 located within the upper bearing seat.

The operating principle is as follows: by adopting the reverse conical bearing in the present invention, the whole structure in the reverse manner has better rigidity than that in the forward manner. The bearings 25 located within the lower bearing seats and the bearing 25 located within an upper bearing seat are mounted at both ends of the power input members 24 so that the bending moment of each transmission shaft 23 is decreased. The bearings 25 within the lower bearing seats and the lower bearing seats 271 are positioned by a shaft shoulder, the lower bearing seats 271 are located at the lower part of the smash-ridging box or chassis, when the transmission shafts 23 operate, it will bear the counter-acting force from the ground, the counter-acting force from the ground will be transmitted from the shaft shoulder to the bearings 25 within the lower bearing seats and then to the lower bearing seats 271 and the smash-ridging box or chassis by the bearings within the lower bearing seats. Since the lower bearing seats 271 are located at the lower part of the smash-ridging box or chassis, the self-weight of the smash-ridging box or chassis can cushion the counter-acting force from the ground so that the transmission shafts 23 are more stable during the operation. The bearing 25 within the upper shaft seat is locked and positioned after the bearing clearance has been adjusted by the lock nut 2772, the bearing 25 within the upper bearing seat is located at the upper part of the smash-ridging box or chassis so that it is convenient for the lock nut 2772 to adjust the bearing clearance.

The size of the bearings 25 located within the lower bearing seats is larger than that of bearing 25 located within the upper bearing seat. Since the bearings 25 located within the lower bearing seats will bear the counter-acting force from the ground during the operation, the bearings 25 located within the lower bearing seats bear much more force than that borne by the bearing 25 located within the upper bearing seat and thus the size of the he bearings 25 located within the lower bearing seats is increased to facilitate to bear counter-acting force from the ground and achieve better operation effect.

### Embodiment 14

A transmission device of a tillage device using a reverse conical bearing, as shown in Figures 56 and 58, comprises a flange 265, lower bearing end covers, lower bearing seats 271, bearings 25 located within the lower bearing seats, transmission shafts 23, power input members 24, an upper bearing seat 275, bearing located within the upper bearing seat, a lock nut 2772 and an upper bearing cover 282, wherein the flange 265 and the power input members 24 are mounted on the transmission shafts 23, the bearings 25 located within the lower bearing seats and the bearing 25 located within an upper bearing seat are mounted at both ends of the power input members 24, the bearings 25 located within the lower bearing seats are mounted on the lower bearing seats 271 of the smash-ridging box or the chassis and the bearing 25 located within an upper bearing seat are mounted on the upper bearing seat 275 of the smash-ridging box or the chassis, the bearings 25 within the lower bearing seats are positioned by a shaft shoulder, the clearance of the bearing 25 within the upper bearing seat has been adjusted by the lock nut 2772 and then the bearing is locked and positioned, and the smash-ridging box or the chassis is sealed by the lower bearing end cover 282 and the upper bearing end cover.

An elastic pad is arranged between the bearing 25 located within the upper bearing seat and the lock nut 2772.

The operating principle is as follows: by adopting the reverse conical bearing in the present invention, the whole structure in the reverse manner has better rigidity than that in the forward manner. The bearings 25 located within the lower bearing seats and the bearing 25 located within an upper bearing seat are mounted at both ends of the power input members 24 so that the bending moment of each transmission shaft 23 is decreased. The bearings 25 within the lower bearing seats and the lower bearing seats 271 are positioned by a shaft shoulder, the lower bearing seats 271 are located at the lower part of the smash-ridging box or chassis, when the transmission shafts 23 operate, it will bear the counter-acting force from the ground, the counter-acting force from the ground will be transmitted from the shaft shoulder to the bearings 25 within the lower bearing seats and then to the lower bearing seats 271 and the smash-ridging box or chassis by the bearings within the lower bearing seats. Since the lower bearing seats 271 are located at the lower part of the smash-ridging box or chassis, the self-weight of the smash-ridging box or chassis can cushion the counter-acting force from the ground so that the transmission shafts 23 are more stable during the operation. The bearing 25 within the upper shaft seat is locked and positioned after the bearing clearance has been adjusted by the lock nut 2772 , the bearing 25 within the upper bearing seat is located at the upper part of the smash-ridging box or chassis so that it is convenient for the lock nut 2772 to adjust the bearing clearance.

The elastic pad is arranged between the bearing 25 located within the upper bearing seat and the lock nut 2772. The elastic pad can enable the bearing 25 located within the upper bearing seat and the lock nut 2772 to be combined fully and can produce a certain pre-tightening force so as to facilitate to cushion the axial loads.

### Embodiment 15

A transmission device of a tillage device using a reverse conical bearing, as shown in

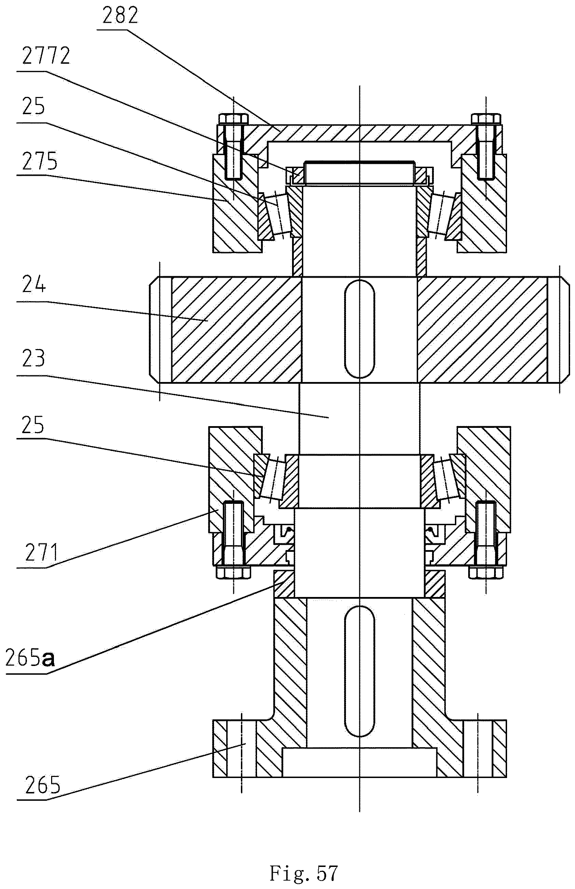

Figures 57 and 58, comprises a flange 265, lower bearing end covers, lower bearing seats 271, bearings 25 located within the lower bearing seats, transmission shafts 23, power input members 24, an upper bearing seat 275, a bearing located within the upper bearing seat, a lock nut 2772 and an upper bearing cover 282, wherein the flange 265 and the power input members 24 are mounted on the transmission shafts 23, the bearings 25 located within the lower bearing seats and the bearing 25 located within an upper bearing seat are mounted at both ends of the power input members 24, the bearings 25 located within the lower bearing seats are mounted on the lower bearing seats 271 of the smash-ridging box or the chassis and the bearing 25 located within an upper bearing seat are mounted on the upper bearing seat 275 of the smash-ridging box or the chassis, the bearings 25 within the lower bearing seats are positioned by a shaft shoulder, the bearing 25 within the upper bearing seat is locked and positioned after the clearance of the bearing has been adjusted by the lock nut 2772, and the smash-ridging box or the chassis is sealed by the lower bearing end cover 282 and the upper bearing end cover.

The size of the bearings 25 located within the lower bearing seats is larger than that of bearing 25 located within the upper bearing seat.

An elastic pad is arranged between the bearing 25 located within the upper bearing seat and the lock nut 2772.

A cushioning sleeve 265a is arranged at the upper part of the flange 265.

The operating principle is as follows: by adopting the reverse conical bearing in the present invention, the whole structure in the reverse manner has better rigidity than that in the forward manner. The bearings 25 located within the lower bearing seats and the bearing 25 located within an upper bearing seat are mounted at both ends of the power input members 24 so that the bending moment of each transmission shaft 23 is decreased. The bearings 25 within the lower bearing seats and the lower bearing seats 271 are positioned by a shaft shoulder, the lower bearing seats 271 are located at the lower part of the smash-ridging box or chassis, when the transmission shafts 23 operate, it will bear the counter-acting force from the ground, the counter-acting force from the ground will be transmitted from the shaft shoulder to the bearings 25 within the lower bearing seats and then to the lower bearing seats 271 and the smash-ridging box or chassis by the bearings within the lower bearing seats. Since the lower bearing seats 271 are located at the lower part of the smash-ridging box or chassis, the self-weight of the smash-ridging box or chassis can cushion the counter-acting force from the ground so that the transmission shafts 23 are more stable during the operation. The bearing 25 within the upper shaft seat is locked and positioned after the bearing clearance has been adjusted by the lock nut 2772, the bearing 25 within the upper bearing seat is located at the upper part of the smash-ridging box or chassis so that it is convenient for the lock nut 2772 to adjust the bearing clearance.

The size of the bearings 25 located within the lower bearing seats is larger than that of bearing 25 located within the upper bearing seat. Since the bearings 25 located within the lower bearing seats will bear the counter-acting force from the ground during the operation, the bearings 25 located within the lower bearing seats bear much more force than that borne by the bearing 25I located within the upper bearing seat and thus the size of the he bearings 25 located within the lower bearing seats is increased to facilitate to bear counter-acting force from the ground and achieve better operation effect.

The elastic pad is arranged between the bearing 25 located within the upper bearing seat and the lock nut 2772. The elastic pad can enable the bearing 25 located within the upper bearing seat and the lock nut 2772 to be combined fully and can produce a certain pre-tightening force so as to facilitate to cushion the axial loads.

The cushioning sleeve 265a is arranged at the upper part of the flange 265, when the transmission shaft 23 works, the axial load transferred from the parts that connected to the flange can be buffed.

### Embodiment 16

As shown in Figure 19, a fixed structure for realizing the connection between a shaft end and a connection member through a gland comprises a transmission shaft 23 and a connection member 265. One end of the transmission shaft 23 is a conical shaft 232 one end of which is provided with a spiral rod 233. The connection member 265 is a coupler or a flange, a conical hole 2651 matching with the conical shaft and a through-hole 2652 through which the spiral rod passes are formed in the connection member 265, a counterbore 2653 is formed at the side opposite to the conical shaft on the connection member 265, the conical hole 2651, through-hole 2652 and counterbore 2653 are communicated with each other; the conical shaft 232 is arranged within the conical hole 2651, the spiral rod 233 passes through the through-hole 2652 and extends within the counterbore 2653, and a lock nut 266 which is connected with the spiral rod is arranged within the counterbore 2653.

A gland 268 is fixed on the screw rod 233 through more than two lock bolts 267. A boss 2681 is arranged on the upper surface of the gland 268 and is pressed fit on the end surface of a lock nut 266, a gap is reserved between the gland 268 and the end surface of the screw rod, and the gland and the counterbore are transition fit so as to prevent large particulate matters entering the counterbore and have the protecting effect on the lock nut 266; and the counterbore is formed in the gland 268, the head of the lock bolt is located in the counterbore so as to have the protecting effect on the head of the lock bolts.

According to above structure, the gland 268 is fixed on the screw rod 233 through more than two lock bolts 267, in this way, the gland 268 itself cannot rotate relative to the screw rod 233; since the boss 2681 of the gland is pressed fit on the end surface of the lock nut 266, the lock nut 266 has no rotatable space, no phenomenon that the lock nut 266 loosens can occur, thereby improving the reliability of the matching between the conical shaft and the conical hole, the power transmission is reliably realized and it is very convenient to fix the gland 268; in addition, when the phenomena that the conical shaft 233 and conical hole 2651 are worn occur, the gland 268 can be dismounted to further tighten the lock nut 266 and then the gland 268 is locked again using the lock bolts 267; since the clearance is reserved between the gland 268 and the end surface of the spiral rod, the gland has movement space in the direction towards the spiral rod and thus even if the lock nut 266 is further locked, the boss 2681 of the gland can still be pressed fit on the lock nut 266 to prevent the lock nut from loosening and thus the fit clearance between the conical shaft and the conical hole can be adjusted as desired without replacing parts and the adjustment can also be performed at present.

### Embodiment 17

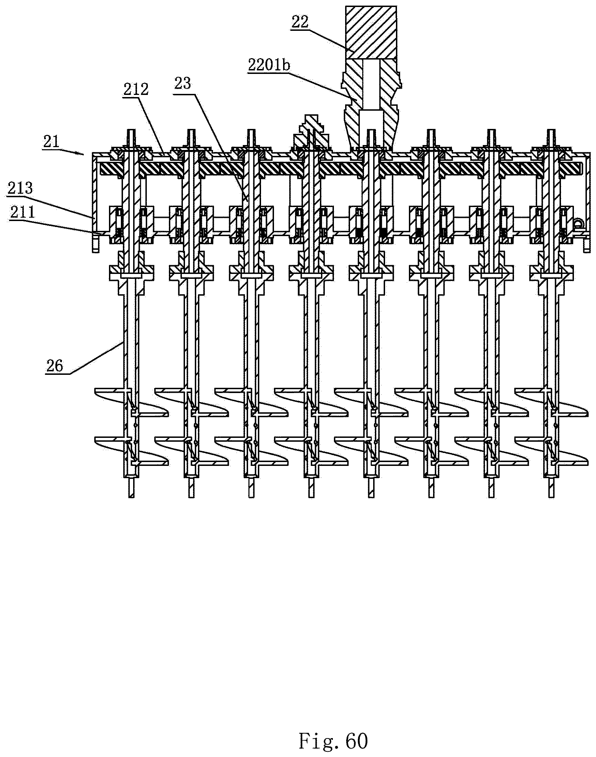

As shown in Figures 59 and 60, a subsoiling device comprises a smash-ridging box 21, a driving mechanism 22, a transmission mechanism and a spiral drill rod 26.

The smash-ridging box 21 is formed by welding a bottom plate 211, a top plate 211 and side plates 213. A boss 2121b is formed in the middle of the top plate 212.

The driving mechanism 22 is a hydraulic motor or an electric motor, a gearbox 2201b is arranged between the driving mechanism 22 and the boss 2121b and is mounted on the boss 2121b. As an another structure, if the gearbox 2201b is not arranged, the driving mechanism 22 is directly mounted on the boss 2121b. By arranging the structure of the boss 2121b, the strength of a transmission box connected to the driving mechanism can be improved and a certain distance can be reserved between the lower end surface of the driving mechanism and the upper plane of the top plate so as to facilitate the mounting and dismounting of the driving mechanism 22.

The transmission mechanism comprises transmission shafts 23 and gears, wherein the transmission shafts 23 are mounted on the smash-ridging box 21 through bearings, one end of each transmission shaft 23 extends out of the smash-ridging box 21, the gears are mounted on each transmission shaft 23 and adjacent gears are meshed with each other and the driving mechanism 22 drives one of transmission shafts to rotate.

As shown in Figures 59 to 61, the spiral drill rod 26 comprises a rod body 261, a spiral piece 262, blades 263, a first soil-piercing blade 4c, a second soil-piercing blade 5c, a plug-in seat 6c, a smash-flattening blade 7c and a flange 265.

The rod body 261 has a cross section in the shape of a circle and other polygons can also be used. The flange 362 is welded at the upper end of the rod body 261. The flange 265 is connected at the extending ends of the transmission shafts.

The spiral piece 262 is welded rotatably at the middle-lower part of the rod body 261 and can be either left-hand spiral or right-hand spiral. A plurality of spiral pieces can be welded on the rod body 261.

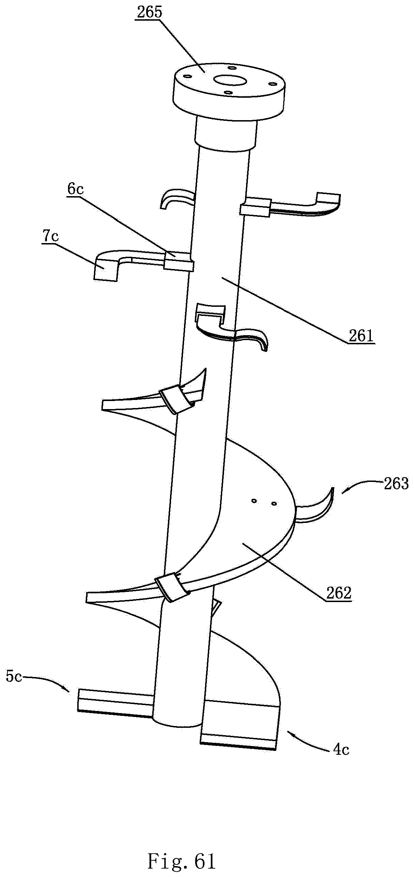

As shown in Figure 61, more than two blades, which are arranged upwards sequentially along the spiral piece, are fixed on the spiral piece 262 and the number of blades in different pitches on the same spiral piece is different. In the present embodiment, the number of blades in different pitches on the same spiral piece is decreased successively from bottom to top, the decrement in the number of blades in adjacent pitches is one and thus the soil within the pitch in which more blades are present is more fully smashed during the subsoiling of the spiral rod, the soil is more loosened, in contrast, the smashing effect and the loose degree of the soil are relatively worse; for the present embodiment, lower land is more loosened and smashed fully and the upper land has worse loose degree and the smashing effect so that the root system easily grow downwards during the growth process of plants so as to achieve better growth performance of the plants. In order to obtain different subsoiling effects, the number of the blades on the different spiral pieces can also be different. Each blade 263 comprises a fixing section 31c and a blade body 32c, which is formed by bending upwards or inclined upwards from the outer end of the fixing section, a first fixing hole 21c is formed in the spiral piece 262, a second fixing hole 32c is formed in the fixing section 31c, bolts 91c in a bolt assembly 9c pass through the first fixing hole 21c and the second fixing hole 32c and the blades 263 are locked by a cap 92c; an edge is arranged at the end part of the blade body 32c and has the soil-cutting effect and less cutting resistance can be achieved. The blade 263 is provided with a soil-cutting edge 34c and a blade back 35c, wherein the soil-cutting edge 34c is opposite to the spiral direction of the spiral piece, i.e., when the spiral drill rod rotates, the soil-cutting edge 34c cuts the soil, the blade back and the soil-cutting edge are arranged opposite to each other. An arc is formed by protruding outwards the middle of the soil-cutting edge 34c, during the soil cutting process of the blades 263, the force acted on the blade body 32c by the soil can be resolved into a first component force perpendicular to the soil-cutting edge and a second component force tangent to the soil-cutting edge, thereby reducing the acting force of the soil on the blade body 32c, on one hand, the bending deformation of the blades 263 can be decreased, the wear and damage to the soil-cutting edge 32c is reduced and the service life of the blades 263 is prolonged; on the other hand, the exerted shearing force of a bolt assembly 9c is reduced and the strength of the connection between the blades and the spiral piece is increased. The upper surface of the soil-cutting edge 34c is an inclined plane so that the soil-cutting edge is in wedge-shape and a first rid strip 36c extending along the soil-cutting edge is arranged at the lower surface of the soil-cutting edge 34c. Since the soil-cutting edge 34c is in wedge-shape, the blade body 32c easily pierces the soil and the strength of the blades 263 is decreased, for this purpose, the strength of the blades can be increased by arranging the first rid strip 36c, although a certain resistance exist between the first rid strip 36c and the smashed soil, the first rid strip 36c can smash the smashed soil again when the smashed soil passes through the first rid strip 36c, thereby improving the smashing effect.

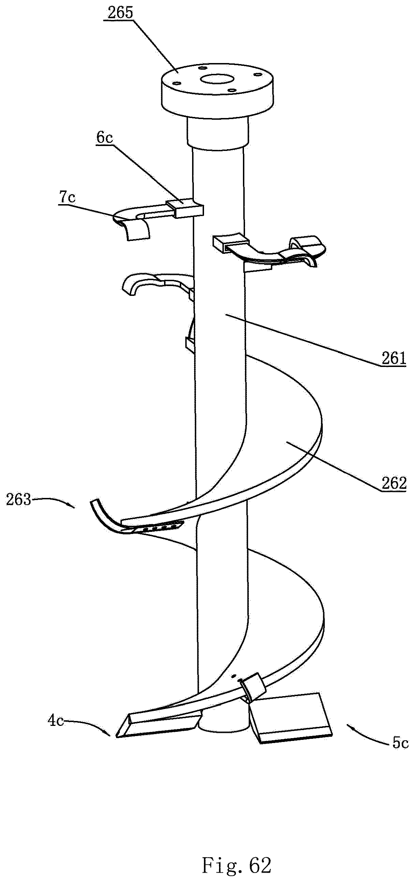

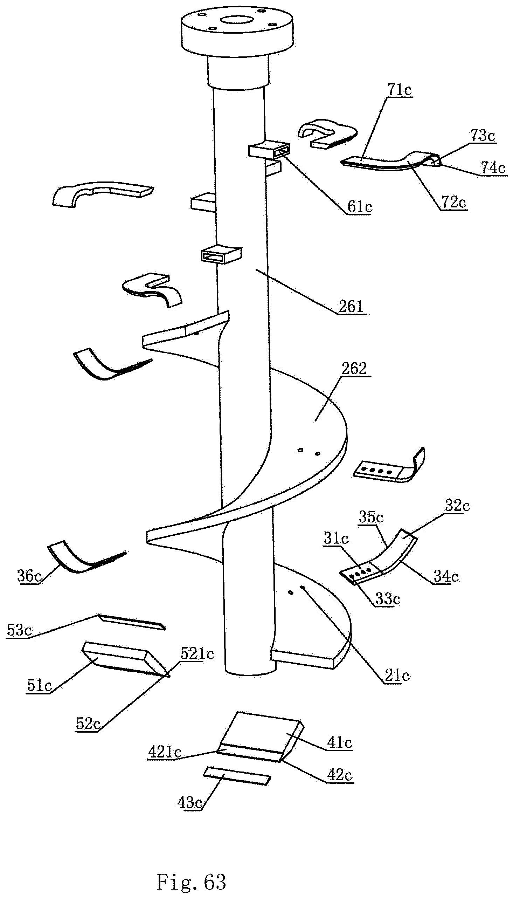

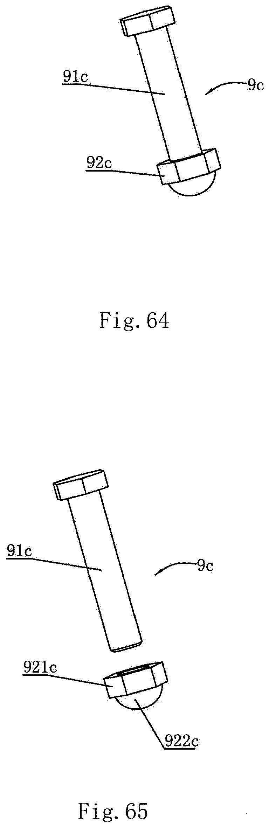

As shown in Figures 62 to 64, the bolt assembly 9c comprise a bolt 91c and a nut 92c, the bolt 91c passes through the spiral pieces 2 and the fixing section 31c from top to bottom, the bolt head of the bolt 91c is sunk within the counterbore of the first fixing hole 21c so as to reduce the wear of the soil to the bolt head and the lower end of the bolt 91c is in threaded connection with the cap 92c for pressing tightly the blades 263; the cap 92c comprises a nut 921c and a round head 922c which is integrated with the nut and of which the outer surface is provided with a carburized layer. When the spiral drill rod subsoils, the cap 92c will interact with the soil which results in the wear of the cap, if blades are locked by using general nut, on one hand, the nut can be worn, on the other hand, the nut on the bolt can be destroyed resulting in incapability in dismounting of the nut, therefore, in the present invention, by arranging the round head 922c through which the end part of the bolt 91c is internally concealed within the cap 92c so as to prevent the threads of the bolt from destroying, on the other hand, the round head 922c can effectively protect the nut 921c of the invention and avoid the premature wear of the nut and the carburized layer with higher hardness is arranged so as to prevent the cap 92c from prematurely wearing.

The first soil-piercing blade 4c comprises a first connection section 41c and a first cutting edge 42c, wherein the first connection section 41c is connected to the lower end of the spiral piece 262, the lower surface of the first cutting edge 42c has an inclined plane so that the first cutting edge is in wedge-shape, the upper surface of the first cutting edge 42c has an accommodation groove 421c, in which a first alloy sheet 43c is embedded, the first soil-piercing blade 4c extends slantingly downwards, and the lower end of the first soil-piercing blade 4c is below the bottom surface of the rod body 261, in the present embodiment, the included angle between the first soil-piercing blade 4c and the center axis of the rod body is slightly greater than the helical angle of the spiral piece and is preferably greater than 1 degree-3 degrees.

More than one second soil-piercing blades 5c are connected to the lower end of the rod body 261, in the present embodiment, the second soil-piercing blade 5c is one and comprises a second connection section 51c and a second cutting edge 52c, wherein one side edge of the second connection section 51c is welded on the rod body and rib plates are welded between the second soil-piercing blades 5c and the rod body 261 so as to improve the strength of the connection between the second soil-piercing blades 5c and the rod body 261; the lower surface of the second cutting edge 52c has an inclined plane so that the second cutting edge is in wedge-shape, the upper surface of the second cutting edge 52c has an accommodation groove, in which an second alloy sheet is embedded 53c, the second soil-piercing blade 5c extends slantingly downwards, the lower end of the second soil-piercing blade 5c is below the bottom surface of the rod body 261, the direction towards which the second cutting edge 5c extends from the second connection section 51c is consistent with the opposite rotation direction of the spiral pieces and the first soil-piercing blade 4c has the same angle of inclination as that of the second soil-piercing blade 5c.

More than two plug-in seats 6c extending radially are fixed at the upper part of the rod body 261, are staggered in the axial direction of the rod body and have a plug-in trough 61c in which a smash-flattening blade 7c is plugged, the smash-flattening blade 7c comprises a plug-in section 71c, a first bending part 72c and a second bending part 73c, the first bending part 72c extends from the outer end of the plug-in section to the same direction as the rotation direction of the spiral pieces, the second bending part 73c extends downwards from the first bending part 72c, and a smashing edge 74c is arranged at the outer side of the smash-flattening blade 7c. A second rid strip (not shown) extending along a smashing edge is arranged at the position corresponding to the smashing edge on the smash-flattening blade 7c, by arranging the second rid strip, the strength of the smash-flattening blade 7c can be improved and further smashing effect can be achieved; and an edge is arranged at the end part of the second bending part 73c so as to improve the secondary smashing effect.

In the present embodiment, due to the arrangement of the first and second soil-piercing blades 4c and 5c, the second soil-piercing blades 5c can be multiple, moreover, lower ends of the first and second soil-piercing blades 4c and 5c are all lower than the bottom of the rod body 261, meanwhile, the first and second soil-piercing blades 4c and 5c both extend downwardly, angles of inclination of the first and second soil-piercing blades4c and 5c are slightly greater than the helical angle of the spiral pieces, when the spiral drill rod pierces soil, the first and second soil-piercing blades 4c and 5c simultaneously cut the soil so that the rod body 261 is forced uniformly circumferentially and easily pierces soil, therefore, the rod body 261 is uneasy to deform and break; at the same time, the first and second soil-piercing blades 4c and 5c are forced uniformly and are uneasy to deform and collapse, good reliability of the connection between the first soil-piercing blade 4c and the spiral piece is achieved and the good reliability of the connection between the second soil-piercing blade 5c and the rod body 261 is also achieved; by adopting above structure, since only a small part of the second soil-piercing blades 5c are connected to the rod body 261, after the second soil-piercing blades are forced uniformly, the phenomenon of stress concentration uneasily occurs at the connection parts of the second soil-piercing blades 5c and the rod body 261 and thus high connection strength is achieved. Due to the arrangement of first and second alloy sheets 43c and 53c with high strength, the first and second soil-piercing blades 4c and 5c are uneasily worn, when the spiral rod pierces soil, especially when the spiral drill rod has completed the soil-piercing operation and transversely smashes the soil, the first and second soil-piercing blades 4c and 5c can also have bottom soil cutting effect, in general, the bottom soil has large hardness and it is possible for the first and second soil-piercing blades 4c and 5c to come into contact with stones when the spiral drill rod transversely cut the soil, therefore, the strength can be further improved and the service life is prolonged by embedding the alloy sheets. Since the blades are provided with soil-cutting edges 34c, when the rod body 261 rotates, the soil-cutting edges 34c cut the soil, on one hand, the blades 263 easily pierces soil and on the other hand, the transverse cutting resistance of the spiral drill rod can be decreased. Due to the arrangement of smash-flattening blades 7c with the inventive structure which are arranged vertically in a staggered manner and the clearance reserved between adjacent smash-flattening blades, when being flattened, the subsoiled soil is flattened hierarchically by various smash-flattening blades and the smashed soil will flow among various smash-flattening blades when the rod body 261 rotates so that the flattening resistance is greatly reduced, good flattening effect is achieved, the raising phenomenon of the smashed soil can be effectively prevented, furthermore, since the smash-flattening blade comprises the second bending part 73c which has raking effect on the soil, the flattening effect is further improved. Due to the arrangement of smashing edges 74c substantially extending transversely along with the second bending part 73c, the secondary smashing can be performed on the smashed soil and the resistance in smashing the soil can be decreased.

### Embodiment 18

As shown in Figure 61, a subsoiling cutter 26 comprises a rod body 261, a spiral piece 262, blades 263, a first soil-piercing blade 4c, a second soil-piercing blade 5c, a plug-in seat 6c, a smash-flattening blade 7c and a flange 265.

The rod body 261 has a cross section in the shape of a circle and other polygons can also be used. The flange 362 is welded at the upper end of the rod body 261. The flange 265 is connected at the extending ends of the transmission shafts.

The spiral piece 262 is welded rotatably at the middle-lower part of the rod body 261 and can be either left-hand spiral or right-hand spiral. A plurality of spiral pieces can be welded on the rod body 261.

As shown in Figure 61, more than two blades, which are arranged upwards sequentially along the spiral piece, are fixed on the spiral piece 262 and the number of blades in different pitches on the same spiral piece is different. In the present embodiment, the number of blades in different pitches on the same spiral piece is decreased successively from bottom to top, the decrement in the number of blades in adjacent pitches is one and thus the soil within the pitch in which more blades are present is more fully smashed during the subsoiling of the spiral rod, the soil is more loosened, in contrast, the smashing effect and the loose degree of the soil are relatively worse; for the present embodiment, lower land is more loosened and smashed fully and the upper land has worse loose degree and the smashing effect so that the root system easily grow downwards during the growth process of plants so as to achieve better growth performance of the plants. In order to obtain different subsoiling effects, the number of the blades on the different spiral pieces can also be different. Each blade 263 comprises a fixing section 31c and a blade body 32c, which is formed by bending upwards or inclined upwards from the outer end of the fixing section, a first fixing hole 21c is formed in the spiral piece 262, a second fixing hole 32c is formed in the fixing section 31c, bolts 91c in a bolt assembly 9c pass through the first fixing hole 21c and the second fixing hole 32c and the blades 263 are locked by a cap 92c; an edge is arranged at the end part of the blade body 32c and has the soil-cutting effect and less cutting resistance can be achieved. The blade 263 is provided with a soil-cutting edge 34c and a blade back 35c, wherein the soil-cutting edge 34c is opposite to the spiral direction of the spiral piece, i.e., when the spiral drill rod rotates, the soil-cutting edge 34c cuts the soil, the blade back and the soil-cutting edge are arranged opposite to each other. An arc is formed by protruding outwards the middle of the soil-cutting edge 34c, during the soil cutting process of the blades 263, the force acted on the blade body 32c by the soil can be resolved into a first component force perpendicular to the soil-cutting edge and a second component force tangent to the soil-cutting edge, thereby reducing the acting force of the soil on the blade body 32c, on one hand, the bending deformation of the blades 263 can be decreased, the wear and damage to the soil-cutting edge 32c is reduced and the service life of the blades 263 is prolonged; on the other hand, the exerted shearing force of a bolt assembly 9c is reduced and the strength of the connection between the blades and the spiral piece is increased. The upper surface of the soil-cutting edge 34c is an inclined plane so that the soil-cutting edge is in wedge-shape and a first rid strip 36c extending along the soil-cutting edge is arranged at the lower surface of the soil-cutting edge 34c. Since the soil-cutting edge 34c is in wedge-shape, the blade body 32c easily pierces the soil and the strength of the blades 263 is decreased, for this purpose, the strength of the blades can be increased by arranging the first rid strip 36c, although a certain resistance exist between the first rid strip 36c and the smashed soil, the first rid strip 36c can smash the smashed soil again when the smashed soil passes through the first rid strip 36c, thereby improving the smashing effect.

As shown in Figures 62 to 64, the bolt assembly 9c comprise a bolt 91c and a nut 92c, the bolt 91c passes through the spiral pieces 2 and the fixing section 31c from top to bottom, the bolt head of the bolt 91c is sunk within the counterbore of the first fixing hole 21c so as to reduce the wear of the soil to the bolt head and the lower end of the bolt 91c is in threaded connection with the cap 92c for pressing tightly the blades 263; the cap 92c comprises a nut 921c and a round head 922c which is integrated with the nut and of which the outer surface is provided with a carburized layer. When the spiral drill rod subsoils, the cap 92c will interact with the soil which results in the wear of the cap, if blades are locked by using general nut, on one hand, the nut can be worn, on the other hand, the nut on the bolt can be destroyed resulting in incapability in dismounting of the nut, therefore, in the present invention, by arranging the round head 922c through which the end part of the bolt 91c is internally concealed within the cap 92c so as to prevent the threads of the bolt from destroying, on the other hand, the round head 922c can effectively protect the nut 921c of the invention and avoid the premature wear of the nut and the carburized layer with higher hardness is arranged so as to prevent the cap 92c from prematurely wearing.

The first soil-piercing blade 4c comprises a first connection section 41c and a first cutting edge 42c, wherein the first connection section 41c is connected to the lower end of the spiral piece 262, the lower surface of the first cutting edge 42c has an inclined plane so that the first cutting edge is in wedge-shape, the upper surface of the first cutting edge 42c has an accommodation groove 421c, in which a first alloy sheet 43c is embedded, the first soil-piercing blade 4c extends slantingly downwards, and the lower end of the first soil-piercing blade 4c is below the bottom surface of the rod body 261, in the present embodiment, the included angle between the first soil-piercing blade 4c and the center axis of the rod body is slightly greater than the helical angle of the spiral piece and is preferably greater than 1 degree-3 degrees.

More than one second soil-piercing blades 5c are connected to the lower end of the rod body 261, in the present embodiment, the second soil-piercing blade 5c is one and comprises a second connection section 51c and a second cutting edge 52c, wherein one side edge of the second connection section 51c is welded on the rod body and rib plates are welded between the second soil-piercing blades 5c and the rod body 261 so as to improve the strength of the connection between the second soil-piercing blades 5c and the rod body 261; the lower surface of the second cutting edge 52c has an inclined plane so that the second cutting edge is in wedge-shape, the upper surface of the second cutting edge 52c has an accommodation groove, in which an second alloy sheet is embedded 53c, the second soil-piercing blade 5c extends slantingly downwards, the lower end of the second soil-piercing blade 5c is below the bottom surface of the rod body 261, the direction towards which the second cutting edge 5c extends from the second connection section 51c is consistent with the opposite rotation direction of the spiral pieces and the first soil-piercing blade 4c has the same angle of inclination as that of the second soil-piercing blade 5c.

More than two plug-in seats 6c extending radially are fixed at the upper part of the rod body 261, are staggered in the axial direction of the rod body and have a plug-in trough 61c in which a smash-flattening blade 7c is plugged, the smash-flattening blade 7c comprises a plug-in section 71c, a first bending part 72c and a second bending part 73c, the first bending part 72c extends from the outer end of the plug-in section to the same direction as the rotation direction of the spiral pieces, the second bending part 73c extends downwards from the first bending part 72c, and a smashing edge 74c is arranged at the outer side of the smash-flattening blade 7c. A second rid strip (not shown) extending along a smashing edge is arranged at the position corresponding to the smashing edge on the smash-flattening blade 7c, by arranging the second rid strip, the strength of the smash-flattening blade 7c can be improved and further smashing effect can be achieved; and an edge is arranged at the end part of the second bending part 73c so as to improve the secondary smashing effect.

In the present embodiment, due to the arrangement of the first and second soil-piercing blades 4c and 5c, the second soil-piercing blades 5c can be multiple, moreover, lower ends of the first and second soil-piercing blades 4c and 5c are all lower than the bottom of the rod body 261, meanwhile, the first and second soil-piercing blades 4c and 5c both extend downwardly, angles of inclination of the first and second soil-piercing blades4c and 5c are slightly greater than the helical angle of the spiral pieces, when the spiral drill rod pierces soil, the first and second soil-piercing blades 4c and 5c simultaneously cut the soil so that the rod body 261 is forced uniformly circumferentially and easily pierces soil, therefore, the rod body 261 is uneasy to deform and break; at the same time, the first and second soil-piercing blades 4c and 5c are forced uniformly and are uneasy to deform and collapse, good reliability of the connection between the first soil-piercing blade 4c and the spiral piece is achieved and the good reliability of the connection between the second soil-piercing blade 5c and the rod body 261 is also achieved; by adopting above structure, since only a small part of the second soil-piercing blades 5c are connected to the rod body 261, after the second soil-piercing blades are forced uniformly, the phenomenon of stress concentration uneasily occurs at the connection parts of the second soil-piercing blades 5c and the rod body 261 and thus high connection strength is achieved. Due to the arrangement of first and second alloy sheets 43c and 53c with high strength, the first and second soil-piercing blades 4c and 5c are uneasily worn, when the spiral rod pierces soil, especially when the spiral drill rod has completed the soil-piercing operation and transversely smashes the soil, the first and second soil-piercing blades 4c and 5c can also have bottom soil cutting effect, in general, the bottom soil has large hardness and it is possible for the first and second soil-piercing blades 4c and 5c to come into contact with stones when the spiral drill rod transversely cut the soil, therefore, the strength can be further improved and the service life is prolonged by embedding the alloy sheets. Since the blades are provided with soil-cutting edges 34c, when the rod body 261 rotates, the soil-cutting edges 34c cut the soil, on one hand, the blades 263 easily pierces soil and on the other hand, the transverse cutting resistance of the spiral drill rod can be decreased. Due to the arrangement of smash-flattening blades 7c with the inventive structure which are arranged vertically in a staggered manner and the clearance reserved between adjacent smash-flattening blades, when being flattened, the subsoiled soil is flattened hierarchically by various smash-flattening blades and the smashed soil will flow among various smash-flattening blades when the rod body 261 rotates so that the flattening resistance is greatly reduced, good flattening effect is achieved, the raising phenomenon of the smashed soil can be effectively prevented, furthermore, since the smash-flattening blade comprises the second bending part 73c which has raking effect on the soil, the flattening effect is further improved. Due to the arrangement of smashing edges 74c substantially extending transversely along with the second bending part 73c, the secondary smashing can be performed on the smashed soil and the resistance in smashing the soil can be decreased.

### Embodiment 19

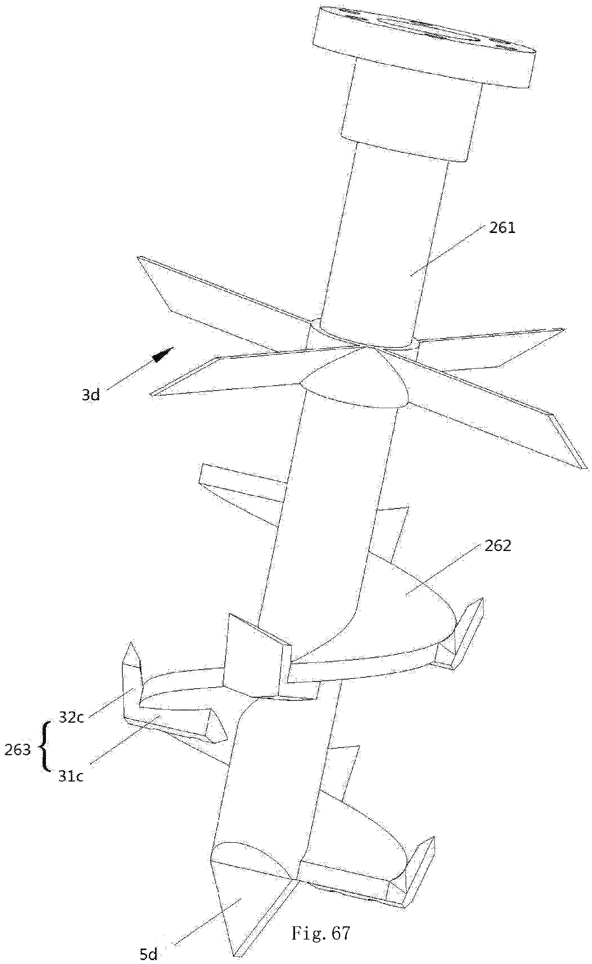

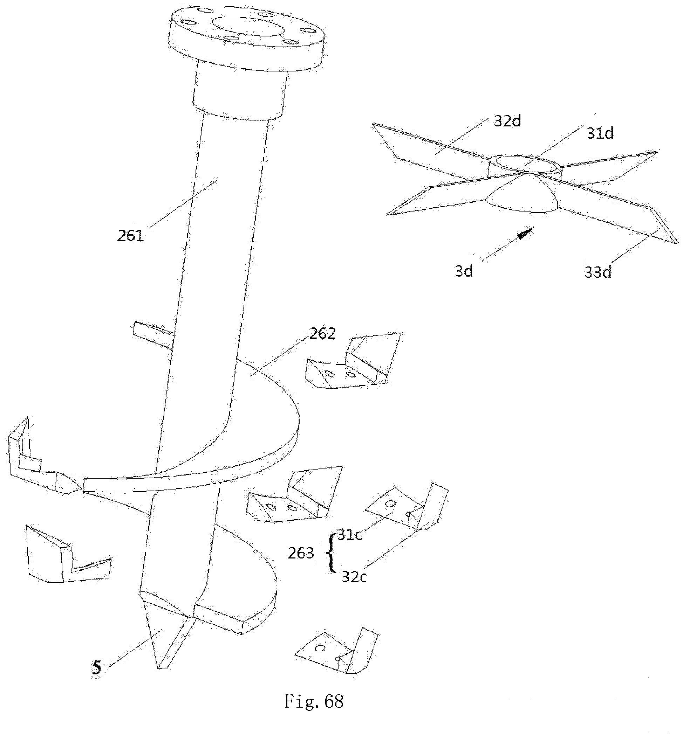

As shown in Figures 67 and 68, the direction of the present embodiment is subjected to the arrangement direction of the spiral drill bit of a subsoiling tillage machine for avoiding soil accumulation as shown in Figure 67. The spiral drill bit of a subsoiling tillage machine for avoiding soil accumulation of the present embodiment comprises a rod body 261 and a spiral piece 262 which is wound on the lower part of the rod body 261 and it further comprises cross-cutting blades 3d, which is arranged on the upper section of the rod body 261 and located above the spiral piece. The present invention is simple in structure, since the cross-cutting blades 3d are arranged on the upper section of the rod body 261, they can be connected at the upper section of the rod body 261 by welding or a fastener, the rod body 261 moves forwards with the subsoiling tillage machine while rotating during the tillage operation, the accumulated soil produced in the front of the rod body 261 after the deep-ploughing subsoiling can be effectively leveled, the phenomenon of soil accumulation is eliminated so that the production efficiency of the tillage operation is greatly improved.

In present embodiment, each cross-cutting blade 3d comprises a connection sleeve 31d and cross-cutting blade bodies 32d which are integrally-formed, wherein the connection sleeve 31d sleeves the upper part of the rod body 261 and the cross-cutting blade bodies 32d is connected longitudinally to the side wall of the connection sleeve 31d. By adopting the connection sleeve 31d, it is convenient to mount the cross-cutting blade bodies 32d on the rod body 261, since the connection sleeve 31d and the cross-cutting blade bodies 32d are integrally formed, the connection is firm and reliable, it is ensured that the accumulated soil can be leveled by the cross-cutting blade 3d and the phenomenon of soil accumulation is eliminated so that the production efficiency of the tillage operation is greatly improved.

In the present embodiment, the number of the cross-cutting blade bodies is at least two and the at least two cross-cutting blade bodies are evenly arranged at the side wall of the connection sleeve31d. As the number of the cross-cutting blade bodies is increased, the efficiency in leveling the accumulated soil can be improved and the production efficiency of the tillage operation is further improved.

In the present embodiment, a nose, which is triangular, is arranged at the outer end of each cross-cutting blade body. By adopting the triangular nose, it is convenient to enable the cross-cutting blades 3d extend inside the accumulated soil so as to improve the soil-shoveling efficiency.

In the present embodiment, a drill tip 5d is arranged at the bottom end of the rod body 261 and is in an inverted triangle. The drill tip 5d can be welded on the rod body 261 or can be connected by a fastener. By adopting the drill tip 5d, it is more convenient to pierce the soil and a water storage tank is formed in the lower layer of the tilled soil for water storage so that the crops are drought resistant. In addition, it is more advantageous for the drill tip 5d in an inverted triangle to the reduction of the resistance produced when the present invention pierces the soil.

### Embodiment 20

The difference between the present embodiment and embodiment 19 lies in: in the present embodiment, the spiral drill bit further comprises blades 263 which are arranged at the circumferential edge of the spiral piece 262. When the tillage is performed using the spiral drill bit of the present invention, the soil is ridged upwards due to the rotation of the spiral piece 262 and simultaneously, the blades 263 can assist the spiral piece 262 in cutting, rubbing and smashing automatically upwards ridged soil under the action of the spiral piece 262 and thus the efficiency in cutting soil layers using the spiral drill bit and the working efficiency of the subsoiling tillage machine are greatly improved; in addition, it is more advantageous to store more air inside the soil.

In the present embodiment, the number of the blades 263 are at least two and the at least two blades 263 are arranged along the direction of rotation of the spiral piece 262 at intervals. More the number of the blades 263, more advantageous to assist the spiral piece 262 in cutting and smashing the soil, thereby further improving the tillage efficiency.

In the present embodiment, each blade 263 comprises a blade body 32c and a fixing section 31c formed by bending and extending horizontally the bottom of the blade body 32c, the fixing section is fixedly connected to the lower surface of the spiral piece 262 and the blade body 32c faces towards the top end of the rod body 261. The blade body 32c facilitates the cutting of the soil and the fixing section 31c facilitates the fixing connection between the blade body 32c and the spiral piece 262 so that the structure is firm and reliable and the cutting effect is ensured.

In the present embodiment, the blade body 32c is connected with the fixing section 31c to constitute an included angle of 90 degrees-120 degrees. The included angle of 90 degrees-120 degrees enables the blade body 32c incline outwards with respect to the circumference of the spiral piece 262, the contact area of the blade body 32c and the soil is increased, it is advantageous to the blade body 32c to cut the soil, thereby improving the tillage efficiency.

### Embodiment 21

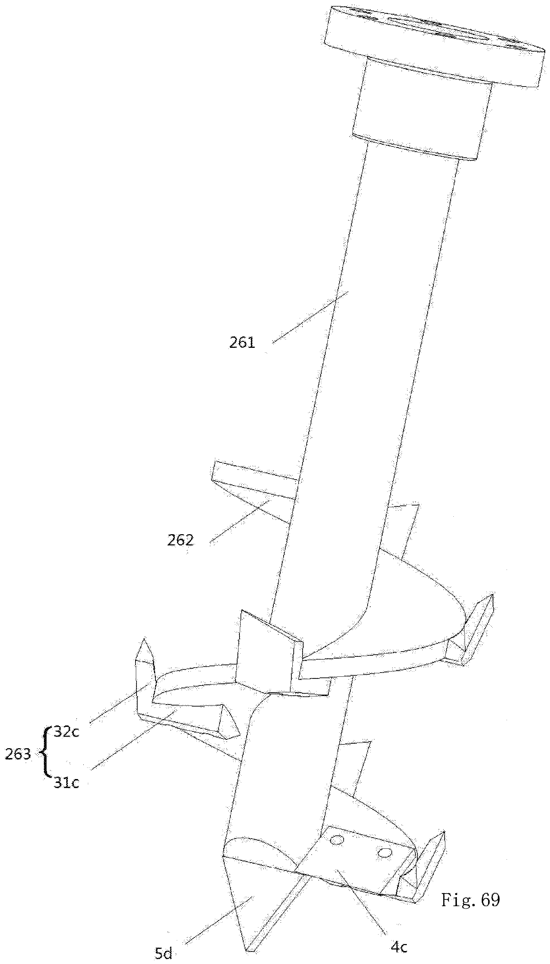

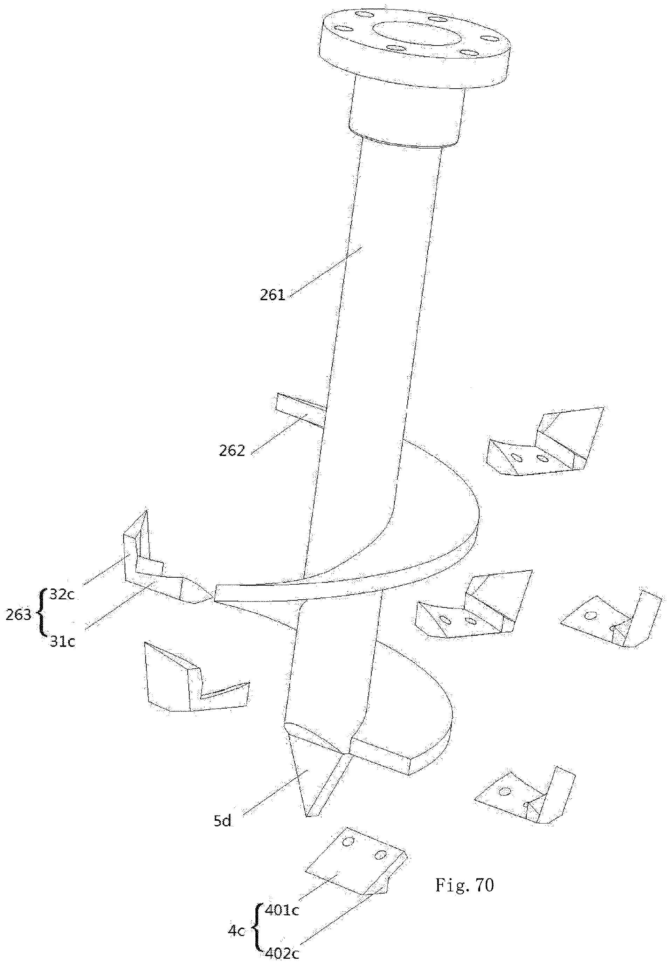

As shown in Figures 69 and 70, the direction of the present embodiment is subjected to the arrangement direction of the spiral drill bit of a subsoiling tillage machine which is convenient for piercing soil as shown in Figure 69. The spiral drill bit of a subsoiling tillage machine which is convenient for piercing soil comprises a drill rod 261 and a spiral piece which is wound on the lower part of the drill rod 261 and further comprises a first soil-piercing blade 4c, which is arranged on the tail part of the spiral piece 262 and located at the lower surface of the spiral piece 262. The present invention is simple in structure, the drill rod 261 moves forwards with the subsoiling tillage machine while rotating during the tillage operation, since the first soil-piercing blade 4c is arranged at the lower surface of the tail part of the spiral piece, it is convenient for the drill rod 261 to pierce the soil while rotating and at the same time, the spiral piece 262 can be effectively prevented from wearing, the service life of the spiral pieces 262 is prolonged and the strong practicality is achieved. The detachable connection of the first soil-piercing blade 4c and the spiral piece 262can be realized by fasteners such as bolts and it is convenient to mount and dismount and repair and replace at fixed periods. The drill rod 261 is connected with an output shaft of the transmission box of the subsoiling tillage machine via a flange.

In the present embodiment, the first soil-piercing blade 4c comprises a first soil-piercing blade body 401c and a first soil-piercing blade fixing section 402c formed by bending and extending horizontally the bottom of the first soil-piercing blade body 401c, the first soil-piercing blade fixing section 402c is connected to the lower surface of the spiral piece 262 and the first soil-piercing blade body 401c faces towards the top end of the drill rod 261. It is convenient for the first soil-piercing blade fixing section 402c to fixedly connect the spiral piece 262 with the first soil-piercing blade fixing section 402c, which also makes the structure stable and reliable, and the first soil-piercing blade body 401c faces towards the top end of the drill rod 261, the smooth soil piercing of the first soil-piercing blade 4c is effectively ensured and the tillage efficiency of the spiral drill bit of the present invention is greatly improved.

In the present embodiment, the first soil-piercing blade body 401c is connected with the first soil-piercing blade fixing section 402c to constitute an included angle of 120 degrees-150 degrees. The included angle of 120 degrees-150 degrees enables the first soil-piercing blade body 401c incline outwards with respect to the circumference of the spiral piece 262, it is convenient for the first soil-piercing blade body 401c to pierce the soil and the soil-piercing efficiency of the present invention is improved.

In the present embodiment, the spiral drill bit further comprises blades 263 which are arranged at the circumferential edge of the spiral piece 262. When the tillage is performed using the spiral drill bit of the present invention, the soil is ridged upwards due to the rotation of the spiral piece 262 and simultaneously, the blades 263 can assist the spiral piece 262 in cutting, rubbing and smashing automatically upwards ridged soil under the action of the spiral piece 262 and thus the efficiency in cutting soil layers using the spiral drill bit and the working efficiency of the subsoiling tillage machine are greatly improved; in addition, it is more advantageous to store more air inside the soil. The blades 263 can be connected to the spiral piece 262 via fasteners such as bolts and the first soil-piercing blade 4c can not only prevent the spiral piece 262 from wearing, simultaneously it can also protect the mounting nut for mounting blades 263 at the lower surface of the spiral piece 262.

In the present embodiment, the number of the blades 263 are at least two and the at least two blades 263 are arranged along the spiral direction of the spiral piece 262 at intervals. More the number of the blades 263, more advantageous to assist the spiral piece 262 in cutting and smashing the soil, thereby further improving the tillage efficiency.

In the present embodiment, each blade 263 comprises a blade body 32c and a fixing section 31c formed by bending and extending horizontally the bottom of the blade body 32c, the fixing section is fixedly connected to the lower surface of the spiral piece 262 and the blade body 32c faces towards the top end of the rod body 261. The blade body 32c facilitates the cutting of the soil and the fixing section 31c facilitates the fixing connection between the blade body 32c and the spiral piece 262 so that the structure is firm and reliable and the cutting effect is ensured.

In the present embodiment, the blade body 32c is connected with the fixing section 31c to constitute an included angle of 90 degrees-120 degrees. The included angle of 90 degrees-120 degrees enables the blade body 32c incline outwards with respect to the circumference of the spiral piece 262, the contact area of the blade body 32c and the soil is increased, it is advantageous to the blade body 32c to cut the soil, thereby improving the tillage efficiency.

In the present embodiment, a drill tip 5d is arranged at the bottom end of the drill rod 261 and is in an inverted triangle. The drill tip 5d can be welded on the drill rod 261 or can also be connected by a fastener. By adopting the drill tip 5d, it is more convenient to pierce the soil and a water storage tank is formed in the lower layer of the tilled soil for water storage so that the crops are drought resistant. In addition, it is more advantageous for the drill tip 5d in an inverted triangle to the reduction of the resistance produced when the present invention pierces the soil.

### Embodiment 22

The difference between the present embodiment and embodiment 21 lies in: in the present embodiment, the diameter of the spiral piece 262 is gradually changed from large to small along the drill rod 261 towards the direction of the bottom end of the drill rod 261. According to the present embodiment, the traditional spiral piece 262 of which the diameter from top to bottom is consistent in the size is broken and by adopting the spiral piece 262 having larger diameter on the upper part than that on the lower part, the soil-piercing effect of the spiral drill head of the present invention is improved and furthermore, the soil at the surface layer of the land can be smashed finer than the deep soil which meets the agronomic requirements.

The present embodiment has the same other structures as those of the embodiment 21 which need not be repeated here.

### Embodiment 23

The difference between the present embodiment and embodiment 21 lies in: in the present embodiment, the drill rod 261 has a cross-section in the shape of polygon. The polygon can be triangle, square, pentagon or hexagon, etc. By adopting the drill rod 261 in the shape of polygon, the polygonal angle of the drill rod 261 corresponds to a cutter during the rotation and has soil-cutting effect and thus when the subsoiling tillage machine walks forward, the polygonal drill rod 261 can walk as loosening the soil and the tillage efficiency is further improved. The polygon is not limited to a triangle, square, pentagon or hexagon as long as the drill rod 261 can facilitate to cut soil when it is rotating.

### Embodiment 24

As shown in Figures 1, 2, 20 and 21, a connection device 3 comprises a connection frame 31, a connection supporting plate 32, a guide sliding rod 33, a connecting nut 34, a sliding sleeve frame 35 and a lifting oil cylinder 36.

As shown in Figure 21, the connection frame 31 comprises a plurality of horizontal beams 311, longitudinal beams 312, vertical beams 313, a first inclined strut 314 and a second inclined strut 315. The longitudinal beams 312 consist of lower longitudinal beams and upper longitudinal beams, wherein the lower longitudinal beams are welded at both ends of the horizontal beams 311 and of course, the lower longitudinal beams can also be welded in the middle part of the horizontal beams 311; the vertical beams 313 are welded on the lower longitudinal beams close to the rear section; the upper longitudinal beams are welded on the upper end of the vertical beam; a first inclined strut 314 is welded between the front end of the horizontal beam and the upper end of the vertical beam; the second inclined strut 315 is welded between the vertical beams. The connection frame 31 with such structure is simple in structure, good in forcing performance and can beat heavier smash-ridging device.

The horizontal beams 311, the longitudinal beams 312, the vertical beams 313, the first inclined strut 314 and the second inclined strut 315 all use square tubes and are internally communicated with each other, so that oil chambers are formed within the horizontal beams 311, the longitudinal beams 312, the vertical beams 313, the first inclined strut 314 and the second inclined strut 315 and are used for being filled with diesel. In this way, the volume of the oil tank is increased using the existing structure.

As shown in Figure 21, the connection supporting plate 32 is welded on the lower longitudinal beams and the upper longitudinal beams, respectively.

A guide sliding rod 33 passes through the connection supporting plate 32 and the guide sliding rod comprises a guide sliding rod body and a chrome coating, which is coated on the outer surface of the guide sliding rod body. By coating the chrome coating, the wear resistance, corrosion resistance and so on can be improved.

A connecting nut 34 is arranged below the lower connection supporting plate on the guide sliding rod 33; a connecting nut 34 is arranged above the upper connection supporting plate on the guide sliding rod 33 and thus the guide sliding rod 33 can be very conveniently mounted and dismounted using the upper and lower connecting nuts 34.

As shown in Figure 21, the sliding sleeve frame 35 comprises a sliding sleeve 351, a smash-ridging device connection seat 352 and a lifting oil cylinder seat 353. The sliding sleeve 351 sleeves the guide sliding rod 33 slidely, dustproof rings are arranged between the sliding sleeve 351 and the guide sliding rod 33 and located on the upper and lower ends of the sliding sleeve 351, respectively, the dustproof rings have dustproof and waterproof effects, can prevent the lubricating oil between the sliding sleeve 351 and the guide sliding rod 33 from losing in a short time, thereby improving the lubricating performance. The smash-ridging device connection seat 352 is welded on the sliding sleeve 351, and a mounting hole 3521 is formed in the smash-ridging device connection seat 352. The lifting oil cylinder seat 353 is welded on the smash-ridging device connection seat 352 and comprises a lifting oil cylinder seat body 3531 and a rib plate 3532 which is welded between the lifting oil cylinder seat body and the smash-ridging device connection seat 352.

An oil cylinder articulated seat 37 is fixed on the lower connection supporting plate, on which the piston rod of the lifting oil cylinder 36 is articulated, and the lower end of the lifting oil cylinder body is fixed on the lifting oil cylinder seat 353. For the subsoiling smash-ridging machine of the present invention, since it is required that the stroke of the lifting oil cylinder is relatively long, the lifting oil cylinder 36 has larger length, the distance between the fixation point of the lifting oil cylinder body and the articulated seat 37 is reduced when the lower end of the lifting oil cylinder body is fixed on the lifting oil cylinder seat 353 and it is uneasy for the lifting oil cylinder 36 to bent and deform when it works so that it has good load-carrying capacity; in addition, by adopting the fixing structure compared to the structure that the upper end of the lifting oil cylinder body is fixed to the lifting oil cylinder seat, the height of the connection frame is much lower, thereby decreasing the vertical height of the connection frame as well as the height of the entire subsoiling smash-ridging machine.

The smash-ridging device is fixed on the smash-ridging device connection seat 353 through a bolt which passes through the mounting hole 3521, in this way, it is convenient and rapid to mount the smash-ridging device and the smash-ridging device can be dismounted integrally.

The assembly method of the connection device 3 is as follows:
(1) welding horizontal beams 311, longitudinal beams 312, vertical beams 313, a first inclined strut 314 and a second inclined strut 315 together to form a connection frame 31.
(2) welding a connection supporting plate 32 on a lower longitudinal beam and an upper longitudinal beam, respectively.
(3) making one end of a guide sliding rod 33 downwards pass through the upper connection supporting plate, then enabling a sliding sleeve 351 of a sliding sleeve frame 35 sleeve the guide sliding rod 33, after that, sequentially moving the guide sliding rod 33 downwards to pass through the lower connection supporting plate, and then locking the connecting nut 34 at the upper end of the guide sliding rod 33 and the connecting nut 34 at the lower end of the guide sliding rod 33 to fix the guide sliding rod 33, respectively.
(4) fixing an articulated seat 37 on the lower connection supporting plate, fixing a cylinder body of a lifting oil cylinder 36 on a lifting oil cylinder seat 353, and articulating the piston rod of the lifting oil cylinder 36 onto the articulated seat 37.

### Embodiment 25

As shown in Figure 1, Figure 2 and Figure 22, the ditching device 4 comprises swing arms 41, a supporting arm 42, a turn-over oil cylinder 43, adjusting seats 44, a ditching arm 45 and a ditching plough 46.

An articulated seat 47 is fixed on the extended mounting flange 250, one end of each swing arm 41 is articulated on the articulated seat 47, and the other end of the swing arm 41 is articulated on the piston rod of the turn-over oil cylinder 43. The swing arms are two swing arms parallel to each other, the supporting arm 42 is welded between the central sections of the two swing arms and has a regular polygon section. The cylinder body of the turn-over oil cylinder 43 is articulated on the third connection lug 230.

As shown in Figure 23, the adjusting seats 44 comprise lower clamping seats 441 and upper clamping seats 442, which are clamped on the supporting arm 42 and are connected through bolts; when the bolts are loosened, the adjusting seats 44 can move on the supporting arm transversely and when the bolts are locked, the adjusting seats 44 can be fixed on the supporting arm 42 and thus the purpose that the transverse positions of the adjusting seats are adjusted can be achieved.

Each adjusting seat comprises two lower clamping seats 441 and two upper clamping seats 442, and each lower clamping seat 441 and each upper clamping seat 442 are respectively provided with location holes through which an adjusting rod 47 passes. The ditching arm 45 is clamped between the two upper clamping seats, meanwhile is clamped between the two lower clamping seats, and is provided with a plurality of adjusting holes 451, through which the adjusting rod 47 passes. If there is a need to adjust the position of the ditching arm relative to the adjusting seats 44, the adjusting rod 47 is firstly loosened, the ditching arm 45 is adjusted to the desired position and then the adjusting rod 47 passes through the location holes and the corresponding adjusting holes and thus the adjustment is performed very conveniently and rapidly. As shown in Figure 25 to 27, the ditching plough 46 is fixed at the lower end of the ditching arm 45. The ditching plough comprises a first ditching plough plate 461, two sides of which are provided with a second ditching plough plate 462 and a third ditching plough plate 463, U-shaped grooves 464 are formed among the first ditching plough plate 461, the second ditching plough plate 462 and the third ditching plough plate 463, transversal reinforced ribs and vertical reinforced ribs are arranged in the U-shaped grooves and are cross to each other, a plough tip 467 is formed by the crossing of the lower end of the first ditching plough plate 461 with the lower end of the second ditching plough plate 462 and the lower end of the third ditching plough plate 463, the plough tip 467 has a triangular cross section and has a thickness larger than the thicknesses of the second ditching plough plate 462 and the third ditching plough plate 463. Since the plough tip can come in contact with harder obstacles such as stones, tree roots or bushes in the soil during tillage and the plough tip 467 has a thickness larger than the thicknesses of the second ditching plough plate 462 and the third ditching plough plate 463, the plough tip 467 has higher strength, it is uneasy to cause the damage to the plough tip 467 and thus the plough has firm structure, at the same time, since the U-shaped grooves 464 are formed among the first ditching plough plate 461, the second ditching plough plate 462 and the third ditching plough plate 463, the entire plough structure has lower weight and due to the arrangement of the transversal reinforced ribs 465 and vertical reinforced ribs 466 are arranged in the U-shaped grooves 464 so that the plough structure is very firm.

The assembly method of the ditching device 4 is as follows:
(1) welding the supporting arm 42 between two swing arms, articulating one end of the turn-over oil cylinder 43 onto the third connection lug 230, then articulating one end of the swing arms 52 onto the articulated seat 47 and the other end of the swing arms onto the piston rod of the turn-over oil cylinder 43.
(2) mounting the adjusting seats 44 onto the supporting arm 52 which comprises: clamping the two lower clamping seats 441 and the two upper clamping seats 442 on the supporting arm 52, connecting the lock bolt between the upper and lower clamping seats at the left side, connecting the lock bolt between the upper and lower clamping seats at the right side, at the moment the lock bolt does not lock tightly the upper and lower clamping seats, thus adjusting the position of the supporting arm 42 on the adjusting seats 44 as desired and then screwing the lock cut so as to prevent the adjusting seats 44 from moving relative to the supporting arm 42.
(3) welding the ditching plough 46 on the ditching arm 45, mounting the upper end of the ditching arm 45 between the upper and lower clamping seats at the left side and the upper and lower clamping seats at the right side of the adjusting seat, adjusting the position of the ditching arm as desired and then positioning and fixing the ditching arm using the adjusting rod to pass through the location hole and the corresponding adjusting hole.

Above assembly method of the ditching device is simple in process and convenient to operate and the position of the ditching plough can be adjusted as desired.

### Embodiment 26

As shown in Figures 28 and 29, a foldaway soil flattening device comprises a raking plate 52, connection arms 58 connected to the raking plate 52 and an adjusting device which is used to adjust the turn-over angle of the raking plate 52. The connection arms 58 are arranged at both ends of the raking plate 52, the lower ends of the connection arms 58 are fixedly connected with the raking plate 52, and the upper ends of the connection arms are articulated with the flattening device connection lug 210 for supporting and connecting the raking plate 52. The raking plate 52 is in the form of a long strip, and is formed by successively connecting three flat plate units 521; each flat plate unit 521 comprises a connection section 5211 and a serrated section 5212 arranged at the lower end of the connection section 5211, and the connection sections 5211 of adjacent flat plate units 521 are connected through a hinge so that the flat plate units 521 can be turned over and folded; when the flat plate units 521 are unfolded, in order to fix the positions of the flat plate units 521, an interlocking device which limits the flat plate units to be turned over is arranged between the connection sections 5211 of the adjacent flat plate units 521. The interlocking device comprises a first circular ring 59 arranged at the side edge of the flat plate units 521, a second circular ring 511 arranged at the side edge of the adjacent flat plate units 521 and an inserted pin 510 which can pass through the first circular ring 59 and the second circular ring 511, inserted holes of the first circular ring 59 and second circular ring 511 are longitudinal, after two adjacent flat plate units 521 are unfolded, the first circular ring 59 and the second circular ring 511 are aligned up and down and the inserted pin 510 successively is inserted into the first circular ring 59 and second circular ring 511 from top to bottom to lock two adjacent flat plate units 521. The adjusting device comprises an articulated seat, a screw rod, a first spring, a second spring and a nut, wherein the lower end of the screw rod is articulated with the raking plate 52, the upper end of the screw rod passes through the articulated seat and then is connected with the nut, the first spring sleeves the screw rod and is located between the raking plate 52 and the articulated seat, and the second spring sleeves the screw rod and is located between the articulated seat and the nut, the elastic force of the first spring acts on the raking plate 52 so that the raking plate 52 is more powerful when the soil is flattened and in addition, the turn-over angle of the raking plate 52 can be changed by adjusting the positions of adjusting nuts.

The operating principle of the flattening device is as follows: the flattening device is used in conjunction with the smash-ridging device which performs smash-ridging on the soil so that the soil becomes soft and out of flatness; the raking plate 52 can be turned over by the adjusting device and come in contact with the ground, the subsoiling smash-ridging machine drives the flattening device to walk thus the raking plate 52 of the flattening device can flatten the land; in addition, since smashed soil will splash when the spiral drill rod of the smash-ridging device performs smash-ridging on the soil, the raking plate 52 arranged at one side of the smash-ridging device can have the effect of preventing the soil from splashing in all directions. Since the raking plate 52 is in the form of a long strip, the width of the raking plate 52 can be adjusted through adjacent articulated flat plate units 521, thus the width of the raking plate 52 can be adjusted according to the size of the area of the land.

### Embodiment 27

As shown in Figure 30 and 31, the straw returning device 6 comprises a straw returning articulated seat 61, a straw returning connecting rod mechanism 62, a straw returning hood 63, a weeding cutter 64, a straw returning oil cylinder 65 and a straw returning driving mechanism.

As shown in Figure 30 and 31, the straw returning connecting rod mechanism 62 comprises a first straw returning connecting rod 621 and a second straw returning connecting rod 622; one end of the first straw returning connecting rod 621 is articulated on the straw returning articulated seat 611, and the other end of the first straw returning connecting rod 621 is articulated on the straw returning hood 63; one end of the second straw returning connecting rod 622 is articulated on the central section of the first straw returning connecting rod, and the other end of the second straw returning connecting rod 622 is articulated on the straw returning hood 63; the weeding cutter 64 is arranged in the straw returning hood 63; one end of the straw returning oil cylinder 65 is articulated on the straw returning articulated seat 61, and the other end is articulated on the straw returning hood 63; the straw returning driving mechanism comprises an electrical motor, a driving gear wheel and a driven gear wheel, wherein the electrical motor is fixed on the straw returning hood 63, the driving gear wheel is mounted on the output shaft of the electrical motor, the driven gear wheel is mounted on the shaft of the weeding cutter 64, the driving gear wheel and the driven gear wheel are meshed with each other and a limiting roller 66 is arranged at the lower front of the straw returning hood.

## Claims

1. An extended type subsoiling smash-ridging machine, **characterized in that**: it comprises a machine body, a smash-ridging device, a connection device, a ditching device, a flattening device and a straw returning device;
wherein the machine body comprises a walking mechanism, a chassis, a diesel engine component, a hydraulic oil tank, a cooler and a driving cab;
the walking mechanism comprises two crawler components which are arranged opposite to each other and the crawler component comprises a wheel stand, a driving wheel, a driven wheel, a lower guide wheel, an upper guide wheel, a crawler and a walking drive device;
the wheel stand comprises a wheel stand body and a wheel stand connection lug; the wheel stand connection lug is attached to the front end of the wheel stand body; a driven wheel accommodation groove is formed in the rear end of the wheel stand body, and a first mounting hole through the driven wheel accommodation groove is provided in the wheel stand body; a lower guide wheel accommodation groove is formed by extending upwardly at the bottom surface of the wheel stand body, a second mounting hole through the lower guide wheel accommodation groove is provided in the wheel stand body, and a second boss is arranged on the exterior side of the wheel stand body at the position corresponding to the second mounting hole; an upper guide wheel accommodation groove is formed by extending downwardly at the top surface of the wheel stand body, a third mounting hole through the upper guide wheel accommodation groove is provided in the wheel stand body, and a third boss is arranged on the exterior side of the wheel stand body at the position corresponding to the third mounting hole;
the driving wheel is mounted on the wheel stand connection lug through a bearing, and the walking drive device is fixed on the wheel stand connection lug;
one portion of the driven wheel is located within the driven wheel accommodation groove, and the driven wheel is mounted by a mounting shaft passing through the first mounting hole;
one portion of the lower guide wheel is located within the lower guide wheel accommodation groove, a lower part of the lower guide wheel protrudes from the wheel stand body, and the lower guide wheel is mounted by a mounting shaft passing through the second mounting hole;
one portion of the upper guide wheel is located within the upper guide wheel accommodation groove, an upper part of the upper guide wheel protrudes from the wheel stand body, and the upper guide wheel is mounted by a mounting shaft passing through the third mounting hole;
the crawler sleeves the driving wheel, the driven wheel, the lower guide wheel and the upper guide wheel;
the chassis comprises a supporting platform, inclined strut plates and a supporting rib;
the supporting platform is welded on the wheel stand; the inclined strut plates are welded on the wheel stand and the supporting platform; the supporting rib is located in the front of the supporting platform, and extends from the inclined strut plate at one side via the bottom of the supporting platform to the inclined strut plate at the other side;
the diesel engine component and the driving cab are mounted in the front of the supporting platform;
the diesel engine component comprises a diesel engine frame, a diesel engine, a wind tunnel box, a hydraulic pump and a diesel engine hood;
the diesel engine frame is mounted on the chassis; the diesel engine is fixed on the diesel engine frame; the wind tunnel box is mounted in the front end of the diesel engine frame, and is located in front of the diesel engine; the hydraulic pump is connected to the output shaft of the diesel engine; the diesel engine and the wind tunnel box are covered with the diesel engine hood;
the smash-ridging device comprises a smash-ridging box, a driving mechanism, transmission shafts, power input members, bearings and a spiral drill rod;
the smash-ridging box comprises a bottom plate, side plates and a top plate, the lower end surfaces of the side plates are welded on the bottom plate, and the top plate is welded on the upper end surfaces of the side plates;
at least two lower through-holes are formed in the bottom plate, a lower bearing seat extending upwardly is welded on the inner walls of the lower through-holes, the lower bearing seat protrudes from the upper surface of the bottom plate, the height of protruding part of the lower bearing seat is larger than the width of two bearings, bearings are mounted in the lower bearing seat, rib plates are welded between adjacent lower bearing seats, and lubricating oil passages are provided between the rib plates and the bottom plate;
the lower bearing seat extends downwardly protruding from the lower surface of the bottom plate so that a lower boss is formed;
at least two upper through-holes corresponding to the lower through-holes in the vertical direction are formed in the top plate, an upper bearing seat extending downwardly is arranged on the inner walls of the upper through-holes, the length of the lower bearing seat is larger than that of the upper bearing seat, and a bearing is mounted in the upper bearing seat; the upper bearing seat extends upwardly protruding from the upper surface of the top plate so that an upper boss is formed;
one of the side plates comprising a plate body is arranged in the front of the smash-ridging box, manholes are formed in the plate body, a flange is arranged around the manhole on the plate body, mounting holes are provided in the plate body and the flange, and a step is formed between the inside of the flange and the plate body;
the flange is configured with a seal groove;
a first bearing part is arranged on the lower surface of the bottom plate, a first connection lug is welded on the side plates, a first bearing plate extending inwardly is arranged on the first connection lug, and the first bearing plate supports the first bearing part;
a second bearing part is arranged on the lower surface of the bottom plate, a flattening device connection lug is welded on the side plates, a second bearing plate extending inwardly is arranged on the flattening device connection lug, the second bearing plate supports the second bearing part; and the second bearing part and the first bearing part are arranged opposite to each other;
a first welding part is arranged on the top plate, a second connection lug is welded on the side plates, a second welding plate extending inwardly is arranged on the second connection lug, and the second welding plate is welded with the first welding part on the top plate; a third connection lug is welded on the top plate, a third welding plate extending downwardly is arranged on the third connection lug, a second welding part is provided on the side plates, and the third welding plate is welded with the second welding part;
an articulated seat is arranged on the plate body and comprises a connection seat and connection lugs which extend towards the direction away from the connection seat from the both sides of the connection seat, an accommodation groove is formed between two connection lugs, and the two connection lugs are arranged with an articulated hole respectively;
an extended mounting flange is arranged on the plate body; the driving mechanism is a hydraulic motor or an electrical machine, the driving mechanism is mounted on the top plate, the driving mechanism drives one of the transmission shafts to rotate, or the driving mechanism is correspondingly arranged on each transmission shaft, or the driving mechanisms are correspondingly arranged on some of the transmission shafts;
bearings are mounted in the lower bearing seat, a bearing is mounted in the upper bearing seat, the bearings are conical bearings, the bearings located within the lower bearing seat are mounted in an opposite direction to the bearing located within the upper bearing seat;
the transmission shafts are mounted between the bearings located within the lower bearing seat and the bearing located within the upper bearing seat, and the lower ends of the transmission shafts extend out of the smash-ridging box; the transmission shafts are provided with a feeding hole axially passing through the transmission shafts;
the power input member is configured as a gear which is mounted on each of the transmission shafts, and the lower surface of the gear abuts against the shaft shoulders of the transmission shafts; a shaft sleeve is arranged between the inner ring of the conical bearing located within the upper bearing seat and the gear;
a forward lock nut is connected to the transmission shaft by screw thread above the conical bearing in the upper, the forward lock nut is in contact with the inner ring of the conical bearing in the upper; a reverse lock nut is arranged above the forward lock nut on the transmission shaft;
the spiral drill rod comprises a rod body, a spiral piece and a blade; the rod body is connected to the transmission shaft through a flange, the rod body has an axially extending hole which is communicated with feeding holes on the transmission shaft, and a discharging hole, which is communicated with the hole and extends radially, is arranged on the rod body; the spiral piece is welded on the rod body, and the blade is fixed on the spiral piece;
one end of the transmission shaft is a conical shaft, at one end of which a screw rod is arranged; a conical hole matching with the conical shaft and a through-hole through which the screw rod passes, are formed in the flange, on which a counterbore is formed at an opposite side to the conical hole, and the conical hole, the through-hole and the counterbore are communicated with each other; the conical shaft is arranged in the conical hole, the screw rod passes through the through-hole and extends into the counterbore, in which a lock nut connected with the screw rod is arranged;
a gland is fixed on the screw rod by at least two lock bolts; a boss is provided on the upper surface of the gland and is pressed fit on the end surface of the lock nut, a gap is reserved between the gland and the end surface of the screw rod, and the gland and the counterbore are transition fit; a counterbore is formed in the gland, the head of the lock bolt is located in the counterbore;
the connection device comprises a connection frame, a connection supporting plate, a guide sliding rod, a connecting nut, a sliding sleeve frame and a lifting oil cylinder;
the connection frame comprises a plurality of horizontal beams, longitudinal beams, vertical beams, a first inclined strut and a second inclined strut; the longitudinal beams consist of lower longitudinal beams and upper longitudinal beams, wherein the lower longitudinal beams are welded at both ends of the horizontal beam or are welded on the central section of the horizontal beam; the vertical beams are welded on the lower longitudinal beams close to the rear section; the upper longitudinal beams are welded on the upper end of the vertical beam; a first inclined strut is welded between the front end of the horizontal beam and the upper end of the vertical beam; the second inclined strut is welded between the vertical beams;
the horizontal beams, the longitudinal beams, the vertical beams, the first inclined strut and the second inclined strut all use square tubes and are internally communicated with each other, so that oil chambers are formed within the horizontal beams, the longitudinal beams, the vertical beams, the first inclined strut and the second inclined strut;
the lower longitudinal beams and the upper longitudinal beams are respectively welded with the connection supporting plate;
the guide sliding rod passes through the connection supporting plate, and the guide sliding rod comprises a guide sliding rod body and a chrome coating which is coated on the outer surface of the guide sliding rod body;
a connecting nut is arranged below the lower connection supporting plate on the guide sliding rod; a connecting nut is arranged above the upper connection supporting plate on the guide sliding rod;
the sliding sleeve frame comprises a sliding sleeve, a smash-ridging device connection seat and a lifting oil cylinder seat; the sliding sleeve slidely sleeves the guide sliding rod, and dustproof rings are arranged between the sliding sleeve and the guide sliding rod and are respectively located on the upper and lower ends of the sliding sleeve; the smash-ridging device connection seat is welded on the sliding sleeve, and a mounting hole is formed in the smash-ridging device connection seat; the lifting oil cylinder seat is welded on the smash-ridging device connection seat and comprises a lifting oil cylinder seat body and a rib plate which is welded between the lifting oil cylinder seat body and the smash-ridging device connection seat;
an oil cylinder articulated seat is fixed on the connection supporting plate at the lower end, on which the piston rod of the lifting oil cylinder is articulated, and the lower end of the lifting oil cylinder body is fixed on the lifting oil cylinder seat;
the smash-ridging device is fixed on the smash-ridging device connection seat through a bolt which passes through the mounting hole;
the ditching device comprises swing arms, a supporting arm, a turn-over oil cylinder, adjusting seats, a ditching arm and a ditching plough;
an articulated seat is fixed on the extended mounting flange, one end of each swing arm is articulated on the articulated seat, and the other end of the swing arm is articulated on the piston rod of the turn-over oil cylinder; the swing arms are configured as two swing arms parallel to each other, the supporting arm is welded between the central sections of the two swing arms and has a regular polygon section; the cylinder body of the turn-over oil cylinder is articulated on the third connection lug;
the adjusting seats comprise lower clamping seats and upper clamping seats, which are clamped on the supporting arm and connected through bolts;
each adjusting seat comprises two lower clamping seats and two upper clamping seats, and each lower clamping seat and each upper clamping seat are respectively provided with location holes through which an adjusting rod passes; the ditching arm is clamped between the two upper clamping seats, meanwhile is clamped between the two lower clamping seats, and is provided with a plurality of adjusting holes, through which the adjusting rod passes;
the ditching plough is fixed at the lower end of the ditching arm; the ditching plough comprises a first ditching plough plate, at two sides of which a second ditching plough plate and a third ditching plough plate are arranged, a U-shaped groove is formed among the first ditching plough plate, the second ditching plough plate and the third ditching plough plate, transversal reinforced ribs and vertical reinforced ribs are arranged in the U-shaped groove and are cross to each other, a plough tip is formed by the crossing of the lower end of the first ditching plough plate with the lower end of the second ditching plough plate and the lower end of the third ditching plough plate, the plough tip has a triangular cross section and has a thickness larger than the thicknesses of the second ditching plough plate and the third ditching plough plate;
the flattening device comprises a raking plate, connection arms connected to the raking plate and an adjusting device which is used to adjust the turn-over angle of the raking plate; the connection arms are arranged at both ends of the raking plate, the lower ends of the connection arms are fixedly connected with the raking plate, and the upper ends of the connection arms are articulated with the flattening device connection lug; the raking plate is in the form of a long strip, and is formed by successively connecting three flat plate units; each flat plate unit comprises a connection section and a serrated section arranged at the lower end of the connection section, and the connection sections of adjacent flat plate units are connected through a hinge; an interlocking device for limiting the flat plate units to be turned over is arranged between the connection sections of the adjacent flat plate units; the interlocking device comprises a first circular ring arranged at the side edge of the flat plate unit, a second circular ring arranged at the side edge of the adjacent flat plate unit and an inserted pin which can pass through the first circular ring and the second circular ring; the adjusting device comprises an articulated seat, a screw rod, a first spring, a second spring and a nut, the lower end of the screw rod is articulated with the raking plate, the upper end of the screw rod passes through the articulated seat and then is connected with the nut, the first spring sleeves the screw rod and is located between the raking plate and the articulated seat, and the second spring sleeves the screw rod and is located between the articulated seat and the nut;
the straw returning device comprises a straw returning articulated seat, a straw returning connecting rod mechanism, a straw returning hood, a weeding cutter, a straw returning oil cylinder and a straw returning driving mechanism;
the straw returning connecting rod mechanism comprises a first straw returning connecting rod and a second straw returning connecting rod; one end of the first straw returning connecting rod is articulated on the straw returning articulated seat, and the other end of the first straw returning connecting rod is articulated on the straw returning hood; one end of the second straw returning connecting rod is articulated on the central section of the first straw returning connecting rod, and the other end of the second straw returning connecting rod is articulated on the straw returning hood; the weeding cutter is arranged within the straw returning hood; one end of the straw returning oil cylinder is articulated on the straw returning articulated seat, and the other end is articulated on the straw returning hood; the straw returning driving mechanism comprises an electrical motor, a driving gear wheel and a driven gear wheel, the electrical motor is fixed on the straw returning hood, the driving gear wheel is mounted on the output shaft of the electrical motor, the driven gear wheel is mounted on the shaft of the weeding cutter, the driving gear wheel and the driven gear wheel are meshed with each other and a limiting roller is arranged at the lower front of the straw returning hood.

2. An extended type subsoiling smash-ridging machine, **characterized in that**, comprising a machine body, a smash-ridging device, a connection device, a ditching device, a flattening device and a straw returning device;
wherein the machine body comprises a walking mechanism, a chassis, a diesel engine component, a hydraulic oil tank, a cooler and a driving cab; the chassis is mounted on the walking mechanism, the diesel engine component, the hydraulic oil tank and the driving cab are mounted on the chassis, and the cooler is mounted on the hydraulic oil tank;
the smash-ridging device comprises a smash-ridging box, a driving mechanism, a bearing, transmission shafts, power input members and a spiral drill rod;
the smash-ridging box comprises a bottom plate, side plates and a top plate, the lower end surfaces of the side plates are welded on the bottom plate, and the top plate is welded on the upper end surfaces of the side plates;
at least two lower through-holes are formed in the bottom plate, lower bearing seats extending upwardly are welded on the inner walls of the lower through-holes, the lower bearing seats protrude from the upper surface of the bottom plate, the height of protruding part of the lower bearing seat is larger than the width of two bearings, bearings are mounted in the lower bearing seats, rib plates are welded between adjacent lower bearing seats, and lubricating oil passages are provided between the rib plates and the bottom plate;
at least two upper through-holes corresponding to the lower through-holes in the vertical direction are formed in the top plate, an upper bearing seat extending downwardly is arranged on the inner walls of the upper through-holes, the length of the lower bearing seat is larger than that of the upper bearing seat, and a bearing is mounted in the upper bearing seat;
the driving mechanism is mounted on the top plate and drives the transmission shaft to rotate;
the transmission shafts are mounted between the bearings located within the lower bearing seat and the bearing located within the upper bearing seat, and the lower ends of the transmission shafts extend out of the smash-ridging box;
each power input member is mounted on the transmission shafts, and the lower surface of each power input member abuts against the shaft shoulders of the transmission shafts;
the spiral drill rod is mounted at the lower ends of the transmission shafts; the connection device is connected between the chassis and the smash-ridging device;
the ditching device comprises swing arms, a supporting arm, a turn-over oil cylinder, adjusting seats, a ditching arm and a ditching plough; the number of the swing arm is two, the supporting arm is welded between central sections of the two swing arms, one end of the swing arms is articulated on the lower end of the smash-ridging box, the other end is articulated on the piston rod of the turn-over oil cylinder, and the cylinder body of the turn-over oil cylinder is articulated on the upper end of the smash-ridging box; the adjusting seat is mounted on the supporting arm, the ditching arm is mounted on the adjusting seat, and the ditching plough is mounted on the ditching arm;
the flattening device comprises a raking plate, connection arms which are connected to the raking plate and a adjusting device which is used to adjust the turn-over angle of the raking plate; the connection arms are arranged at both ends of the raking plate, the lower ends of the connection arms are fixedly connected with the raking plate, the upper ends of the connection arms are articulated with the smash-ridging box, and the adjusting device is arranged between the raking plate and the smash-ridging box.

3. The extended type subsoiling smash-ridging machine according to claim 2, **characterized in that**, the walking mechanism comprises two crawler components which are arranged opposite to each other and the crawler component comprises a wheel stand, a driving wheel, a driven wheel, a lower guide wheel, an upper guide wheel, a crawler and a walking drive device; wherein the driving wheel is mounted at one end of the wheel stand, the driven wheel is mounted at the other end of the wheel stand, the lower guide wheel is mounted at the lower part of the wheel stand, the upper guide wheel is mounted at the upper part of the wheel stand, the crawler sleeves the driving wheel, the driven wheel, the lower guide wheel and the upper guide wheel, and the walking drive device is mounted on the wheel stand and can drive the driving wheel to rotate;
the chassis comprises a supporting platform, inclined strut plates and a supporting rib; the supporting platform is welded on the wheel stand; the inclined strut plates are welded on the wheel stand and the supporting platform; the supporting rib is located in the front of the supporting platform, and extends from the inclined strut plate at one side via the bottom of the supporting platform to the inclined strut plate at the other side; and two rib plates parallel to each other are arranged at the rear bottom of the inclined strut plates.

4. The extended type subsoiling smash-ridging machine according to claim 2, **characterized in that**, the lower bearing seat extends downwardly protruding from the lower surface of the bottom plate to form a lower boss, the lower boss is used to mount a lower bearing end cover; the upper bearing seat extending upwardly protruding from the upper surface of the top plate to form an upper boss, the upper boss is used to mount an upper bearing end cover.

5. The extended type subsoiling smash-ridging machine according to claim 2, **characterized in that**, one of the side plates comprising a plate body is arranged in the front of the smash-ridging box, manholes are formed in the plate body, a flange is arranged around the manhole on the plate body, mounting holes are provided in the plate body and the flange, and a step is formed between the inside of the flange and the plate body; and an extended mounting flange is arranged on the plate body.

6. The extended type subsoiling smash-ridging machine according to claim 2, **characterized in that**, a first bearing part is arranged on the lower surface of the bottom plate, a first connection lug is welded on the side plate, the first bearing plate extending inwardly is arranged on the first connection lug and the first bearing plate supports the first bearing part; a second bearing part is arranged on the lower surface of the bottom plate, a flattening device connection lug is welded on the side plate, a second bearing plate extending inwardly is arranged on the flattening device connection lug and the second bearing plate supports the second bearing part; a first welding part is arranged on the top plate, a second connection lug is welded on the side plate, a second welding plate extending inwardly is arranged on the second connection lug, and the second welding plate is welded with the first welding part on the top plate; a third connection lug is welded on the top plate, a third welding plate extending downwardly is arranged on the third connection lug, a second welding part is welded on the side plates, and the third welding plate is welded with the second welding part; an articulated seat is arranged on the plate body and comprises a connection seat and connection lugs which extend towards the direction away from the connection seat from the both sides of the connection seat, an accommodation groove is formed between two connection lugs, and the two connection lugs are respectively provided with articulated holes.

7. The extended type subsoiling smash-ridging machine according to claim 2, **characterized in that**, bearings are configured as conical bearings, the conical bearings located within the lower bearing seats is forwardly mounted and the conical bearing located within the upper bearing seat is reversely mounted; a shaft sleeve sleeves between each power input member and the conical bearing in the upper on the transmission shaft; a forward lock nut is connected to the transmission shaft by screw thread above the conical bearing in the upper, the forward lock nut is in contact with the inner ring of the conical bearing in the upper; a reverse lock nut is arranged above the forward lock nut on the transmission shaft; the diameter of the transmission shaft on which the forward lock nut is arranged is larger than that of the transmission shaft on which the reverse lock nut is arranged, the upper surface of the forward lock nut is
higher than that of the transmission shaft on which the forward lock nut is arranged and the reverse lock nut is in contact with the forward lock nut.

8. The extended type subsoiling smash-ridging machine according to claim 2, **characterized in that**, one end of the transmission shaft is a conical shaft, at one end of which a screw rod is arranged; a conical hole matching with the conical shaft and a through-hole through which the screw rod passes, are formed in the flange, on which a counterbore is formed at an opposite side to the conical hole, and the conical hole, the through-hole and the counterbore are communicated with each other; the conical shaft is arranged in the conical hole, the screw rod passes through the through-hole and extends into the counterbore in which a lock nut connected with the screw rod is arranged; a gland is fixed on the screw rod via at least two lock bolts and is provided with a boss which presses against the lock nut.

9. The extended type subsoiling smash-ridging machine according to claim 2, **characterized in that**, the connection device comprises a connection frame, a connection supporting plate, a guide sliding rod, a connecting nut, a sliding sleeve frame and a lifting oil cylinder;
the connection frame comprises a plurality of horizontal beams, longitudinal beams, vertical beams, a first inclined strut and a second inclined strut; the longitudinal beams consist of lower longitudinal beams and upper longitudinal beams, wherein the lower longitudinal beams are welded at both ends of the horizontal beams; the vertical beam are welded on the lower longitudinal beams close to the rear section; the upper longitudinal beams are welded on the upper end of the vertical beams; a first inclined strut is welded between the front end of the horizontal beams and the upper end of the vertical beams; the second inclined strut is welded between the vertical beams;
the horizontal beams, the longitudinal beams, the vertical beams, the first inclined strut and the second inclined strut all use square tubes and are internally communicated with each other, so that oil chambers are formed within the horizontal beams, the longitudinal beams, the vertical beams, the first inclined strut and the second inclined strut;
the lower longitudinal beams and the upper longitudinal beams are respectively welded with the connection supporting plate;
the guide sliding rod passes through the connection supporting plate; a connecting nut is arranged below the lower connection supporting plate on the guide sliding rod; a connecting nut is arranged above the upper connection supporting plate on the guide sliding rod;
the sliding sleeve frame comprises a sliding sleeve, a smash-ridging device connection seat and a lifting oil cylinder seat; the sliding sleeve slidably sleeves the guide sliding rod; a smash-ridging box connection seat is welded on the sliding sleeve and a mounting hole is formed in the smash-ridging box connection seat; and the lifting oil cylinder seat is welded on the smash-ridging box connection seat;
an oil cylinder articulated seat is fixed on the lower connection supporting plate, on which the piston rod of the lifting oil cylinder is articulated, and the lower end of the lifting oil cylinder body is fixed on the lifting oil cylinder seat; and
the smash-ridging device is fixed on the smash-ridging device connection seat through a bolt which passes through the mounting hole.

10. The extended type subsoiling smash-ridging machine according to claim 2, **characterized in that**, the connection device comprises two connecting rod mechanisms and a connecting rod connected to the two connecting rod mechanisms; the connecting rod mechanism comprises a connecting rod seat, a first connecting rod, a second connecting rod, a third connecting rod, a fourth connecting rod and a driving oil cylinder; wherein the connecting rod seat is fixed on the chassis; the lower end of the first connecting rod is articulated on the rear end of the connecting rod seat; one end of the second connecting rod is articulated at the middle lower position of the first connecting rod and the other end of the second connecting rod is articulated on the smash-ridging box; one end of the third connecting rod is articulated at the upper end of the first connecting rod and the other end of the third connecting rod is articulated on smash-ridging box and the third connecting rod and the second connecting rod are parallel to each other; one end of the fourth connecting rod is articulated at the middle upper position of the first connecting rod and the other end of the fourth connecting rod is articulated on the third connecting rod; and one end of the driving oil cylinder is articulated on the connecting rod seat and the other end of the driving oil cylinder is articulated in the middle of the first connecting rod.

11. The extended type subsoiling smash-ridging machine according to claim 2, **characterized in that**, the adjusting seats comprises lower clamping seats and upper clamping seats, which are clamped on the supporting arm and connected through bolts; when the bolts are loosened, the adjusting seats can be allowed to transversely move on the supporting arm and when the bolts are locked, the adjusting seats can be allowed to be fixed on the supporting arm;
each adjusting seat comprises two lower clamping seats and two upper clamping seats, and each lower clamping seat and each upper clamping seat are respectively provided with location holes through which an adjusting rod passes; the ditching arm is clamped between the two upper clamping seats, meanwhile is clamped between the two lower clamping seats, and is provided with a plurality of adjusting holes, through which the adjusting rods pass;
the flattening device is in the form of a long strip and is formed by successively connecting three flat plate units; each flat plate unit comprises a connection section and a serrated section arranged at the lower end of the connection section, and the connection sections of adjacent flat plate units are connected through a hinge so that the flat plate units can be turned over and folded; an interlocking device for limiting the flat plate units to turn over is arranged between the connectoin sections of adjacent flat plate units; the interlocking device comprises a first circular ring arranged at the side edge of the flat plate unit, a second circular ring arranged at the side edge of the adjacent flat plate unit and an inserted pin which can pass through the first circular ring and the second circular ring and inserted holes of the first circular ring and the second circular ring are longitudinal; and
the adjusting device comprises an articulated seat, a screw rod, a first spring, a second spring and a nut, wherein the lower end of the screw rod is articulated with the raking plate, the upper end of the screw rod passes through the articulated seat and then is connected with the nut, the first spring sleeves the screw rod and is located between the raking plate and the articulated seat, and the second spring sleeves the screw rod and is located between the articulated seat and the nut, the spring force of the first spring acts on the raking plate.

12. A subsoiling smash-ridging machine, **characterized in that**, it comprises a machine body, a smash-ridging device and a connection device;
the machine body comprising: a walking mechanism, a chassis, a diesel engine component, a hydraulic oil tank, a cooler and a driving cab; wherein the chassis is mounted on the walking mechanism, the diesel engine component, the hydraulic oil tank and the driving cab are mounted on the chassis, and the cooler is mounted on the hydraulic oil tank;
the smash-ridging device comprises a smash-ridging box, a driving mechanism, a bearing, transmission shafts, power input members and a spiral drill rod;
the smash-ridging box comprises a bottom plate, side plates and a top plate, the lower end surfaces of the side plates are welded on the bottom plate, and the top plate is welded on the upper end surfaces of the side plates;
at least two lower through-holes are formed in the bottom plate, lower bearing seats extending upwardly are welded on the inner walls of the lower through-holes, the lower bearing seats protrude from the upper surface of the bottom plate, the height of protruding part of the lower bearing seat is larger than the width of two bearings, bearings are mounted in the lower bearing seats, rib plates are welded between adjacent lower bearing seats, and there are lubricating oil passages between the rib plates and the bottom plate;
at least two upper through-holes corresponding to the lower through-holes in the vertical direction are formed in the top plate, an upper bearing seat extending downwardly is arranged on the inner walls of the upper through-holes, the length of the lower bearing seat is larger than that of the upper bearing seat, and a bearing is mounted in the upper bearing seat;
the driving mechanism is mounted on the top plate and drives the transmission shafts to rotate;
the transmission shafts are mounted between the bearings located within the lower bearing seat and the bearing located within the upper bearing seat, and the lower ends of the transmission shafts extend out of the smash-ridging box;
each power input member is mounted on the transmission shafts, the lower surface of each power input member abuts against the shaft shoulders of the transmission shafts;
the spiral drill rod is mounted at the lower ends of the transmission shafts; and the connection device is connected between the chassis and the smash-ridging device.

13. The extended type subsoiling smash-ridging machine according to claim 12, **characterized in that**, the walking mechanism comprises two crawler components arranged opposite to each other, wherein each crawler component comprises a wheel stand, a driving wheel, a driven wheel, a lower guide wheel, an upper guide wheel, a crawler and a walking drive device; the driving wheel is mounted at one end of the wheel stand, the driven wheel is mounted at the other end of the wheel stand, the lower guide wheel is mounted at the lower part of the wheel stand, the upper guide wheel is mounted at the upper part of the wheel stand, the crawler sleeves the driving wheel, the driven wheel, the lower guide wheel and the upper guide wheel, the walking drive device is mounted on the wheel stand and drives the driving wheel to rotate; and
the chassis comprises a supporting platform, inclined strut plates and a supporting rib; the supporting platform is welded on the wheel stand; the inclined strut plates are welded on the wheel stand and the supporting platform; the supporting rib is located in the front of the supporting platform, and extends from the inclined strut plate at one side via the bottom of the supporting platform to the inclined strut plate at the other side; and two rib plates parallel to each other are arranged at the rear bottom of the inclined strut plates.

14. The extended type subsoiling smash-ridging machine according to claim 12, **characterized in that**, a lower boss is formed by extending downwardly each lower bearing seat and protruding from the lower surface of the bottom plate and is used for mounting the lower bearing end cover; and an upper boss is formed by extending upwardly the upper bearing seat and protruding from the upper surface of the top plate and is used for mounting the upper bearing end cover.

15. The extended type subsoiling smash-ridging machine according to claim 12, **characterized in that**, one of the side plates comprising a plate body is arranged in front of the smash-ridging box, manholes are formed in the plate body, a flange is arranged around the manhole on the plate body, mounting holes are formed in the plate body and the flange, and a step is formed between the inside of the flange and the plate body; and an extended mounting flange is arranged on the plate body.

16. The extended type subsoiling smash-ridging machine according to claim 12, **characterized in that**, a first bearing part is arranged at the lower surface of the bottom plate, a first connection lug are welded on the side plate, a first bearing plate extending inwardly is arranged on the first connection lug, and the first bearing plate supports the first bearing part; a second bearing part is arranged on the lower surface of the bottom plate, the flattening device connection lug is welded on the side plate, a second bearing plate extending inwardly is arranged on the flattening device connection lug, the second bearing plate supports the second bearing part; a first welding part is arranged on the top plate, a second connection lug is welded on the side plate, a second welding plate extending inwardly is arranged on the second connection lug, and the second welding plate is welded with the first welding part on the top plate; a third connection lug is welded on the top plate, a third welding plate extending downwardly is arranged on the third connection lug, a second welding part is arranged on the side plate, and the third welding plate is welded with the second welding part; a articulated seat is arranged on the plate body and comprises a connection seat and connection lugs, which extend towards the direction away from the connection seat from the both sides of the connection seat, an accommodation groove is formed between two connection lugs, and articulated holes are formed in the two connection lugs, respectively.

17. The subsoiling smash-ridging machine according to claim 12, **characterized in that**, the bearings are configured as conical bearings, the conical bearings in the lower bearing seat are arranged in the forward direction and the conical bearings in the upper bearing seat are arranged in the opposite direction; a shaft sleeve sleeves between each power input member and the conical bearing in the upper on the transmission shaft; the forward lock nut is connected to the transmission shaft by screw thread above the conical bearing in the upper, the forward lock nut is in contact with the inner ring of the conical bearing in the upper; a reverse lock nut is arranged above the forward lock nut on the transmission shaft; the diameter of the transmission shaft on which the forward lock nut is arranged is larger than that of the transmission shaft on which the reverse lock nut is arranged, the upper surface of the forward lock nut is higher than that of the transmission shaft on which the forward lock nut is arranged and the reverse lock nut is in contact with the forward lock nut.

18. The subsoiling smash-ridging machine according to claim 12, **characterized in that**, one end of the transmission shaft is a conical shaft, at one end of which a screw rod is arranged; a conical hole matching with the conical shaft and a through-hole through which the screw rod passes are formed in the flange, on which a counterbore is formed at an opposite side to the conical hole, and the conical hole, the through-hole and the counterbore are communicated with each other; the conical shaft is arranged in the conical hole, the screw rod passes through the through-hole and extends into the counterbore in which a lock nut connected with the screw rod is arranged; the gland is fixed on the screw rod via at least two lock bolts and has a boss which presses against the lock nut.

19. The subsoiling smash-ridging machine according to claim 12, **characterized in that**, the connection device comprises a connection frame, a connection supporting plate, a guide sliding rod, a connecting nut, a sliding sleeve frame and a lifting oil cylinder;
the connection frame comprises a plurality of horizontal beams, longitudinal beams, vertical beams, a first inclined strut and a second inclined strut; the longitudinal beams consist of lower longitudinal beams and upper longitudinal beams, wherein the lower longitudinal beams are welded at both ends of the horizontal beams; the vertical beams are welded on the lower longitudinal beams close to the rear section; the upper longitudinal beams are welded on the upper end of the vertical beam; a first inclined strut is welded between the front end of the horizontal beams and the upper end of the vertical beams; the second inclined strut is welded between the vertical beams;
the connection supporting plate is welded on the lower longitudinal beams and the upper longitudinal beams, respectively;
the guide sliding rod passes through the connection supporting plate;
a connecting nut is arranged below the lower connection supporting plate on the guide sliding rod and a connecting nut is arranged above the upper connection supporting plate on the guide sliding rod;
the sliding sleeve frame comprises a sliding sleeve, a smash-ridging device connection seat and a lifting oil cylinder seat; the sliding sleeve slidably sleeves the guide sliding rod; the smash-ridging device connection seat is welded on the sliding sleeve, and a mounting hole is formed in the smash-ridging device connection seat; the lifting oil cylinder seat is welded on the smash-ridging device connection sea;
an oil cylinder articulated seat, on which the piston rod of the lifting oil cylinder is articulated, is fixed on the lower connection supporting plate, and the lower end of the lifting oil cylinder body is fixed on the lifting oil cylinder seat; and
the smash-ridging device is fixed on the smash-ridging device connection seat through a bolt which passes through the mounting hole.

20. The subsoiling smash-ridging machine according to claim 19, **characterized in that**, the horizontal beams, the longitudinal beams, the vertical beams, the first inclined strut and the second inclined strut all use square tubes and are internally communicated with each other, so that oil chambers are formed within the horizontal beams, the longitudinal beams, the vertical beams, the first inclined strut and the second inclined strut.

21. The subsoiling smash-ridging machine according to claim 12, **characterized in that**, the connection device comprises two connecting rod mechanisms and a connecting rod for connecting two connecting rod mechanisms; each connecting rod mechanism comprises a connecting rod seat, a first connecting rod, a second connecting rod, a third connecting rod, a fourth connecting rod and a driving oil cylinder; wherein the connecting rod seat is fixed on the chassis; the lower end of the first connecting rod is articulated on the rear end of the connecting rod seat; one end of the second connecting rod is articulated at the middle lower position of the first connecting rod and the other end of the second connecting rod is articulated on the smash-ridging box; one end of the third connecting rod is articulated at the upper end of the first connecting rod and the other end of the third connecting rod is articulated on smash-ridging box and the third connecting rod and the second connecting rod are parallel to each other; one end of the fourth connecting rod is articulated at the middle upper position of the first connecting rod and the other end of the fourth connecting rod is articulated on the third connecting rod; and one end of the driving oil cylinder is articulated on the connecting rod seat and the other end of the driving oil cylinder is articulated in the middle of the first connecting rod.

22. A subsoiling smash-ridging machine body, **characterized in that** it comprises a walking mechanism, a chassis, a diesel engine component, a hydraulic oil tank, a cooler and a driving cab;
the walking mechanism comprises two crawler components arranged opposite to each other, each crawler component comprises a wheel stand, a driving wheel, a driven wheel, a lower guide wheel, an upper guide wheel, a crawler and a walking drive device; the driving wheel, the driven wheel, the lower guide wheel and the upper guide wheel are mounted on the wheel stand, the crawler sleeves the driving wheel, the driven wheel, the lower guide wheel and the upper guide wheel, the walking drive device is mounted on the wheel stand and drives the driving wheel to rotate;
the chassis comprises a supporting platform, inclined strut plates and a supportingrib;
the supporting platform is welded on wheel stand; the inclined strut plates are welded on the wheel stand and the supporting platform; the supporting rib is located in the front of the supporting platform and extends from the inclined strut plate at one side via the bottom of the supporting platform towards the inclined strut plate at the other side and rib plates parallel to each other are arranged at the rear bottom of the inclined strut plates;
a shock absorber is mounted on the supporting platform and a diesel engine fixing seat is mounted on the shock absorber;
the diesel engine component comprises a diesel engine frame, a diesel engine, a wind tunnel box, a hydraulic pump and a diesel engine hood;
the diesel engine frame is mounted on the diesel engine fixing seat and the shock absorption is performed on the diesel engine component via the shock absorber; the diesel engine is fixed on the diesel engine frame; the wind tunnel box is mounted at the front end of the diesel engine frame and is located in front of the diesel engine; the hydraulic pump is connected to an output shaft of the diesel engine; and the diesel engine and the wind tunnel box are covered with the diesel engine hood;and
the driving cab is mounted in the front part of the supporting platform.

23. The subsoiling smash-ridging machine body according to claim 22, **characterized in that**, the wheel stand comprises a wheel stand body and a wheel stand connection lug; the wheel stand connection lug is connected to the front end of the wheel stand body; a driven wheel accommodation groove is formed in the rear end of the wheel stand body in which a first mounting hole through the driven wheel accommodation groove is formed; a lower guide wheel accommodation groove upwardly extends from the bottom surface of the wheel stand body and a second mounting hole through the lower guide wheel accommodation groove is formed in the wheel stand body; and an upper guide wheel accommodation groove downwardly extends from the top surface of the wheel stand body and a third mounting hole through the upper guide wheel accommodation groove is formed in the wheel stand body;
the driving wheel is mounted on the wheel stand connection lug via the bearing and a walking drive device is fixed on the wheel stand connection lug;
a part of the driven wheel is located within the driven wheel accommodation groove and the driven wheel is mounted by a mounting shaft passing through the first mounting hole;
a part of the lower guide wheel is located within the lower guide wheel accommodation groove, a lower part of the lower guide wheel protrudes from the wheel stand body, and the lower guide wheel is mounted by a mounting shaft passing through the second mounting hole and second nuts are mounted at both ends of the mounting shaft passing through the second mounting hole; and
a part of the upper guide wheel is located within the upper guide wheel accommodation groove, an upper part of the upper guide wheel protrudes from the wheel stand body, and the upper guide wheel is mounted by a mounting shaft passing through the third mounting hole and third nuts are mounted at both ends of the mounting shaft passing through the third mounting hole.

24. The subsoiling smash-ridging machine body according to claim 23, **characterized in that**, a chamfer is formed at the rear end of the wheel stand body and the front end of the wheel stand connection lug is circular arc.

25. The subsoiling smash-ridging machine body according to claim 23, **characterized in that**, a second boss is arranged at the position corresponding to the second mounting hole outside the wheel stand body; and a third boss is arranged at the position corresponding to the third mounting hole outside the wheel stand body.

26. The subsoiling smash-ridging machine body according to claim 23, **characterized in that**, the walking drive device is a hydraulic motor.

27. The subsoiling smash-ridging machine body according to claim 22, **characterized in that**, a circular arc groove is formed at the corner of the supporting rid.

28. A smash-ridging device of a subsoiling smash-ridging machine, **characterized in that**, it comprises a bottom plate, side plates and a top plate, the lower end surfaces of the side plates are welded on the bottom plate, and the top plate is welded on the upper end surfaces of the side plates;
at least two lower through-holes are formed in the bottom plate, lower bearing seats extending upwardly are welded on the inner walls of the lower through-holes, the lower bearing seats protrude from the upper surface of the bottom plate, the height of protruding part of the lower bearing seat is larger than the width of two bearings, bearings are mounted in the lower bearing seats, rib plates are welded between adjacent lower bearing seats, and there are lubricating oil passages between the rib plates and the bottom plate;
at least two upper through-holes corresponding to the lower through-holes in the vertical direction are formed in the top plate, an upper bearing seat extending downwardly is arranged on the inner walls of the upper through-holes, the height of the lower bearing seat is larger than that of the upper bearing seat, a bearing is mounted in the upper bearing seat,
a driving mechanism is mounted on the top plate and drives the transmission shaft to rotate;
a transmission shaft is mounted between the bearings located within the lower bearing seat and a bearing located within the upper bearing seat and the lower ends of the transmission shafts extend out of the smash-ridging box;
power input members are mounted on the transmission shaft and the lower surface of each power input member abuts against the shaft shoulders of the transmission shafts; and
a spiral drill rod is mounted at the lower ends of the transmission shafts.

29. The subsoiling smash-ridging machine body according to claim 28, **characterized in that**, the lower boss is formed by extending downwardly each lower bearing seat and protruding out of the lower surface of the bottom plate and is used for mounting the lower bearing end cover; and an upper boss is formed by extending upwardly the upper bearing seat and protruding out of the upper surface of the top plate and is used for mounting the upper bearing end cover.

30. The subsoiling smash-ridging machine body according to claim 28, **characterized in that**, one of the side plates comprising a plate body is arranged in the front of the smash-ridging box, manholes are formed in the plate body, a flange is arranged around the manhole on the plate body, mounting holes are formed in the plate body and the flange, and a step is formed between the inside of the flange and the plate body; and an extended mounting flange is arranged on the plate body.

31. The subsoiling smash-ridging machine body according to claim, 28, **characterized in that**, a first bearing part is arranged at the lower surface of the bottom plate, a first connection lug are welded on the side plate, a first bearing plate extending inwardly is arranged on the first connection lug, and the first bearing plate supports the first bearing part; a second bearing part is arranged on the lower surface of the bottom plate, a flattening device connection lug is welded on the side plate, a second bearing plate extending inwardly is arranged on the flattening device connection lug, the second bearing plate supports the second bearing part.

32. The subsoiling smash-ridging machine body according to claim 28, **characterized in that**, a first welding part is arranged on the top plate, a second connection lug is welded in the side plates, a second welding plate extending inwardly is arranged on the second connection lug and is welded with the first welding part on the top plate; a third connection lug is welded on the top plate, a third welding plate extending downwardly is arranged on the third connection lug, a second welding part is arranged on the side plate and the third welding plate is welded with the second welding part.

33. The subsoiling smash-ridging machine body according to claim 28, **characterized in that**, an articulated seat is arranged on the plate body and comprises a connection seat and connection lugs, which extend towards the direction away from the connection seat from the both sides of the connection seat, an accommodation groove is formed between two connection lugs, and articulated holes are formed in the two connection lugs, respectively.

34. The subsoiling smash-ridging machine body according to claim 28, **characterized in that**, bearings are conical bearings, the conical bearings located within the lower bearing seats is forwardly mounted and the conical bearing located within the upper bearing seat is reversely mounted; a shaft sleeve sleeves between each power input member and the conical bearing in the upper on the transmission shaft; a forward lock nut is connected to the transmission shaft by screw thread above the conical bearing in the upper, the forward lock nut is in contact with the inner ring of the conical bearing in the upper; a reverse lock nut is arranged above the forward lock nut on the transmission shaft; the diameter of the transmission shaft on which the forward lock nut is arranged is large than that of the transmission shaft on which the reverse lock nut is arranged, the upper surface of the forward lock nut is higher than that of the transmission shaft on which the forward lock nut is arranged and the reverse lock nut is in contact with the forward lock nut.

35. The subsoiling smash-ridging machine body according to claim 28, **characterized in that**, one end of the transmission shaft is a conical shaft, at one end of which a screw rod is arranged; a conical hole matching with the conical shaft and a through-hole through which the screw rod passes, are formed in the flange, on which a counterbore is formed at an opposite side to the conical hole, and the conical hole, the through-hole and the counterbore are communicated with each other; the conical shaft is arranged in the conical hole, the screw rod passes through the through-hole and extends into the counterbore in which a lock nut connected with the screw rod is arranged; and a gland is fixed on the screw rod via at least two lock bolts and is provided with a boss which presses against the lock nut.

36. A walking mechanism for preventing a lower guide wheel from falling off, **characterized in that**, it comprises walking mechanisms each of which comprises a wheel stand, a driving wheel, a driven wheel, a lower guide wheel, an upper guide wheel and a crawler; at least two lower guide wheel accommodation cavities are formed at the bottom of the wheel stand, the driving wheel is mounted at one end of the wheel stand, the driven wheel is mounted at the other end of the wheel stand, second mounting holes are formed in the bottom of the wheel stand corresponding to the lower guide wheel accommodation cavities and are configured as a lower open groove; supporting lugs are arranged on the top of the wheel stand, and an upper open groove is formed in the supporting lug; an anti-falling piece is fixed at the lower open groove on the wheel stand and is provided with an annular hole; a mounting shaft passes through the lower open groove and the annular hole, the lower guide wheel is mounted on the mounting shaft, a part of the lower guide wheel is located within the lower guide wheel accommodation cavity; a mounting shaft is mounted in the upper open groove, the upper guide wheel is mounted on the mounting shaft, and the crawler sleeves the driving wheel, the driven wheel, the lower guide wheel and the upper guide wheel.

37. The walking mechanism for preventing a lower guide wheel from falling off according to claim 36, **characterized in that**, the lower open groove comprises a lower circle-arc segment and lower straight-line segments extending from both ends of the lower circle-arc segment towards the same side; and the upper open groove comprises an upper circle-arc segment and upper straight-line segments extending from both ends of the upper circle-arc segment towards the same side.

38. The walking mechanism for preventing a lower guide wheel from falling off according to claim 36, **characterized in that**, the wheel stand comprises a longitudinal beam, an upper cover, an end plate and a connection lug; a through-groove is formed at one end of the longitudinal beam from top to bottom; the upper cover is welded on the longitudinal beam and located above the through-groove; the end plate is welded at the other end of the longitudinal beam; and the connection lug are welded in the end plate.

39. The walking mechanism for preventing a lower guide wheel from falling off according to claim 38, **characterized in that**, sliding grooves are formed at two side walls of the through-groove on the wheel stand, respectively; a tensioning device is arranged within the through-groove and comprises a sliding block and a linear driving mechanism, the sliding block is slidably arranged on the sliding grooves and the linear driving mechanism drives the sliding block to make linear movement; and the driven wheel is mounted on the sliding block via a wheel shaft.

40. The walking mechanism for preventing a lower guide wheel from falling off according to claim 39, **characterized in that**, the linear driving mechanism comprises a bearing seat, a lead screw and a nut, wherein the bearing seat is fixed within the through-groove, the lead screw is arranged on the bearing seat via a bearing, the nut is fixed on the sliding block and the lead screw is meshed with the nut.

41. The walking mechanism for preventing a lower guide wheel from falling off according to claim 40, **characterized in that**, the lead screw is provided with a driving part of which the cross section is polygon and a window communicated with the through-groove is arranged at the position corresponding to the driving part on the longitudinal beam.

42. The walking mechanism for preventing a lower guide wheel from falling off according to claim 41, **characterized in that**, a cover plate is fixed at the position corresponding to the window on the longitudinal beam.

43. The walking mechanism for preventing a lower guide wheel from falling off according to claim 39, **characterized in that**, the sliding block which is U-shaped comprises a connection plate and supporting plates extending from both ends of the connection plate towards the same direction; a mounting hole of which the diameter is larger than that of the wheel shaft is formed in the supporting plate and the wheel shaft passes through the mounting hole and is fixed on the sliding block.

44. The walking mechanism for preventing a lower guide wheel from falling off according to claim 36, **characterized in that**, the anti-falling piece is fixed on the wheel stand via the bolt.

45. A crawler frame of a subsoiling machine, **characterized in that**, it comprises a wheel stand, at least two lower guide wheel accommodation cavities are formed at the bottom of the wheel stand, second mounting holes are formed in the bottom of the wheel stand corresponding to the lower guide wheel accommodation cavities and is a lower open groove; supporting lugs are arranged on the top of the wheel stand and is provided with an upper open groove.

46. The crawler frame of the subsoiling machine according to claim 45, **characterized in that**, the lower open groove comprises a lower circle-arc segment and lower straight-line segments extending from both ends of the lower circle-arc segment towards the same side; and the upper open groove comprises an upper circle-arc segment and upper straight-line segments extending from both ends of the upper circle-arc segment towards the same side.

47. The crawler frame of the subsoiling machine according to claim 45, **characterized in that**, the wheel stand comprises a longitudinal beam, an upper cover, an end plate and a connection lug; a through-groove is formed at one end of the longitudinal beam from top to bottom; the upper cover is welded on the longitudinal beam and located above the through-groove; the end plate is welded at the other end of the longitudinal beam; and the connection lug are welded in the end plate.

48. The crawler frame of the subsoiling machine according to claim 47, **characterized in that**, sliding grooves are formed at two side walls of the through-groove on the wheel stand, respectively; a tensioning device is arranged within the through-groove and comprises a sliding block and a linear driving mechanism, the sliding block is slidely arranged on the sliding grooves and the linear driving mechanism drives the sliding block to make linear movement.

49. The crawler frame of the subsoiling machine according to claim 48, **characterized in that**, the linear driving mechanism comprises a bearing seat, a lead screw and a nut, wherein the bearing seat is fixed within the through-groove, the lead screw is arranged on the bearing seat via a bearing, the nut is fixed on the sliding block and the lead screw is meshed with the nut.

50. The crawler frame of the subsoiling machine according to claim 49, **characterized in that**, the lead screw is provided with a driving part of which the cross section is polygon and a window communicated with the through-groove is arranged at the position corresponding to the driving part on the longitudinal beam.

51. The crawler frame of the subsoiling machine according to claim 50, **characterized in that**, a cover plate is fixed at the position corresponding to the window on the longitudinal beam.

52. The crawler frame of the subsoiling machine according to claim 48, **characterized in that**, the sliding block which is U-shaped comprises a connection plate and supporting plates extending from both ends of the connection plate towards the same direction; a mounting hole of which the diameter is larger than that of the wheel shaft is formed in the supporting plate and the wheel shaft passes through the mounting hole and is fixed on the sliding block.

53. A spiral type deep-ploughing subsoiling machine, **characterized in that**, it comprises a vehicle frame, crawler devices, a driving cab, a hydraulic oil tank, a diesel engine component, a connection device, a smash-ridging device and a cooler, at least two sets of the crawler devices are arranged at both sides of the lower part of the vehicle frame, the driving cab, the diesel engine component, the hydraulic oil tank, the cooler and the connection device are arranged on the platform surface of the vehicle frame, and the smash-ridging device is arranged on the connection device.

54. The spiral type deep-ploughing subsoiling machine according to claim 53, **characterized in that**, each crawler device comprises a crawler wheel and a crawler, wherein the crawler wheel is arranged on the vehicle frame and the crawler is mounted on the crawler wheel.

55. The spiral type deep-ploughing subsoiling machine according to claim 53, **characterized in that**, a diesel engine hood for covering the diesel engine component is arranged on the platform surface of the vehicle frame.

56. A smash-ridging box with a connection plate, comprising side plates, **characterized in that**, each side plate comprises a plate body on which an extended mounting flange is arranged, and the extended mounting flange and the plate body are in the surface contact.

57. The smash-ridging box with the connection plate according to claim 56, **characterized in that**, the extended mounting flange is connected with the plate body by welding.

58. The smash-ridging box with the connection plate according to claim 56, **characterized in that**, the extended mounting flange is connected with the plate body by a bolt.

59. The smash-ridging box with the connection plate according to claim 56, **characterized in that**, an articulated seat is arranged on the plate body.

60. The smash-ridging box with the connection plate according to claim 59, **characterized in that**, the articulated seat comprises a connection seat and connection lugs, which extend towards the direction away from the connection seat from the both sides of the connection seat, an accommodation groove is formed between two connection lugs, and articulated holes are formed in the two connection lugs, respectively.

61. The smash-ridging box with the connection plate according to claim 56, **characterized in that**, a flattening device connection lug extending downwards slantingly is arranged at the lower part of the plate body.

62. The smash-ridging box with the connection plate according to claim 61, **characterized in that**, a second bearing plate is formed backwards in the middle of the flattening device connection lug.

63. A smash-ridging box with manhole covers, comprising side plates, **characterized in that**, each side plate comprises a plate body which is provided with a manhole and an extended mounting flange.

64. The smash-ridging box with manhole covers according to claim 63, **characterized in that**, a flange is located around the manhole on the plate body and mounting holes are formed in the plate body and the flange.

65. The smash-ridging box with manhole covers according to claim 64, **characterized in that**, a step is formed between the inner side of the flange and the plate body.

66. The smash-ridging box with manhole covers according to claim 64, **characterized in that**, a seal groove is formed in the flange.

67. The smash-ridging box with manhole covers according to claim 63, **characterized in that**, an articulated seat is arranged on the plate body.

68. The smash-ridging box with manhole covers according to claim 67, **characterized in that**, the articulated seat comprises a connection seat and connection lugs, which extend towards the direction away from the connection seat from the both sides of the connection seat, an accommodation groove is formed between two connection lugs, and articulated holes are formed in the two connection lugs, respectively.

69. The smash-ridging box with manhole covers according to claim 63, **characterized in that**, the flattening device connection lug extending downwards slantingly is arranged at the lower part of the plate body.

70. A smash-ridging box, comprising a bottom plate, side plates and a top plate, the lower end surface of the side plates are welded on the bottom plate, and the top plate is welded on the upper end surfaces of the side plates; **characterized in that**, at least two lower through-holes are provided on the bottom plate, lower bearing seats extending upwardly are welded on the inner walls of the lower through-holes, the lower bearing seats protrude from the upper surface of the bottom plate, and the height of protruding part of the lower bearing seat is larger than the width of two bearings.

71. The smash-ridging box according to claim 70, **characterized in that**, the lower boss is formed by extending downwardly each lower bearing seat and protruding from the lower surface of the bottom plate.

72. The smash-ridging box according to claim 70, **characterized in that**, rib plates are welded between adjacent lower bearing seats.

73. The smash-ridging box according to claim 70, **characterized in that**, a bearing part is arranged at the lower surface of the bottom plate, connection lugs are welded in the side plates, a bearing plate extending inwardly is arranged on the connection lugs and supports the bearing part.

74. A reinforced smash-ridging box, comprising a bottom plate, side plates and a top plate, the lower end surfaces of the side plates are welded on the bottom plate, the top plate is welded on the upper end surfaces of the side plates; **characterized in that**, at least two lower through-holes are formed in the bottom plate, lower bearing seats extending upwardly are welded on the inner walls of the lower through-holes, the lower bearing seats protrude from the upper surface of the bottom plate, rib plates are welded between adjacent lower bearing seats, and there are lubricating oil passages between the rib plates and the bottom plate.

75. The reinforced smash-ridging box according to claim 74, **characterized in that**, the heights of the protruding part of the lower bearing seats are large than the widths of two bearings.

76. The reinforced smash-ridging box according to claim 74, **characterized in that**, a lower boss is formed by extending downwardly each lower bearing seat and protruding out of the lower surface of the bottom plate.

77. The reinforced smash-ridging box according to claim 74, **characterized in that**, a bearing part is arranged at the lower surface of the bottom plate, connection lugs are welded on the side plates and supporting plates extending inwardly are arranged on the connection lugs and support the bearing part.

78. A transmission device of a tillage device using a reverse conical bearing, **characterized in that**, it comprises a flange, lower bearing end covers, lower bearing seats, bearings, transmission shafts, power input members, an upper bearing seat, bearings, a lock nut and an upper bearing cover, wherein the flange and each power input member are mounted on the transmission shafts, the bearings are mounted at both ends of each power input member, the bearings are mounted on the lower bearing seat of the smash-ridging box or chassis and are mounted on the upper bearing seat of the smash-ridging box or chassis, the bearings within the lower bearing seats is positioned by a shaft shoulder, the clearance of the bearing within the upper bearing seat has been adjusted by the lock nut and then the bearing is locked and positioned, and the smash-ridging box or chassis is sealed by the lower bearing end cover and the upper bearing end cover.

79. The transmission device of a tillage device using a reverse conical bearing according to claim 78, **characterized in that**, the size of the bearings located within the lower bearing seat are larger than that of bearing located within the upper bearing seat.

80. The transmission device of a tillage device using a reverse conical bearing according to claim 78, **characterized in that**, an elastic pad is arranged between the bearing located within the upper bearing seat and the lock nut.

81. The transmission device of a tillage device using a reverse conical bearing according to claim 78, **characterized in that**, a cushioning sleeve is arranged at the upper part of the flange.

82. A fixed structure for realizing the connection between a shaft end and a connection member through a gland, comprising a transmission shaft and a flange; one end of the transmission shaft is a conical shaft one end of which is provided with a spiral rod; a conical hole matching with the conical shaft and a through-hole through which the spiral rod passes are formed in the connection member and are communicated with each other; the conical shaft is arranged in the conical hole, the spiral rod passes through the through-hole, and a lock nut which is connected with the spiral rod is arranged on the opposite side to the conical hole; **characterized in that**, the gland is fixed on the spiral rod through at least two lock bolts, and the gland is pressed fit on the end face of the lock nut.

83. The fixed structure for realizing the connection between a shaft end and a connection member through a gland according to claim 82, **characterized in that**, a counterbore is formed at an opposite side to the conical hole on the connection member, and the conical hole and the through-hole are communicated with each other, the screw rod extends into the counterbore and the lock nut and the gland are located within the counterbore.

84. The fixed structure for realizing the connection between a shaft end and a connection member through a gland according to claim 82, **characterized in that**, a counterbore is formed in the gland and the head of the lock bolt is located within the counterbore.

85. The fixed structure for realizing the connection between a shaft end and a connection member through a gland according to claim 82, **characterized in that**, a clearance is left between the gland and the end surface of the screw rod.

86. The fixed structure for realizing the connection between a shaft end and a connection member through a gland according to claim 83, **characterized in that**, the gland and the side wall of the counterbore are in transition fit.

87. The fixed structure for realizing the connection between a shaft end and a connection member through a gland according to claim 82, **characterized in that**, the connection member is a coupler or a flange.

88. A subsoiling device comprising a smash-ridging box, in which at least one transmission shaft is arranged, one end of each transmission shaft extends out of the smash-ridging box, the extend-out end of the transmission shaft is connected with a spiral drill rod; the spiral drill rod comprises a rod body, a spiral piece wound rotatably on the rod body and blades which are mounted on the spiral piece; **characterized in that**, the number of blades in different pitches on the same spiral piece is different; the blade comprises a fixing section and a blade body, which is formed by bending upwards or inclined upwards from the outer end of the fixing section, and the fixing section is fixed on the spiral piece through a bolt assembly; the blade has a soil-cutting edge and a knife back, the soil-cutting edge is located in opposite direction to the spiral direction of the spiral piece, and the knife back is arranged opposite to the soil-cutting edge; the lower end of the spiral piece is fixed with a first soil-piercing blade; the first soil-piercing blade comprises a first connection section and a first cutting edge, the first connection section is connected to the lower end of the spiral piece, the lower surface of the first cutting edge has an inclined plane so that the first cutting edge is in wedge-shape, the upper surface of the first cutting edge has an accommodation groove, in which a first alloy sheet is embedded, the first soil-piercing blade extends slantingly downwards, and the lower end of the first soil-piercing blade is below the bottom surface of the rod body; at least one second soil-piercing blades are connected to the lower end of the rod body, the second soil-piercing blade comprises a second connection section and a second cutting edge, the second connection section is connected to the rod body, the lower surface of the second cutting edge has an inclined plane so that the second cutting edge is in wedge-shape, the upper surface of the second cutting edge has an accommodation groove, in which an second alloy sheet is embedded, the second soil-piercing blade extends slantingly downwards, the lower end of the second soil-piercing blade is below the bottom surface of the rod body, the direction to which the second cutting edge extends from the second connection section is consistent with the opposite rotation direction of the spiral pieces; at least two plug-in seats extending radially are fixed at the upper part of the rod body, are staggered in the axial direction of the rod body and have a plug-in trough in which a smash-flattening blade is plugged, the smash-flattening blade comprises a plug-in section, a first bending part and a second bending part, the first bending part extends from the outer end of the plug-in section to the same direction as the rotation direction of the spiral pieces, the second bending part extends downwards from the first bending part, and a smashing edge is arranged at the outer side of the smash-flattening blade.

89. The subsoiling device according to claim 88, **characterized in that**, the number of blades in different pitches on the same spiral piece is decreased sequentially from bottom to top.

90. The subsoiling device according to claim 89, **characterized in that**, the decrement in the number of blades in adjacent pitches is one.

91. The subsoiling device according to claim 88 or 89, **characterized in that**, the number of the blades on the different spiral pieces is different.

92. The subsoiling device according to claim 88, **characterized in that**, an arc is formed by protruding outwards the middle of the soil-cutting edge.

93. The subsoiling device according to claim 88, **characterized in that**, the upper surface of the soil-cutting edge is an inclined plane so that the soil-cutting edge is in wedge-shape and a first rid strip extending along the soil-cutting edge is arranged at the lower surface of the soil-cutting edge.

94. The subsoiling device according to claim 88, **characterized in that**, the bolt assembly comprise a bolt and a nut, wherein the bolt passes through the spiral pieces and the fixing section from top to bottom and the lower end of the bolt is in threaded connection with the cap for pressing tightly the blade; the cap comprises a nut and a round head which is integrated with the nut and of which the outer surface is provided with a carburized layer.

95. The subsoiling device according to claim 88, **characterized in that**, rib plates are welded between the second soil-piercing blade and the rod body.

96. The subsoiling device according to claim 88, **characterized in that**, a second rid strip extending along the smashing edge is arranged at the position corresponding to the smashing edge on the smash-flattening blade.

97. The subsoiling device according to claim 88, **characterized in that**, the first soil-piercing blade has the same angle of inclination as that of the second soil-piercing blade.

98. A subsoiling cutter comprising a rod body, wherein a spiral piece is wound rotatably and fixed on the middle-lower part of the rod body, blades are mounted on the spiral piece, a first soil-piercing blade is fixed on the lower end of the spiral piece; **characterized in that**, the lower end of the rod body is connected with at least one second soil-piercing blades.

99. The subsoiling cutter according to claim 98, **characterized in that**, the first soil-piercing blade and the second soil-piercing blades are evenly distributed on the circumference.

100. The subsoiling cutter according to claim 98, **characterized in that**, the soil-piercing blade comprises a first connection section and a first edge, the first connection section is connected to the lower end of the spiral piece, the lower surface of the first edge has an inclined plane so that the first edge is in wedge-shape, the first soil-piercing blade extends downwardly and slantly and the lower end of the first soil-piercing blade is lower than the bottom surface of the rod body; each second soil-piercing blade comprises a second connection section and a second edge, wherein the second connection section is connected to the rod body, the lower surface of the second edge has an inclined plane so that the second edge is in wedge-shape, the second soil-piercing blade extends downwardly and slantly, the lower end of the second soil-piercing blade is lower than the bottom surface of the rod body and the second edge extends from the second connection section in a direction consistent with the direction opposite to the direction of rotation of the spiral piece.

101. The subsoiling cutter according to claim 100, **characterized in that**, an accommodation groove in which a first alloy sheet is embedded is formed in the upper surface of the first edge; and an accommodation groove in which a second alloy sheet is embedded is formed in the upper surface of the second edge.

102. The subsoiling cutter according to claim 98, **characterized in that**, at least two plug-in seats extending radially are fixed on the upper part of the rod body, are staggered in the axial direction of the rod body and have a plug-in trough in which a smash-flattening blade is plugged, the smash-flattening blade comprises a plug-in section, a first bending part and a second bending part, the first bending part extends from the outer end of the plug-in section to the same direction as the rotation direction of the spiral pieces, the second bending part extends downwards from the first bending part, and a smashing edge is arranged at the outer side of the smash-flattening blade.

103. The subsoiling cutter according to claim 98, **characterized in that**, the blade is provided with a soil-cutting edge and an arc is formed by protruding outwards the middle of the soil-cutting edge.

104. The subsoiling cutter according to claim 103, **characterized in that**, the upper surface of the soil-cutting edge is an inclined plane so that the soil-cutting edge is in wedge-shape and a first rid strip extending along the soil-cutting edge is arranged at the lower surface of the soil-cutting edge.

105. The subsoiling cutter according to claim 98, **characterized in that**, the blade is fixed on the spiral piece via a bolt assembly; the bolt assembly comprise a bolt and a nut, the bolt passes through the spiral pieces and the fixing section from top to bottom and the lower end of the bolt is in threaded connection with the cap for pressing tightly the blade; the cap comprises a nut and a round head which is integrated with the nut and of which the outer surface is provided with a carburized layer.

106. The subsoiling cutter according to claim 98, **characterized in that**, rib plates are welded between the second soil-piercing blade and the rod body.

107. The subsoiling cutter according to claim 102, **characterized in that**, a second rid strip extending along the smashing edge is arranged at the position corresponding to the smashing edge on the smash-flattening blade.

108. A spiral drill bit of a subsoiling tillage machine for avoiding soil accumulation, comprising a rod body and a spiral piece which is wound on the lower part of the rod body, **characterized in that**, it further comprises a cross-cutting blade, which is arranged on the upper section of the rod body and located above the spiral piece.

109. The spiral drill bit of a subsoiling tillage machine for avoiding soil accumulation according to claim 108, **characterized in that**, the cross-cutting blade comprises a connection sleeve and a cross-cutting blade body which are integrally-formed, wherein the connection sleeve sleeves the upper part of the rod body and the cross-cutting blade body is connected longitudinally to the side wall of the connection sleeve.

110. The spiral drill bit of a subsoiling tillage machine for avoiding soil accumulation according to claim 109, **characterized in that**, the number of the cross-cutting blade body is at least two and the at least two cross-cutting blade body is evenly arranged at the side wall of the connection sleeve.

111. The spiral drill bit of a subsoiling tillage machine for avoiding soil accumulation according to claim 109, **characterized in that**, a nose, which is triangular, is arranged at the outer end of each cross-cutting blade body.

112. The spiral drill bit of a subsoiling tillage machine for avoiding soil accumulation according to claim 108, **characterized in that**, the spiral drill bit further comprises blades which are arranged at the circumferential edge of the spiral piece.

113. The spiral drill bit of a subsoiling tillage machine for avoiding soil accumulation according to claim 112, **characterized in that**, the number of the blades are at least two and the at least two blades are arranged along the direction of rotation of the spiral piece at intervals.

114. The spiral drill bit of a subsoiling tillage machine for avoiding soil accumulation according to claim 112, **characterized in that**, each blade comprises a blade body and a fixing section formed by bending and extending horizontally the bottom of the blade body, the fixing section is fixedly connected to the lower surface of the spiral piece and the blade body faces towards the top end of the rod body.

115. The spiral drill bit of a subsoiling tillage machine for avoiding soil accumulation according to claim 114, **characterized in that**, the blade body is connected with the fixing section to constitute an included angle of 90 degrees-120 degrees.

116. The spiral drill bit of a subsoiling tillage machine for avoiding soil accumulation according to claim 108, **characterized in that**, a drill tip is arranged at the bottom end of the rod body and is in an inverted triangle.

117. A spiral drill bit of a subsoiling tillage machine which is convenient for piercing soil, which comprises a rod body and a spiral piece which is wound on the lower part of the rod body, **characterized in that**, it further comprises a first soil-piercing blade, which is arranged on the tail part of the spiral piece and located at the lower surface of the spiral piece.

118. The spiral drill bit of a subsoiling tillage machine which is convenient for piercing soil according to claim 117, **characterized in that**, the first soil-piercing blade comprises a first soil-piercing blade body and a first soil-piercing blade fixing section formed by bending and extending horizontally the bottom of the first soil-piercing blade body, the first soil-piercing blade fixing section is connected to the lower surface of the spiral piece and the first soil-piercing blade body faces towards the bottom of the rod body.

119. The spiral drill bit of a subsoiling tillage machine which is convenient for piercing soil according to claim 118, **characterized in that**, the first soil-piercing blade body is connected with the first soil-piercing blade fixing section to constitute an included angle of 120 degrees-150 degrees.

120. The spiral drill bit of a subsoiling tillage machine which is convenient for piercing soil according to claim 117, **characterized in that**, the spiral drill bit further comprises blades which are arranged at the circumferential edge of the spiral piece.

121. A connection device, **characterized in that**, it comprises a connection frame, a connection supporting plate, a guide sliding rod, a connecting nut, a sliding sleeve frame and a lifting oil cylinder; the connection supporting plate is welded on the connection frame; the guide sliding rod passes through the connection supporting plate; the connecting nut is arranged on the guide sliding rod below the lower connection supporting plate, and the connecting nut is arranged on the guide sliding rod above the upper connection supporting plate; the sliding sleeve frame comprises a sliding sleeve, a smash-ridging device connection seat and a lifting oil cylinder seat; the sliding sleeve slidably sleeves the guide sliding rod; the smash-ridging device connection seat is welded on the sliding sleeve; the lifting oil cylinder seat is welded on the smash-ridging device connection seat; an oil cylinder articulated seat is fixed on the lower connection supporting plate, the piston rod of the lifting oil cylinder is articulated on the oil cylinder articulated seat, the lower end of a lifting oil cylinder body is fixed on the lifting oil cylinder seat.

122. The connection device according to claim 121, **characterized in that**, the connection frame comprises a plurality of horizontal beams, longitudinal beams, vertical beams, a first inclined strut and a second inclined strut; the longitudinal beams consist of lower longitudinal beams and upper longitudinal beams, wherein the lower longitudinal beams are welded at both ends of the horizontal beams; the vertical beams are welded on the lower longitudinal beams close to the rear section; the upper longitudinal beams are welded on the upper end of the vertical beam; a first inclined strut is welded between the front end of the horizontal beam and the upper end of the vertical beam; the second inclined strut is welded between the vertical beams.

123. The connection device according to claim 122, **characterized in that**, the horizontal beams, the longitudinal beams, the vertical beams, the first inclined strut and the second inclined strut all use square tubes and are internally communicated with each other, so that oil chambers are formed within the horizontal beams, the longitudinal beams, the vertical beams, the first inclined strut and the second inclined strut.

124. The connection device according to claim 122, **characterized in that**, The connection supporting plate is welded on the lower longitudinal beams and the upper longitudinal beams, respectively.

125. The connection device according to claim 121, **characterized in that**, a mounting hole is formed in the smash-ridging box connection seat; and the smash-ridging device is fixed on the smash-ridging device connection seat via a bolt passing through the mounting hole.

126. A ditching device, **characterized in that** it comprises swing arms, a supporting arm, a turn-over oil cylinder, an adjusting seat, a ditching arm and a ditching plough; one end of the swing arm is articulated on an articulated seat, and the other end of the swing arm is articulated on the piston rod of the turn-over oil cylinder; the supporting arm is welded between the swing arms; the supporting arm has a regular polygon section; the adjusting seats comprise lower clamping seats and upper clamping seats which are clamped on the supporting arm and are connected with each other through a bolt; one end of the ditching arm is arranged on the adjusting seat; the ditching plough is fixed at the lower end of the ditching arm.

127. The ditching device according to claim 126, **characterized in that**, each adjusting seat comprises two lower clamping seats and two upper clamping seats, wherein a location hole is formed in each lower clamping seat and each upper clamping seat, respectively; the ditching arm is clamped between the two upper clamping seats and isalso clamped between the two upper clamping seats, a plurality of adjusting holes through which the adjusting rod passes are formed in the ditching arm.

128. The ditching device according to claim 126, **characterized in that**, the ditching plough comprises a first ditching plough plate and a second ditching plough plate and a third ditching plough plate arranged at both sides of the first ditching plough plate, wherein "U"-shaped recesses are formed among the first ditching plough plate, the second ditching plough plate and the third ditching plough plate, transverse reinforcing ribs and longitudinal reinforcing ribs are arranged within the "U"-shaped recesses and are crossed to each other, the lower ends of the first ditching plough plate, the second ditching plough plate and the third ditching plough plate are intersected to form a plough tip of which the cross section is triangle and of which the thickness is larger than thicknesses of the second ditching plough plate and the third ditching plough plate.

129. A foldaway soil flattening device, comprising a raking plate, a connection arm which is connected with the raking plate and an adjusting device which is used to adjust the turn-over angle of the raking plate; **characterized in that**, the raking plate consists of at least two flat plate units, each flat plate unit comprises a connection section and a serrated section, which is arranged at lower end of the connection section, adjacent flat plate units are connected through a hinge, and an interlocking device, which limits the flat plate units to be turned over, is arranged between the connection sections of the adjacent flat plate units.

130. The foldaway soil flattening device according to claim 129, **characterized in that**, the interlocking device comprises a first circular ring arranged at the side edge of the flat plate unit, a second circular ring arranged at the side edge of the adjacent flat plate unit and an inserted pin which can pass through the first circular ring and the second circular ring.

131. The foldaway soil flattening device according to claim 129, **characterized in that**, the raking plate is formed by successively connecting three flat plate units.

132. The foldaway soil flattening device according to claim 129, **characterized in that**, the raking plate is the form of a long strip.

133. The foldaway soil flattening device according to claim 129, **characterized in that**, the connection arms are arranged at both ends of the raking plate.

134. The foldaway soil flattening device according to claim 129, **characterized in that**, the adjusting device comprises an articulated seat, a screw rod, a first spring, a second spring and a nut, the lower end of the screw rod is articulated with the raking plate, the upper end of the screw rod passes through the articulated seat and then is connected with the nut, the first spring sleeves the screw rod and is located between the raking plate and the articulated seat, and the second spring sleeves the screw rod and is located between the articulated seat and the nut.

135. A straw returning device, **characterized in that**, it comprises a straw returning articulated seat, a straw returning connecting rod mechanism, a straw returning hood, a weeding cutter, a straw returning oil cylinder and a straw returning driving mechanism; the straw returning connecting rod mechanism comprises a first straw returning connecting rod and a second straw returning connecting rod; one end of the first straw returning connecting rod is articulated on the straw returning articulated seat, and the other end of the first straw returning connecting rod is articulated on the straw returning hood; one end of the second straw returning connecting rod is articulated at the central section of the first straw returning connecting rod, and the other end of the second straw returning connecting rod is articulated on the straw returning hood; the weeding cutter is arranged within the straw returning hood; one end of the straw returning oil cylinder is articulated on the straw returning articulated seat, and the other end is articulated on the straw returning hood.

136. The straw returning device according to claim 135, **characterized in that**, the straw returning driving mechanism comprises an electrical motor, a driving gear wheel and a driven gear wheel, wherein the electrical motor is fixed on the straw returning hood, the driving gear wheel is mounted on the output shaft of the electrical motor, the driven gear wheel is mounted on the shaft of the weeding cutter and the driving gear wheel is meshed with the driven gear wheel.

137. The straw returning device according to claim 135, **characterized in that**, a limiting roller is arranged in lower front of the straw returning hood.

138. An assembly method of a subsoiling smash-ridging machine, **characterized in that**, it comprises an assembly method of a machine body, an assembly method of a connection device, an assembly method of mounting the connection device onto the machine body, an assembly method of a smash-ridging device, an assembly method of mounting the smash-ridging device onto the connection device;
wherein the assembly method of the machine body comprises an assembly method of a walking mechanism, an assembly method of a chassis and an assembly method of mounting the chassis onto the walking mechanism;
wherein the assembly method of the connection device is as follows:
(1d) welding horizontal beams, longitudinal beams, vertical beams, a first inclined strut and a second inclined strut together to form a connection frame;
(2d) welding a connection supporting plate on a lower longitudinal beam and an upper longitudinal beam, respectively;
(3d) making one end of a guide sliding rod downwards pass through the upper connection supporting plate, then enabling a sliding sleeve of a sliding sleeve frame sleeve the guide sliding rod, after that, sequentially moving the guide sliding rod downwards to pass through the lower connection supporting plate, and then locking the connecting nut at the upper end of the guide sliding rod and the connecting nut at the lower end of the guide sliding rod to fix the guide sliding rod, respectively;
(4d) fixing an articulated seat on the lower connection supporting plate, fixing a cylinder body of a lifting oil cylinder on a lifting oil cylinder seat, and articulating the piston rod of the lifting oil cylinder onto the articulated seat;
wherein the assembly method of mounting the connection device onto the machine body is to weld a connection frame onto the chassis;
the assembly method of the smash-ridging device is as follows:
(1e) welding a lower bearing seat onto a bottom plate, and welding an upper bearing seat onto a top plate;
(2e) welding the bottom plate, side plates and the top plate together to form a smash-ridging box;
(3e) mounting a bearing in the lower bearing seat, mounting a bearing in the upper bearing seat, wherein the bearings are conical bearings, the conical bearings in the lower bearing seat are mounted forwardly, and the bearing in the upper bearing seat is mounted reversely;
(4e) extending the transmission shaft from the lower end of the smash-ridging box through the bearing in the lower bearing seat into the smash-ridging box, mounting a power output member onto the transmission shaft when the upper end of the transmission shaft is at the central section of the smash-ridging box, then wrapping a shaft sleeve on the transmission shaft, after that, continuing to push the transmission shaft upwards to mount the upper end of the transmission shaft into the bearing in the upper bearing seat;
(5e) mounting a lower bearing end cover and an upper bearing end cover;
(6e) mounting a driving mechanism;
(7e) mounting a flange;
(9e) mounting a spiral drill rod onto the flange;
the assembly method of mounting the smash-ridging device onto the connection device is to directly fix the smash-ridging device which has already been assembled through a bolt onto a smash-ridging device connection seat of a sliding frame.

139. The assembly method of a subsoiling smash-ridging machine according to claim 138, **characterized in that**, the assembly method of the walking mechanism is as follows:
(1a) mounting the driving wheel on the wheel stand connection lug via a bearing and fixing the walking drive device on the wheel stand connection lug to make the output shaft to be connected to the driving wheel;
(2a) mounting the driven wheel on the wheel stand body via a mounting shaft;
(3a) mounting the lower guide wheel on the wheel stand body via the mounting shaft passing through the second mounting hole and locking the second nuts at both ends of the mounting shaft passing through the second mounting hole to make the second nuts come in contact with the second boss; mounting the upper guide wheel on the wheel stand body via the mounting shaft passing through the third mounting hole and locking the third nuts at both ends of the mounting shaft passing through the third mounting hole to make the third nuts come in contact with the third boss; and
(4a) enabling the crawler to sleeve the driving wheel, the driven wheel, the lower guide wheel and the upper guide wheel.

140. The assembly method of a subsoiling smash-ridging machine according to claim 139, **characterized in that**, the assembly method of the chassis is as follows:
(1b) welding the supporting rib to the bottom surface of the supporting platform; (2b) welding the inclined strut plates on the supporting rib and positioning the inclined strut plates using the shapes of both ends of the supporting ribs; and (3b) welding the rib plates on the inclined strut plates;
The assembly method for mounting the chassis to the walking mechanism is as follows: welding the supporting platform and the inclined strut plates onto the wheel stand.

141. The assembly method of a subsoiling smash-ridging machine according to claim 138, **characterized in that**, the assembly method of the machine body further comprises the assembly method of the diesel engine component specifically comprising the following steps:
(1c) fixing the diesel engine onto the diesel engine frame; (2c) fixing the wind tunnel box onto the diesel engine frame; (3 c) connecting the hydraulic pump to the output shaft of the diesel engine; (4c) arranging a shock absorber on the chassis, mounting a diesel engine fixing seat on the shock absorber and fixing integrally the above assembled components onto the diesel engine fixing seat and adjusting in balance; and
(5c) covering the diesel engine and wind tunnel box with a diesel engine hood.

142. The assembly method of a subsoiling smash-ridging machine according to claim 138, **characterized in that**, when the step (1d) is performed, the horizontal beams, the longitudinal beams, the vertical beams, the first inclined strut and the second inclined strut are internally communicated with each other to form an oil chamber.

143. The assembly method of a subsoiling smash-ridging machine according to claim 138, **characterized in that**, after the step (2e) is performed, the first connection lug, the flattening device connection lug, the second connection lugs, the third connection lug and the articulated seat are welded onto the smash-ridging box.

144. The assembly method of a subsoiling smash-ridging machine according to claim 138, **characterized in that**, after the step (4e) is performed, a forward lock nut is locked at the upper end of the transmission shaft so that forward lock nut is in contact with the bearing inner ring within the upper bearing seat to facilitate the axial movement of the bearing inner ring within the upper bearing seat so as to achieve the purpose of adjusting the clearance of the conical bearing and after the clearance of the conical bearing has been adjusted, the reverse lock nut is locked in reversed direction.

145. The assembly method of a subsoiling smash-ridging machine according to claim 138, **characterized in that**, the mounting process of the flange is as follows: making a conical hole, through-holes and a counterbore pass through the screw rod, fitting the conical shaft with the conical hole, locking the lock nut at the lower end of the screw rod, pressing the gland into the counterbore to make the bosses come in contact with the end surface of the lock nut and locking the lock bolt.

146. The assembly method of a subsoiling smash-ridging machine according to claim 143, **characterized in that**, it further comprises the assembly method of the ditching device which is as follows:
(1f) welding the supporting arm between two swing arms, articulating one end of the turn-over oil cylinder onto the third connection lug, then articulating one end of the swing arms onto the articulated seat and the other end of the swing arms onto the piston rod of the turn-over oil cylinder;
(2f) mounting the adjusting seats onto the supporting arm which comprises: clamping the two lower clamping seats and the two upper clamping seats on the supporting arm, connecting the lock bolt between the upper and lower clamping seats at the left side, connecting the lock bolt between the upper and lower clamping seats at the right side, at the moment the lock bolt does not lock tightly the upper and lower clamping seats, thus adjusting the position of the supporting arm on the adjusting seats as desired and then screwing the lock cut so as to prevent the adjusting seats from moving relative to the supporting arm; and
(3f) welding the ditching plough on the ditching arm, mounting the upper end of the ditching arm between the upper and lower clamping seats at the left side and the upper and lower clamping seats at the right side of the adjusting seat, adjusting the
position of the ditching arm as desired and then positioning and fixing the ditching arm using the adjusting rod to pass through the location hole and the corresponding adjusting hole.
